# EUROPEAN PATENT SPECIFICATION

(11) **EP 2 199 714 B1**
(45) Date of publication and mention of the grant of the patent: **20.03.2019**
(21) Application number: 08837068.9
(22) Date of filing: 08.10.2008
(51) Int. Cl.: F25D 23/00, F25D 27/00

(54) **REFRIGERATOR**
KÜHLSCHRANK
RÉFRIGÉRATEUR

(30) Priority: 09.10.2007 JP 2007263116; 06.11.2007 JP 2007288370; 07.12.2007 JP 2007316912; 25.01.2008 JP 2008014625; 30.01.2008 JP 2008018701; 14.03.2008 JP 2008065408; 31.03.2008 JP 2008091155
(43) Date of publication of application: 23.06.2010
(73) Proprietor: Panasonic Corporation, Kadoma-shi Osaka 571-8501 (JP)
(72) Inventor: TSUJIMOTO, Kahoru, Chuo-ku, Osaka 540-6207 (JP); KAMISAKO, Toyoshi, Chuo-ku, Osaka 540-6207 (JP); UEDA, Yoshihiro, Chuo-ku, Osaka 540-6207 (JP); ADACHI, Tadashi, Chuo-ku, Osaka 540-6207 (JP); NAKANISHI, Kazuya, Chuo-ku, Osaka 540-6207 (JP)
(74) Representative: Eisenführ Speiser
(86) International application number: PCT/JP2008/002837
(87) International publication number: WO 2009/047896

(56) References cited:
- EP-A2- 0 878 203
- WO-A1-03/038351
- WO-A1-2006/009189
- WO-A1-2006/009190
- GB-A- 2 326 095
- JP-A- 6 257 933
- JP-A- 7 135 945
- JP-A- 2000 220 949
- JP-A- 2004 125 179
- JP-A- 2006 057 992
- JP-A- 2006 057 999
- JP-A- 2006 061 072
- JP-A- 2006 242 556
- JP-A- 2006 242 556
- JP-A- 2006 280 319
- JP-A- 2007 101 033
- JP-A- 2007 147 101
- JP-A- 2007 192 539

## Description

### Technical Field

The present invention relates to a refrigerator having an atomization apparatus installed in a storage compartment space for storing vegetables and the like as defined in the preamble of claim 1. Moreover, the present invention relates to a method of storage in a refrigerator as defined in the preamble of claim 15.

### Background Art

Influential factors in a decrease in freshness of vegetables include temperature, humidity, environmental gas, microorganisms, light, and so on. Vegetables are living things on surfaces of which respiration and transpiration are performed. To maintain freshness, such respiration and transpiration need to be suppressed. Except some vegetables that suffer from low temperature damage, many vegetables can be prevented from respiration by a low temperature and prevented from transpiration by a high humidity. In recent years, household refrigerators are provided with a sealed vegetable container for the purpose of vegetable preservation, where vegetables are cooled at a proper temperature and also control is exercised to suppress transpiration of the vegetables by, for example, creating a high humidity state inside the container. One such means for creating a high humidity state inside the container is mist spray.

Conventionally, in a refrigerator having this type of mist spray function, an ultrasonic atomization apparatus generates and sprays a mist to humidify the inside of a vegetable compartment when the inside of the vegetable compartment is at a low humidity, thereby suppressing transpiration of vegetables (for example, see Patent Reference 1).

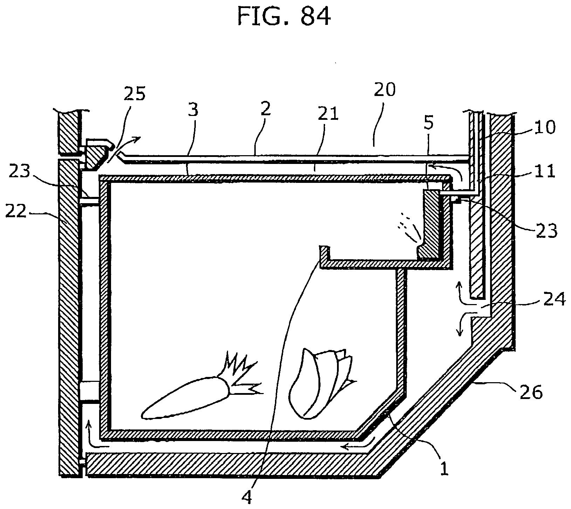

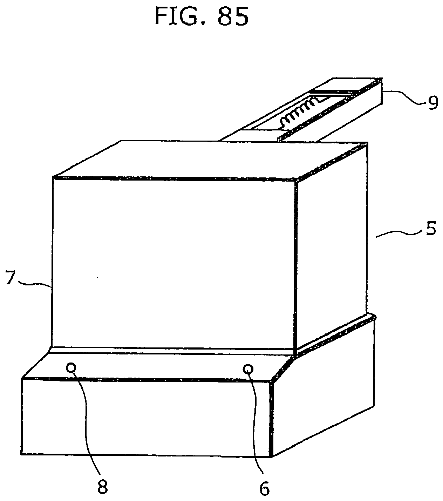

FIG. 84 shows the conventional refrigerator including the ultrasonic atomization apparatus described in Patent Reference 1. FIG. 85 is an enlarged perspective view showing a relevant part of the ultrasonic atomization apparatus shown in FIG. 84.

As shown in the drawing, a vegetable compartment 21 is provided at a lower part of a main body case 26 of a refrigerator main body 20, and has a front opening closed by a drawer door 22 that can be slid in and out. The vegetable compartment 21 is separated from a refrigerator compartment (not shown) located above, by a partition plate 2.

A fixed hanger 23 is fixed to an inner surface of the drawer door 22, and a vegetable container 1 for storing foods such as vegetables is mounted on the fixed hanger 23. An upper opening of the vegetable container 1 is sealed by a lid 3. A thawing compartment 4 is provided inside the vegetable container 1, and an ultrasonic atomization apparatus 5 is included in the thawing compartment 4.

As shown in FIG. 85, the ultrasonic atomization apparatus 5 includes a mist blowing port 6, a water storage tank 7, a humidity sensor 8, and a hose receptacle 9. The water storage tank 7 is connected to a defrost water hose 10 by the hose receptacle 9. A purifying filter 11 for purifying defrost water is equipped in a part of the defrost water hose 10.

An operation of the refrigerator having the above-mentioned structure is described below.

Air cooled by a heat exchange cooler (not shown) flows along outer surfaces of the vegetable container 1 and the lid 3, as a result of which the vegetable container 1 and the foods stored in the vegetable container 1 are cooled. Moreover, defrost water generated from the cooler during refrigerator operation is purified by the purifying filter 11 when passing through the defrost water hose 10, and supplied to the water storage tank 7 in the ultrasonic atomization apparatus 5.

Next, when the humidity sensor 8 detects an inside humidity to be less than 90%, the ultrasonic atomization apparatus 5 starts humidification, allowing for an adjustment to a proper humidity for freshly preserving vegetables and the like in the vegetable container 1.

When the humidity sensor 8 detects the inside humidity to be equal to or more than 90%, the ultrasonic atomization apparatus 5 stops excessive humidification. Thus, the inside of the vegetable compartment can be humidified speedily by the ultrasonic atomization apparatus 5, with it being possible to constantly maintain a high humidity in the vegetable compartment. This suppresses transpiration of vegetables and the like, so that the vegetables and the like can be kept fresh.

There is also a refrigerator that includes an ozone water mist apparatus (for example, see Patent Reference 2). As a humidification means having a microbial elimination effect in addition to a humidification effect, ozone water is generated by mixing water and ozone gas that is produced by decomposing oxygen in the air by an ozone generator of a discharge type or an ultraviolet type, and a mist of ozone water is sprayed by an ultrasonic spray method.

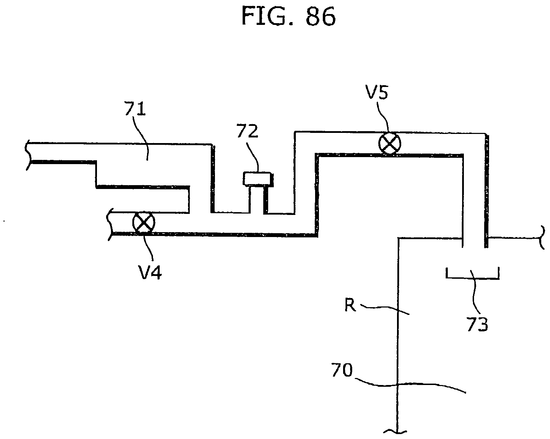

FIG. 86 shows the conventional refrigerator including the ozone water mist apparatus described in Patent Reference 2. As shown in FIG. 86, an ozone generator 71, an exhaust port 72, a water supply path directly connected to tap water, and an ozone water supply path are provided near a vegetable compartment 70, with the ozone water supply path being led to the vegetable compartment 70. The ozone generator 71 is connected to the water supply unit directly connected to tap water, and the exhaust port 72 is connected to the ozone water supply path. The water supply path includes an on-off valve V4, whereas the ozone water supply path includes an on-off valve V5. An ultrasonic element 73 is included in the vegetable compartment 70.

An operation of the refrigerator having the above-mentioned structure is described below.

In the refrigerator that performs cooling by forced circulation of cool air, the vegetable compartment 70 sealed as a high humidity storage compartment is cooled at about 5°C with a humidity of 80% or more, by indirect cooling from its periphery. The ozone generator 71 is capable of generating ozone by applying an AC voltage of 5 kV to 25 kV according to a silent discharge method. The generated ozone is brought into contact with water to obtain ozone water as treated water. At this time, ozone that has not dissolved in water is exhausted from the exhaust port 72. This ozone is detoxified by a honeycomb ozone decomposition catalyst installed in the exhaust port 72. The generated ozone water is then guided to the vegetable compartment 70 in the refrigerator. The guided ozone water is atomized by the ultrasonic vibrator 73 and sprayed in the vegetable compartment 70. The sprayed ozone water kills bacteria adhering to foods and discourages bacterial growth. This enables food decay to be retarded.

Furthermore, though not shown, there is a technique whereby freshness of foods is preserved by combining a negative ion generation apparatus, a centrifugal force and Coriolis force generation apparatus, and a gas-liquid separation apparatus (for example, see Patent Reference 3).

The centrifugal force and Coriolis force generation apparatus is a mechanism for performing an ion dissociation process, a liquid droplet activation process, and a gas molecule ionization process, and generates water molecule addition negative ions in the air. The gas-liquid separation apparatus separates the air containing the negative ions from liquid droplets and supplies it to a storage compartment. The storage compartment is maintained at a temperature equal to or less than a normal temperature and a humidity equal to or more than 80%, where an atmosphere of negative ion containing air with at least 1000 negative ions per cc is formed to preserve foods.

By filling the storage compartment with this high humidity air, the storage compartment can be maintained in a highly clean and also sterile state, and the effects of preserving freshness of foods and reviving animals and plants can be achieved through microbial elimination and deodorization by the negative ions contained in the air.

In addition, there is another humidification method (for example, see Patent Reference 4).

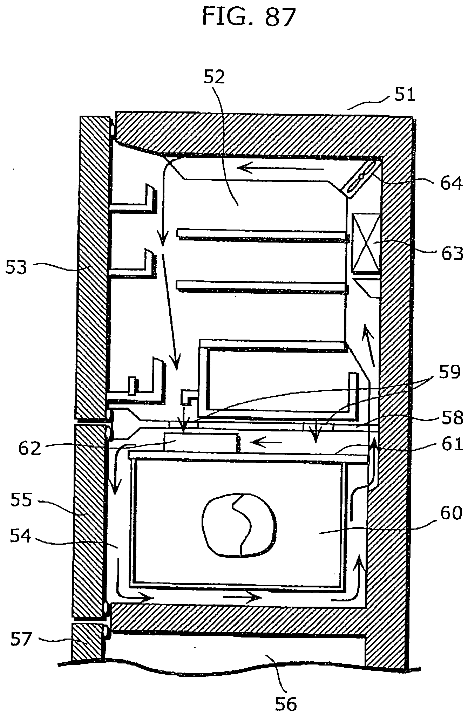

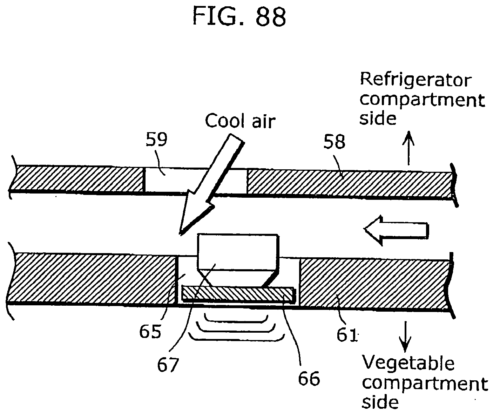

FIG. 87 is a side sectional view of a conventional refrigerator described in Patent Reference 4, and FIG. 88 is a relevant part enlarged sectional view of a humidifier in the refrigerator shown in FIG. 87.

In FIG. 87, a refrigerator 51 includes a refrigerator compartment 52 (one of the refrigeration temperature zone compartments), a pivoted door 53 of the refrigerator compartment 52, a vegetable compartment 54 (one of the refrigeration temperature zone compartments), a drawer door 55, a freezer compartment 56, and a drawer door 57. A partition plate 58 separates the refrigerator compartment 52 and the vegetable compartment 54 from each other. Cool air from the refrigerator compartment 52 flows into the vegetable compartment 54 via a hole 59. A vegetable container 60 is pulled out together with the drawer door 55.

A vegetable container lid 61 is fixed to a refrigerator main body. The vegetable container lid 61 covers the vegetable container 60 when the drawer door 55 is closed. An ultrasonic humidification apparatus 62 transpires water into the vegetable container 60. A cooler 63 is a refrigeration temperature zone compartment cooler, and cools the refrigerator compartment 52 and the vegetable compartment 54.

Though not shown, the refrigerator 51 also includes a freezing temperature zone compartment cooler that cools the freezer compartment 56. A cool air circulation fan 64 for the freezing temperature zone compartment operates to cause the cool air from the cooler 63 to circulate in the refrigerator compartment 52 and the vegetable compartment 54. The ultrasonic humidification apparatus 62 is provided in a hole 65 of the vegetable container lid 61, and composed of an absorbent member 66 and an ultrasonic oscillator 67.

An operation of the refrigerator having the above-mentioned structure is described below.

When the refrigerator compartment 52 and the vegetable compartment 54 increase in temperature, a refrigerant flows into the cooler 63 and the cool air circulation fan 64 is driven. As a result, ambient cool air of the cooler 63 passes through the refrigerator compartment 52, the hole 59, and the vegetable compartment 54 and then returns to the cooler 63, as indicated by arrows in FIG. 87. Thus, the refrigerator compartment 52 and the vegetable compartment 54 are cooled. This state is referred to as a cooling mode.

Once the refrigerator compartment 52 and the vegetable compartment 54 have been roughly cooled, the supply of the refrigerant to the cooler 63 is stopped. Meanwhile, the cool air circulation fan 64 continues its operation. Hence, frost adhering to the cooler 63 melts down and as a result the refrigerator compartment 52 and the vegetable compartment 54 are humidified. This state is referred to as a humidification mode (the so-called "moisture operation").

After the humidification mode is continued for a predetermined time period (several minutes), the cool air circulation fan 64 is stopped to switch to an operation stop mode. Subsequently, when the refrigerator compartment 52 and the vegetable compartment 54 increase in temperature, the refrigerator 51 enters the cooling mode again.

The ultrasonic humidification apparatus 62 shown in FIG. 88 is described next.

The absorbent member 66 is made of a water-absorbing material such as silica gel, zeolite, and activated carbon. Accordingly, the absorbent member 66 adsorbs water in the flowing air in the above-mentioned humidification mode. In the latter part of the cooling mode, the ultrasonic oscillator 67 is driven. This causes the water in the absorbent member 66 to be discharged outwardly and the inside of the vegetable container to be humidified. Note that the driving of the ultrasonic oscillator 67 in the latter part of the cooling mode is intended to prevent the vegetable compartment 54 from drying due to a decrease in humidity.

As described above, the ultrasonic humidification apparatus 62 includes the absorbent member 66 and the ultrasonic oscillator 67 for vibrating the absorbent member 66. This makes it unnecessary to provide a water tank and a water supply pipe for humidification.

Moreover, in the refrigerator having the humidification mode, the ultrasonic humidification apparatus 62 is operated other than during the humidification mode. Hence, a fluctuation in humidity in the storage compartment can be suppressed.

In addition, in the refrigerator that is cooled by flowing the refrigerant into the cooler 63 and operating the cool air circulation fan 64, the ultrasonic humidification apparatus 62 is operated at the time of this cooling. Thus, the humidification is performed at the time of cooling during which drying tends to occur, so that a fluctuation in humidity in the storage compartment can be suppressed.

Furthermore, the ultrasonic humidification apparatus 62 includes the absorbent member 66 and the ultrasonic oscillator 67, where the absorbent member 66 absorbs water in the air above the vegetable container lid 61, and the ultrasonic oscillator 67 vibrates the absorbent member 66 to emit the water contained in the absorbent member 66 into the vegetable container 60. This allows the inside of the vegetable container 60 to be humidified.

However, the refrigerators of the conventional structures described above have the following problem. In the method of atomizing water or ozone water by an ultrasonic vibrator, atomized water particles or ozone water particles cannot be finely produced and so cannot be uniformly sprayed in the storage compartment.

The conventional structures also have the following problem. In the method of generating ozone water by adding fine bubbles of ozone gas to water to thereby dissolve ozone, most of generated ozone gas cannot be sufficiently dissolved in water. For users, this causes residual ozone gas of an ozone concentration level that poses a danger to human bodies. To reduce the residual gas to such a low concentration level that is safe for human bodies and also has no ozone odor, an ozone decomposition unit needs to be provided, which requires a complex structure.

The conventional structures also have the following problem. Though a mist is sprayed in order to increase the humidity of the storage compartment in the refrigerator, this is intended only for moisture retention of vegetables, and there is neither description nor suggestion about suppression of low temperature damage in addition to moisture retention of vegetables.

Moreover, a mechanism of ionizing liquid droplets in the storage compartment is extremely large and is not suitable for use in household refrigerators. Furthermore, simple ionization merely produces low oxidative power of liquid droplets, and therefore the mechanism has a relatively insignificant advantage.

### Prior Art References

### Patent References

Patent Reference 1: Japanese Unexamined Patent Application Publication No. 6-257933
Patent Reference 2: Japanese Unexamined Patent Application Publication No. 2000-220949
Patent Reference 3: Japanese Unexamined Patent Application Publication No. 7-135945
Patent Reference 4: Japanese Unexamined Patent Application Publication No. 2004-125179

Document GB 2 326 095 A discloses a moisture supply apparatus arranged in the interior of a refrigerated area and which comprises air-borne moisture generation means to generate fog or mist to be sprayed into the interior of the refrigerated area. The apparatus comprises a water supply means which is arranged to supply water to the airborne moisture generation means to obtain the desired mist or fog. A delivery means in the form of a distributor provides distribution of the fog or mist to the refrigerated area. In addition, the water forming the basis for the fog or mist can be ozonated with a water ozonation means to provide sterile water to the airborne moisture generator. There may also be a recirculation of condensed mist or fog back to the water ozonating means.

Document WO 03/038351 A1 discloses refrigeration purifiers, wherein continuously or periodically water or air of surfaces in a refrigeration system are cleaned and purified. Oxidants and oxidant radicals are produced electrically in a stream of air and the resulting gas is injected into a stream of water which flows through the refrigeration system. The apparatus includes an oxidant or ozone generator having an inlet which is connected to an air inlet. Water or air treated by the ozone generator are passed into and mixed with water or air to clean and purify the refrigeration system. The apparatus further includes a humidifier which is positioned in a gas stream to humidify the gas by water spray or mist. The gas stream then enters the refrigeration system.

Document EP 0 878 203 A2 discloses a duct work purification system, wherein a fogging unit is provided to atomize water droplets to the interior of a food storage cabinet, the water droplets being provided with ozone obtained by an ozone generating means. The conditioned water droplets are directed to the interior of the duct work for circulating there through and cleaning the duct work. The food storage cabinet is cooled by the refrigeration unit, and some of the refrigerated air is used as oxygen-containing gas for the ozone generating means. The ozone generating means and the fogging unit are operated to produce a fog of atomized water droplets under a specific timing control.

Document JP 2006 242556 A discloses a refrigerator system, wherein means are provided to keep the interior of the refrigerator clean for a long time. To this end, pores of a resin coat of a wall surface are provided and fine particles of mist are sprayed into the refrigerating compartment and enter into the pores. Water is stored and is sprayed as the mist to maintain the deodorizing capacity.

Document JP 2007 192539 A discloses the preamble of claim 1 and describes a refrigerator and a storage box having an electrostatic atomizer which has a spray part in which an applying electrode electrically connected to a voltage applying part for generating high voltage and a counter electrode are installed. Moisture in the air is condensed on the applying electrode and sprayed as mists into the vegetable chamber. Fine mists are generated by high-voltage corona discharge between the applying electrode and the counter electrode.

### Disclosure of Invention

A refrigerator according to the present invention is defined in claim 1. In particular, the refrigerator comprises a heat-insulated storage compartment, a back partition wall and a partition wall; an atomization unit included in a mist spray apparatus that sprays a mist into said storage compartment and that has an external case being arranged in a depression of the back partition wall of the partition wall of the refrigerator; and an atomization tip included in said atomization unit, the mist being sprayed from said atomization tip, a temperature detection unit configured to detect the temperature of said atomization tip, a temperature adjustment unit configured to adjust a temperature of said atomization tip, and a heat transfer connection member fixed to the external case of the atomization unit and thermally connected with the atomization tip. The heat transfer connection member has a projection which protrudes from the external case, wherein the projection is located opposite to the atomization tip and is located into a deepest depression or a through part of back partition wall or into a deepest depression of the partition wall. The temperature adjustment unit is configured to indirectly adjust a temperature of said atomization tip by cooling or heating said atomization tip to a dew point or below via said projection, to cause water in air to form dew condensation at said atomization tip, and said atomization unit is configured to generate the mist containing radicals, the generated mist adhering to vegetables and fruit stored in said storage compartment to suppress low temperature damage.

A method of storage in a refrigerator according to the present invention is defined in claim 15. In particular, the method is directed to a refrigerator which includes a heat-insulated storage compartment, a back partition wall, a partition wall, an atomization unit that is included in a mist spray apparatus that sprays a mist into said compartment and that has an external case being arranged in a depression of the back partition wall or the partition wall of the refrigerator, an atomization tip which is included in the atomization unit and from which the mist is sprayed, a temperature detection unit configured to detect the temperature of said atomization tip, and a temperature adjustment unit configured to adjust a temperature of the atomization tip, providing a heat transfer connection member fixed to the external case of the atomization unit and thermally connected with the atomization tip. The heat transfer connection member has a projection which protrudes from the external case, wherein the projection is located opposite to the atomization tip and is located into a deepest depression or a through part of the back partition wall or into a deepest depression of the partition wall. The storage method comprises the steps of indirectly adjusting the temperature of the atomization tip by cooling or heating said heat transfer connection member to a dew point or below via the projection, to cause water in air to form dew condensation at the atomization tip, and generating the mist containing radicals by the atomization unit and causing the mist to adhere to vegetables and fruit stored in the storage compartment so as to suppress low temperature damage.

Such a refrigerator generates a nano-size mist and sprays the mist directly to foods in a container, as a result of which the mist can be uniformly sprayed into the storage compartment. In addition, it is possible to eliminate and inhibit the growth of microorganisms such as molds, bacteria, yeasts, and viruses adhering to surfaces of vegetables and fruits and to surfaces of a storage compartment case, and also maintain a high humidity state and improve freshness preservation.

Such a refrigerator sprays mist particles into the storage compartment from the atomization tip, as a result of which the mist can be uniformly sprayed into the storage compartment. In addition, freshness preservation in a low temperature environment can be improved by suppression of low temperature damage as well as moisture retention of vegetables.

### Brief Description of Drawings

FIG. 1 is a longitudinal sectional view showing a section when a refrigerator in a first example of the present disclosure is cut into left and right.
FIG. 2 is a relevant part front view showing a back surface of a vegetable compartment in the refrigerator in the first example of the present disclosure.
FIG. 3 is a sectional view of an electrostatic atomization apparatus and its periphery included in the vegetable compartment in the refrigerator in the first example of the present disclosure, as taken along line A-A in FIG. 2 and seen from an arrow direction.
FIG. 4 is a sectional view of an electrostatic atomization apparatus and its periphery included in a vegetable compartment in a refrigerator in a second example of the present disclosure, as taken along line A-A in FIG. 2 and seen from the arrow direction.
FIG. 5 is a relevant part longitudinal sectional view showing a section when a door-side peripheral part of a partition wall above a vegetable compartment in a refrigerator in a third example of the present disclosure is cut into left and right.
FIG. 6 is a sectional view of an electrostatic atomization apparatus and its periphery included in a vegetable compartment in a refrigerator in a fourth example of the present disclosure, as taken along line A-A in FIG. 2 and seen from the arrow direction.
FIG. 7 is a sectional view of an electrostatic atomization apparatus and its periphery included in a vegetable compartment in a refrigerator in a fifth example of the present disclosure, as taken along line A-A in FIG. 2 and seen from the arrow direction.
FIG. 8 is a sectional view of an electrostatic atomization apparatus and its periphery included in a vegetable compartment in a refrigerator in a sixth example of the present disclosure, as taken along line A-A in FIG. 2 and seen from the arrow direction.
FIG. 9 is a relevant part longitudinal sectional view showing a section when a vegetable compartment and a periphery of a partition wall above the vegetable compartment in a refrigerator in a seventh example of the present disclosure are cut into left and right.
FIG. 10 is a sectional view of the refrigerator in the seventh example of the present disclosure, as taken along line B-B in FIG. 9 and seen from an arrow direction.
FIG. 11 is a sectional view of the partition wall above the vegetable compartment in the refrigerator in the seventh example of the present disclosure, as taken along line C-C in FIG. 10 and seen from an arrow direction.
FIG. 12 is a detailed sectional view of an ultrasonic atomization apparatus and its periphery in a refrigerator in an eighth example of the present disclosure.
FIG. 13 is a sectional view of an electrostatic atomization apparatus and its periphery included in a vegetable compartment in a refrigerator in a ninth example of the present disclosure, as taken along line A-A in FIG. 2 and seen from the arrow direction.
FIG. 14 is a sectional view of an electrostatic atomization apparatus and its periphery included in a vegetable compartment in a refrigerator in a tenth example of the present disclosure, as taken along line A-A in FIG. 2 and seen from the arrow direction.
FIG. 15 is a sectional view of a vegetable compartment and its vicinity in a refrigerator in an eleventh example of the present disclosure.
FIG. 16 is a sectional view of a vegetable compartment and its vicinity in a refrigerator of another form in the eleventh example of the present disclosure.
FIG. 17 is a detailed plan view of an electrostatic atomization apparatus and its vicinity taken along line D-D in FIG. 16.
FIG. 18 is a sectional view of a vegetable compartment and its vicinity in a refrigerator in a twelfth example of the present disclosure.
FIG. 19 is a longitudinal sectional view showing a section when a refrigerator in a thirteenth example of the present disclosure is cut into left and right.
FIG. 20 is a schematic view of a cooling cycle in the refrigerator in the thirteenth example of the present disclosure.
FIG. 21 is a sectional view of an electrostatic atomization apparatus and its periphery included in a vegetable compartment in the refrigerator in the thirteenth example of the present disclosure.
FIG. 22A is a sectional view of a vegetable compartment and its periphery in a refrigerator in a fourteenth example of the present disclosure.
FIG. 22B is a sectional view of an electrostatic atomization apparatus and its periphery included in the vegetable compartment in the refrigerator in the fourteenth example of the present disclosure.
FIG. 23 is a sectional view of a vegetable compartment and its periphery in a refrigerator in a fifteenth example of the present disclosure.
FIG. 24 is a sectional view of a vegetable compartment and its vicinity in a refrigerator in a sixteenth example of the present disclosure.
FIG. 25 is a partial cutaway perspective view showing an indoor unit of an air conditioner using an electrostatic atomization apparatus in a seventeenth example of the present disclosure.
FIG. 26 is a sectional structural view of the air conditioner shown in FIG. 25.
FIG. 27 is a longitudinal sectional view of a refrigerator in a first embodiment of the present invention.
FIG. 28 is a front view of a refrigerator compartment and its vicinity in the refrigerator in the first embodiment of the present invention.
FIG. 29 is a detailed sectional view of an electrostatic atomization apparatus and its vicinity taken along line E-E in FIG. 28.
FIG. 30 is an example of a functional block diagram of the refrigerator in the first embodiment of the present invention.
FIG. 31 is an example of a flowchart of a control flow in the refrigerator in the first embodiment of the present invention.
FIG. 32 is a detailed sectional view of an electrostatic atomization apparatus and its vicinity in a second embodiment of the present invention taken along line E-E in FIG. 28.
FIG. 33 is a detailed sectional view of an electrostatic atomization apparatus and its vicinity in a third embodiment of the present invention taken along line E-E in FIG. 28.
FIG. 34 is a detailed sectional view of an electrostatic atomization apparatus and its vicinity in a fourth embodiment of the present invention taken along line E-E in FIG. 28.
FIG. 35 is a detailed sectional view of an electrostatic atomization apparatus and its vicinity in a fifth embodiment of the present invention taken along line E-E in FIG. 28.
FIG. 36 is a longitudinal sectional view of a refrigerator in a sixth embodiment of the present invention.
FIG. 37 is a detailed sectional view of an electrostatic atomization apparatus and its vicinity in the refrigerator in the sixth embodiment of the present invention taken along line E-E in FIG. 28.
FIG. 38 is a detailed sectional view of an electrostatic atomization apparatus and its vicinity in a seventh embodiment of the present invention taken along line E-E in FIG. 28.
FIG. 39 is a detailed sectional view of an electrostatic atomization apparatus and its vicinity in an eighth embodiment of the present invention taken along line E-E in FIG. 28.
FIG. 84 is a view showing a conventional refrigerator including an ultrasonic atomization apparatus.
FIG. 85 is an enlarged perspective view showing a relevant part of the ultrasonic atomization apparatus shown in FIG. 84.
FIG. 86 is a view showing a conventional refrigerator including an ozone water mist apparatus.
FIG. 87 is a side sectional view of a conventional refrigerator.
FIG. 88 is a relevant part enlarged sectional view of a humidifier in the refrigerator shown in FIG. 87.

### Numerical References

100, 700, 901, 1101, 1200 Refrigerator
101, 701, 1201 Heat-insulating main body
102, 1202 Outer case
103, 1203 Inner case
104, 704, 1103, 1203 Refrigerator compartment
105, 1104, 1205 Switch compartment
106, 1107, 1206 Ice compartment
107, 907, 1105, 1207 Vegetable compartment
108, 1106, 1208 Freezer compartment
109, 1209 Compressor
110, 1210 Cooling compartment
111,711,1211 Back partition wall
111a, 1211a Depression
112, 712, 1212 Cooler
113, 1213 Cooling fan
114, 1214 Radiant heater
115, 1215 Drain pan
116, 1216 Drain tube
117, 1217 Evaporation dish
118, 1218 Door
119, 1219 Lower storage container
120, 1220 Upper storage container
122, 1222 Lid
123, 1223 First partition wall
124, 1224 Vegetable compartment discharge port
125, 1225 Second partition wall
126, 1226 Vegetable compartment suction port
131, 731, 915, 1114, 1231 Electrostatic atomization apparatus (mist spray apparatus)
132, 1232 Spray port
133, 733, 935, 1119, 1233 Voltage application unit
134 Cooling pin (heat transfer cooling member)
134a, 1234a Projection
135, 735, 1235 Atomization electrode or atomization tip, respectively
136, 736, 921, 1118, 1236 Counter electrode
137, 1237 External case
138, 1238 Moisture supply port
139, 739, 1239 Atomization unit
140 Refrigerator compartment return air path
141, 1241 Freezer compartment discharge air path
146, 1142, 1246 Control unit
151, 1251 Back partition wall surface
152, 1252 Heat insulator
154, 1124 Heating unit
155, 1255 Heat insulator depression
156, 1256 Low temperature air path
161 Cooling compartment partition wall
162 Heat insulator protrusion
165 Through part
166 Cooling pin cover
167 Opening
171 Heat insulator
172 Freezer compartment side partition plate
173 Vegetable compartment side partition plate
174 Partition wall
176 Mist discharge port
177 Mist air path
178 Heater
181 Vegetable compartment suction air path
182 Vegetable compartment discharge air path
183 Mist suction port
191, 1281 Projection
192, 1282 Hole (spray port)
193, 1283 Moisture supply port
194, 1284 Tape (cool air blocking member)
196, 1286 Void
197a, 197b, 197c, 197d, 1287a, 1287b, 1287c Void filling member (butyl)
200 Horn-type ultrasonic atomization apparatus (mist spray apparatus)
201 Horn unit
202 Electrode
203 Piezoelectric element
204 Electrode
205 Cooling pin
207 External case
208 Horn-type ultrasonic vibrator
209 Spray port
211 Atomization unit
251,1291,1301 Partition wall
252, 1302 Vegetable compartment discharge air path
253, 1303 Vegetable compartment suction air path
254, 1304 Air flow hole
255, 1305 Atomization apparatus cooling air path
301 Temperature changing compartment
302 Damper
303 Low temperature side evaporator
304 High temperature side evaporator
305 First partition wall
306 Second partition wall
307 Condenser
308 Three way valve
309 Low temperature side capillary
310 High temperature side capillary
311 Temperature changing compartment side cooling air path
312 Freezer compartment side cooling air path
313 Temperature changing compartment back partition wall
314 Freezer compartment back partition wall
321, 1102 Partition plate
322 Refrigerator compartment fan
323 Refrigerator compartment partition plate
324 Refrigerator compartment air path
325 Temperature changing compartment discharge port
326 Temperature changing compartment suction port
723 Partition wall
724 Refrigerator compartment discharge port
726 Refrigerator compartment suction port
734, 1234 Heat transfer connection member (metal pin)
741, 756, 1109 Air path
750 Heat pipe
754, 1258 Metal pin heater
770 Second cooler
801 Peltier module (Peltier element)
902 Main body
920, 1116 Application electrode
967 Ultrasonic atomization apparatus (first spray unit)
1108 Vegetable container
1110 Storage compartment partition
1111 Atomization unit
1112 Water collection unit
1113 Mist generation unit (mist spray apparatus)
1115 Holder
1117 Water retainer
1120 Main body outer wall
1122 Cooler
1123 Water collection plate
1125 Air blow unit
1126 Circulation air path
1127, 1132 Cover
1128 First circulation air path opening
1129 Second circulation air path opening
1130 Temperature detection unit
1131 Water conveyance unit
1133 Container
1137 Luminous body
1138 Diffusion plate
1139 Inside temperature detection unit
1140 Inside humidity detection unit
1141 Door detection unit
1143 Cooling unit
1254 Partition wall heater
1261 Upper rib
1262 Lower rib
1266 Beverage storage unit
1267 Beverage partition plate
1285 Metal pin cover

### Best Mode for Carrying Out the Invention

The following describes examples and embodiments of the present invention with reference to drawings. Note that detailed description is omitted for parts to which same structures or same technical ideas as embodiments described earlier can be applied, and disclosed examples of individual embodiments can be combined for use especially for a structure of a mist spray apparatus, a structure of attaching the mist spray apparatus to a refrigerator, and a functional advantage of the mist spray apparatus according to the present invention. Note also that the present invention is not limited to these embodiments.

### (First Example)

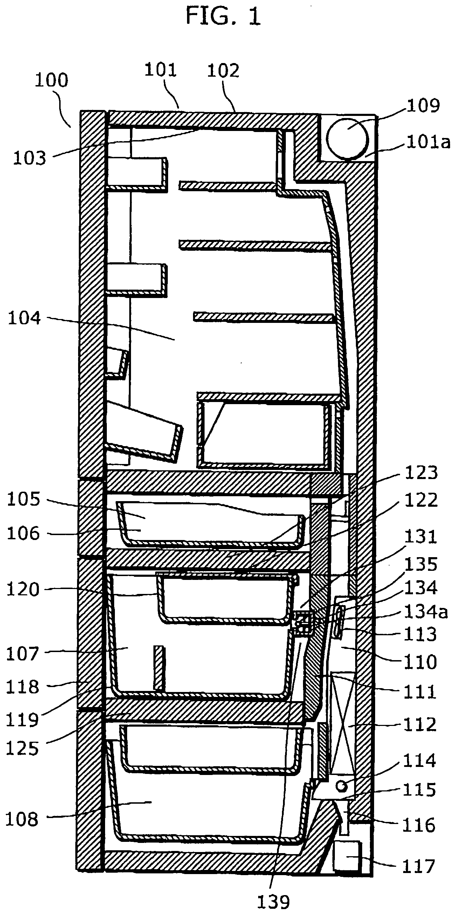

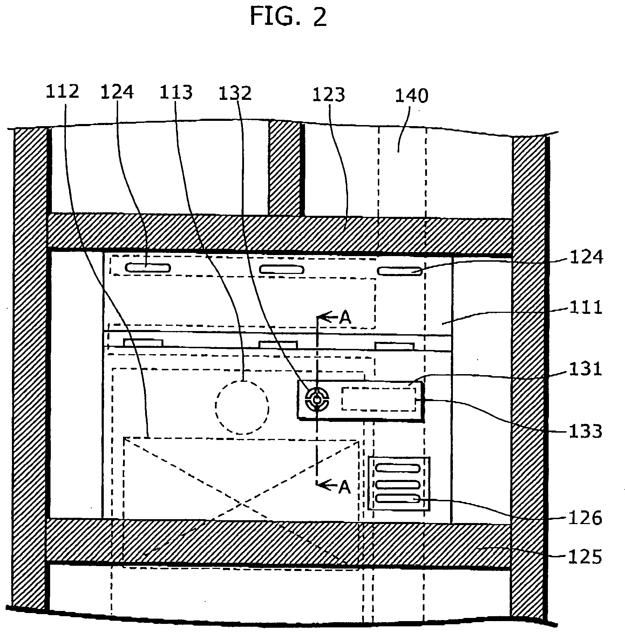

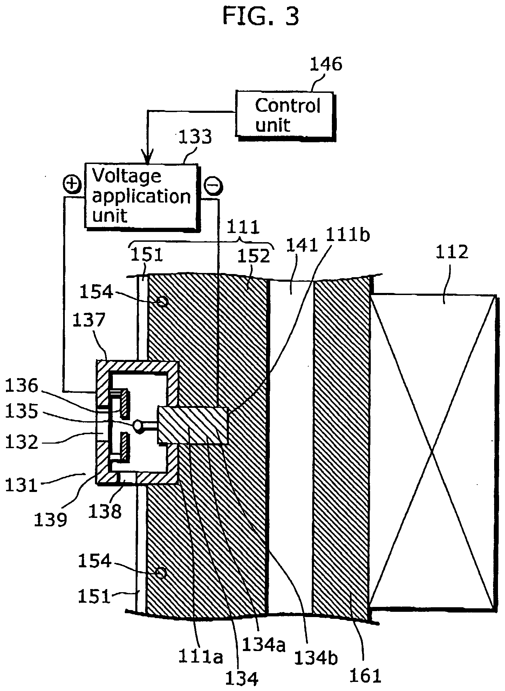

FIG. 1 is a longitudinal sectional view showing a section when a refrigerator in a first example of the present disclosure is cut into left and right. FIG. 2 is a relevant part front view showing a back surface of a vegetable compartment in the refrigerator. FIG. 3 is a sectional view of an electrostatic atomization apparatus and its periphery included in the vegetable compartment in the refrigerator, as taken along line A-A in FIG. 2 and seen from an arrow direction.

In the drawings, a heat-insulating main body 101 which is a main body of a refrigerator 100 is formed by an outer case 102 mainly composed of a steel plate, an inner case 103 molded with a resin such as ABS, and a foam heat insulation material such as rigid urethane foam charged in a space between the outer case 102 and the inner case 103. The heat-insulating main body 101 is thermally insulated from its surroundings, and the refrigerator 100 is partitioned into a plurality of thermally insulated storage compartments by partition walls. A refrigerator compartment 104 as a first storage compartment is located at the top. A switch compartment 105 as a fourth storage compartment and an ice compartment 106 as a fifth storage compartment are located side by side below the refrigerator compartment 104. A vegetable compartment 107 as a second storage compartment is located below the switch compartment 105 and the ice compartment 106. A freezer compartment 108 as a third storage compartment is located at the bottom.

The refrigerator compartment 104 is typically set to 1°C to 5°C, with a lower limit being a temperature low enough for refrigerated storage but high enough not to freeze. The vegetable compartment 107 is set to a temperature of 2°C to 7°C that is equal to or slightly higher than the temperature of the refrigerator compartment 104. The freezer compartment 108 is set to a freezing temperature zone. The freezer compartment 108 is typically set to -22°C to -15°C for frozen storage, but may be set to a lower temperature such as -30°C and -25°C for an improvement in frozen storage state.

The switch compartment 105 is capable of switching to not only the refrigeration temperature zone of 1°C to 5°C, the vegetable temperature zone of 2°C to 7°C, and the freezing temperature zone of typically -22°C to -15°C, but also a preset temperature zone between the refrigeration temperature zone and the freezing temperature zone. The switch compartment 105 is a storage compartment with an independent door arranged side by side with the ice compartment 106, and often has a drawer door.

Note that, though the switch compartment 105 is a storage compartment including the refrigeration and freezing temperature zones in this example, the switch compartment 105 may be a storage compartment specialized for switching to only the above-mentioned intermediate temperature zone between the refrigerated storage and the frozen storage, while leaving the refrigerated storage to the refrigerator compartment 104 and the vegetable compartment 107 and the frozen storage to the freezer compartment 108. Alternatively, the switch compartment 105 may be a storage compartment fixed to a specific temperature zone.

The ice compartment 106 makes ice by an automatic ice machine (not shown) disposed in an upper part of the ice compartment 106 using water sent from a water storage tank (not shown) in the refrigerator compartment 104, and stores the ice in an ice storage container (not shown) disposed in a lower part of the ice compartment 106.

A top part of the heat-insulating main body 101 has a depression stepped toward the back of the refrigerator. A machinery compartment 101a is formed in this stepped depression, and high-pressure components of a refrigeration cycle such as a compressor 109 and a dryer (not shown) for water removal are housed in the machinery compartment 101a. That is, the machinery compartment 101a including the compressor 109 is formed cutting into a rear area of an uppermost part of the refrigerator compartment 104.

By forming the machinery compartment 101a to dispose the compressor 109 in the rear area of the uppermost storage compartment in the heat-insulating main body 101 which is hard to reach and so used to be a dead space, a machinery compartment space provided at the bottom of the heat-insulating main body 101 in a conventional refrigerator so as to be easily accessible by users can be effectively converted to a storage compartment capacity. This significantly improves storability and usability.

Note that the matters relating to the relevant part of the present disclosure described below in this example are also applicable to a conventional type of refrigerator in which the machinery compartment is formed to dispose the compressor 109 in the rear area of the lowermost storage compartment in the heat-insulating main body 101.

A cooling compartment 110 for generating cool air is provided behind the vegetable compartment 107 and the freezer compartment 108 and separated from an air path 141. The air path 141 for conveying cool air to each compartment having heat insulation properties and a back partition wall 111 for heat insulating partition from each storage compartment are formed between the cooling compartment 110 and each of the vegetable compartment 107 and the freezer compartment 108. A partition plate 161 for isolating a freezer compartment discharge air path 141 and the cooling compartment 110 from each other is provided, too. A cooler 112 is disposed in the cooling compartment 110, and a cooling fan 113 for blowing air cooled by the cooler 112 into the refrigerator compartment 104, the switch compartment 105, the ice compartment 106, the vegetable compartment 107, and the freezer compartment 108 by a forced convection method is placed in a space above the cooler 112.

Moreover, a radiant heater 114 made up of a glass tube for defrosting by removing frost or ice adhering to the cooler 112 and its periphery during cooling is provided in a space below the cooler 112. Furthermore, a drain pan 115 for receiving defrost water generated during defrosting and a drain tube 116 passing from a deepest part of the drain pan 115 through to outside the compartment are formed below the radiant heater 114. An evaporation dish 117 is formed outside the compartment downstream of the drain tube 116.

The vegetable compartment 107 includes a lower storage container 119 that is mounted on a frame attached to a drawer door 118 of the vegetable compartment 107, and an upper storage container 120 mounted on the lower storage container 119.

A lid 122 for substantially sealing mainly the upper storage container 120 in a closed state of the drawer door 118 is held by the inner case 103 and a first partition wall 123 above the vegetable compartment 107. In the closed state of the drawer door 118, left, right, and back sides of an upper surface of the upper storage container 120 are in close contact with the lid 122, and a front side of the upper surface of the upper storage container 120 is substantially in close contact with the lid 122. In addition, a boundary between the lower storage container 119 and left, right, and lower sides of a back surface of the upper storage container 120 has a narrow gap so as to prevent moisture in the food storage unit from escaping, in a range of not interfering with the upper storage container 120 during operation.

An air path of cool air discharged from a vegetable compartment discharge port 124 formed in the back partition wall 111 is provided between the lid 122 and the first partition wall 123. Moreover, a space is provided between the lower storage container 119 and a second partition wall 125, thereby forming a cool air path. A vegetable compartment suction port 126 through which cool air, having cooled the inside of the vegetable compartment 107 and undergone heat exchange, returns to the cooler 112 is disposed in a lower part of the back partition wall 111 on the back of the vegetable compartment 107.

Note that the matters relating to the relevant part of the present disclosure described below in this example are also applicable to a conventional type of refrigerator that is opened and closed by a frame attached to a door and a rail formed on an inner case.

The back partition wall 111 includes a back partition wall surface 151 made of a resin such as ABS, and a heat insulator 152 made of styrene foam or the like for ensuring the heat insulation of the storage compartment by isolating the storage compartment from the air path 141 and the cooling compartment 110. Here, a depression 111a is formed in a part of a storage compartment side wall surface of the back partition wall 111 so as to be lower in temperature than other parts, and an electrostatic atomization apparatus 131 which is a mist spray apparatus is installed in the depression 111a.

The electrostatic atomization apparatus 131 is mainly composed of an atomization unit 139, a voltage application unit 133, and an external case 137. A spray port 132 and a moisture supply port 138 are each formed in a part of the external case 137. An atomization electrode 135 as an atomization tip is placed in the atomization unit 139. The atomization electrode 135 is securely connected to a cooling pin 134 which is a heat transfer cooling member made of a good heat conductive material such as aluminum, stainless steel, or the like.

The atomization electrode 135 placed in the atomization unit 139 is an electrode connection member made of a good heat conductive material such as aluminum, stainless steel, brass, or the like. The atomization electrode 135 is fixed to an approximate center of one end of the cooling pin 134, and also electrically connected including one end wired from the voltage application unit 133.

The cooling pin 134 which is an electrode connection member is, for example, formed as a cylinder of about 10 mm in diameter and about 15 mm in length, and has a large heat capacity 50 times to 1000 times and preferably 100 times to 500 times that of the atomization electrode 135 of about 1 mm in diameter and about 5 mm in length. Thus, the cooling pin 134 has a heat capacity equal to or more than 50 times and preferably equal to or more than 100 times that of the atomization electrode 135. This further alleviates a direct significant influence of a temperature change of the cooling unit on the atomization electrode, with it being possible to spray a mist more stably with a smaller load fluctuation. Moreover, as a heat capacity upper limit, the cooling pin 134 has a heat capacity equal to or less than 1000 times and preferably equal to or less than 500 times that of the atomization electrode 135. When the heat capacity of the cooling pin 134 is excessively high, large energy is required to cool the cooling pin 134, making it difficult to save energy in cooling the cooling pin 134. By restricting the heat capacity within such an upper limit, however, it is possible to cool the atomization electrode stably and energy-efficiently, while alleviating a significant influence on the atomization electrode in the case where a heat load fluctuation from the cooling unit changes. In addition, by restricting the heat capacity within such an upper limit, a time lag required to cool the atomization electrode 135 via the cooling pin 134 can be kept within a proper range. Hence, slow start when cooling the atomization electrode, that is, when supplying water to the atomization apparatus, can be prevented and as a result the atomization electrode can be cooled stably and properly.

Moreover, the cooling pin 134 is preferably made of a high heat conductive material such as aluminum, copper, or the like. To efficiently conduct cold heat from one end to the other end of the cooling pin 134 by heat conduction, it is desirable that the heat insulator 152 covers a circumference of the cooling pin 134.

Furthermore, the heat conduction of the atomization electrode 135 and the cooling pin 134 needs to be maintained for a long time. Accordingly, an epoxy material or the like is poured into the connection part to prevent moisture and the like from entering, thereby suppressing a heat resistance and fixing the atomization electrode 135 and the cooling pin 134 together. Here, the atomization electrode 135 may be fixed to the cooling pin 134 by pressing and the like, in order to reduce the heat resistance.

In addition, since the cooling pin 134 needs to conduct cool temperature heat in the heat insulator 152 for thermally insulating the storage compartment from the cooler 112 or the air path, it is desirable that the cooling pin 134 has a length equal to or more than 5 mm and preferably equal to or more than 10 mm. That is, it is desirable that the length of the cooling pin 134 is equal to or more than 5 mm, and preferably equal to or more than 10 mm. Note, however, that a length equal to or more than 30 mm reduces effectiveness.

Note that the electrostatic atomization apparatus 131 placed in the storage compartment (vegetable compartment 107) is in a high humidity environment and this humidity may affect the cooling pin 134. Accordingly, the cooling pin 134 is preferably made of a metal material that is resistant to corrosion and rust, or a material that has been coated or surface-treated by, for example, alumite.

In this example, the cooling pin 134 as the heat transfer cooling member is shaped as a cylinder. This being so, when fitting the cooling pin 134 into the depression 111a of the heat insulator 152, the cooling pin 134 can be press-fit while rotating the electrostatic atomization apparatus 131 even in the case where a fitting dimension is slightly tight. This enables the cooling pin 134 to be attached with less clearance. Alternatively, the cooling pin 134 may be shaped as a rectangular parallelepiped or a regular polyhedron. Such polygonal shapes allow for easier positioning than the cylinder, so that the electrostatic atomization apparatus 131 can be put in a proper position.

Furthermore, the atomization electrode 135 as the atomization tip is attached on a central axis of the cooling pin 134. Accordingly, when attaching the cooling pin 134, a distance between the atomization electrode 135 and a counter electrode 136 can be kept constant even though the electrostatic atomization apparatus 131 is rotated. Hence, a stable discharge distance can be ensured.

The cooling pin 134 as the heat transfer cooling member is fixed to the external case 137, where the cooling pin 134 itself has a projection 134a that protrudes from the external case 137. The projection 134a of the cooling pin 134 is located opposite to the atomization electrode 135, and fits into a deepest depression 111b that is deeper than the depression 111a of the back partition wall 111.

Thus, the deepest depression 111b deeper than the depression 111a is formed on the back of the cooling pin 134 as the heat transfer cooling member, and this part of the heat insulator 152 on the cooling compartment 110 side, that is, on the air path 141 side, is thinner than other parts in the back partition wall 111 on the back of the vegetable compartment 107. The thinner heat insulator 152 serves as a heat relaxation member, and the cooling pin 134 is cooled from the back by the cool air of the cooling compartment 110 via the heat insulator 152 as the heat relaxation member.

Here, the cool air generated in the cooling compartment 110 is used to cool the cooling pin 134 as the heat transfer cooling member, and the cooling pin 134 is formed of a metal piece having excellent heat conductivity. Accordingly, the cooling unit can perform cooling necessary for dew condensation of the atomization electrode 135 as the atomization tip, just by heat conduction from the air path (freezer compartment discharge air path 141) through which the cool air generated by the cooler 112 flows. Hence, dew condensation can be formed.

Since the cooling unit can be realized by such a simple structure, highly reliable atomization with a low incidence of troubles can be achieved. Moreover, the cooling pin 134 as the heat transfer cooling member and the atomization electrode 135 as the atomization tip can be cooled by using the cooling source of the refrigeration cycle, which contributes to energy-efficient atomization.

The cooling pin 134 as the heat transfer cooling member in this example is shaped to have the projection 134a on the opposite side to the atomization electrode 135 as the atomization tip. This being so, in the atomization unit 139, an end 134b on a projection 134a side is closest to the cooling unit. Therefore, the cooling pin 134 is cooled by the cool air of the cooling unit, from the end 134b farthest from the atomization electrode 135.

The counter electrode 136 shaped like a circular doughnut plate is installed in a position facing the atomization electrode 135 on a storage compartment (vegetable compartment 107) side, so as to have the constant distance from the tip of the atomization electrode 135. The spray port 132 is formed on a further extension from the atomization electrode 135.

Furthermore, the voltage application unit 133 is formed near the atomization unit 139. A negative potential side of the voltage application unit 133 generating a high voltage is electrically connected to the atomization electrode 135, and a positive potential side of the voltage application unit 133 is electrically connected to the counter electrode 136.

Discharge constantly occurs in the vicinity of the atomization electrode 135 for mist spray, which raises a possibility that the tip of the atomization electrode 135 wears out. The refrigerator 100 is typically intended to operate over a long period of 10 years or more. Therefore, a strong surface treatment needs to be performed on the surface of the atomization electrode 135. For example, the use of nickel plating, gold plating, or platinum plating is desirable.

The counter electrode 136 is made of, for example, stainless steel. Long-term reliability needs to be ensured for the counter electrode 136. In particular, to prevent foreign substance adhesion and contamination, it is desirable to perform a surface treatment such as platinum plating on the counter electrode 136.

The voltage application unit 133 communicates with and is controlled by a control unit 146 of the refrigerator main body, and switches the high voltage on or off according to an input signal from the refrigerator 100 or the electrostatic atomization apparatus 131.

In this example, the voltage application unit 133 is placed inside the electrostatic atomization apparatus 131 and so is present in a low temperature and high humidity atmosphere in the storage compartment (vegetable compartment 107). Accordingly, a molding material or a coating material for moisture prevention is applied to a board surface of the voltage application unit 133.

In the case where the voltage application unit 133 is placed in a high temperature part outside the storage compartment, however, no coating is needed.

Note that a heating unit 154 such as a heater is disposed between the heat insulator 152 and the back partition wall surface 151 to which the electrostatic atomization apparatus 131 is fixed, in order to adjust the temperature of the storage compartment (vegetable compartment 107) or prevent surface dew condensation.

An operation and working of the refrigerator 100 in this example having the above-mentioned structure are described below.

An operation of the refrigeration cycle is described first. The refrigeration cycle is activated by a signal from a control board (not shown) according to a set temperature inside the refrigerator, as a result of which a cooling operation is performed. A high temperature and high pressure refrigerant discharged by an operation of the compressor 109 is condensed into liquid to some extent by a condenser (not shown), is further condensed into liquid without causing dew condensation of the refrigerator main body (heat-insulating main body 101) while passing through a refrigerant pipe (not shown) and the like disposed on the side and back surfaces of the refrigerator main body (heat-insulating main body 101) and in a front opening of the refrigerator main body (heat-insulating main body 101), and reaches a capillary tube (not shown). Subsequently, the refrigerant is reduced in pressure in the capillary tube while undergoing heat exchange with a suction pipe (not shown) leading to the compressor 109 to thereby become a low temperature and low pressure liquid refrigerant, and reaches the cooler 112.

Here, the low temperature and low pressure liquid refrigerant undergoes heat exchange with the air in each storage compartment such as the freezer compartment discharge air path 141 conveyed by an operation of the cooling fan 113, as a result of which the refrigerant in the cooler 112 evaporates. Hence, the cool air for cooling each storage compartment is generated in the cooling compartment 110. The low temperature cool air from the cooling fan 113 is branched into the refrigerator compartment 104, the switch compartment 105, the ice compartment 106, the vegetable compartment 107, and the freezer compartment 108 using air paths and dampers, and cools each storage compartment to a desired temperature zone. In particular, the vegetable compartment 107 is adjusted to 2°C to 7°C by cool air allocation and an on/off operation of the heating unit 154 and the like, and usually does not have an inside temperature detection unit.

After cooling the refrigerator compartment 104, the air is discharged into the vegetable compartment 107 from the vegetable compartment discharge port 124 formed in a refrigerator compartment return air path 140 for circulating the air to the cooler 112, and flows around the upper storage container 120 and the lower storage container 119 for indirect cooling. The air then returns to the cooler 112 from the vegetable compartment suction port 126.

In a part of the back partition wall 111 that is in a relatively high humidity environment, the heat insulator 152 has a smaller wall thickness than other parts. In particular, there is the deepest depression 111b behind the cooling pin 134 where the heat insulator 152 is, for example, about 2 mm to 10 mm in thickness. In the refrigerator 100 of this example, such a thickness is appropriate for the heat relaxation member located between the cooling pin 134 and the cooling unit. Thus, the depression 111a is formed in the back partition wall 111, and the electrostatic atomization apparatus 131 having the protruding projection 134a of the cooling pin 134 is fit into the deepest depression 111b on a backmost side of the depression 111a.

Cool air of about -15°C to -25°C generated by the cooler 112 and blown by the cooling fan 113 according to an operation of a cooling system flows in the freezer compartment discharge air path 141 behind the cooling pin 134, as a result of which the cooling pin 134 as the heat transfer cooling member is cooled to, for example, about 0°C to -10°C by heat conduction from the air path surface. Since the cooling pin 134 is a good heat conductive member, the cooling pin 134 transmits cold heat extremely easily, so that the atomization electrode 135 as the atomization tip is indirectly cooled to about 0°C to -10°C via the cooling pin 134.

Here, the vegetable compartment 107 is 2°C to 7°C in temperature, and also is in a relatively high humidity state due to transpiration from vegetables and the like. Accordingly, when the atomization electrode 135 as the atomization tip drops to a dew point temperature or below, water is generated and water droplets adhere to the atomization electrode 135 including its tip.

The voltage application unit 133 applies a high voltage (for example, 4 kV to 10 kV) between the atomization electrode 135 as the atomization tip to which the water droplets adhere and the counter electrode 136, where the atomization electrode 135 is on a negative voltage side and the counter electrode 136 is on a positive voltage side. This causes corona discharge to occur between the electrodes. The water droplets at the tip of the atomization electrode 135 as the atomization tip are finely divided by electrostatic energy. Furthermore, since the liquid droplets are electrically charged, a nano-level fine mist carrying an invisible charge of a several nm level, accompanied by ozone, OH radicals, and so on, is generated by Rayleigh fission. The voltage applied between the electrodes is an extremely high voltage of 4 kV to 10 kV. However, a discharge current value at this time is at a several µA level, and therefore an input is extremely low, about 0.5 W to 1.5 W.

In detail, suppose the atomization electrode 135 is on a reference potential side (0 V) and the counter electrode 136 is on a high voltage side (+7 kV). An air insulation layer between the atomization electrode 135 and the counter electrode 136 is broken down, and discharge is induced by an electrostatic force. At this time, the dew condensation water adhering to the tip of the atomization electrode 135 is electrically charged and becomes fine particles. Since the counter electrode 136 is on the positive side, the charged fine mist is attracted to the counter electrode 136, and the liquid droplets are more finely divided. Thus, the nano-level fine mist carrying an invisible charge of a several nm level containing radicals is attracted to the counter electrode 136, and sprayed toward the storage compartment (vegetable compartment 107) by its inertial force.

Note that, when there is no water on the atomization electrode 135, the discharge distance increases and the air insulation layer cannot be broken down, and therefore no discharge phenomenon takes place. Hence, no current flows between the atomization electrode 135 and the counter electrode 136.

By cooling the cooling pin 134 as the heat transfer cooling member instead of directly cooling the atomization electrode 135 as the atomization tip, the atomization electrode 135 can be cooled indirectly. Here, since the cooling pin 134 as the heat transfer cooling member has a larger heat capacity than the atomization electrode 135, the atomization electrode 135 can be cooled while alleviating a direct significant influence on the atomization electrode 135 as the atomization tip. Moreover, as a result of the cooling pin 134 functioning as a cool storage, a sudden temperature fluctuation of the atomization electrode 135 can be prevented and mist spray of a stable spray amount can be realized.

Thus, by cooling the cooling pin 134 as the heat transfer cooling member instead of directly cooling the atomization electrode 135 as the atomization tip, the atomization electrode 135 can be cooled indirectly. Here, since the heat transfer cooling member has a larger heat capacity than the atomization electrode 135, the atomization electrode 135 as the atomization tip can be cooled while alleviating a direct significant influence of a temperature change of the cooling unit on the atomization electrode 135. Therefore, a load fluctuation of the atomization electrode 135 can be suppressed, with it being possible to realize mist spray of a stable spray amount.

As described above, the counter electrode 136 is disposed at a position facing the atomization electrode 135, and the voltage application unit 133 generates a high-voltage potential difference between the atomization electrode 135 and the counter electrode 136. This enables an electric field near the atomization electrode 135 to be formed stably. As a result, an atomization phenomenon and a spray direction are determined, and accuracy of a fine mist sprayed into the storage containers (lower storage container 119, upper storage container 120) is enhanced, which contributes to improved accuracy of the atomization unit 139. Hence, the electrostatic atomization apparatus 131 of high reliability can be provided.

In addition, the cooling pin 134 as the heat transfer cooling member is cooled via the heat relaxation member (heat insulator 152). This achieves dual-structure indirect cooling, that is, the atomization electrode 135 is indirectly cooled via the cooling pin 134 and further via the heat insulator 152 as the heat relaxation member. In so doing, the atomization electrode 135 as the atomization tip can be kept from being cooled excessively.

When the temperature of the atomization electrode 135 decreases by 1 K, a water generation speed of the tip of the atomization electrode 135 increases by about 10%. However, when the atomization electrode 135 is cooled excessively, a dew condensation speed increases sharply. This causes a large amount of dew condensation, and an increase in load of the atomization unit 139 raises concern about an input increase in the electrostatic atomization apparatus 131 and freezing and an atomization failure of the atomization unit 139. According to the above-mentioned structure, on the other hand, such problems due to the load increase of the atomization unit 139 can be prevented. Since an appropriate dew condensation amount can be ensured, stable mist spray can be achieved with a low input.

In terms of assembly, the cooling pin 134 as the heat transfer cooling member is desirably shaped as a cylinder. To be exact, the cooling pin 134 may also be shaped as a rectangular parallelepiped or a regular polyhedron. In the case of a cylinder, however, the cooling pin 134 can be fit into the depression 111a of the heat insulator 152 while tilting the electrostatic atomization apparatus 131. In the case of a polygonal shape, on the other hand, positioning is easier than in the case of a cylinder.

Moreover, by attaching the atomization electrode 135 on the central axis of the cooling pin 134, when attaching the cooling pin 134, the distance between the atomization electrode 135 and the counter electrode 136 can be kept constant even though the electrostatic atomization apparatus 131 is rotated. Hence, a stable discharge distance can be ensured.

Furthermore, by indirectly cooling the atomization electrode 135 as the atomization tip in the dual structure via the heat transfer cooling member (cooling pin 134) and the heat relaxation member (heat insulator 152), a direct significant influence of a temperature change of the cooling unit on the atomization electrode 135 as the atomization tip can be further alleviated. This suppresses a load fluctuation of the atomization electrode 135, so that mist spray of a stable spray amount can be achieved.

Besides, the cool air generated in the cooling compartment 110 is used to cool the cooling pin 134 as the heat transfer cooling member, and the cooling pin 134 is formed of a metal piece having excellent heat conductivity. Accordingly, the cooling unit can perform necessary cooling just by heat conduction from the air path (freezer compartment discharge air path 141) through which the cool air generated by the cooler 112 flows.

The cooling pin 134 as the heat transfer cooling member in this example is shaped to have the projection 134a on the opposite side to the atomization electrode 135 as the atomization tip. This being so, in the atomization unit 139, the end 134b on the projection 134a side is closest to the cooling unit. Therefore, the cooling pin 134 as the heat transfer cooling member is cooled by the cool air of the cooling unit, from the end 134b farthest from the atomization electrode 135 as the atomization tip.

Since the cooling unit can be made by such a simple structure, the atomization unit 139 of high reliability with a low incidence of troubles can be realized. Moreover, the cooling pin 134 as the heat transfer cooling member and the atomization electrode 135 as the atomization tip can be cooled by using the cooling source of the refrigeration cycle, which contributes to energy-efficient atomization.

Thus, the cooling by the cooling unit is performed from the end 134b which is a part of the cooling pin 134 as the heat transfer cooling member farthest from the atomization electrode 135 as the atomization tip. In doing so, after the large heat capacity of the cooling pin 134 is cooled, the atomization electrode 135 is cooled by the cooling pin 134. This further alleviates a direct significant influence of a temperature change of the cooling unit on the atomization electrode 135, with it being possible to realize stable mist spray with a smaller load fluctuation.

Moreover, the depression 111a is formed in a storage compartment (vegetable compartment 107) side part of the back partition wall 111 to which the atomization unit 139 is attached, and the atomization unit 139 having the projection 134a is inserted into this depression 111a. In this way, the heat insulator 152 constituting the back partition wall 111 of the storage compartment (vegetable compartment 107) can be used as the heat relaxation member. Hence, the heat relaxation member for properly cooling the atomization electrode 135 as the atomization tip can be provided by adjusting the thickness of the heat insulator 152, with there being no need to prepare a particular heat relaxation member. This contributes to a more simplified structure of the atomization unit 139.

In addition, by inserting the atomization unit 139 having the projection 134a composed of the cooling pin 134 into the depression 111a, the atomization unit 139 can be securely attached to the partition wall without looseness, and also a protuberance toward the vegetable compartment 107 as the storage compartment can be prevented. Such an atomization unit 139 is difficult to reach by hand, so that safety can be improved.

Besides, the atomization unit 139 does not extend through and protrude out of the back partition wall 111 of the vegetable compartment 107 as the storage compartment. Accordingly, an air path cross-sectional area of the freezer compartment discharge air path 141 is unaffected, and a decrease in cooling amount caused by an increased air path resistance can be prevented.

Moreover, the depression 111a is formed in a part of the vegetable compartment 107 and the atomization unit 139 is inserted into this depression 111a, so that a storage capacity for storing vegetables, fruits, and other foods is unaffected. In addition, while reliably cooling the cooling pin 134 as the heat transfer cooling member, a wall thickness enough for ensuring heat insulation properties is secured for other parts. This prevents dew condensation in the external case 137, thereby enhancing reliability.

Additionally, the cooling pin 134 as the electrode connection member has a certain level of heat capacity and is capable of lessening a response to heat conduction from the cooling air path (freezer compartment discharge air path 141), so that a temperature fluctuation of the atomization electrode 135 as the atomization tip can be suppressed. The cooling pin 134 also functions as a cool storage member, thereby ensuring a dew condensation time for the atomization electrode 135 as the atomization tip and also preventing freezing.

Furthermore, by combining the good heat conductive cooling pin 134 and the heat insulator 152, the cold heat can be conducted favorably without loss. Besides, by suppressing a heat resistance at the connection part between the cooling pin 134 and the atomization electrode 135, temperature fluctuations of the atomization electrode 135 and the cooling pin 134 follow each other favorably. In addition, thermal bonding can be maintained for a long time because moisture cannot enter into the connection part.

Moreover, since the storage compartment (vegetable compartment 107) is in a high humidity environment and this humidity may affect the cooling pin 134 as the heat transfer cooling member, the cooling pin 134 is made of a metal material that is resistant to corrosion and rust or a material that has been coated or surface-treated by, for example, alumite. This prevents rust and the like, suppresses an increase in surface heat resistance, and ensures stable heat conduction.

Further, nickel plating, gold plating, or platinum plating is used on the surface of the atomization electrode 135 as the atomization tip, which enables the tip of the atomization electrode 135 to be kept from wearing due to discharge. Thus, the tip of the atomization electrode 135 can be maintained in shape, as a result of which spray can be performed over a long period of time and also a stable liquid droplet shape at the tip can be attained.

When the fine mist is sprayed from the atomization electrode 135, an ion wind is generated. During this time, high humidity air newly flows into the part of the atomization electrode 135 inside the external case 137 from the moisture supply port 138 formed in the external case 137. This allows the spray to be performed continuously.

The fine mist generated by the atomization electrode 135 is mainly sprayed into the lower storage container 119, but also reaches the upper storage container 120 because the fine mist is made up of extremely small particles and so has high diffusivity. The sprayed fine mist is generated by high-voltage discharge, and so is negatively charged. Meanwhile, green leafy vegetables, fruits, and the like stored in the vegetable compartment 107 tend to wilt more by transpiration or by transpiration during storage. Usually, some of vegetables and fruits stored in the vegetable compartment are in a rather wilted state as a result of transpiration on the way home from shopping or transpiration during storage, and these vegetables and fruits are positively charged. Accordingly, the atomized mist tends to gather on vegetable surfaces, thereby enhancing freshness preservation.

The nano-level fine mist adhering to the vegetable surfaces sufficiently contains OH radicals, a small amount of ozone, and the like. Such a nano-level fine mist is effective in sterilization, antimicrobial activity, microbial elimination, and so on, and also stimulates increases in nutrient of the vegetables such as vitamin C through agricultural chemical removal and antioxidation by oxidative decomposition.

When there is no water on the atomization electrode 135, the discharge distance increases and the air insulation layer cannot be broken down, and therefore no discharge phenomenon takes place. Hence, no current flows between the atomization electrode 135 and the counter electrode 136. This phenomenon may be detected by the control unit 146 of the refrigerator 100 to control on/off of the high voltage of the voltage application unit 133.

In this example, the voltage application unit 133 is installed at a relatively low temperature and high humidity position in the storage compartment (vegetable compartment 107). Accordingly, a dampproof and waterproof structure by a potting material or a coating material is employed for the voltage application unit 133 for circuit protection.

Note, however, that the above-mentioned measure is unnecessary in the case where the voltage application unit 133 is installed outside the storage compartment.

As described above, in the first example, the thermally insulated storage compartment (vegetable compartment 107 and the like) and the electrostatic atomization apparatus 131 (atomization unit 139) that sprays a mist into the storage compartment (vegetable compartment 107) are provided. The atomization unit 139 in the electrostatic atomization apparatus 131 includes the atomization tip (atomization electrode 135) electrically connected to the voltage application unit 133 for generating a high voltage and spraying the mist, the counter electrode 136 disposed facing the atomization electrode 135, the heat transfer cooling member (cooling pin 134) connected to the atomization tip (atomization electrode 135), and the cooling unit that cools the heat transfer cooling member (cooling pin 134) in order to bring the atomization electrode 135 to not more than the dew point that is a temperature at which water in the air builds up dew condensation. The cooling unit cools the heat transfer cooling member (cooling pin 134), thereby indirectly cooling the atomization tip (atomization electrode 135) to the dew point or below. This causes water in the air to build up dew condensation on the atomization tip (atomization electrode 135) and to be sprayed as a mist into the storage compartment (vegetable compartment 107). Thus, the dew condensation is formed on the atomization tip (atomization electrode 135) easily and reliably from an excess water vapor in the storage compartment (vegetable compartment 107), and the nano-level fine mist is generated by high-voltage corona discharge with the counter electrode 136. The atomized fine mist is sprayed to uniformly adhere to surfaces of vegetables and fruits, thereby suppressing transpiration from the vegetables and fruits and enhancing freshness preservation. The fine mist also penetrates into tissues via intercellular spaces, stomata, and the like on the surfaces of the vegetables and fruits, as a result of which water is supplied into wilted cells and the vegetables and fruits return to a fresh state.

Here, since the discharge is induced between the atomization electrode 135 and the counter electrode 136, an electric field can be formed stably to determine a spray direction. As a result, the fine mist can be sprayed into the storage containers (lower storage container 119, upper storage container 120) more accurately.

Moreover, ozone and OH radicals generated simultaneously with the mist contribute to enhanced effects of deodorization, removal of harmful substances from food surfaces, contamination prevention, and the like.

Besides, the mist can be directly sprayed over the foods in the storage containers (lower storage container 119, upper storage container 120) in the vegetable compartment 107, and the potentials of the mist and the vegetables are exploited to cause the mist to adhere to the vegetable surfaces. This improves freshness preservation efficiency.

Furthermore, the mist is sprayed by causing an excess water vapor in the storage compartment (vegetable compartment 107) to build up dew condensation on the atomization electrode 135 and water droplets to adhere to the atomization electrode 135. This makes it unnecessary to provide any of a defrost hose for supplying mist spray water, a purifying filter, a water supply path directly connected to tap water, a water storage tank, and so on. A water conveyance unit such as a pump is not used, either. Hence, the fine mist can be supplied to the storage compartment (vegetable compartment 107) by a simple structure, with there being no need for a complex mechanism.

Since the fine mist is supplied to the storage compartment (vegetable compartment 107) stably by a simple structure, the possibility of troubles of the refrigerator 100 can be significantly reduced. This enables the refrigerator 100 to exhibit higher quality in addition to higher reliability.

Here, dew condensation water having no mineral compositions or impurities is used instead of tap water, so that deterioration in water retentivity caused by water retainer deterioration or clogging in the case of using a water retainer can be prevented.

Further, the atomization performed here is not ultrasonic atomization by ultrasonic vibration, with there being no need to take noise and vibration of resonance and the like associated with ultrasonic frequency oscillation into consideration.

Moreover, since no water storage tank is necessary, there is no need to provide, for example, a water level sensor that is required in the case of using a water storage tank in order to address ultrasonic element destruction caused by a water shortage. Hence, the atomization apparatus can be provided in the refrigerator by a simpler structure.

In addition, the part accommodating the voltage application unit 133 is also buried in the back partition wall 111 and cooled, with it being possible to suppress a temperature increase of the board. This allows for a reduction in temperature effect in the storage compartment (vegetable compartment 107).

In this example, the cooler 112 for cooling each of the storage compartments 104, 105, 106, 107, and 108 and the back partition wall 111 for thermally insulating the storage compartment (vegetable compartment 107) from the cooling compartment 110 including the cooler 112 are provided, and the electrostatic atomization apparatus 131 is attached to the back partition wall 111. By such installing the electrostatic atomization apparatus 131 in the gap in the storage compartment (vegetable compartment 107), a reduction in storage capacity can be avoided. Additionally, the electrostatic atomization apparatus 131 is difficult to reach by hand because it is attached to the back surface, which contributes to enhanced safety.

In this example, the heat transfer cooling member (cooling pin 134) connected to the atomization electrode 135 as the atomization tip of the electrostatic atomization apparatus 131 is a metal piece having good heat conductivity, and the cooling unit for cooling the heat transfer cooling member (cooling pin 134) utilizes heat conduction from the air path (freezer compartment discharge air path 141) through which the cool air generated by the cooler 112 flows. By adjusting the wall thickness of the heat insulator 152 of the back partition wall 111 as the heat relaxation member, it is possible to easily set the temperatures of the cooling pin 134 as the heat transfer cooling member and the atomization electrode 135 as the atomization tip. In addition, interposing the heat insulator 152 as the heat relaxation member suppresses leakage of cool temperature air, so that frost formation and dew condensation of the external case 137 and the like that lead to lower reliability can be prevented.

In this example, the depression 111a is formed in a storage compartment (vegetable compartment 107) side part of the back partition wall 111 to which the atomization unit 139 of the electrostatic atomization apparatus 131 is attached, and the heat transfer cooling member (cooling pin 134) connected to the atomization electrode 135 as the atomization tip of the electrostatic atomization apparatus 131 is inserted into this depression 111a. Accordingly, the storage capacity for storing vegetables, fruits, and other foods is unaffected. In addition, while reliably cooling the heat transfer cooling member (cooling pin 134), a wall thickness enough for ensuring heat insulation properties is secured for other parts in the electrostatic atomization apparatus 131. This prevents dew condensation in the external case 137, thereby enhancing reliability.

Note that, though ozone is generated together with the fine mist because the electrostatic atomization apparatus 131 in this example applies a high voltage between the atomization electrode 135 as the atomization tip and the counter electrode 136, an ozone concentration in the storage compartment (vegetable compartment 107) can be adjusted by on/off operation control of the electrostatic atomization apparatus 131. By properly adjusting the ozone concentration, deterioration such as yellowing of vegetables due to excessive ozone can be prevented, and sterilization and antimicrobial activity on vegetable surfaces can be enhanced.

In this example, the atomization electrode 135 is set on the reference potential side (0 V) and the positive potential (+7 kV) is applied to the counter electrode 136, thereby generating a high-voltage potential difference between the electrodes. Alternatively, a high-voltage potential difference may be generated between the electrodes by setting the counter electrode 136 on the reference potential side (0 V) and applying a negative potential (-7 kV) to the atomization electrode 135. In this case, the counter electrode 136 closer to the storage compartment (vegetable compartment 107) is on the reference potential side, and therefore an electric shock or the like can be avoided even when a user's hand comes near the counter electrode 136. Moreover, in the case where the atomization electrode 135 is at the negative potential of -7 kV, the counter electrode 136 may be omitted by setting the storage compartment (vegetable compartment 107) on the reference potential side.

In such a case, for example, a conductive storage container is provided in the heat-insulated storage compartment (vegetable compartment 107), where the conductive storage container is electrically connected to a (conductive) holding member of the storage container and also is made detachable from the holding member. In this structure, the holding member is connected to a reference potential part to be grounded (0 V).

This allows the potential difference to be constantly maintained between the atomization unit 139 and each of the storage container and the holding member, so that a stable electric field is generated. As a result, the mist can be sprayed stably from the atomization unit 139. Besides, since the entire storage container is at the reference potential, the sprayed mist can be diffused throughout the storage container. Further, electrostatic charges to surrounding objects can be prevented.

Thus, there is no need to particularly provide the counter electrode 136, because the potential difference from the atomization electrode 135 can be created to spray the mist by providing the grounded holding member in a part of the storage compartment (vegetable compartment 107). In this way, a stable electric field can be generated by a simpler structure, thereby enabling the mist to be sprayed stably from the atomization unit.

In addition, when the holding member is attached to the storage container side, the entire storage container is at the reference potential, and therefore the sprayed mist can be diffused throughout the storage container. Further, electrostatic charges to surrounding objects can be prevented.

Though the air path for cooling the cooling pin 134 as the heat transfer cooling member is the freezer compartment discharge air path 141 in this example, the air path may instead be a low temperature air path such as a freezer compartment return air path or a discharge air path of the ice compartment 106. This expands an area in which the electrostatic atomization apparatus 131 can be installed.

Though the cooling unit for cooling the cooling pin 134 as the heat transfer cooling member is the air cooled using the cooling source generated in the refrigeration cycle of the refrigerator 100 in this example, it is also possible to utilize heat transmission from a cooling pipe that uses a cool temperature or cool air from the cooling source of the refrigerator 100. In such a case, by adjusting a temperature of the cooling pipe, the cooling pin 134 as the heat transfer cooling member can be cooled at an arbitrary temperature. This eases temperature control when cooling the atomization electrode 135.

Though no water retainer is provided around the atomization electrode 135 of the electrostatic atomization apparatus 131 in this example, a water retainer may be provided. This enables dew condensation water generated near the atomization electrode 135 to be retained around the atomization electrode 135, with it being possible to timely supply the water to the atomization electrode 135.

Though the storage compartment to which the mist is sprayed from the atomization unit 139 of the electrostatic atomization apparatus 131 is the vegetable compartment 107 in this example, the mist may be sprayed to storage compartments of other temperature zones such as the refrigerator compartment 104 and the switch compartment 105. In such a case, various applications can be developed.

### (Second Example)

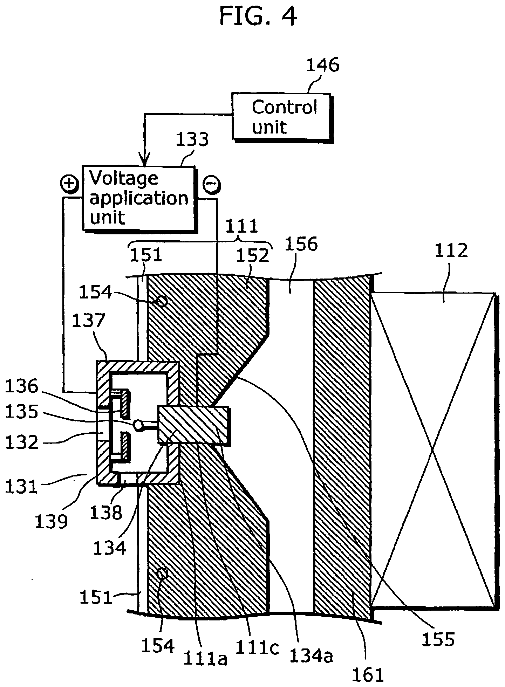

A longitudinal sectional view showing a section when a refrigerator in a second example of the present disclosure is cut into left and right is approximately the same as FIG. 1, and a relevant part front view showing a back surface of a vegetable compartment in the refrigerator in the second example of the present disclosure is the same as FIG. 2. FIG. 4 is a sectional view of an electrostatic atomization apparatus and its periphery included in the vegetable compartment in the refrigerator in the second example of the present disclosure, as taken along line A-A in FIG. 2 and seen from the arrow direction.

In the drawing, the back partition wall 111 includes the back partition wall surface 151 made of a resin such as ABS, and the heat insulator 152 made of styrene foam or the like for ensuring the heat insulation of the storage compartment by isolating the storage compartment from an air path 156 and the cooling compartment 110. A depression is formed in a part of a storage compartment side wall surface of the back partition wall 111 so as to be lower in temperature than other parts. In addition, a further depression is formed in an installation site of the cooling pin 134 on a cooler 112 side, as a result of which a through part 111c is generated. The electrostatic atomization apparatus 131 which is a mist spray apparatus is installed in the through part 111c.

Here, a part of the cooling pin 134 as a heat transfer cooling member passes through the heat insulator 152 and is exposed to a part of the low temperature air path 156. The low temperature air path 156 has a projection near the back of the cooling pin 134, that is, a heat insulator depression 155 is formed. Thus, the air path is partly widened.

An operation and working of the refrigerator 100 having the above-mentioned structure are described below.

In a part of the back partition wall 111 that is in a relatively high humidity environment, the heat insulator 152 is smaller in wall thickness than other parts. In particular, the heat insulator 152 behind the cooling pin 134 has a thickness of, for example, about 2 mm to 10 mm. Accordingly, the through part 111c is formed in the back partition wall 111, and the electrostatic atomization apparatus 131 is attached in the through part 111c.

The cooling pin 134 is partly exposed to the low temperature air path 156 located behind. Cool air of a temperature lower than the vegetable compartment temperature is generated by the cooler 112 and blown by the cooling fan 113 according to an operation of a cooling system, and as a result the cooling pin 134 is cooled to, for example, about 0°C to -10°C. Since the cooling pin 134 is a good heat conductive member, the cooling pin 134 transmits cold heat extremely easily, so that the atomization electrode 135 as the atomization tip is also cooled to about 0°C to -10°C.

Here, the low temperature air path 156 is widened near the heat insulator depression 155, thereby decreasing an air path resistance. This allows an increased amount of air to be blown from the cooling fan 113. Hence, cooling system efficiency can be improved.

The voltage application unit 133 applies a high voltage (for example, 4 kV to 10 kV) between the atomization electrode 135 to which water droplets adhere and the counter electrode 136, where the atomization electrode 135 is on a negative voltage side and the counter electrode 136 is on a positive voltage side. This causes corona discharge to occur between the electrodes. The water droplets at the tip of the atomization electrode 135 are finely divided by electrostatic energy. Furthermore, since the liquid droplets are electrically charged, a nano-level fine mist carrying an invisible charge of a several nm level, accompanied by ozone, OH radicals, and so on, is generated by Rayleigh fission. The voltage applied between the electrodes is an extremely high voltage of 4 kV to 10 kV. However, a discharge current value at this time is at a several µA level, and therefore an input is extremely low, about 0.5 W to 1.5 W.

The generated fine mist is sprayed into the lower storage container 119, but also reaches the upper storage container 120 because the fine mist is made up of extremely small particles and so has high diffusivity. The sprayed fine mist is generated by high-voltage discharge, and so is negatively charged.

Meanwhile, green leafy vegetables, fruits, and the like stored in the vegetable compartment 107 tend to wilt more by transpiration or by transpiration during storage. Usually, some of vegetables and fruits stored in the vegetable compartment are in a rather wilted state as a result of transpiration on the way home from shopping or transpiration during storage, and these vegetables and fruits are positively charged. Accordingly, the atomized mist tends to gather on vegetable surfaces, thereby enhancing freshness preservation.

The nano-level fine mist adhering to the vegetable surfaces sufficiently contains OH radicals, a small amount of ozone, and the like. Such a nano-level fine mist is effective in sterilization, antimicrobial activity, microbial elimination, and so on, and also stimulates increases in nutrient of the vegetables such as vitamin C through agricultural chemical removal and antioxidation by oxidative decomposition.

As described above, in this example, at least one air path (low temperature air path 156) for conveying cool air to the storage compartment or the cooler 112 and the heat insulator 152 thermally insulated so as to suppress a heat effect between the storage compartment and other air paths are provided on the back surface side of the back partition wall 111 for partitioning the cooler 112 and the storage compartment (vegetable compartment 107) in a heat insulation manner. The cooling unit (heat transfer cooling member) that cools the atomization electrode 135 as the atomization tip of the atomization unit 139 in the electrostatic atomization apparatus 131 to cause dew condensation is the cooling pin 134 composed of a good heat conductive metal piece connected to the atomization electrode 135 as the atomization tip. The cooling unit that cools the cooling pin 134 can reliably cool the atomization electrode 135 as the atomization tip by using the cool air generated by the cooler 112. This can be achieved by a simple structure at low cost, because any particular new cooling unit is not used.

Moreover, in this example, a storage compartment (vegetable compartment 107) side part of the back partition wall 111 to which the atomization unit 139 of the electrostatic atomization apparatus 131 is attached has a depression, and the through part 111c is formed in the back partition wall 111 by the heat insulator depression 155. The cooling pin 134 as the heat transfer cooling member is inserted into this through part 111c, thereby attaching the electrostatic atomization apparatus 131 (atomization unit 139) to the back partition wall 111.

A part of the cooling pin 134 as the heat transfer cooling member inserted into the through part 111c passes through the heat insulator 152 and is exposed to a part of the low temperature air path 156. This allows the heat transfer cooling member (cooling pin 134) composed of a metal piece to be cooled reliably. In addition, by forming the heat insulator depression 155 in the low temperature air path 156 to widen an air path cross-sectional area of the low temperature air path 156, the air path resistance can be lowered or made equal, so that a decrease in cooling amount can be prevented. Furthermore, the temperature of the atomization electrode 135 as the atomization tip can be adjusted easily, by adjusting an exposed surface area of the cooling pin 134 as the heat transfer cooling member to the low temperature air path 156.

### (Third Example)

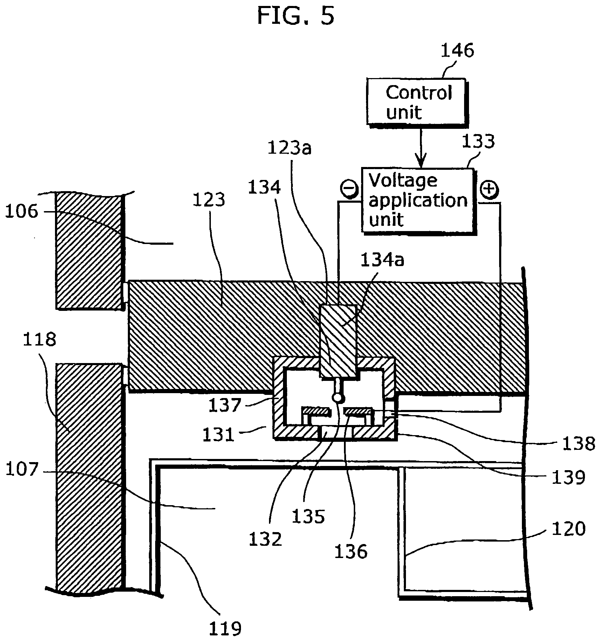

FIG. 5 is a relevant part longitudinal sectional view showing a section when a door-side peripheral part of a partition wall in an upper part of a vegetable compartment in a refrigerator in a third example of the present disclosure is cut into left and right.

As shown in the drawing, the electrostatic atomization apparatus 131 is incorporated in the first partition wall 123 that secures heat insulation in order to separate the temperature zones of the vegetable compartment 107 and the ice compartment 106. In particular, the heat insulator has a depression in a part corresponding to the cooling pin 134 of the atomization unit 139.

The refrigerator main body (heat-insulating main body 101) of the refrigerator 100 in this example has a plurality of storage compartments. The lower temperature storage compartment (ice compartment 106) maintained at a lower temperature than the vegetable compartment 107 including the atomization unit 139 of the electrostatic atomization apparatus 131 as the mist spray apparatus is provided on a top side of the vegetable compartment 107 including the atomization unit 139, and the atomization unit of the electrostatic atomization apparatus 131 is attached to the first partition wall 123 on the top side of the vegetable compartment 107 including the atomization unit 139 of the electrostatic atomization apparatus 131. The first partition wall 123 has a depression 123a on the vegetable compartment 107 side, and the cooling pin 134 as the heat transfer cooling member is inserted into the depression 123a.

An operation and working of the refrigerator 100 in this example having the above-mentioned structure are described below.

The first partition wall 123 in which the atomization unit 139 of the electrostatic atomization apparatus 131 is installed needs to have such a thickness that allows the cooling pin 134 as the heat transfer cooling member to which the atomization electrode 135 as the atomization tip is fixed, to be cooled. Accordingly, a part of the first partition wall 123 provided with the electrostatic atomization apparatus 131 has a smaller wall thickness than other parts. As a result, the cooling pin 134 can be cooled by heat conduction from the ice compartment 106 of a relatively lower temperature than the vegetable compartment 107, with it being possible to cool the atomization electrode 135. When the tip of the atomization electrode 135 drops to the dew point or below, a water vapor near the atomization electrode 135 builds up dew condensation on the atomization electrode 135, thereby reliably generating water droplets.

Though not shown, by installing an inside temperature detection unit, an inside humidity detection unit, an atomization electrode temperature detection unit, an atomization electrode humidity detection unit, and the like in the storage compartment, the dew point can be precisely calculated by a predetermined computation according to a change in storage compartment environment.

In this state, the voltage application unit 133 applies a high voltage (for example, 7.5 kV) between the atomization electrode 135 and the counter electrode 136, where the atomization electrode 135 is on a negative voltage side and the counter electrode 136 is on a positive voltage side. This causes an air insulation layer to be broken down and corona discharge to occur between the electrodes. Water on the atomization electrode 135 is atomized from the electrode tip, and a nano-level fine mist carrying an invisible charge less than 1 µm, accompanied by ozone, OH radicals, and so on, is generated.

The generated fine mist is sprayed into the vegetable containers (lower storage container 119, upper storage container 120). The fine mist sprayed from the electrostatic atomization apparatus 131 is negatively charged. Meanwhile, green leafy vegetables, fruits, and the like stored in the vegetable compartment 107 usually tend to be in a rather wilted state as a result of transpiration on the way home from shopping or transpiration during storage, and so these vegetables and fruits are usually positively charged. Accordingly, the sprayed fine mist carrying a negative charge tends to gather on vegetable surfaces.

Thus, the sprayed fine mist increases the humidity of the vegetable compartment 107 again and simultaneously adheres to surfaces of vegetables and fruits, thereby suppressing transpiration from the vegetables and fruits and enhancing freshness preservation. The fine mist also penetrates into tissues via intercellular spaces of the vegetables and fruits, as a result of which water is supplied into cells that have wilted due to moisture evaporation to resolve the wilting by cell turgor pressure, and the vegetables and fruits return to a fresh state.

Moreover, the generated fine mist contains ozone, OH radicals, and the like, which possess strong oxidative power. Hence, the generated fine mist can perform deodorization in the vegetable compartment 107 and antimicrobial activity and sterilization on the vegetable surfaces, and also oxidative-decompose and remove harmful substances such as agricultural chemicals and wax adhering to the vegetable surfaces.

Currently, isobutane which is a flammable refrigerant with a low global warming potential is mainly used as a refrigerant of a refrigeration cycle, in view of global environmental protection.

Isobutane which is a hydrocarbon has a specific gravity about twice the air at a room temperature and an atmospheric pressure (2.04, 300 K).

In the case where isobutane which is a flammable refrigerant leaks from the refrigeration system when the compressor 109 is stopped, isobutane leaks downward because it is heavier than the air. Here, the refrigerant may leak into storage compartments over the back partition wall 111. In particular, when the refrigerant leaks from the cooler 112 where a large amount of refrigerant is retained, a large amount of leakage may occur. However, the vegetable compartment 107 including the electrostatic atomization apparatus 131 is located above the cooler 112. Accordingly, even when the leakage occurs, the refrigerant does not leak into the vegetable compartment 107.

Moreover, even if the flammable refrigerant (isobutane) leaks from the cooler 112 into the vegetable compartment 107, the flammable refrigerant (isobutane) stays in a lower part of the storage compartment (vegetable compartment 107) because it is heavier than the air. Since the electrostatic atomization apparatus 131 is installed at the top of the storage compartment (vegetable compartment 107), the possibility that the vicinity of the electrostatic atomization apparatus 131 reaches a flammable concentration is extremely low.

As described above, in this example, the refrigerator main body (heat-insulating main body 101) has a plurality of storage compartments. The ice compartment 106 as the lower temperature storage compartment maintained at a lower temperature than the vegetable compartment 107 as the storage compartment including the atomization unit 139 is provided on the top side of the vegetable compartment 107 as the storage compartment including the atomization unit 139. The atomization unit 139 is attached to the first partition wall 123 on the top side of the vegetable compartment 107.

Thus, in the case where a freezing temperature zone storage compartment (the ice compartment 106 in this example) such as the freezer compartment or the ice compartment is located above the storage compartment (vegetable compartment 107) including the atomization unit 139, by installing the atomization unit 139 in the first partition wall 123 at the top separating these storage compartments, the cooling pin 134 as the heat transfer cooling member in the atomization unit 139 is cooled by cool air of the storage compartment (ice compartment 106) above the vegetable compartment 107, with it being possible to cool and build up dew condensation on the atomization electrode 135 as the atomization tip. Since the atomization unit can be provided by a simple structure with there being no need for a particular cooling apparatus, a highly reliable atomization unit with a low incidence of troubles can be realized.

In this example, the refrigerator 100 is provided with the partition wall (first partition wall 123) for separating the storage compartment (vegetable compartment 107), and the lower temperature storage compartment (ice compartment 106) of a lower temperature than the storage compartment (vegetable compartment 107) on the top side of the storage compartment (vegetable compartment 107). The electrostatic atomization apparatus 131 is attached to the first partition wall 123 at the top of the vegetable compartment 107. Thus, in the case where a freezing temperature zone storage compartment such as the freezer compartment or the ice compartment is located above the storage compartment (vegetable compartment 107) including the electrostatic atomization apparatus 131, by installing the electrostatic atomization apparatus 131 in the partition wall (first partition wall 123) at the top separating these compartments, a cooling source of the freezing temperature zone storage compartment can be used to cool and build up dew condensation on the atomization electrode 135 of the electrostatic atomization apparatus 131 via the cooling pin 134 as the heat transfer cooling member. This makes it unnecessary to provide any particular cooling apparatus. Moreover, since the mist is sprayed from the top, the mist can be easily diffused throughout the storage containers (lower storage container 119, upper storage container 120). In addition, the atomization unit 139 is difficult to reach by hand, which contributes to enhanced safety.

In this example, the atomization unit 139 generates a mist according to the electrostatic atomization method, where water droplets are finely divided using electrical energy such as a high voltage to thereby form a fine mist. The generated mist is electrically charged. This being so, by causing the mist to carry an opposite charge to vegetables, fruits, and the like to which the mist is intended to adhere, for example, by spraying a negatively charged mist over positively charged vegetables, the adhesion of the mist to the vegetables and fruits increases, as a result of which the mist can adhere to the vegetable surfaces more uniformly. In this way, a mist adhesion ratio can be improved when compared with an uncharged mist. Moreover, the fine mist can be directly sprayed over the foods in the vegetable containers, and the potentials of the fine mist and the vegetables are exploited to cause the fine mist to adhere to the vegetable surfaces. This improves freshness preservation efficiently.

In this example, not tap water supplied from outside but dew condensation water is used as makeup water. Since dew condensation water is free from mineral compositions and impurities, deterioration in water retentivity caused by deterioration or clogging of the tip of the atomization electrode can be prevented.

In this example, the mist contains radicals, so that agricultural chemicals, wax, and the like adhering to the vegetable surfaces can be decomposed and removed with an extremely small amount of water. This benefits water conservation, and also achieves a low input.

Moreover, since the electrostatic atomization apparatus 131 is located above the evaporator (cooler 112), even when a flammable refrigerant such as isobutane or propane used in a refrigeration cycle leaks, the vegetable compartment 107 is kept from being filled with the refrigerant because the refrigerant is heavier than the air. Thus, safety can be ensured.

In addition, since the atomization unit 139 of the electrostatic atomization apparatus 131 is installed in an upper part of the storage compartment (vegetable compartment 107), even when the refrigerant leaks, ignition can be prevented because the refrigerant stays in a lower part of the storage compartment (vegetable compartment 107).

Note that no part in the storage compartment (vegetable compartment 107) directly faces a refrigerant pipe or the like, and so the refrigerant does not leak into the storage compartment. Accordingly, ignition through the flammable refrigerant can be prevented.

### (Fourth Example)

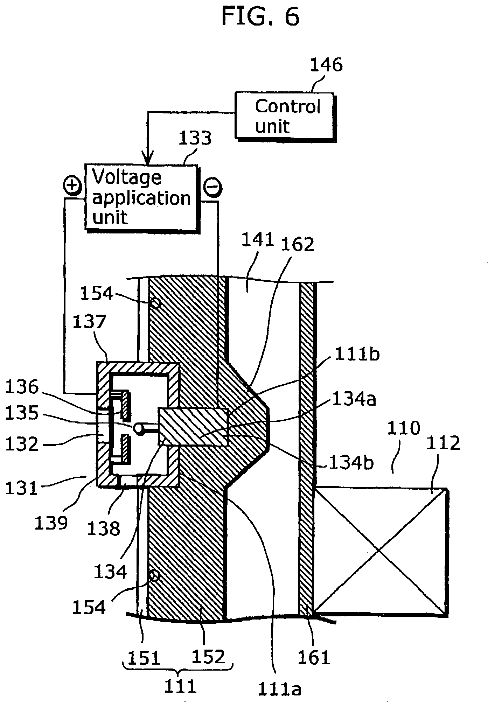

A longitudinal sectional view showing a section when a refrigerator in a fourth example of the present disclosure is cut into left and right is approximately the same as FIG. 1, and a relevant part front view showing a back surface of a vegetable compartment in the refrigerator in the fourth example of the present disclosure is the same as FIG. 2. FIG. 6 is a sectional view of an electrostatic atomization apparatus and its periphery included in the vegetable compartment in the refrigerator in the fourth example of the present disclosure, as taken along line A-A in FIG. 2 and seen from the arrow direction.

In this example, detailed description is given only for parts that differ from the structures described in the first to third examples, with description being omitted for parts that are the same as the structures described in the first to third examples or parts to which the same technical ideas are applicable.

In the drawing, the back partition wall 111 includes the back partition wall surface 151 made of a resin such as ABS as a partition for separating the storage compartment (vegetable compartment 107), and the heat insulator 152 for thermally insulating the storage compartment from the air path 141 through which cool air for cooling the storage compartment (freezer compartment 108) flows. There is also the partition plate 161 for isolating the freezer compartment discharge air path 141 and the cooling compartment 110 from each other. The heat insulator 152 made of styrene foam or the like for ensuring heat insulation is located between the back partition wall surface 151 on the vegetable compartment 107 side and the freezer compartment discharge air path 141. Moreover, the heating unit 154 such as a heater is disposed between the heat insulator 152 and the back partition wall surface 151, in order to adjust the temperature of the storage compartment (vegetable compartment 107) or prevent surface dew condensation.

Here, the depression 111a is formed in a part of a storage compartment side wall surface of the back partition wall 111, and the electrostatic atomization apparatus 131 as the mist spray apparatus is buried in the depression 111a.

The electrostatic atomization apparatus 131 cools the atomization electrode 135 as the atomization tip included in the atomization unit 139 to the dew point temperature or below by a cooling unit, thereby causing water in the air around the atomization unit 139 to build up dew condensation on the atomization electrode 135 and generated dew condensation water to be sprayed as a mist.

In this example, when causing the dew condensation, low temperature cool air flowing in the freezer compartment discharge air path 141 is used as the cooling unit and, instead of directly cooling the atomization electrode 135 as the atomization tip, the atomization electrode 135 is cooled via the cooling pin 134 as the heat transfer cooling member having a larger heat capacity than the atomization electrode 135.

To cool the cooling pin 134 as the heat transfer cooling member, it is desirable that the heat insulator 152 on the cooling compartment 110 side, i.e., on the back side of the cooling pin 134 as the heat transfer cooling member is made thinner (as in FIG. 3 described in the first example). However, when there is an extremely thin walled part in molding of styrene foam or the like, the thin walled part decreases in rigidity, which raises a possibility of problems such as a crack and a hole caused by insufficient strength or defective molding. Thus, there is concern about quality deterioration.

In view of this, in this example, the heat insulator 152 near the back of the cooling pin 134 is provided with a protrusion 162, thereby enhancing rigidity around the cooling pin 134 when compared with a flat part, and further enhancing rigidity by securing the wall thickness of the heat insulator 152. In addition, by forming the protrusion 162, the cooling pin 134 can be cooled both from its back and its side.

Furthermore, in order to suppress an increase in air path resistance, an outer peripheral surface of the protrusion 162 is sloped in a conical shape that tapers toward the end.

An operation and working of the refrigerator 100 in this example having the above-mentioned structure are described below.

The cooling pin 134 as the heat transfer cooling member is cooled via the heat insulator 152 as the heat relaxation member. This achieves dual-structure indirect cooling, that is, the atomization electrode 135 as the atomization tip is indirectly cooled via the cooling pin 134 and further via the heat insulator 152 as the heat relaxation member. In so doing, the atomization electrode 135 as the atomization tip can be kept from being cooled excessively. Excessively cooling the atomization electrode 135 as the atomization tip causes a large amount of dew condensation on the atomization unit 139, and an increase in load during atomization raises concern about an increase in input of the electrostatic atomization apparatus 131 and an atomization failure of the atomization unit 139 due to freezing and the like. According to the above-mentioned structure, however, such problems due to the load increase of the atomization unit 139 can be prevented. Since an appropriate dew condensation amount can be ensured, stable mist spray can be achieved with a low input.

Furthermore, by indirectly cooling the atomization electrode 135 as the atomization tip in the dual structure via the heat transfer cooling member (cooling pin 134) and the heat relaxation member (heat insulator 152), a direct significant influence of a temperature change of the cooling unit (low temperature cool air flowing in the freezer compartment discharge air path 141) on the atomization electrode 135 as the atomization tip can be further alleviated. This suppresses a load fluctuation of the atomization electrode 135 as the atomization tip, so that mist spray of a stable spray amount can be achieved.

Besides, the cool air generated in the cooling compartment 110 is used to cool the cooling pin 134 as the heat transfer cooling member, and the cooling pin 134 is formed of a metal piece having excellent heat conductivity. Accordingly, the cooling unit can perform necessary cooling just by heat conduction from the air path through which the cool air generated by the cooler 112 flows.

The cooling pin 134 as the heat transfer cooling member in this example is shaped to have the projection 134a on the opposite side to the atomization electrode 135 as the atomization tip. This being so, in the atomization unit 139, the end 134b on the projection 134a side is closest to the cooling unit. Therefore, the cooling pin 134 is cooled by the cool air as the cooling unit, from the end 134b farthest from the atomization electrode 135.

Thus, in the part exposed to the vegetable compartment 107, only the atomization electrode 135 as the atomization tip is cooled by heat conduction. This allows for dew condensation and mist generation on the atomization electrode 135. Meanwhile, heat insulation is ensured for other components, with it being possible to prevent, for example, dew condensation of the external case 137.

Moreover, there is no communicating part between the electrostatic atomization apparatus 131 and the freezer compartment discharge air path 141, and so the low temperature cool air does not leak into the storage compartment. Accordingly, the storage compartment (vegetable compartment 107) and its peripheral components can be protected from dew condensation, low temperature anomalies, and so on.

Since the cooling unit can be made by such a simple structure, the highly reliable atomization unit 139 with a low incidence of troubles can be realized. Moreover, the cooling pin 134 as the heat transfer cooling member and the atomization electrode 135 as the atomization tip can be cooled by using the cooling source of the refrigeration cycle, which contributes to energy-efficient atomization.

In addition, the depression 111a is formed in a storage compartment (vegetable compartment 107) side part of the back partition wall 111 to which the atomization unit 139 is attached, and the atomization unit 139 having the projection 134a is inserted into this depression 111a. In this way, the heat insulator 152 constituting the back partition wall 111 of the storage compartment (vegetable compartment 107) can be used as the heat relaxation member. Hence, the heat relaxation member for properly cooling the atomization electrode 135 as the atomization tip can be provided by adjusting the thickness of the heat insulator 152, with there being no need to prepare a particular heat relaxation member. This contributes to a more simplified structure of the atomization unit 139.

Besides, in the freezer compartment discharge air path 141 situated behind the back partition wall 111, the heat insulator 152 forms the partially conical protrusion 162, but this protrusion 162 is gently sloped so as not to resist against the flow of the cool air. Accordingly, cooling capacity deterioration can be prevented. Moreover, an increase in heat conduction area for the cooling pin 134 leads to enhanced cooling efficiency for the cooling pin 134.

Thus, in this example, the protrusion 162 protruding toward the freezer compartment discharge air path 141 is formed on the heat insulator 152 of the back partition wall 111 near the back of the cooling pin 134 as the heat transfer cooling member, thereby enhancing rigidity around the cooling pin 134 and further enhancing rigidity by securing the wall thickness of the heat insulator 152 when compared with the case where the cooling pin 134 side surface in the freezer compartment discharge air path 141 is flat without providing the protrusion 162 in the freezer compartment discharge air path 141. Even in such a case, the surface area for heat conduction can be increased because the cooling pin 134 as the heat transfer cooling member can be cooled both from its back and its side. Hence, the rigidity around the cooling pin 134 can be enhanced without a decrease in cooling efficiency of the cooling pin 134 as the heat transfer cooling member.

Moreover, by shaping the outer peripheral surface of the protrusion 162 to be sloped in a conical shape that tapers toward the end, the cool air flows along the outer periphery of the protrusion 162 that is curved with respect to the cool air flow direction, so that an increase in air path resistance can be suppressed. Besides, by uniformly cooling the cooling pin 134 from the outer periphery of the side wall, the cooling pin 134 as the heat transfer cooling member can be cooled evenly, as a result of which the atomization electrode 135 as the atomization tip can be cooled efficiently via the cooling pin 134 as the heat transfer cooling member.

In addition, the cooling pin 134 as the electrode connection member (heat transfer cooling member) has a certain level of heat capacity and is capable of lessening a response to heat conduction from the cooling air path (freezer compartment discharge air path 141), so that a temperature fluctuation of the atomization electrode 135 as the atomization tip can be suppressed. The cooling pin 134 also functions as a cool storage member, thereby ensuring a dew condensation time for the atomization electrode 135 as the atomization tip and also preventing freezing.

Moreover, by using the electrostatic atomization apparatus 131 as the atomization apparatus, the generated fine mist reaches throughout the vegetable compartment 107 when sprayed because the fine mist is made up of extremely small particles and so has high diffusivity. The sprayed fine mist is generated by high-voltage discharge, and so is negatively charged. Meanwhile, vegetables and fruits stored in the vegetable compartment 107 are positively charged. Accordingly, the atomized mist tends to adhere to vegetable surfaces, as a result of which the vegetable surfaces increase in humidity and also water penetrates into cells from the surfaces. This contributes to enhanced freshness preservation.

Furthermore, the nano-level fine mist adhering to the vegetable surfaces sufficiently contains OH radicals, a small amount of ozone, and the like. Such a nano-level fine mist is effective in sterilization, antimicrobial activity, microbial elimination, and so on, and also stimulates increases in nutrient of the vegetables such as vitamin C through agricultural chemical removal and antioxidation by oxidative decomposition.

When there is no water on the atomization electrode 135 as the atomization tip, the discharge distance increases and the air insulation layer cannot be broken down, and therefore no discharge phenomenon takes place. Hence, no current flows between the atomization electrode 135 and the counter electrode 136. This phenomenon may be detected by the control unit 146 of the refrigerator 100 to control on/off of the high voltage of the voltage application unit 133. By doing so, a heat load in the storage compartment can be reduced and energy can be saved.

As described above, in the fourth example, the conical protrusion 162 protruding toward the freezer compartment discharge air path 141 is formed on the heat insulator 152 behind the cooling pin 134 as the projection 134a of the atomization unit 139. By enhancing the rigidity of the heat insulator 152 in this way, the heat insulator 152 can be molded easily. Moreover, the flow path resistance of the freezer compartment discharge air path 141 is minimized to ensure the cooling capacity for the cooling pin 134 as the heat transfer cooling member.

In addition, in this example, by securing the wall thickness of the heat insulator 152, no leakage of low temperature cool air occurs between the vegetable compartment 107 and the adjacent freezer compartment discharge air path 141 which are separated from each other. Hence, frost formation and dew condensation of the external case 137 and the like that lead to lower reliability can be prevented.

Though the air path as the cooling unit for cooling the cooling pin 134 as the heat transfer cooling member is the freezer compartment discharge air path 141 in this example, the air path may instead be a low temperature air path such as a return air path of the freezer compartment 108 or a discharge air path of the ice compartment 106. Moreover, the cooling unit is not limited to an air path, as cool air in a storage compartment of a lower temperature than the vegetable compartment 107 may equally be used. This expands an area in which the electrostatic atomization apparatus 131 can be installed.

Though the cooling unit for cooling the cooling pin 134 as the heat transfer cooling member is the air cooled using the cooling source generated in the refrigeration cycle of the refrigerator in this example, it is also possible to utilize heat transmission from a cooling pipe that uses a cool temperature or cool air from the cooling source of the refrigerator. In such a case, by adjusting a temperature of the cooling pipe, the cooling pin 134 as the heat transfer cooling member can be cooled at an arbitrary temperature. This eases temperature control when cooling the atomization electrode 135 as the atomization tip.

Though the cooling unit for cooling the cooling pin 134 as the heat transfer cooling member is low temperature cool air in this example, a Peltier element that utilizes a Peltier effect may be used here as an auxiliary component. In such a case, the temperature of the tip of the atomization electrode 135 can be controlled very finely by a voltage supplied to the Peltier element.

Though no cushioning material is used between the external case 137 of the electrostatic atomization apparatus 131 and the depression 111a of the heat insulator 152 in this example, it is more desirable to provide a cushioning material such as urethane foam on the external case 137 of the electrostatic atomization apparatus 131 or the depression 111a of the heat insulator 152 in order to prevent the entry of moisture into the cooling pin 134 and suppress rattling. In so doing, moisture can be kept from entering into the cooling pin 134, and dew condensation on the heat insulator 152 can be prevented.

Though no water retainer is provided around the atomization electrode 135 as the atomization tip in this example, a water retainer may be provided. This enables dew condensation water generated near the atomization electrode 135 to be retained around the atomization electrode 135, with it being possible to timely supply the water to the atomization electrode 135. Further, by including a water retainer or a sealing unit in the vegetable compartment 107, a high humidity can be maintained.

Though the storage compartment to which the mist is sprayed from the atomization unit 139 of the electrostatic atomization apparatus 131 is the vegetable compartment 107 in this example, the mist may be sprayed to storage compartments of other temperature zones such as the refrigerator compartment 104 and the switch compartment 105. In such a case, various applications can be developed.

### (Fifth Example)

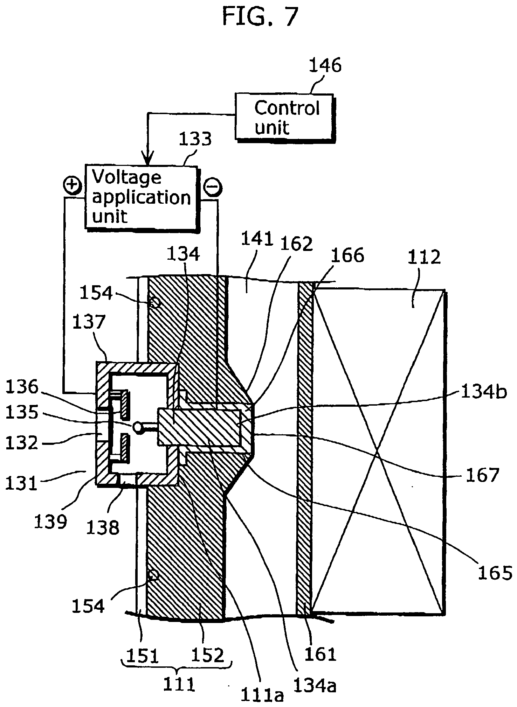

A longitudinal sectional view showing a section when a refrigerator in a fifth example of the present disclosure is cut into left and right is approximately the same as FIG. 1, and a relevant part front view showing a back surface of a vegetable compartment in the refrigerator in the fifth example of the present disclosure is the same as FIG. 2. FIG. 7 is a sectional view of an electrostatic atomization apparatus and its periphery included in the vegetable compartment in the refrigerator in the fifth example of the present disclosure, as taken along line A-A in FIG. 2 and seen from the arrow direction.

In this example, detailed description is given only for parts that differ from the structures described in the first to fourth examples, with description being omitted for parts that are the same as the structures described in the first to fourth examples or parts to which the same technical ideas are applicable.

In the drawing, the back partition wall 111 includes the back partition wall surface 151 made of a resin such as ABS, and the heat insulator 152 made of styrene foam or the like for ensuring heat insulation between the back partition wall surface 151 and the freezer compartment discharge air path 141. There is also the partition plate 161 for isolating the freezer compartment discharge air path 141 and the cooling compartment 110 from each other. Moreover, the heating unit 154 such as a heater is disposed between the heat insulator 152 and the back partition wall surface 151, in order to adjust the temperature of the storage compartment (vegetable compartment 107) or prevent surface dew condensation.

Here, a through part 165 is formed in a part of a storage compartment (vegetable compartment 107) side wall surface of the back partition wall 111, and the electrostatic atomization apparatus 131 as the mist spray apparatus is installed in the through part 165.

The electrostatic atomization apparatus 131 cools the atomization electrode 135 as the atomization tip included in the atomization unit 139 to the dew point temperature or below by a cooling unit, thereby causing water in the air around the atomization unit 139 to build up dew condensation on the atomization electrode 135 and generated dew condensation water to be sprayed as a mist.

In this example, when causing the dew condensation, low temperature cool air flowing in the freezer compartment discharge air path 141 is used as the cooling unit and, instead of directly cooling the atomization electrode 135 as the atomization tip, the atomization electrode 135 as the atomization tip is cooled via the cooling pin 134 as the heat transfer cooling member having a larger heat capacity than the atomization electrode 135.

The electrostatic atomization apparatus 131 is mainly composed of the atomization unit 139, the voltage application unit 133, and the external case 137. The spray port 132 and the moisture supply port 138 are each formed in a part of the external case 137. The atomization electrode 135 as the atomization tip is placed in the atomization unit 139. The atomization electrode 135 is securely connected to the cooling pin 134 as the heat transfer cooling member made of a good heat conductive material such as aluminum, stainless steel, or the like, and also electrically connected including one end wired from the voltage application unit 133.

The cooling pin 134 as the electrode connection member (heat transfer cooling member) has a large heat capacity 50 times to 1000 times and preferably 100 times to 500 times that of the atomization electrode 135 as the atomization tip. The cooling pin 134 is preferably a high heat conductive member such as aluminum, copper, or the like. To efficiently conduct cold heat from one end to the other end of the cooling pin 134 by heat conduction, it is desirable that the heat insulator 152 covers a circumference of the cooling pin 134.

Thus, the cooling pin 134 has a heat capacity equal to or more than 50 times and preferably equal to or more than 100 times that of the atomization electrode 135. This further alleviates a direct significant influence of a temperature change of the cooling unit on the atomization electrode, with it being possible to spray a mist more stably with a smaller load fluctuation. Moreover, as a heat capacity upper limit, the cooling pin 134 has a heat capacity equal to or less than 1000 times and preferably equal to or less than 500 times that of the atomization electrode 135. When the heat capacity of the cooling pin 134 is excessively high, large energy is required to cool the cooling pin 134, making it difficult to save energy in cooling the cooling pin 134. By restricting the heat capacity within such an upper limit, however, it is possible to cool the atomization electrode stably and energy-efficiently, while alleviating a significant influence on the atomization electrode in the case where a heat load fluctuation from the cooling unit changes. In addition, by restricting the heat capacity within such an upper limit, a time lag required to cool the atomization electrode 135 via the cooling pin 134 can be kept within a proper range. Hence, slow start when cooling the atomization electrode, that is, when supplying water to the atomization apparatus, can be prevented and as a result the atomization electrode can be cooled stably and properly.

In the case where the through part 165 in which the cooling pin 134 as the heat transfer cooling member is provided is formed as in this example, in molding of styrene foam or the like, the heat insulator decreases in rigidity, which raises a possibility of problems such as a crack and a hole caused by insufficient strength or defective molding. Thus, there is concern about quality deterioration.

In view of this, in this example, the heat insulator 152 of the back partition wall 111 near the through part 165 in which the cooling pin 134 as the heat transfer cooling member is placed is provided with the protrusion 162 protruding toward the freezer compartment discharge air path 141, thereby enhancing rigidity around the through part 165 and further enhancing rigidity by securing the wall thickness of the heat insulator 152, when compared with the case where the cooling pin 134 side surface in the freezer compartment discharge air path 141 is flat without providing the protrusion 162 in the freezer compartment discharge air path 141. In addition, by forming the protrusion 162, the cooling pin 134 can be cooled both from its back and its side.

Furthermore, in order to suppress an increase in air path resistance, an outer peripheral surface of the protrusion 162 is sloped in a conical shape that tapers toward the end.

In this case, when the cooling pin 134 is directly placed in the air path (freezer compartment discharge air path 141), there is a possibility of excessive cooling that may cause an excessive amount of dew condensation or freezing of the atomization electrode 135.

Accordingly, the hole (through part 165) is formed in the heat insulator near the back of the cooling pin 134, the cooling pin 134 is inserted into the hole, and a cooling pin cover 166 formed of a resin such as PS or PP having heat insulation properties and also high waterproof properties is provided around the cooling pin 134, thereby ensuring heat insulation.

Here, the cooling pin cover 166 may be, for example, insulating tape having heat insulation properties.

Though not shown, by using a cushioning material between the hole (through part 165) and the cooling pin cover 166 to ensure sealability, it is possible to more effectively prevent the cool air from the freezer compartment discharge air path 141 from entering around the cooling pin 134.

Furthermore, though not shown, it is more advantageous to block the cool air by attaching tape or the like to an opening 167 of the through part 165.

An operation and working of the refrigerator 100 in this example having the above-mentioned structure are described below.

The cooling pin 134 as the heat transfer cooling member is cooled via the cooling pin cover 166. This achieves dual-structure indirect cooling, that is, the atomization electrode 135 as the atomization tip is indirectly cooled via the cooling pin 134 and further via the cooling pin cover 166 as the heat relaxation member. In so doing, the atomization electrode 135 as the atomization tip can be kept from being cooled excessively. Excessively cooling the atomization electrode 135 as the atomization tip causes a large amount of dew condensation, and an increase in load of the atomization unit 139 raises concern about an increase in input of the electrostatic atomization apparatus 131 and an atomization failure of the atomization unit 139 due to freezing and the like. According to the above-mentioned structure, however, such problems due to the load increase of the atomization unit 139 can be prevented. Since an appropriate dew condensation amount can be ensured, stable mist spray can be achieved with a low input.

Moreover, by indirectly cooling the atomization electrode 135 as the atomization tip in the dual structure via the cooling pin 134 as the heat transfer cooling member and the heat relaxation member (cooling pin cover 166, heat insulator 152), a direct significant influence of a temperature change of the cooling unit on the atomization electrode 135 as the atomization tip can be further alleviated. This suppresses a load fluctuation of the atomization electrode 135, so that mist spray of a stable spray amount can be achieved.

Besides, the cool air generated in the cooling compartment 110 is used to cool the cooling pin 134 as the heat transfer cooling member, and the cooling pin 134 is formed of a metal piece having excellent heat conductivity. Accordingly, the cooling unit can perform necessary cooling just by heat conduction from the air path (freezer compartment discharge air path 141) through which the cool air generated by the cooler 112 flows.

The cooling pin 134 as the heat transfer cooling member in this example is shaped to have the projection 134a on the opposite side to the atomization electrode 135. This being so, in the atomization unit 139, the end 134b on the projection 134a side is closest to the cooling unit. Therefore, the cooling pin 134 is cooled by the cool air as the cooling unit, from the end 134b farthest from the atomization electrode 135 as the atomization tip.

Thus, in this example, the protrusion 162 protruding toward the freezer compartment discharge air path 141 is formed on the heat insulator 152 near the through part 165, thereby enhancing rigidity around the through part 165. Even in such a case, the surface area for heat conduction can be increased because the cooling pin 134 can be cooled both from its back and its side. Hence, the rigidity around the cooling pin 134 can be enhanced without a decrease in cooling efficiency of the cooling pin 134 as the heat transfer cooling member.

Moreover, by shaping the outer peripheral surface of the protrusion 162 to be sloped in a conical shape that tapers toward the end, the cool air flows along the outer periphery of the protrusion 162 that is curved with respect to the cool air flow direction, so that an increase in air path resistance can be suppressed. Besides, by uniformly cooling the cooling pin 134 as the heat transfer cooling member from the outer periphery of the side wall, the cooling pin 134 can be cooled evenly, as a result of which the atomization electrode 135 as the atomization tip can be cooled efficiently via the cooling pin 134.

In addition, the through part 165 as a through hole is formed only in one part of the heat insulator 152 behind the cooling pin 134, with there being no thin walled part. This eases molding of styrene foam, and prevents problems such as a breakage during assembly.

Furthermore, according to the structure of this example, the back surface part of the cooling pin cover 166 in contact with the cooling unit (low temperature cool air) serves as the heat relaxation member. Since a heat relaxation state of the heat relaxation member can be adjusted by changing in thickness of the part of the cooling pin cover 166 in contact with the cool air, it is possible to easily change a cooling state of the cooling pin 134 as the heat transfer cooling member. For example, this structure can be applied to refrigerators of various storage capacities, by changing the thickness of the cooling pin cover 166 according to a corresponding cooling load.

Besides, there is no clearance between the cooling pin cover 166 and the through part 165 and also the opening of the through part 165 is sealed by tape or the like to block the entry of cool air from the adjacent section, so that the low temperature cool air does not leak into the storage compartment. Accordingly, the storage compartment (vegetable compartment 107) and its peripheral components can be protected from dew condensation, low temperature anomalies, and so on.

The cooling by the cooling unit is performed from the end 134b which is a part of the cooling pin 134 as the heat transfer cooling member farthest from the atomization electrode 135. In doing so, after the large heat capacity of the cooling pin 134 is cooled, the atomization electrode 135 as the atomization tip is cooled by the cooling pin 134 as the heat transfer cooling member. This further alleviates a direct significant influence of a temperature change of the cooling unit on the atomization electrode 135 as the atomization tip, with it being possible to realize stable mist spray with a smaller load fluctuation.

The generated fine mist sprayed in the vegetable compartment 107 is made up of extremely small particles and so has high diffusivity, and therefore reaches throughout the vegetable compartment 107.

By using the electrostatic atomization apparatus 131 as the atomization apparatus, the generated fine mist reaches throughout the vegetable compartment 107 when sprayed because the fine mist is made up of extremely small particles and so has high diffusivity. The sprayed fine mist is generated by high-voltage discharge, and so is negatively charged. Meanwhile, vegetables and fruits stored in the vegetable compartment 107 are positively charged. Accordingly, the atomized mist tends to gather on vegetable surfaces. This contributes to enhanced freshness preservation.

Furthermore, the nano-level fine mist adhering to the vegetable surfaces sufficiently contains OH radicals, a small amount of ozone, and the like. Such a nano-level fine mist is effective in sterilization, antimicrobial activity, microbial elimination, and so on, and also stimulates increases in nutrient of the vegetables such as vitamin C through agricultural chemical removal and antioxidation by oxidative decomposition.

In the case of using, for mist spray, dew condensation water generated from water in the air by cooling the atomization electrode 135 as the atomization tip as in this example, when there is no water on the atomization electrode 135, the discharge distance increases and the air insulation layer cannot be broken down, and therefore no discharge phenomenon takes place. Hence, no current flows between the atomization electrode 135 and the counter electrode 136. This phenomenon may be detected by the control unit 146 of the refrigerator 100 to control on/off of the high voltage of the voltage application unit 133. By doing so, a heat load in the storage compartment can be reduced and energy can be saved.

As described above, in the fifth example, regarding the structure of the cooling pin 134 as the projection 134a of the atomization unit 139, the through part 165 as the through hole is formed in the heat insulator 152, the cooling pin 134 is inserted into the through part 165, and the cooling pin cover 166 is provided around the cooling pin 134. This eases the molding of the heat insulator 152, while ensuring the cooling capacity for the cooling pin 134 as the heat transfer cooling member.

Moreover, by covering the side and back of the cooling pin 134 as the heat transfer cooling member with the integrally formed cooling pin cover 166, it is possible to effectively prevent the cool air from the freezer compartment discharge air path 141 situated at the back from entering around the cooling pin 134.

Though no cushioning material is provided around the cooling pin 134 in the fifth example, a cushioning material may be provided. This allows for close contact between the through hole (through part 165) and the cooling pin cover 166, with it being possible to prevent cool air leakage.

Though a shield such as tape is not disposed at the opening 167 of the through hole (through part 165) in the fifth example, a shield may be disposed. This makes it possible to further prevent cool air leakage.

Though the air path for cooling the cooling pin 134 as the heat transfer cooling member is the freezer compartment discharge air path 141 in this example, the air path may instead be a low temperature air path such as a return air path of the freezer compartment 108 or a discharge air path of the ice compartment 106. This expands an area in which the electrostatic atomization apparatus 131 can be installed.

Though the cooling unit for cooling the cooling pin 134 as the heat transfer cooling member is the air cooled using the cooling source generated in the refrigeration cycle of the refrigerator 100 in this example, it is also possible to utilize heat transmission from a cooling pipe that uses a cool temperature or cool air from the cooling source of the refrigerator 100. In such a case, by adjusting a temperature of the cooling pipe, the cooling pin 134 as the heat transfer cooling member can be cooled at an arbitrary temperature. This eases temperature control when cooling the atomization electrode 135 as the atomization tip.

In this example, the cooling unit for cooling the cooling pin 134 as the heat transfer cooling member may use a Peltier element that utilizes a Peltier effect as an auxiliary component. In such a case, the temperature of the tip of the atomization electrode 135 can be controlled very finely by a voltage supplied to the Peltier element.

Though no cushioning material is used between the external case 137 of the electrostatic atomization apparatus 131 and the depression 111a of the heat insulator 152 in this example, a cushioning material such as urethane foam may be disposed on the external case 137 of the electrostatic atomization apparatus 131 or the depression 111a of the heat insulator 152, in order to prevent the entry of moisture into the cooling pin 134 and suppress rattling. In so doing, moisture can be kept from entering into the cooling pin 134, and dew condensation on the heat insulator 152 can be prevented.

### (Sixth Example)

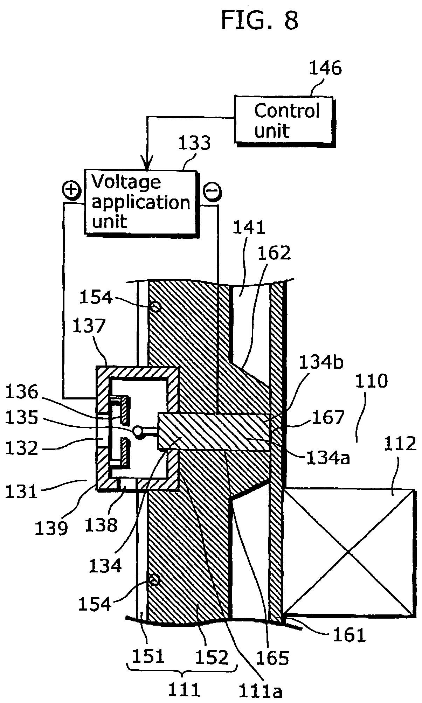

A longitudinal sectional view showing a section when a refrigerator in a sixth example of the present disclosure is cut into left and right is approximately the same as FIG. 1, and a relevant part front view showing a back surface of a vegetable compartment in the refrigerator in the sixth example of the present disclosure is the same as FIG. 2. FIG. 8 is a sectional view of an electrostatic atomization apparatus and its periphery included in the vegetable compartment in the refrigerator in the sixth example of the present disclosure, as taken along line A-A in FIG. 2 and seen from the arrow direction.

In this example, detailed description is given only for parts that differ from the structures described in the first to fifth examples, with description being omitted for parts that are the same as the structures described in the first to fifth examples or parts to which the same technical ideas are applicable.

In the drawing, the back partition wall 111 includes the back partition wall surface 151 made of a resin such as ABS, and the heat insulator 152 made of styrene foam or the like for ensuring heat insulation between the back partition wall surface 151 and the freezer compartment discharge air path 141. There is also the partition plate 161 for isolating the freezer compartment discharge air path 141 and the cooling compartment 110 from each other. Moreover, the heating unit 154 such as a heater is disposed between the heat insulator 152 and the back partition wall surface 151, in order to adjust the temperature of the storage compartment (vegetable compartment 107) or prevent surface dew condensation.

Here, the through part 165 is formed in a part of a storage compartment (vegetable compartment 107) side wall surface of the back partition wall 111 so as to be lower in temperature than other parts, and the electrostatic atomization apparatus 131 as the mist spray apparatus is installed in the through part 165.

The electrostatic atomization apparatus 131 is mainly composed of the atomization unit 139, the voltage application unit 133, and the external case 137. The spray port 132 and the moisture supply port 138 are each formed in a part of the external case 137.

The electrostatic atomization apparatus 131 cools the atomization electrode 135 as the atomization tip included in the atomization unit 139 to the dew point temperature or below by a cooling unit, thereby causing water in the air around the atomization unit 139 to build up dew condensation on the atomization electrode 135 and generated dew condensation water to be sprayed as a mist.

In this example, when causing the dew condensation, low temperature cool air flowing in the freezer compartment discharge air path 141 is used as the cooling unit and, instead of directly cooling the atomization electrode 135 as the atomization tip, the atomization electrode 135 as the atomization tip is cooled via the cooling pin 134 as the heat transfer cooling member having a larger heat capacity than the atomization electrode 135.

The atomization electrode 135 as the atomization tip is placed in the atomization unit 139. The atomization electrode 135 is securely connected to the cooling pin 134 as the heat transfer cooling member made of a good heat conductive material such as aluminum, stainless steel, or the like, and also electrically connected including one end wired from the voltage application unit 133.

The cooling pin 134 as the electrode connection member (heat transfer cooling member) has a large heat capacity 50 times to 1000 times and preferably 100 times to 500 times that of the atomization electrode 135. The cooling pin 134 is preferably a high heat conductive member such as aluminum, copper, or the like. To efficiently conduct cold heat from one end to the other end of the cooling pin 134 by heat conduction, it is desirable that the heat insulator 152 covers a circumference of the cooling pin 134.

Thus, the cooling pin 134 has a heat capacity equal to or more than 50 times and preferably equal to or more than 100 times that of the atomization electrode 135. This further alleviates a direct significant influence of a temperature change of the cooling unit on the atomization electrode, with it being possible to spray a mist more stably with a smaller load fluctuation. Moreover, as a heat capacity upper limit, the cooling pin 134 has a heat capacity equal to or less than 1000 times and preferably equal to or less than 500 times that of the atomization electrode 135. When the heat capacity of the cooling pin 134 is excessively high, large energy is required to cool the cooling pin 134, making it difficult to save energy in cooling the cooling pin 134. By restricting the heat capacity within such an upper limit, however, it is possible to cool the atomization electrode stably and energy-efficiently, while alleviating a significant influence on the atomization electrode in the case where a heat load fluctuation from the cooling unit changes. In addition, by restricting the heat capacity within such an upper limit, a time lag required to cool the atomization electrode 135 via the cooling pin 134 can be kept within a proper range. Hence, slow start when cooling the atomization electrode, that is, when supplying water to the atomization apparatus, can be prevented and as a result the atomization electrode can be cooled stably and properly.

The through part 165 is formed behind the depression 111a, and the projection 134a of the cooling pin 134 as the heat transfer cooling member is placed in the through part 165.

In the case where the through part 165 in which the cooling pin 134 as the heat transfer cooling member is provided is formed as in this example, in molding of styrene foam or the like, the heat insulating wall decreases in rigidity, which raises a possibility of problems such as a crack and a hole caused by insufficient strength or defective molding. Thus, there is concern about quality deterioration.

In view of this, in this example, the heat insulator 152 near the through part 165 is provided with the protrusion 162 protruding toward the freezer compartment discharge air path 141 so that its end is in contact with the partition plate 161, thereby enhancing rigidity around the through part 165 and further enhancing rigidity by securing the wall thickness of the heat insulator 152, when compared with the case where the cooling pin 134 side surface in the freezer compartment discharge air path 141 is flat without providing the protrusion 162 in the freezer compartment discharge air path 141. In addition, by forming the protrusion 162, the cooling pin 134 can be cooled both from its back and its side.

When the cooling pin 134 as the heat transfer cooling member is directly placed in the air path (freezer compartment discharge air path 141), there is a possibility of excessive cooling that may cause an excessive amount of dew condensation or freezing of the atomization electrode 135 as the atomization tip.

Accordingly, the through hole 165 is formed in the heat insulator 152 behind the atomization electrode 135 as the atomization tip, the protrusion 162 protruding toward the freezer compartment discharge air path 141 so that its end is in contact with the partition plate 161 is formed on the heat insulator 152 near the through part 165, and the cooling pin 134 is inserted into the through hole 165, thereby ensuring heat insulation. By doing so, the cooling pin 134 is not directly in contact with the cooling unit, but in contact with the cooling unit via the partition plate 161 and the heat insulator 152 as the heat relaxation member.

In this case, the side surfaces of the substantially cylindrical cooling pin 134 are entirely covered with the heat insulator 152.

Moreover, the partition plate 161 that separates the freezer compartment discharge air path 141 and the cooling compartment 110 from each other shields the opening 167 of the through part 165 from the air path, thereby ensuring sealability.

Though not shown, tape or the like may be attached to the opening 167 of the through hole (through part 165) to block the cool air.

An operation and working of the refrigerator 100 in this example having the above-mentioned structure are described below.

The cooling pin 134 as the heat transfer cooling member is cooled from its side via the protrusion 162 of the heat insulator 152. This achieves dual-structure indirect cooling, that is, the atomization electrode 135 as the atomization tip is indirectly cooled via the cooling pin 134 and further via the protrusion 162 of the heat insulator 152. In so doing, the atomization electrode 135 can be kept from being cooled excessively.

Moreover, the heat insulator 152 conically surrounds the circumference of the cylindrical cooling pin 134, where a thinnest heat insulation wall part is farthest from the atomization electrode 135. This makes it possible to cool especially a side peripheral part of the cooling pin 134 near the opening 167 most intensively and also cool other parts from the outer periphery of the side wall uniformly.

In addition, the end surface of the cooling pin 134 on the air path (freezer compartment discharge air path 141) side is shielded from the air path (freezer compartment discharge air path 141) by the partition plate 161. Furthermore, a creepage distance is ensured by pressing the protrusion 162 against the partition plate 161 while securing a certain distance of the end surface of the protrusion 162, to thereby prevent the cool air from directly contacting the cooling pin 134 as the heat transfer cooling member. Here, tape or the like may be attached to the end surface to enhance sealability. By fixing the opening 167 of the through hole 165 to the partition plate 161 in this manner, even when a heat deformation occurs in the refrigerator 100 that widely varies in temperature due to outside air temperature, inside temperature, defrosting control, and the like, the cooling pin 134 and the atomization unit 139 can be fixed more securely.

Moreover, the through hole 165 is formed only in one part of the heat insulator 152 behind the cooling pin 134, with there being no thin walled part. This eases molding of styrene foam, and prevents problems such as a breakage during assembly.

Furthermore, there is no clearance between the cooling pin 134 and the through hole 165, and also the opening 167 of the through hole 165 is shielded from the cool air by tape or the like. Since there is no communicating part, the low temperature cool air does not leak into the storage compartment. Accordingly, the storage compartment (vegetable compartment 107) and its peripheral components can be protected from dew condensation, low temperature anomalies, and so on.

Besides, the back partition wall 111 can be made thinner, allowing for an increase in storage capacity of the storage compartment.

In such cooling by the cooling unit, the end 134b which is a part of the cooling pin 134 as the heat transfer cooling member farthest from the atomization electrode 135 is cooled most intensively. In doing so, after the large heat capacity of the cooling pin 134 is cooled, the atomization electrode 135 as the atomization tip is cooled by the cooling pin 134 as the heat transfer cooling member. This further alleviates a direct significant influence of a temperature change of the cooling unit on the atomization electrode 135 as the atomization tip, with it being possible to realize stable mist spray with a smaller load fluctuation.

By using the electrostatic atomization apparatus 131 as the atomization apparatus, the generated fine mist reaches throughout the vegetable compartment 107 when sprayed because the fine mist is made up of extremely small particles and so has high diffusivity. The sprayed fine mist is generated by high-voltage discharge, and so is negatively charged. Meanwhile, vegetables and fruits stored in the vegetable compartment 107 are positively charged. Accordingly, the atomized mist tends to gather on vegetable surfaces. This contributes to enhanced freshness preservation.

Furthermore, the nano-level fine mist adhering to the vegetable surfaces sufficiently contains OH radicals, a small amount of ozone, and the like. Such a nano-level fine mist is effective in sterilization, antimicrobial activity, microbial elimination, and so on, and also stimulates increases in nutrient of the vegetables such as vitamin C through agricultural chemical removal and antioxidation by oxidative decomposition.

When there is no water on the atomization electrode 135, the discharge distance increases and the air insulation layer cannot be broken down, and therefore no discharge phenomenon takes place. Hence, no current flows between the atomization electrode 135 and the counter electrode 136. This phenomenon may be detected by the control unit 146 of the refrigerator 100 to control on/off of the high voltage of the voltage application unit 133. By doing so, a heat load in the storage compartment can be reduced and energy can be saved.

As described above, in the sixth example, regarding the structures of the cooling pin 134 as the projection 134a of the atomization unit 139, the heat insulator 152, and the cooling compartment 110, the through hole 165 is formed in the heat insulator 152, the cooling pin 134 is inserted into the through hole 165, and the end surface of the cooling pin 134 is covered with the partition plate 161. As a result, the cooling pin 134 as the heat transfer cooling member is cooled via the protrusion 162 of the heat insulator 152 and the partition plate 161. This achieves dual-structure indirect cooling, that is, the atomization electrode 135 as the atomization tip is indirectly cooled via the cooling pin 134 as the heat transfer cooling member and further via the protrusion 162 of the heat insulator 152. In so doing, the atomization electrode 135 as the atomization tip can be kept from being cooled excessively. In addition, the end surface of the cooling pin 134 on the air path (freezer compartment discharge air path 141) side is shielded from the air path (freezer compartment discharge air path 141) by the partition plate 161. Furthermore, a creepage distance is ensured by pressing the protrusion 162 against the partition plate 161 while securing a certain distance of the end surface of the protrusion 162, to thereby prevent the cool air from directly contacting the cooling pin 134.

Moreover, in the case of forming the through hole 165 in the heat insulator 152 behind the atomization unit 139 as in this example, by abutting and fixing one end of the atomization unit 139 not only to the wall surface of the storage compartment including the atomization unit 139 but also to the partition plate 161 via the air path, the atomization unit 139 can be fixed more accurately even when the heat insulator 152 as the heat insulation wall is somewhat deformed by heat contraction or heat expansion due to a temperature change in the refrigerator. It is possible to prevent quality deterioration caused by leakage of cool air into the storage compartment and the like as a result of providing the through hole 165 in the heat insulator 152. Hence, the storage compartment including the atomization unit 139 of sufficient reliability can be provided even in the refrigerator that is intended to be used for a long period of time.

Thus, the cooling pin 134 can be protected from excessive cooling, and the storage compartment (vegetable compartment 107) can be protected from excessive cooling and dew condensation caused by cool air leakage and the like.

In addition, in this example, the protrusion 162 protruding toward the freezer compartment discharge air path 141 is formed on the heat insulator 152 of the back partition wall 111 near the back of the cooling pin 134 as the heat transfer cooling member, thereby enhancing rigidity around the cooling pin 134 when compared with the case where the cooling pin 134 side surface in the freezer compartment discharge air path 141 is flat without providing the protrusion 162 in the freezer compartment discharge air path 141. This enables the cooling pin 134 as the heat transfer cooling member to be cooled from its side, and so the surface area for heat conduction can be increased. Hence, the rigidity around the cooling pin 134 can be enhanced without a decrease in cooling efficiency of the cooling pin 134 as the heat transfer cooling member.

Moreover, by shaping the outer peripheral surface of the protrusion 162 to be sloped in a conical shape that tapers toward the end, the cool air flows along the outer periphery of the protrusion 162 that is curved with respect to the cool air flow direction, so that an increase in air path resistance of the freezer compartment discharge air path 141 can be suppressed. Besides, by uniformly cooling the cooling pin 134 from the outer periphery of the side wall, the cooling pin 134 can be cooled evenly, as a result of which the atomization electrode 135 as the atomization tip can be cooled efficiently via the cooling pin 134 as the heat transfer cooling member.

Here, the protrusion 162 may be shaped as a cylinder. In such a case, the cooling pin 134 can be cooled uniformly from its side, with it being possible to cool the cooling pin 134 more evenly.

In this example, by fixing (pressing) the opening 167 of the through hole 165 to the partition plate 161, even when a heat deformation occurs in the refrigerator 100 that widely varies in temperature due to outside air temperature, inside temperature, defrosting control, and the like, the cooling pin 134 and the atomization unit 139 can be fixed more securely.

Though no cushioning material is provided around the cooling pin 134 in the sixth example, a cushioning material may be provided. This allows for close contact between the through hole (through part 165) and the cooling pin 134, with it being possible to prevent cool air leakage. Moreover, though a shield such as tape is not disposed at the opening 167 of the through hole (through part 165) in the sixth example, a shield may be disposed. This makes it possible to further prevent cool air leakage.

Though no cushioning material is used between the external case 137 of the electrostatic atomization apparatus 131 and the through hole 165 of the heat insulator 152 in this example, a cushioning material such as urethane foam may be disposed on the external case 137 of the electrostatic atomization apparatus 131 or the depression 111a or the through hole 165 of the heat insulator 152, in order to prevent the entry of moisture into the cooling pin 134 and suppress rattling. Moreover, the cooling pin cover may be provided as in the fifth example shown in FIG. 7. In so doing, moisture can be kept from entering into the cooling pin 134, and dew condensation on the heat insulator 152 can be prevented.

### (Seventh Example)

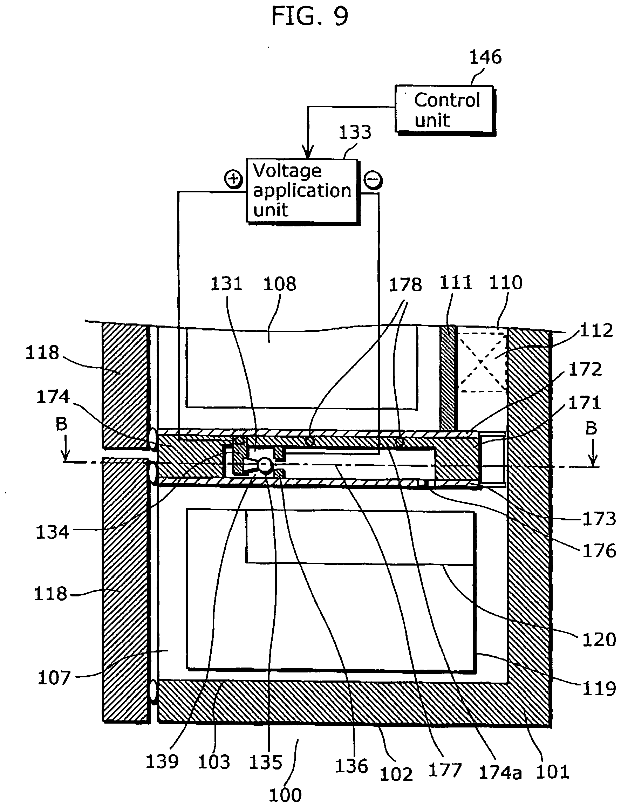

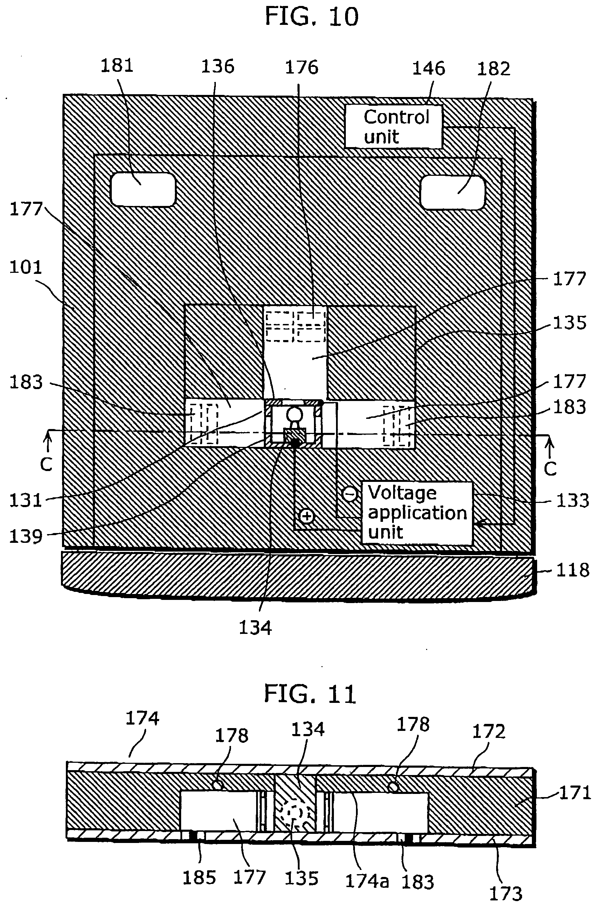

FIG. 9 is a relevant part longitudinal sectional view showing a section when a vegetable compartment and a periphery of a partition wall above the vegetable compartment in a refrigerator in a seventh example of the present disclosure are cut into left and right. FIG. 10 is a sectional view of the refrigerator in the seventh example of the present disclosure, as taken along line B-B in FIG. 9 and seen from an arrow direction. FIG. 11 is a sectional view of the partition wall above the vegetable compartment in the refrigerator in the seventh example of the present disclosure, as taken along line C-C in FIG. 10 and seen from an arrow direction.

In this example, detailed description is mainly given for parts that differ from the structures described in the first to sixth examples, with detailed description being omitted for parts that are the same as the structures described in the first to sixth examples or parts to which the same technical ideas are applicable.

In the drawing, the heat-insulating main body 101 which is a main body of the refrigerator 100 is formed by the outer case 102 mainly composed of a steel plate, the inner case 103 molded with a resin such as ABS, and a foam heat insulation material such as rigid urethane foam charged in a space between the outer case 102 and the inner case 103. The heat-insulating main body 101 is thermally insulated from its surroundings, and the refrigerator 100 is partitioned into a plurality of storage compartments. In this example, the vegetable compartment 107 is located at the bottom of the refrigerator 100, and the freezer compartment 108 set at a freezing temperature which is a relatively low temperature is located above the vegetable compartment 107. The vegetable compartment 107 and the freezer compartment 108 are separated by a partition wall 174 as separate storage compartments.

The cooling compartment 110 for generating cool air is provided behind the freezer compartment 108. An air path for conveying cool air to each compartment having heat insulation properties and the back partition wall 111 for heat insulating partition from each storage compartment are formed between the cooling compartment 110 and the freezer compartment 108.

The cool air generated by the cooler 112 in the cooling compartment 110 is conveyed to each storage compartment by the cooling fan 113. In this example, the cool air generated by the cooler 112 above the vegetable compartment 107 flows into the vegetable compartment 107 via a vegetable compartment discharge air path 182, directly or using a return air path after heat exchange in another storage compartment. The cool air then returns to the cooler 112 via a vegetable compartment suction air path 181.

The partition wall 174 is disposed above the vegetable compartment 107 to separate the vegetable compartment 107 from the freezer compartment 108.

The partition wall 174 includes a vegetable compartment side partition plate 173 and a freezer compartment side partition plate 172 made of a resin such as ABS, and a heat insulator 171 made of styrene foam, urethane, or the like for ensuring heat insulation between the vegetable compartment side partition plate 173 and the freezer compartment side partition plate 172. Here, a depression 174a is formed in a part of a storage compartment 107 side wall surface of the partition wall 174 so as to be lower in temperature than other parts, and the electrostatic atomization apparatus 131 as the mist spray apparatus and a mist air path 177 are situated in the depression 174a.

The electrostatic atomization apparatus 131 is mainly composed of the atomization unit 139 and the voltage application unit 133. The atomization electrode 135 is placed in the atomization unit 139. The atomization electrode 135 is securely connected to the cooling pin 134 as the electrode connection member (heat transfer cooling member) made of a good heat conductive material such as aluminum, stainless steel, brass, or the like, and also electrically connected including one end wired from the voltage application unit 133.

The cooling pin 134 as the electrode connection member (heat transfer cooling member) has a large heat capacity equal to or more than 50 times and preferably equal to or more than 100 times that of the atomization electrode 135. The cooling pin 134 is preferably a high heat conductive member such as aluminum, copper, or the like. To efficiently conduct cold heat from one end to the other end of the cooling pin 134 by heat conduction, it is desirable that the heat insulator covers a circumference of the cooling pin 134.

Moreover, the heat conduction of the atomization electrode 135 and the cooling pin 134 needs to be maintained for a long time. Accordingly, an epoxy material or the like is poured into the connection part to prevent moisture and the like from entering, thereby suppressing a heat resistance and fixing the atomization electrode 135 and the cooling pin 134 together. Here, the atomization electrode 135 may be fixed to the cooling pin 134 by pressing and the like, in order to reduce the heat resistance.

In addition, since the cooling pin 134 needs to conduct cool temperature heat in the heat insulator for thermally insulating the storage compartment from the cooler 112 or the air path, it is desirable that the cooling pin 134 has a length equal to or more than 5 mm and preferably equal to or more than 10 mm. Note, however, that a length equal to or more than 30 mm reduces effectiveness, and also causes an increase in thickness of the partition wall 174 which leads to a smaller storage capacity.

Note that the electrostatic atomization apparatus 131 placed in the storage compartment (vegetable compartment 107) is in a high humidity environment and this humidity may affect the cooling pin 134. Accordingly, the cooling pin 134 is preferably made of a metal material that is resistant to corrosion and rust, or a material that has been coated or surface-treated by, for example, alumite.

The cooling pin 134 as the heat transfer cooling member is fixed to the heat insulator 171 by being fitted in the depression 174a formed in a part of the heat insulator 171, and the atomization electrode 135 is attached to the cooling pin 134 so as to form an L-shaped protrusion. This contributes to the thinner partition wall 174 to thereby increase the storage capacity.

This being so, an opposite end surface of the cooling pin 134 as the heat transfer cooling member to the atomization electrode 135 is pressed against the freezer compartment side partition plate 172 formed of a resin such as ABS or PP. The atomization electrode 135 as the atomization tip is cooled by heat conduction from the freezer compartment 108 via the freezer compartment side partition plate 172, thereby building up dew condensation on the tip of the atomization electrode 135 and generating water.

Since the cooling unit can be made by such a simple structure, the atomization unit 139 of high reliability with a low incidence of troubles can be realized. Moreover, the cooling pin 134 as the heat transfer cooling member and the atomization electrode 135 as the atomization tip can be cooled by using the cooling source of the refrigeration cycle, which contributes to energy-efficient atomization.

The counter electrode 136 shaped like a circular doughnut plate is installed in a position facing the atomization electrode 135 so as to have a constant distance from the tip of the atomization electrode 135. The mist air path 177 is formed on a further extension from the atomization electrode 135.

The mist air path 177 is provided in the depression 174a of the partition wall 174 that separates the vegetable compartment 107 and the freezer compartment 108 from each other.

The partition wall 174 is 25 mm to 45 mm to ensure the heat insulation and the storage capacity. The mist air path 177 is situated in the depression 174a of the partition wall 174.

The mist air path 177 has a suction port 183 for supplying moisture from the vegetable compartment 107 and a mist discharge port 176 for spraying a mist into the vegetable compartment 107. High humidity air flows into the atomization unit 139 from this mist suction port 183, and the atomization electrode 135 of the atomization unit 139 is cooled via the cooling pin by heat conduction from the freezer compartment, as a result of which dew condensation is formed at the tip of the atomization electrode 135.

Applying a high voltage between the tip of the atomization electrode 135 and the counter electrode 136 causes a mist to be generated.

The generated mist passes through the mist air path 177, and is sprayed into the vegetable compartment 107 from the mist discharge port 176.

Moreover, the voltage application unit 133 is electrically connected to the atomization unit 139. A negative potential side of the voltage application unit 133 generating a high voltage is electrically wired and connected to the atomization electrode 135, and a positive potential side of the voltage application unit 133 is electrically wired and connected to the counter electrode 136.

Discharge constantly occurs in the vicinity of the atomization electrode 135 for mist spray, which raises a possibility that the tip of the atomization electrode 135 wears out. The refrigerator 100 is typically intended to operate for 10 years or more. Therefore, a strong surface treatment needs to be performed on the surface of the atomization electrode 135. For example, the use of nickel plating, gold plating, or platinum plating is desirable.

The counter electrode 136 is made of, for example, stainless steel. Long-term reliability needs to be ensured for the counter electrode 136. In particular, to prevent foreign substance adhesion and contamination, it is desirable to perform a surface treatment such as platinum plating on the counter electrode 136.

The voltage application unit 133 communicates with and is controlled by the control unit 146 of the refrigerator main body (heat-insulating main body 101), and switches the high voltage on or off according to an input signal from the refrigerator 100 or the electrostatic atomization apparatus 131.

Note that a heating unit 178 such as a heater is disposed in the partition wall 174 to which the electrostatic atomization apparatus 131 is fixed, in order to prevent dew condensation in the air path.

An operation and working of the refrigerator having the above-mentioned structure are described below.

The heat insulator 171 of the partition wall 174 in which the electrostatic atomization apparatus 131 is installed needs to have such a thickness that allows the cooling pin 134 to which the atomization electrode 135 is fixed, to be cooled. Accordingly, a part of the heat insulator 171 provided with the electrostatic atomization apparatus 131 has a smaller wall thickness than other parts. As a result, the cooling pin 134 as the heat transfer cooling member can be cooled by heat conduction from the freezer compartment of a relatively low temperature, with it being possible to cool the atomization electrode 135 as the atomization tip. When the tip of the atomization electrode 135 drops to the dew point or below, a water vapor near the atomization electrode 135 builds up dew condensation on the atomization electrode 135, thereby reliably generating water droplets.

Though not shown, by installing an inside temperature detection unit, an inside humidity detection unit, and the like in the storage compartment, the dew point can be precisely calculated by a predetermined computation according to a change in storage compartment environment.

In this state, the voltage application unit 133 applies a high voltage (for example, 7.5 kV) between the atomization electrode 135 and the counter electrode 136, where the atomization electrode 135 is on a negative voltage side and the counter electrode 136 is on a positive voltage side. This causes an air insulation layer to be broken down and corona discharge to occur between the electrodes. Water on the atomization electrode 135 is atomized from the electrode tip, and a nano-level fine mist carrying an invisible charge less than 1 µm, accompanied by ozone, OH radicals, and so on, is generated.

The generated fine mist is sprayed into the vegetable containers (lower storage container 119, upper storage container 120) in the vegetable compartment 107. The fine mist sprayed from the electrostatic atomization apparatus 131 is negatively charged. Meanwhile, green leafy vegetables, fruits, and the like stored in the vegetable compartment 107 usually tend to be in a rather wilted state as a result of transpiration on the way home from shopping or transpiration during storage, and so these vegetables and fruits are usually positively charged. Accordingly, the sprayed fine mist carrying a negative charge tends to gather on vegetable surfaces. Thus, the sprayed fine mist increases the humidity of the vegetable compartment 107 again and simultaneously adheres to the surfaces of the vegetables and fruits, thereby suppressing transpiration from the vegetables and fruits and enhancing freshness preservation. The fine mist also penetrates into tissues via intercellular spaces of the vegetables and fruits, as a result of which water is supplied into cells that have wilted due to moisture evaporation to resolve the wilting by cell turgor pressure, and the vegetables and fruits return to a fresh state.

Moreover, the generated fine mist contains ozone, OH radicals, and the like, which possess strong oxidative power. Hence, the generated fine mist can perform deodorization in the vegetable compartment and antimicrobial activity and sterilization on the vegetable surfaces, and also oxidative-decompose and remove harmful substances such as agricultural chemicals and wax adhering to the vegetable surfaces.

As described above, in the seventh example, the refrigerator main body (heat-insulating main body 101) has a plurality of storage compartments. The freezer compartment 108 as the lower temperature storage compartment maintained at a lower temperature than the vegetable compartment 107 as the storage compartment including the atomization unit 139 is provided on the top side of the vegetable compartment 107 as the storage compartment including the atomization unit 139. The atomization unit 139 is attached to the partition wall 174 on the top side of the vegetable compartment 107.

Thus, in the case where a freezing temperature zone storage compartment such as the freezer compartment 108 or the ice compartment 106 is located above the storage compartment (vegetable compartment 107) including the atomization unit 139, by installing the atomization unit 139 in the partition wall 174 at the top separating these storage compartments, the cooling pin 134 as the heat transfer cooling member in the atomization unit 139 is cooled by cool air of the storage compartment (freezer compartment 108) above the vegetable compartment 107, with it being possible to cool and build up dew condensation on the atomization electrode 135. Since the atomization unit 139 can be provided by a simple structure with there being no need for a particular cooling apparatus, a highly reliable atomization unit with a low incidence of troubles can be realized.

In this example, the refrigerator 100 is provided with the partition wall for separating the storage compartment, and the lower temperature storage compartment (freezer compartment 108) on the top side of the storage compartment (vegetable compartment 107). The electrostatic atomization apparatus 131 is attached to the partition wall 174 at the top of the vegetable compartment 107. Thus, in the case where a freezing temperature zone storage compartment such as the freezer compartment 108 or the ice compartment 106 is located above the storage compartment, by installing the electrostatic atomization apparatus 131 in the partition wall 174 at the top separating these compartments, a cooling source of the freezing temperature zone storage compartment can be used to cool and build up dew condensation on the atomization electrode 135 as the atomization tip of the electrostatic atomization apparatus 131. This makes it unnecessary to provide any particular cooling apparatus. Moreover, since the mist is sprayed from the top, the mist can be easily diffused throughout the storage containers (lower storage container 119, upper storage container 120) in the vegetable compartment 107.

In addition, since the atomization unit 139 is not disposed in the storage space of the vegetable compartment 107 but disposed on the back side of the vegetable compartment side partition plate 173, the atomization unit 139 is difficult to reach by hand, which contributes to enhanced safety.

In this example, the atomization unit 139 generates a mist according to the electrostatic atomization method, where water droplets are finely divided using electrical energy such as a high voltage to thereby form a fine mist. The generated mist is electrically charged. This being so, by causing the mist to carry an opposite charge to vegetables, fruits, and the like to which the mist is intended to adhere, for example, by spraying a negatively charged mist over positively charged vegetables, the adhesion of the mist to the vegetables and fruits increases, as a result of which the mist can adhere to the vegetable surfaces more uniformly. In this way, a mist adhesion ratio can be improved when compared with an uncharged mist. Moreover, the fine mist can be directly sprayed over the foods in the vegetable containers (lower storage container 119, upper storage container 120), and the potentials of the fine mist and the vegetables are exploited to cause the fine mist to adhere to the vegetable surfaces. This improves freshness preservation efficiently.

In this example, not tap water supplied from outside but dew condensation water is used. Since dew condensation water is free from mineral compositions and impurities, deterioration in water retentivity caused by deterioration or clogging of the tip of the atomization electrode 135 can be prevented.

In this example, the mist contains radicals, so that agricultural chemicals, wax, and the like adhering to the vegetable surfaces can be decomposed and removed with an extremely small amount of water. This benefits water conservation, and also achieves a low input.

### (Eight Example)

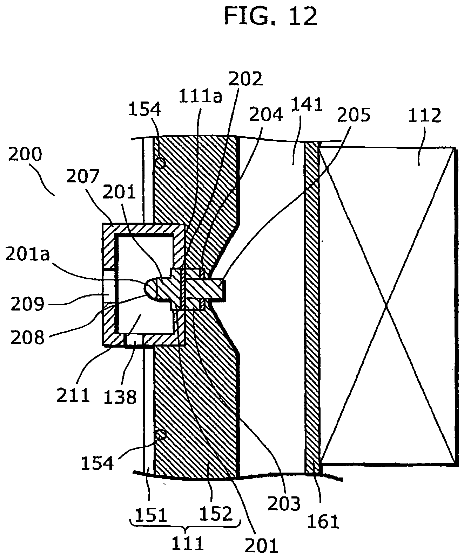

FIG. 12 is a detailed sectional view of an ultrasonic atomization apparatus and its periphery in a refrigerator in an eighth example of the present disclosure.

In this example, detailed description is mainly given for parts that differ from the structures described in the first to seventh examples, with detailed description being omitted for parts that are the same as the structures described in the first to seventh examples or parts to which the same technical ideas are applicable.

In the drawing, the back partition wall 111 includes the back partition wall surface 151 made of a resin such as ABS, and the heat insulator 152 made of styrene foam or the like for ensuring heat insulation of the storage compartment. There is also the partition plate 161 for isolating the freezer compartment discharge air path 141 and the cooling compartment 110 from each other. Moreover, the heating unit 154 such as a heater is disposed between the heat insulator 152 and the back partition wall surface 151, in order to adjust the temperature of the storage compartment or prevent surface dew condensation.

Here, the depression 111a is formed in a part of a storage compartment side wall surface of the back partition wall 111, and a horn-type ultrasonic atomization apparatus 200 which is a mist spray apparatus, namely, an atomization apparatus, is installed in the depression 111a.

Thus, the ultrasonic atomization apparatus 200 as the atomization apparatus is installed in the back partition wall 111 including the heating unit 154 such as a heater from among the side walls, where the heating unit 154 is disposed at least at a lower position than the ultrasonic atomization apparatus 200.

The ultrasonic atomization apparatus 200 includes a horn-type ultrasonic vibrator 208 composed of a horn unit 201 and a cooling pin 205 (heat transfer cooling member) as an atomization unit 211, electrodes 202 and 204, and a piezoelectric element 203, an external case 207 fixing and surrounding these components, and a spray port 209 included in the external case to spray a mist into the vegetable compartment. The horn unit 201 as an atomization tip has a projection from its bottom toward its end by a process such as cutting or sintering. A tip 201a of the horn unit 201 is processed in a rectangular or circular shape, and has a cross-sectional ratio of about 1/5 or below. A side surface shape of the horn unit 201 depends on an oscillation frequency of the piezoelectric element 203. The horn unit 201, the electrode 202, the piezoelectric element 203, and the electrode 204 are integrally formed in this order, and each connection part is bonded and fixed by an epoxy or silicon adhesive. The horn-type ultrasonic vibrator 208 is designed so that the vibration generated by the piezoelectric element 203 reaches a maximum amplitude at the horn unit tip 201a.

Though not shown, the piezoelectric element and the electrode are shaped as a cylinder with a hollow central part. The cooling pin is formed in this hollow, and fixed to the horn unit 201 by pressure.

The outline of the horn-type ultrasonic vibrator 208 is coated with a silicon resin, an epoxy resin, an acrylic resin, or the like (not shown).

The horn unit 201 as the atomization tip is made of a high heat conductive material. Examples of the material include metals such as aluminum, titanium, and stainless steel. In particular, a material having aluminum as a main component is preferable in terms of light weight, high heat conduction, and amplitude amplification performance during ultrasonic propagation. However, for a refrigerator and the like which require a corrosion resistance and a service life improvement, a material having stainless steel such as SUS304 and SUS316L as a main component is desirable because aged deterioration hardly occurs and reliability can be ensured over a long period of time.

The spray port 209 is formed as a rectangular or circular hole in a part of the external case 207 so as to be situated in a direction in which the liquid is atomized from the atomization unit 211, that is, in a part of the external case 207 facing the tip 201a of the horn unit 201.

The ultrasonic atomization apparatus 200 as the atomization apparatus cools the horn 201 as the atomization tip included in the atomization unit 211 to the dew point temperature or below by a cooling unit, thereby causing water in the air around the atomization unit to build up dew condensation on the horn unit 201 and generated dew condensation water to be sprayed as a mist from the tip 201a.

When a high humidity state continues due to door opening/closing or the like and dew condensation water is supplied to the horn unit 201 more than necessary, water is discharged from the drainage port 138. The drainage port 138 has a function as a cool air supply port for taking cool air into the external case 207, in addition to a function as a drainage hole for draining water accumulated in the external case 207 to outside.

The drained dew condensation water flows along the back partition wall surface 151 of the partition wall 111, but is evaporated by convection in the vegetable compartment and the heater on the back surface because it is of an extremely small quantity. At this time, since the heating unit 154 such as the heater is installed in the wall surface, an ascending air current is likely to occur around the back partition wall 111 when compared with other side walls. Accordingly, by disposing the atomization unit 211 in the back partition wall 111, high humidity cool air flows in again from the drainage port 138 situated in a lower part of the external case 207 that houses the atomization unit and functioning as a cool air supply port, with it being possible to further stimulate dew condensation.

An operation of the refrigerator having the above-mentioned structure is described below.

The cooling pin 205 in the ultrasonic atomization apparatus 200 installed in a part of the back partition wall 111 is cooled by the freezer compartment air path in which lower temperature cool air than the vegetable compartment flows. Since the cooling pin 205 and the horn unit 201 are pressed together, the horn unit 201 as the atomization tip is cooled by heat conduction, and as a result an excess water vapor contained in high humidity air in the vegetable compartment forms dew condensation on the horn unit 201 decreased in temperature. Dew condensation water generated in this way adheres to the tip 201a.

In this state, by energizing a high voltage oscillation circuit, a high voltage is generated at a predetermined frequency (for example, 80 kHz to 210 kHz) and applied to the electrodes 202 and 204. This causes the piezoelectric element 202 to vibrate, as a result of which a capillary wave occurs on the surface of the supplied water adhering to the tip 201a of the atomization unit 211, and the water at the tip is divided into fine particles of several µm to several tens of µm and atomized as a mist in a vibration direction. When the fine particle mist passes through the spray port 209, a mist of a large particle diameter generated from other than the tip 201a of the horn unit 201 collides with a peripheral wall of the rectangular or circular spray port 209 and remains inside the case without being sprayed into the storage compartment. Therefore, only a fine mist of a relatively small particle diameter is sorted and sprayed into the vegetable compartment 107 as the storage compartment.

The ultrasonic atomization apparatus 200 is energized at a fixed interval, such as by turning on for one minute and turning off for nine minutes. In this way, the mist is sprayed into the vegetable compartment 107 while adjusting an atomization amount, thereby quickly humidifying the vegetable compartment 107. This enables the vegetable compartment 107 to become high in humidity, as a result of which transpiration from vegetables can be suppressed. Moreover, since energy is concentrated so that the vibration generated by the piezoelectric element 203 is maximized in amplitude at the tip 201a of the horn unit 201, the piezoelectric element 203 is limited to a low amount of heat generation of about 1 W to 2 W, with it being possible to reduce a temperature influence on the vegetable compartment 107.

It is preferable that, in terms of amplitude amplification performance during ultrasonic propagation, a coating material covering the piezoelectric element 203 is mainly composed of a silicon resin that has flexibility and so does not easily deteriorate even by repeated vibrations, in order to prevent coating material deterioration in a refrigerator that is intended to be used over a long period of time of about 10 years on average. By preventing liquid and water vapor entry in each connection part between the horn unit 201, the electrode 202, the piezoelectric element 203, and the electrode 204 and also preventing adhesive deterioration, lifetime reliability can be improved, with it being possible to achieve a structure that can tolerate an actual load when installed in a refrigerator.

Note that a packing material (not shown) may be used in a clearance between the external case 207 and the horn-type ultrasonic vibrator, for water leakage prevention and resonance prevention. In so doing, the liquid or water vapor entry mentioned above can be prevented more reliably, and also noise can be reduced. In detail, the use of a fluorine-based packing material contributes to improved lifetime reliability.

As described above, in this example, the vegetable compartment is thermally insulated in a relatively high humidity environment, and the horn-type ultrasonic atomization apparatus is provided to spray the liquid into the vegetable compartment. By installing the cooling pin in the horn unit to generate dew condensation water at the horn tip, dew condensation is formed at the tip and directly sprayed to thereby preserve food quality in the vegetable compartment.

Note that, in this example, the atomized liquid may be zinc ion water, silver ion water, copper ion water, or the like containing a metal ion that has bacteriostatic power and deodorizing power. This makes it possible to enhance the effect of suppressing bacteria generated in the storage compartment.

Though the shape of the part of the heat insulator 152 provided with the cooling pin 205 is exemplified as shown in FIG. 12 in this example, it should be obvious that the same advantages can be attained even when the shape of the part where the cooling pin 205 is disposed is any of the shapes as described in the first to seventh examples.

Though the atomization apparatus is the ultrasonic atomization apparatus 200 in this example, other atomization apparatuses such as the electrostatic atomization apparatus described in the first to seventh examples and atomization apparatuses of other types such as an ejector type are also applicable so long as mist spray is performed using dew condensation water actively formed from water in the air. Thus, the technical ideas described in the above examples may be applied.

### (Ninth Example)

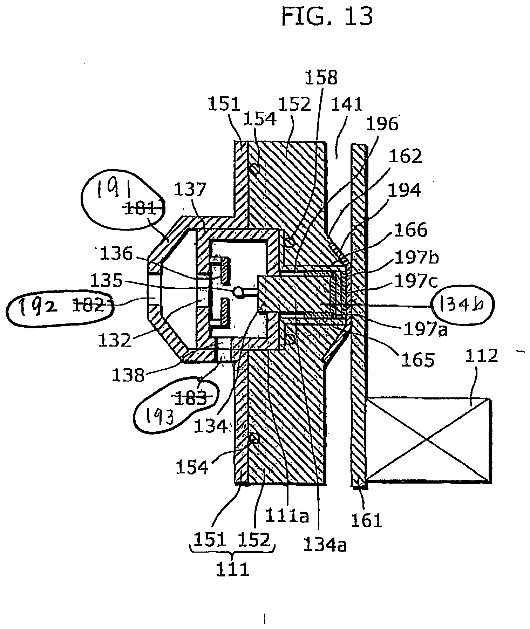

A longitudinal sectional view showing a section when a refrigerator in a ninth example of the present disclosure is cut into left and right is approximately the same as FIG. 1, and a relevant part front view showing a back surface of a vegetable compartment in the refrigerator in the ninth example of the present disclosure is the same as FIG. 2. FIG. 13 is a sectional view of an electrostatic atomization apparatus and its periphery included in the vegetable compartment in the refrigerator in the ninth example of the present disclosure, as taken along line A-A in FIG. 2 and seen from the arrow direction.

In this example, detailed description is given only for parts that differ from the structures described in the first to eighth examples, with description being omitted for parts that are the same as the structures described in the first to eighth examples or parts to which the same technical ideas are applicable.

In the drawing, a depression and the through part 165 are formed in a part of a storage compartment (vegetable compartment 107) side wall surface of the back partition wall 111, and the electrostatic atomization apparatus 131 as the mist spray apparatus is installed at this position.

A projection 191 is formed on the back partition wall surface 151 where the electrostatic atomization apparatus 131 is installed, and the electrostatic atomization apparatus 131 is sandwiched between the projection 191 of the back partition wall surface and the heat insulator 152.

A hole (spray port) 192 is provided in the projection 191 of the back partition wall surface, on an extension from the spray port 132 in the electrostatic atomization apparatus 131. Likewise, a moisture supply port 193 is provided in the projection 191 of the back partition wall surface, near the moisture supply port 138 in a part of the external case of the electrostatic atomization apparatus 131.

Regarding the through part 165 in which the cooling pin 134 is situated, when there is a thin walled part of about 2 mm in molding of styrene foam or the like, the heat insulation wall decreases in rigidity, which raises a possibility of problems such as a crack and a hole caused by insufficient strength or defective molding. Thus, there is concern about quality deterioration.

In view of this, in this example, the heat insulator 152 of the back partition wall 111 near the through hole 165 in which the cooling pin 134 is situated is provided with the protrusion 162 protruding toward the freezer compartment discharge air path 141, thereby enhancing rigidity around the through part 165 and further enhancing rigidity by securing the wall thickness of the heat insulator 152 when compared with the case where the cooling pin 134 side surface in the freezer compartment discharge air path 141 is flat without providing the protrusion 162 in the freezer compartment discharge air path 141. In addition, by forming the protrusion 162, the cooling pin 134 can be cooled both from its back and its side.

Furthermore, in order to suppress an increase in air path resistance, an outer peripheral surface of the protrusion 162 is sloped in a conical shape that tapers toward the end.

In this case, when the cooling pin 134 is directly placed in the air path (freezer compartment discharge air path 141), there is a possibility of excessive cooling that may cause an excessive amount of dew condensation or freezing of the atomization electrode 135.

Accordingly, the hole (through part 165) is formed in the heat insulator near the back of the cooling pin 134, the cooling pin 134 is inserted into the hole, and the cooling pin cover 166 formed of a resin such as PS or PP having heat insulation properties and also high waterproof properties is provided around the cooling pin 134, thereby ensuring heat insulation.

Here, the cooling pin cover 166 may be, for example, insulating tape having heat insulation properties.

Though not shown, by using a cushioning material between the hole (through part 165) and the cooling pin cover 166 to ensure sealability, it is possible to effectively prevent the cool air from the freezer compartment discharge air path 141 from entering around the cooling pin 134, flowing into the storage compartment, and causing excessive cooling or freezing in the storage compartment.

The cooling pin 134 is fixed to the external case 137, where the cooling pin 134 itself has the projection 134a that protrudes from the external case 137. The projection 134a of the cooling pin 134 is located opposite to the atomization electrode 135. The projection 134a is fit into the depression as the through part 165 smaller than the depression 111a of the heat insulator 152 of the back partition wall 111, and tape such as aluminum tape as a cool air blocking member 194 is attached to the heat insulator 152 at the opening 167 of the through part 165 on the freezer compartment discharge air path 141 side, to thereby block cool air.

The tape 194 attached to the opening 167 may be pressed by the partition plate 161. This makes the tape 194 more resistant to peeling. Cold heat is transmitted from the cooling compartment 110 via the partition plate 161, from the back end 134b of the cooling pin 134.

Note here that, due to some dimension error or the like, a void 196 of a certain extent is present between the cooling pin 134 and the cooling pin cover 166. When the void 196 is present, an air layer is generated in this area and shows heat insulation properties, making it difficult to cool the cooling pin 134. In view of this, a heat conduction retention member such as butyl or a heat transferable compound is buried between the cooling pin 134 and the cooling pin cover 166 and between the cooling pin cover 166 and the tape 194, as void filling members 197a, 197b, and 197c for filling the void 196.

An operation and working of the refrigerator 100 in this example having the above-mentioned structure are described below.

The cooling pin 134 is cooled via the cooling pin cover 166. This achieves dual-structure indirect cooling, that is, the atomization electrode 135 as the atomization tip is indirectly cooled via the cooling pin 134 and further via the cooling pin cover 166 as the heat relaxation member. Here, there is a possibility that the void 196 occurs between the cooling pin 134 and the cooling pin cover 166 or between the cooling pin cover 166 and the tape 194 due to processing accuracy. When the void 196 occurs, heat conductivity in that space deteriorates significantly, making it impossible to sufficiently cool the cooling pin 134. This causes temperature variations of the cooling pin 134 and the atomization electrode 135 and, in some cases, hampers dew condensation on the atomization electrode tip.

To prevent this, the void 196 is filled with the void filling members 197a, 197b, and 197c such as butyl or a heat transferable compound, thereby ensuring heat conduction from the tape 194 to the cooling pin cover 166 and from the cooling pin cover 166 to the cooling pin 134. Thus, the cooling capacity for the atomization electrode 135 can be ensured.

Besides, the cooling pin 134 can be cooled using the cool air generated in the cooling compartment 110, both from the side of the cooling pin 134 from the freezer compartment discharge air path 141 via the heat insulator 152, and from the back end 134b of the cooling pin 134 by heat conduction via the tape 194 and the partition plate 161 of the cooling compartment 110.

Thus, in this example, the protrusion 162 protruding toward the freezer compartment discharge air path 141 is formed on the heat insulator 152 near the through part 165, thereby enhancing rigidity around the through part 165. Even in such a case, the surface area for heat conduction can be increased because the cooling pin 134 can be cooled both from its back and its side. Hence, the rigidity around the cooling pin 134 can be enhanced without a decrease in cooling efficiency of the cooling pin 134 as the heat transfer cooling member.

Moreover, by shaping the outer peripheral surface of the protrusion 162 to be sloped in a conical shape that tapers toward the end, the cool air flows along the outer periphery of the protrusion 162 that is curved with respect to the cool air flow direction, so that an increase in air path resistance can be suppressed. Besides, by uniformly cooling the cooling pin 134 as the heat transfer cooling member from the outer periphery of the side wall, the cooling pin 134 can be cooled evenly, as a result of which the atomization electrode 135 as the atomization tip can be cooled efficiently via the cooling pin 134.

In addition, the through part 165 as a through hole is formed only in one part of the heat insulator 152 behind the cooling pin 134, with there being no thin walled part. This eases molding of styrene foam, and prevents problems such as a breakage during assembly.

Furthermore, there is no clearance between the cooling pin cover 166 and the through part 165 and also the opening 167 of the through part 165 is sealed by the tape 194 to block the entry of cool air from the adjacent cooling air path, so that the low temperature cool air does not leak into the storage compartment. Accordingly, the storage compartment (vegetable compartment 107) and its peripheral components can be protected from dew condensation, low temperature anomalies, and so on.

Regarding heat conduction deterioration due to a void that inevitably occurs between the cooling pin cover 166 and the cooling pin 134 due to processing accuracy and assembly accuracy, the void 196 is filled with a heat conductive member such as butyl to ensure heat conductivity, thereby ensuring the cooling capacity. The void 196 between the tape 194 and the cooling pin cover 166 can be dealt with in the same manner.

As a result of the cooling, dew condensation is formed on the atomization electrode 135. The fine mist generated by causing high-voltage discharge between the counter electrode 136 and the atomization electrode 135 passes through the spray port 132 formed in the external case 137 of the electrostatic atomization apparatus 131, and is sprayed into the vegetable compartment 107 from the hole (spray port) 192 formed in the back partition wall surface 151. The sprayed fine mist reaches throughout the vegetable compartment 107 because the fine mist is made up of extremely small particles and so has high diffusivity. The sprayed fine mist is generated by high-voltage discharge, and so is negatively charged. Meanwhile, vegetables and fruits stored in the vegetable compartment 107 are positively charged. Accordingly, the atomized mist tends to gather on vegetable surfaces. This contributes to enhanced freshness preservation.

Even in the case where unusual dew condensation occurs on the atomization electrode 135, it is possible to prevent an error caused by water accumulated in the atomization unit 139, because the moisture supply port 138 is located below the atomization electrode 135 and also the moisture supply port 193 is located in the back partition wall surface 151 on the extension from the moisture supply port 138.

As described above, in the ninth example, regarding the structure of the cooling pin 134 as the projection 134a of the atomization unit 139, the through part 165 as the through hole is formed in the heat insulator 152, the cooling pin 134 is inserted into the through part 165, and the cooling pin cover 166 is provided around the cooling pin 134. The void 196 between the cooling pin cover 166 and the cooling pin 134 and the void 196 between the cooling pin 134 and the tape 194 attached to the opening 167 of the through part 165 are eliminated by burying the void filling member. Thus, heat conduction from the cooling air path and the cooling compartment 110 can be ensured.

Moreover, the tape 194 attached to the opening 167 of the through part 165 is pressed by the partition plate 161 for separating the cooling compartment 110 and the freezer compartment discharge air path 141, so that the tape 194 is kept from peeling. This ensures stable quality, and also ensures the cooling capacity for the atomization electrode 135 and the cooling pin 134 by heat conduction.

Though no cushioning material is provided around the cooling pin 134 in the ninth example, a cushioning material may be provided. This allows for close contact between the through hole (through part 165) and the cooling pin cover 166, with it being possible to prevent cool air leakage.

Though the air path for cooling the cooling pin 134 as the heat transfer cooling member is the freezer compartment discharge air path 141 in this example, the air path may instead be a low temperature air path such as a return air path of the freezer compartment 108 or a discharge air path of the ice compartment 106. This expands an area in which the electrostatic atomization apparatus 131 can be installed.

Though the cooling unit for cooling the cooling pin 134 as the heat transfer cooling member is the air cooled using the cooling source generated in the refrigeration cycle of the refrigerator 100 in this example, it is also possible to utilize heat transmission from a cooling pipe that uses a cool temperature or cool air from the cooling source of the refrigerator 100. In such a case, by adjusting a temperature of the cooling pipe, the cooling pin 134 as the heat transfer cooling member can be cooled at an arbitrary temperature. This eases temperature control when cooling the atomization electrode 135 as the atomization tip.

### (Tenth Example)

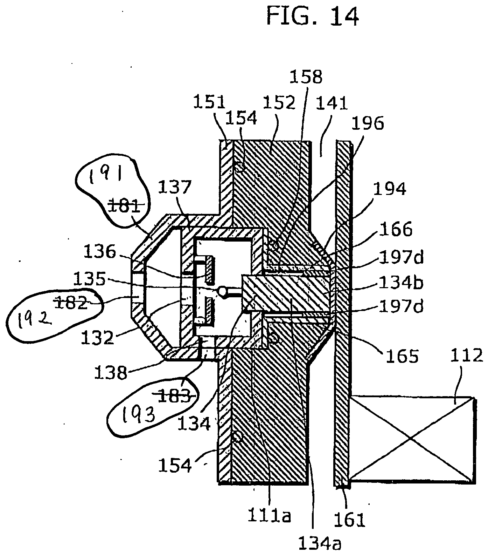

A longitudinal sectional view showing a section when a refrigerator in a tenth example of the present disclosure is cut into left and right is approximately the same as FIG. 1, and a relevant part front view showing a back surface of a vegetable compartment in the refrigerator in the tenth example of the present disclosure is the same as FIG. 2. FIG. 14 is a sectional view of an electrostatic atomization apparatus and its periphery included in the vegetable compartment in the refrigerator in the tenth example of the present disclosure, as taken along line A-A in FIG. 2 and seen from the arrow direction.

In this example, detailed description is given only for parts that differ from the structures described in the first to ninth examples, with description being omitted for parts that are the same as the structures described in the first to ninth examples or parts to which the same technical ideas are applicable.

In the drawing, the through part 165 is formed in a part of a storage compartment (vegetable compartment 107) side wall surface of the back partition wall 111, and the electrostatic atomization apparatus 131 as the mist spray apparatus is installed in the through part 165.

The projection 191 is formed on the back partition wall surface 151 where the electrostatic atomization apparatus 131 is installed, and the electrostatic atomization apparatus 131 is sandwiched between the projection 191 of the back partition wall surface 151 and the heat insulator 152.

The cooling pin 134 of the electrostatic atomization apparatus 131 is fit into the through part 165 of the heat insulator 152, in a state where its circumference is covered with the cooling pin cover 166 formed of a resin such as PS or PP having heat insulation properties and also high waterproof properties.

Here, the cooling pin cover 166 is pressed against the surrounding heat insulator 152. In this way, even when water adheres to the cooling pin 134, it is possible to prevent a situation where the water adheres to the heat insulator 152 and penetrates into the heat insulator 152, causing freezing or breakage.

Regarding the end 134b of the cooling pin 134, however, the cooling pin cover 166 is shaped as a cylinder in order to ensure the cooling capacity from the back, so that only the end 134b of the cooling pin 134 is in an open state. The tape 194 such as aluminum tape is attached to the opening 167 of the through part 165 to block cool air.

The tape 194 is attached so as to be in close contact with the end 134b of the cooling pin 134, thereby ensuring heat conductivity.

Here, the cooling pin cover 166 may be, for example, insulating tape having heat insulation properties.

Note that, due to some dimension error or the like, the void 196 of a certain extent is present between the cooling pin 134 and the cooling pin cover 166. To fill the void 196, a heat conduction retention member such as butyl or a heat transferable compound is buried between the cooling pin 134 and the cooling pin cover 166, as a void filling member 197d which is a member for filling the void and has relatively excellent heat conductivity.

An operation and working of the refrigerator 100 in this example having the above-mentioned structure are described below.

The cooling pin 134 is cooled from the cooling air path or the partition plate 161 separating the cooling compartment 110, via the tape 194 and the void filling member 197d or via the heat insulator on the side of the cooling pin. When dual-structure indirect cooling is performed via the tape 194, there is a possibility that the void 196 occurs between the cooling pin cover 166 and the tape 194 due to processing accuracy. When the void 196 occurs, heat conductivity in that space deteriorates significantly, making it impossible to sufficiently cool the cooling pin 134. This causes temperature variations of the cooling pin 134 and the atomization electrode 135 and, in some cases, hampers dew condensation on the atomization electrode tip.

To prevent this, it is ensured during assembly that the tape 194 and the cooling pin 134 are in close contact with each other. In the case where there is still a possibility of an occurrence of a void, the void 196 is filled with a heat conduction retention member such as butyl or a heat transferable compound as the void filling member197d, thereby ensuring heat conduction from the tape 194 to the cooling pin 134. Thus, the cooling capacity for the atomization electrode 135 can be ensured.

Furthermore, there is no clearance between the cooling pin cover 166 and the through part 165 and also the opening 167 of the through part 165 is sealed by the tape 194 to block the entry of cool air from the adjacent cooling air path, so that the low temperature cool air does not leak into the storage compartment. Accordingly, the storage compartment (vegetable compartment 107) and its peripheral components can be protected from dew condensation, low temperature anomalies, and so on.

Regarding heat conduction deterioration by a void that inevitably occurs between the cooling pin cover 166 and the cooling pin 134 due to processing accuracy and assembly accuracy, the void 196 is filled with a heat conductive member such as butyl to ensure heat conductivity, thereby ensuring the cooling capacity. The void 196 between the tape 194 and the cooling pin 134 can also be filled with a heat conductive member such as butyl to ensure heat conductivity.

Moreover, since there is no clearance between the cooling pin cover 166 and the through part 165, water is kept from entering the heat insulator made of styrene foam. By preventing a situation where water penetrates into the heat insulator and the penetrated portion is frozen and, due to a stress caused by water volume expansion, cracked and broken, it is possible to further ensure quality.

Besides, the opening 167 of the through part 165 is sealed by the tape 194 to block the entry of cool air from the adjacent cooling air path, so that the low temperature cool air does not leak into the storage compartment. Accordingly, the storage compartment (vegetable compartment 107) and its peripheral components can be protected from dew condensation, low temperature anomalies, and so on.

As a result of the cooling, dew condensation is formed on the atomization electrode 135. The fine mist generated by causing high-voltage discharge between the counter electrode 136 and the atomization electrode 135 passes through the spray port 132 formed in the external case 137 of the electrostatic atomization apparatus 131, and is sprayed into the vegetable compartment 107 from the hole (spray port) 192 formed in the back partition wall surface 151. The sprayed fine mist reaches throughout the vegetable compartment 107 because the fine mist is made up of extremely small particles and so has high diffusivity. The sprayed fine mist is generated by high-voltage discharge, and so is negatively charged. Meanwhile, vegetables and fruits stored in the vegetable compartment 107 are positively charged. Accordingly, the atomized mist tends to gather on vegetable surfaces. This contributes to enhanced freshness preservation.

Even in the case where unusual dew condensation occurs on the atomization electrode 135, it is possible to prevent an error caused by water accumulated in the atomization unit 139, because the moisture supply port 138 is located below the atomization electrode 135 and also the moisture supply port 193 is located in the back partition wall surface on the extension from the moisture supply port 138.

As described above, in the tenth example, regarding the structure of the cooling pin cover 166 of the cooling pin 134 as the projection 134a of the atomization unit 139, the cooling pin cover 166 is designed to cover the circumference of the cooling pin 134 when the cooling pin 134 is inserted into the through part 165 as the through hole in the heat insulator 152, and the cooling pin cover 166 is buried so as to be pressed into the through part 165. Moreover, the surface of the cooling pin cover 166 on the side of the end 134b of the cooling pin 134 is in an open state, and the void between the cooling pin and the tape attached to the opening 167 of the through part 165 is eliminated by providing the heat conductive member. Thus, heat conduction from the cooling air path and the cooling compartment can be ensured.

As a result, the cooling capacity for the atomization electrode and the cooling pin by heat conduction can be ensured, too.

Moreover, the tape attached to the opening 167 of the through part 165 is pressed by the partition plate 161 for separating the cooling compartment 110 and the freezer compartment discharge air path 141, so that the tape 194 is kept from peeling. This ensures stable quality.

In addition, the cooling pin cover 166 is pressed into the through part 165. By keeping water from entering the heat insulator 152 made of styrene foam in this manner, the heat insulator can be prevented from cracking or breaking.

Though no cushioning material is provided around the cooling pin 134, a cushioning material may be provided. This allows for close contact between the through hole (through part 165) and the cooling pin cover 166, with it being possible to prevent cool air leakage.

### (Eleventh Example)

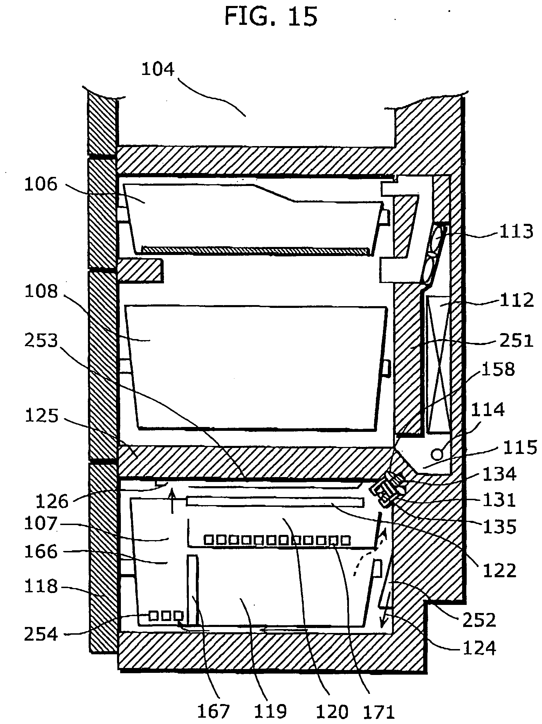

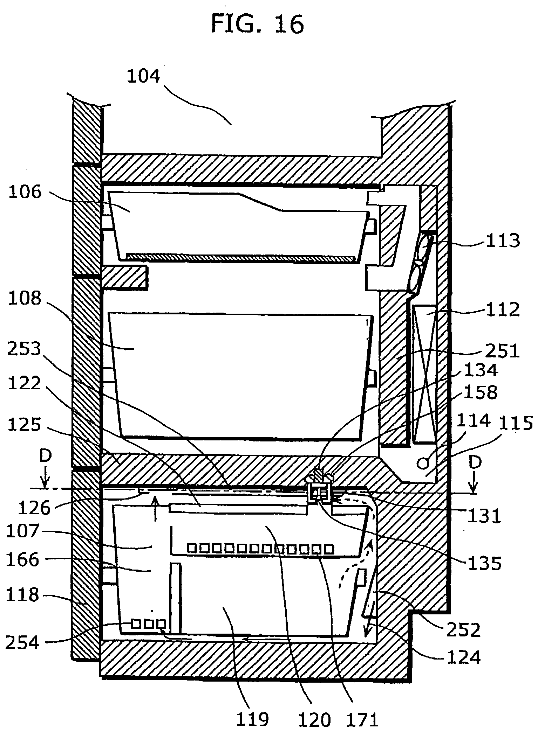

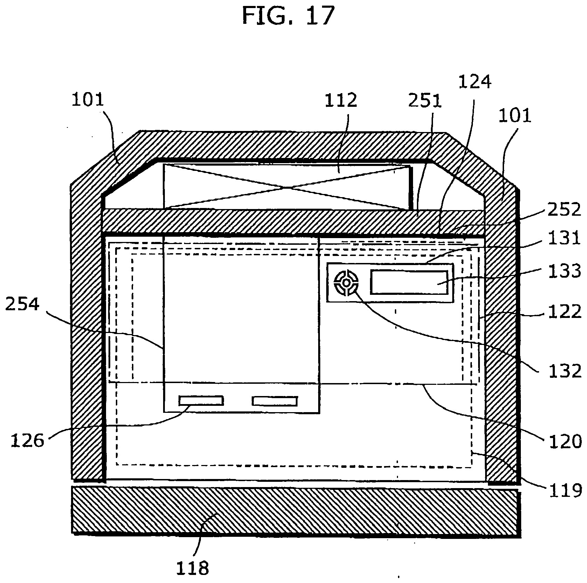

FIG. 15 is a sectional view of a vegetable compartment and its vicinity in a refrigerator in an eleventh example of the present disclosure. FIG. 16 is a sectional view of a vegetable compartment and its vicinity in a refrigerator of another form in the eleventh example of the present disclosure. FIG. 17 is a detailed plan view of an electrostatic atomization apparatus and its vicinity taken along line D-D in FIG. 16.

In this example, detailed description is given only for parts that differ from the structures described in the first to tenth examples, with description being omitted for parts that are the same as the structures described in the first to tenth examples or parts to which the same technical ideas are applicable.

As shown in the drawings, in the refrigerator 100 of the eleventh example, the refrigerator compartment 104 as the first storage compartment is located at the top, the switch compartment 105 as the fourth storage compartment and the ice compartment 106 as the fifth storage compartment are located side by side below the refrigerator compartment 104, the freezer compartment 108 is located below the switch compartment 105 and the ice compartment 106, and the vegetable compartment 107 is located below the freezer compartment 108.

The second partition wall 125 ensures heat insulation properties to separate the temperature zones of the vegetable compartment 107 and the freezer compartment 108. A partition wall 251 is formed at the back of the second partition wall 125 and at the back of the freezer compartment 108. The cooler 112 is installed between the partition wall 251 and the heat-insulating main body 101 of the refrigerator, and the radiant heater 114 for melting frost adhering to the cooler and the drain pan 115 for receiving melted water are disposed below the cooler 112. The cooler 112, the radiant heater 114, the drain pan 115, and the cooling fan 113 for conveying cool air to each compartment constitute the cooling compartment 110. As shown in FIG. 15, the electrostatic atomization apparatus 131 as the atomization apparatus which is the mist spray apparatus is installed in the second partition wall 125 separating the cooling compartment 110 and the vegetable compartment 107, so as to utilize the cooling source of the cooling compartment 110. In particular, a heat insulator of the second partition wall 125 has a depression for the cooling pin 134 as the heat transfer connection member of the atomization unit 139, and a cooling pin heater 158 is formed nearby.

As shown in FIG. 15, an air path structure for cooling the vegetable compartment 107 includes a vegetable compartment discharge air path 252 that is located on the back of the vegetable compartment 107 and uses an air path from the refrigerator compartment or an air path from the freezer compartment. Air of a little lower temperature than the vegetable compartment 107 passes through the vegetable compartment discharge air path 252 and is discharged from the vegetable compartment discharge port 124 in a direction from the back toward the bottom of the lower storage container 119 in the vegetable compartment 107. The stream of cool air then flows from the bottom to the front of the lower storage container 119, and flows into a beverage container 166 in a front part of the storage container. The cool air further flows into the vegetable compartment suction port 126 formed on the lower surface of the second partition wall 125, and circulates into the cooler 112 through a vegetable compartment suction air path 253.

A part of the upper storage container 120 at the bottom is located inside the lower storage container 119. A plurality of air flow holes 171 are provided in the upper storage container 120 located inside the lower storage container 119.

The bottom surface of the upper storage container 120 has a corrugated shape made up of depressions and projections.

The second partition wall 125 has an envelope mainly made of a resin such as ABS, and contains urethane foam, styrene foam, or the like inside to thermally insulate the vegetable compartment 107 from the freezer compartment 108 and the cooling compartment 110. In addition, the depression 111a is formed in a part of a storage compartment side wall surface of the second partition wall 125 so as to be lower in temperature than other parts, and the electrostatic atomization apparatus 131 as the atomization apparatus is installed in the depression 111a.

The cooling pin heater 158 for adjusting the temperature of the cooling pin 134 as the heat transfer connection member included in the electrostatic atomization apparatus 131 and preventing excessive dew condensation on a peripheral part including the atomization electrode 135 as the atomization tip is installed near the atomization unit 139, in the second partition wall 125 to which the electrostatic atomization apparatus 131 is fixed.

The cooling pin 134 as the heat transfer connection member is fixed to the external case 137, where the cooling pin 134 itself has the projection 134a that protrudes from the external case 137. The projection 134a of the cooling pin 134 is located opposite to the atomization electrode 135, and fits into a corner where the second partition wall 125 meets the partition wall 251 on the back of the storage compartment.

Thus, the electrostatic atomization apparatus 131 including the cooling pin 134 is disposed in the corner where the heat insulation wall is thickest. Since the corner has a thicker heat insulation wall than other parts, the electrostatic atomization apparatus 131 can be embedded more deeply into the heat insulation wall, with it being possible to reduce a decrease in storage compartment capacity caused by the installation of the atomization apparatus. This enables a larger-capacity storage compartment including the atomization apparatus to be realized. In addition, since sufficient heat insulation properties can be ensured, the electrostatic atomization apparatus 131 and its vicinity are protected from excessive cooling, so that quality deterioration due to peripheral dew condensation and the like can be avoided.

Accordingly, the back of the cooling pin 134 as the heat transfer connection member is positioned close to the cooling compartment 110.

Here, the cool air generated in the cooling compartment 110 is used to cool the cooling pin 134 as the heat transfer connection member, and the cooling pin 134 is formed of a metal piece having excellent heat conductivity. Accordingly, the cooling unit can perform necessary cooling just by heat conduction from the cool air generated by the cooler 112.

The atomization unit 139 of the electrostatic atomization apparatus 131 is positioned in a gap between the lid 122 and the upper storage container 120, with the atomization electrode tip being directed toward the upper storage container 120.

In some cases, the atomization electrode 135 may be vertically attached to the second partition wall 125 as shown in FIGS. 16 and 17.

In such a case, the cooling pin 134 is cooled by heat conduction from the freezer compartment 108, and also a hole is formed in a part of the lid 122 so that the mist from the electrostatic atomization apparatus 131 can be sprayed into the upper storage container 120.

An operation and working of the refrigerator having the above-mentioned structure are described below.

The second partition wall 125 in which the electrostatic atomization apparatus 131 is installed needs to have a wall thickness for thermally insulating the vegetable compartment 107 from the freezer compartment 108 and the cooling compartment 110. Meanwhile, a cooling capacity for cooling the cooling pin 134 to which the atomization electrode 135 as the atomization tip is fixed is also necessary. Accordingly, the second partition wall 125 has a smaller wall thickness in a part where the electrostatic atomization apparatus 131 is disposed, than in other parts. Further, the second partition wall 125 has a still smaller wall thickness in a deepest depression where the cooling pin 134 is held. As a result, the cooling pin 134 can be cooled by heat conduction from the cooling compartment 110 which is lower in temperature, with it being possible to cool the atomization electrode 135. When the temperature of the tip of the atomization electrode 135 drops to the dew point or below, a water vapor near the atomization electrode 135 builds up dew condensation on the atomization electrode 135, thereby reliably generating water droplets.

An outside air temperature variation may cause the temperature control of the freezer compartment 108 to vary and lead to excessive cooling of the atomization electrode 135. In view of this, the amount of water on the tip of the atomization electrode 135 is optimized by adjusting the temperature of the atomization electrode 135 by the cooling pin heater 158 disposed near the atomization electrode 135.

Here, the cool air flows in the vegetable compartment 107 as follows. The cool air lower in temperature than the vegetable compartment 107 passes through the vegetable compartment discharge air path 252 and is discharged from the vegetable compartment discharge port 124. The cool air flows in an air path at the bottom of the lower storage container 119, between the storage container and the heat-insulating main body, thus flowing toward the front door. The cool air then flows into the storage container from an air flow hole 254 formed in a part of the lower storage container 119, and cools beverages in the beverage container. At this time, a section at the back of the lower storage container 119 is indirectly cooled. The cool air further flows into the vegetable compartment suction port 126 formed on the lower surface of the second partition wall 125, and circulates into the cooler 112 through the vegetable compartment suction air path 253. This reduces an influence of the cool air on the upper storage container 120, so that freshness preservation is maintained.

Thus, in this example, the flow of cool air in the vegetable compartment 107 is controlled in order to effectively use the cool air. First, dry cool air of a low temperature is supplied in a large quantity into the beverage container 166 in front of a beverage partition plate 167 where beverages such as PET bottled beverages are often stored, to cause the beverages to be in direct contact with the low temperature cool air to thereby ensure a cooling speed. Next, since the humidity increases as the cool air entering from the front of the vegetable compartment 107 flows toward the back, the back side has a relatively high humidity when compared with the door side. This creates a high humidity atmospheric environment around the electrostatic atomization apparatus 131 located at the back, so that water in the air easily builds up dew condensation in the electrostatic atomization apparatus 131. Further, the mist sprayed by the electrostatic atomization apparatus 131 using water droplets generated by dew condensation of water in the storage compartment fills the upper storage container 120 and then flows into the lower storage container 119 for moisture retention, as a fine mist that is made up of fine particles of a nano-level particle diameter and so has high diffusivity.

By controlling the flow of cool air in this manner, when contents to be cooled speedily are stored in the beverage container 166 in the front part, ordinary vegetables and fruits relatively insusceptible to low temperature damage and the like are stored in the lower storage container 119, and vegetables and fruits more susceptible to low temperature damage are stored in the upper storage container 120, it is possible to perform cooling suitable for each content. This enables a vegetable compartment of higher quality with improved freshness preservation to be provided.

This example is based on the premise that the mist is sprayed. However, since the cooling speed of PET bottled beverages can be increased by releasing the cool air introduced from the vegetable compartment discharge port 124 first to the PET bottle container, even in the case where the mist spray apparatus is not installed, it is possible to, having increased the cooling speed of PET bottled beverages, improve the moisture retention of the upper storage container 120.

Therefore, even when the mist spray apparatus is not installed, by forming the air path as in this example so that the low temperature dry cool air first enters into the beverage container 166 in the door side part of the lower storage container 119 and then passes through the lower storage container 119 storing vegetables and the like and flows into the upper storage container 120, an effect of achieving moisture retention and high temperature of the upper storage container 120 to some extent can be attained. When mist spray is performed in addition to this structure, a synergistic effect of suppressing low temperature damage can be attained.

Though not shown, by installing an inside temperature detection unit, an inside humidity detection unit, an atomization electrode temperature detection unit, an atomization electrode peripheral humidity detection unit, and the like in the storage compartment, the dew point can be precisely calculated by a predetermined computation according to a change in storage compartment environment.

In this state, the voltage application unit 133 applies a high voltage (for example, 7.5 kV) between the atomization electrode 135 and the counter electrode 136, where the atomization electrode 135 is on a negative voltage side and the counter electrode 136 is on a positive voltage side. This causes an air insulation layer to be broken down and corona discharge to occur between the electrodes. Water on the atomization electrode 135 is atomized from the electrode tip, and a nano-level fine mist carrying an invisible charge less than 1 µm, accompanied by ozone, OH radicals, and so on, is generated.

The generated fine mist is sprayed into the upper storage container 120. The fine mist sprayed from the electrostatic atomization apparatus 131 is negatively charged. Meanwhile, vegetables and fruits are stored in the vegetable compartment 107. In particular, vegetables and fruits susceptible to low temperatures are often stored in the upper storage container 120. These vegetables and fruits usually tend to be in a rather wilted state as a result of transpiration on the way home from shopping or transpiration during storage, and so are usually positively charged. Accordingly, the sprayed fine mist carrying a negative charge tends to gather on vegetable surfaces. Thus, the sprayed fine mist increases the humidity of the vegetable compartment 107 again and simultaneously adheres to surfaces of vegetables and fruits, thereby suppressing transpiration from the vegetables and fruits and enhancing freshness preservation. The fine mist also penetrates into tissues via intercellular spaces of the vegetables and fruits, as a result of which water is supplied into cells that have wilted due to moisture evaporation to resolve the wilting by cell turgor pressure, and the vegetables and fruits return to a fresh state. Moreover, radicals contained in the mist have functions such as microbial elimination, low temperature damage suppression, and nutrient increase, and also decompose agricultural chemicals by their strong oxidative power to facilitate removal of agricultural chemicals from the vegetable surfaces.

During defrosting of the cooling compartment 110 which is performed at a regular interval in refrigerator operation, the bottom of the cooling compartment 110 is heated by radiation and convection by heat from the radiant heater. Since the cooling pin 134 is located near the cooling compartment 110, the cooling pin 134 and the atomization electrode 135 are heated at the regular interval. This allows the atomization unit 139 including the atomization electrode 135 to be dried. Even when unusual dew condensation on the atomization tip makes it impossible to perform atomization, the atomization tip can be dried after a predetermined time, and so can be easily returned to a normal atomization state.

As described above, in the eleventh example, the partition wall for separating the storage compartment and the lower temperature storage compartment on the top side of the storage compartment are provided. The electrostatic atomization apparatus is attached to the partition wall at the top. Thus, in the case where a freezing temperature zone storage compartment such as the cooling compartment, the freezer compartment, or the ice compartment is located above the storage compartment, by installing the electrostatic atomization apparatus in the partition wall at the top separating these compartments, the cooling source of the freezing temperature zone storage compartment can be used to cool and build up dew condensation on the atomization electrode of the electrostatic atomization apparatus. This makes it unnecessary to provide any particular cooling apparatus. Moreover, since the mist is sprayed from the top, the mist can be easily diffused throughout the storage containers. In addition, the atomization unit is difficult to reach by hand, which contributes to enhanced safety.

In this example, the atomization unit generates the mist according to the electrostatic atomization method, where water droplets are finely divided using electrical energy such as a high voltage to thereby form a fine mist. The generated mist is electrically charged. This being so, by causing the mist to carry an opposite charge to vegetables, fruits, and the like to which the mist is intended to adhere, for example, by spraying a negatively charged mist over positively charged vegetables, the adhesion of the mist to the vegetables and fruits increases, as a result of which the mist can adhere to the vegetable surfaces more uniformly. In this way, a mist adhesion ratio can be improved when compared with an uncharged mist. Moreover, the fine mist can be directly sprayed over the foods in the vegetable containers, and the potentials of the fine mist and the vegetables are exploited to cause the fine mist to adhere to the vegetable surfaces. This improves freshness preservation efficiently.

In addition, the cooling pin 134 is fit into the corner where the second partition wall 125 meets the partition wall 251 on the back of the storage compartment. That is, the electrostatic atomization apparatus 131 including the cooling pin 134 is disposed in the corner where the heat insulation wall is thickest. Since the corner has a thicker heat insulation wall than other parts, the electrostatic atomization apparatus 131 can be embedded more deeply into the heat insulation wall, with it being possible to reduce a decrease in storage compartment capacity caused by the installation of the atomization apparatus. This enables a larger-capacity storage compartment including the atomization apparatus to be realized. In addition, since sufficient heat insulation properties can be ensured, the electrostatic atomization apparatus 131 and its vicinity are protected from excessive cooling, so that quality deterioration due to peripheral dew condensation and the like can be avoided.

Furthermore, the cooling pin 134 is fit into the corner where the second partition wall 125 meets the partition wall 251 on the back of the storage compartment, where the bottom side of the cooling compartment 110 is used as the cooling unit for cooling the cooling pin. Because of a property that warm air rises and cold air falls, a lowest temperature part of the cooling compartment 110 can be used as the cooling source. Hence, the cooling pin 134 can be cooled more efficiently.

Besides, by using the bottom side of the cooling compartment 110 as the cooling unit for cooling the cooling pin 134, the bottom side of the cooling compartment 110 with a smaller temperature variation among low temperature air paths can be employed as the cooling source, so that the cooling pin 134 can be cooled stably.

In addition, during defrosting of the cooling compartment 110, the atomization electrode 135 can receive heat from the radiant heater in the vicinity. Thus, the atomization electrode 135 can be heated and dried at a regular interval. Accordingly, even when unusual dew condensation on the atomization tip makes it impossible to perform atomization, the atomization tip can be dried after a predetermined time, and so can be easily returned to a normal atomization state.

In this example, not tap water supplied from outside but dew condensation water is used as makeup water. Since dew condensation water is free from mineral compositions and impurities, deterioration in water retentivity caused by deterioration or clogging of the tip of the atomization electrode can be prevented.

In this example, the mist contains radicals, so that agricultural chemicals, wax, and the like adhering to the vegetable surfaces can be decomposed and removed with an extremely small amount of water. This benefits water conservation, and also achieves a low input.

### (Twelfth Example)

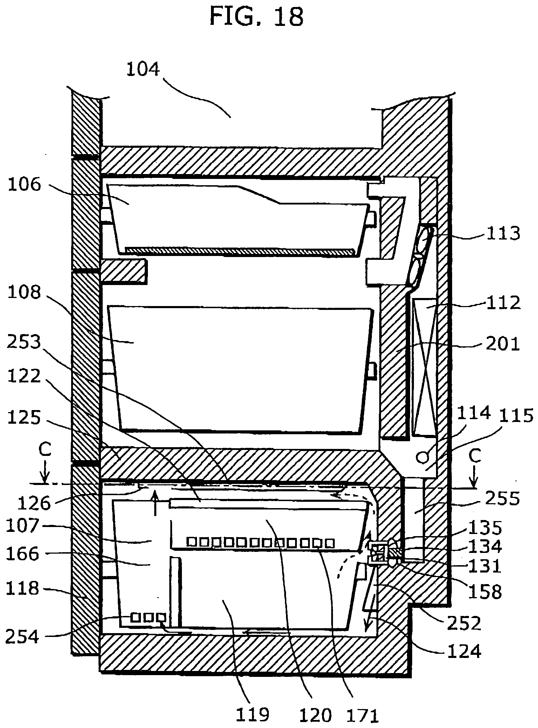

FIG. 18 is a sectional view of a vegetable compartment and its vicinity in a refrigerator in a twelfth example of the present disclosure.

In this example, detailed description is given only for parts that differ from the structures described in the first to eleventh examples, with description being omitted for parts that are the same as the structures described in the first to eleventh examples or parts to which the same technical ideas are applicable.

As shown in the drawing, in the refrigerator 100 of the twelfth example, the refrigerator compartment 104 as the first storage compartment is located at the top, the switch compartment 105 as the fourth storage compartment and the ice compartment 106 as the fifth storage compartment are located side by side below the refrigerator compartment 104, the freezer compartment 108 is located below the switch compartment 105 and the ice compartment 106, and the vegetable compartment 107 is located below the freezer compartment 108.

The second partition wall 125 ensures heat insulation properties to separate the temperature zones of the vegetable compartment 107 and the freezer compartment 108. The partition wall 251 is formed at the back of the second partition wall 125 and at the back of the freezer compartment 108. The cooler 112 is installed between the partition wall 251 and the heat-insulating main body 101 of the refrigerator, and the radiant heater 114 for melting frost adhering to the cooler and the drain pan 115 for receiving melted water are disposed below the cooler 112. The cooler 112, the radiant heater 114, the drain pan 115, and the cooling fan 113 for conveying cool air to each compartment constitute the cooling compartment 110. An atomization apparatus cooling air path is formed below the cooling compartment 110. As shown in FIG. 18, the electrostatic atomization apparatus 131 as the mist spray apparatus is installed in a part of the atomization apparatus cooling air path. In particular, the cooling pin 134 as the heat transfer connection member of the atomization unit 139 is immediately adjacent to the air path, and the cooling pin heater 158 is formed nearby.

A part of the upper storage container 120 at the bottom is located inside the lower storage container 119. The plurality of air flow holes 171 are provided in the upper storage container 120 located inside the lower storage container 119.

The bottom surface of the upper storage container 120 has a corrugated shape made up of depressions and projections.

The atomization electrode cooling air path 255 is formed of a resin such as ABS or PP and a heat insulator such as styrene foam. Cool air flowing in the air path is at a relatively low temperature of -15°C to -25°C. The electrostatic atomization apparatus 131 including the cooling pin 134 is installed in the partition wall facing the atomization apparatus cooling air path at the back of the vegetable compartment 107, near a gap between the upper storage container 120 and the lower storage container 119. Thus, the vegetable compartment 107 has an approximately same structure as the first example.

An operation and working of the refrigerator having the above-mentioned structure are described below.

When the atomization apparatus cooling air path 255 formed on the partition wall 251 side where the electrostatic atomization apparatus 131 is installed ensures a cooling capacity for cooling the cooling pin 134 to which the atomization electrode 135 as the atomization tip is fixed, the vicinity of the electrostatic atomization apparatus 131 is brought into a high humidity state by transpiration from stored vegetables and the like, and water droplets are reliably generated at the tip of the atomization electrode.

In this state, the voltage application unit 133 applies a high voltage (for example, 7.5 kV) between the atomization electrode 135 and the counter electrode 136, where the atomization electrode 135 is on a negative voltage side and the counter electrode 136 is on a positive voltage side. This causes an air insulation layer to be broken down and corona discharge to occur between the electrodes. Water on the atomization electrode 135 is atomized from the electrode tip, and a nano-level fine mist carrying an invisible charge less than 1 µm, accompanied by ozone, OH radicals, and so on, is generated.

The generated fine mist is sprayed between the upper storage container 120 and the lower storage container 119. The fine mist sprayed from the electrostatic atomization apparatus 131 is negatively charged. Meanwhile, vegetables and fruits are stored in the vegetable compartment 107. In particular, vegetables and fruits susceptible to low temperatures are often stored in the upper storage container 120. These vegetables and fruits usually tend to be in a rather wilted state as a result of transpiration on the way home from shopping or transpiration during storage, and so are usually positively charged. Accordingly, the sprayed fine mist carrying a negative charge tends to gather on vegetable surfaces. Thus, the sprayed fine mist increases the humidity of the vegetable compartment 107 again and simultaneously adheres to surfaces of vegetables and fruits, thereby suppressing transpiration from the vegetables and fruits and enhancing freshness preservation. The fine mist also penetrates into tissues via intercellular spaces of the vegetables and fruits, as a result of which water is supplied into cells that have wilted due to moisture evaporation to resolve the wilting by cell turgor pressure, and the vegetables and fruits return to a fresh state. Moreover, radicals contained in the mist have functions such as bacteria elimination, low temperature damage suppression, and nutrient increase, and also decompose agricultural chemicals by their strong oxidative power to facilitate removal of agricultural chemicals from the vegetable surfaces.

As described above, in the twelfth example, the partition wall for separating the storage compartment and the atomization apparatus cooling air path for cooling the atomization electrode are provided. The electrostatic atomization apparatus is attached to the air path. Thus, in the case where a freezing temperature zone storage compartment such as the cooling compartment, the freezer compartment, or the ice compartment is located above the storage compartment, the cold heat source of the freezing temperature zone storage compartment can be conveyed to the back of the vegetable compartment through the air path, and the cooling source of the freezing temperature zone storage compartment can be used to cool and build up dew condensation on the atomization electrode of the electrostatic atomization apparatus. This enables the spray to be performed stably. In addition, the atomization unit is difficult to reach by hand because it is attached to the back surface, which contributes to enhanced safety.

In this example, the atomization unit generates the mist according to the electrostatic atomization method, where water droplets are finely divided using electrical energy such as a high voltage to thereby form a fine mist. The generated mist is electrically charged. This being so, by causing the mist to carry an opposite charge to vegetables, fruits, and the like to which the mist is intended to adhere, for example, by spraying a negatively charged mist over positively charged vegetables, the adhesion of the mist to the vegetables and fruits increases, as a result of which the mist can adhere to the vegetable surfaces more uniformly. In this way, a mist adhesion ratio can be improved when compared with an uncharged mist. Moreover, the fine mist can be directly sprayed over the foods in the vegetable containers, and the potentials of the fine mist and the vegetables are exploited to cause the fine mist to adhere to the vegetable surfaces. This improves freshness preservation efficiently.

Besides, by providing the atomization apparatus cooling air path independent of ordinary air paths for cooling the storage compartments as the cooling unit for cooling the cooling pin 134, a temperature variation from a state of the cooling air path can be suppressed more. The bottom side of the cooling compartment with a smaller temperature variation among low temperature air paths is employed as the cooling source, so that the cooling pin can be cooled stably.

In this example, not tap water supplied from outside but dew condensation water is used as makeup water. Since dew condensation water is free from mineral compositions and impurities, deterioration in water retentivity caused by deterioration or clogging of the tip of the atomization electrode can be prevented.

In this example, the mist contains radicals, so that agricultural chemicals, wax, and the like adhering to the vegetable surfaces can be decomposed and removed with an extremely small amount of water. This benefits water conservation, and also achieves a low input.

Though the atomization apparatus air path is used for conveying the cold heat source in this example, heat conduction of a solid object such as aluminum or copper or a heat conveyance unit such as a heat pipe or a heat lane may be used. This saves an air path area, thereby reducing an influence on the storage compartment capacity.

### (Thirteenth Example)

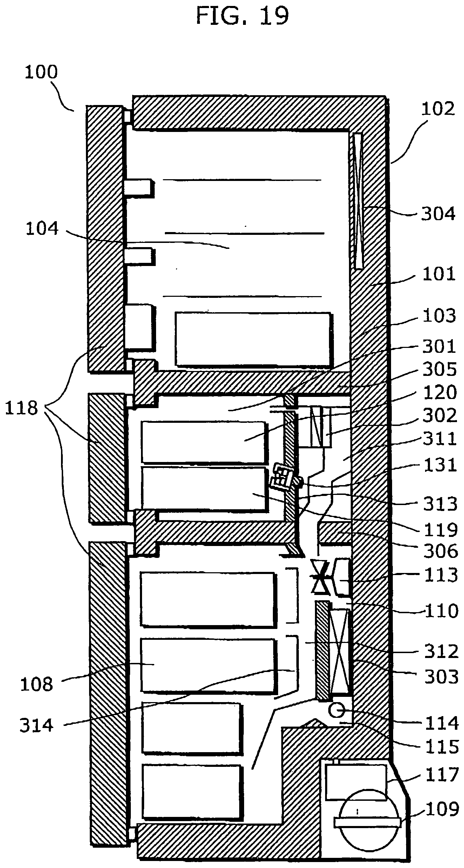

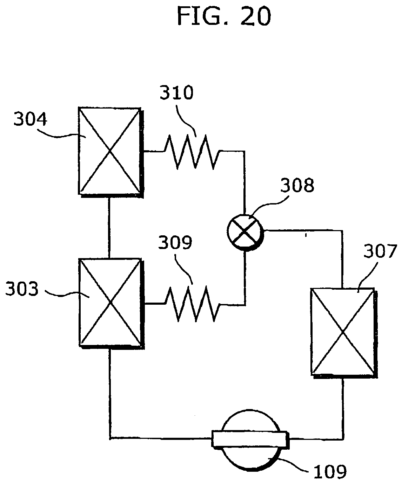

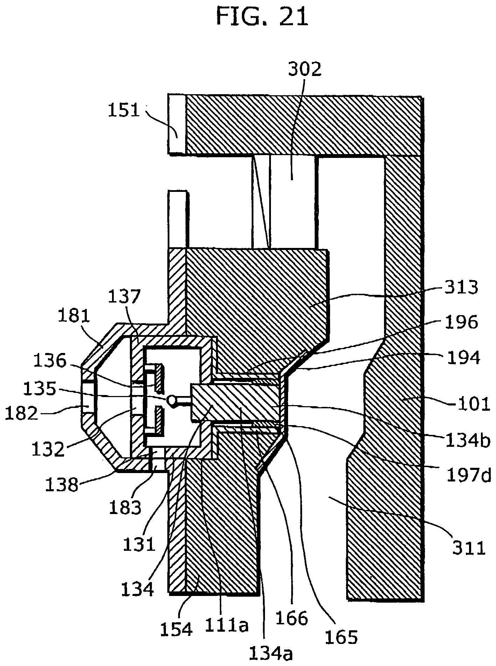

FIG. 19 is a sectional view of a refrigerator in a thirteenth example of the present disclosure. FIG. 20 is a schematic view of a simplified cooling cycle in the refrigerator in the thirteenth example of the present disclosure. FIG. 21 is a detailed sectional view of an electrostatic atomization apparatus and its periphery.

In this example, detailed description is given only for parts that differ from the structures described in the first to twelfth examples, with description being omitted for parts that are the same as the structures described in the first to twelfth examples or parts to which the same technical ideas are applicable.

As shown in the drawings, in the refrigerator 100 of the thirteenth example, the refrigerator compartment 104 as the first storage compartment is located at the top, a temperature changing compartment 301 that can be changed to a vegetable compartment temperature of about 5°C is located below the refrigerator compartment 104, and the freezer compartment 108 is located below the temperature changing compartment 301. The temperature changing compartment 301 is defined by a first partition wall 305 ensuring heat insulation for separating the temperature zones of the refrigerator compartment 104 and the temperature changing compartment 301, a second partition wall 306 ensuring heat insulation for separating the temperature zone of the temperature changing compartment 301, a temperature changing compartment back partition wall 313 on the back of the temperature changing compartment 301, and the door 118.

The refrigerator compartment 104 uses a high temperature side evaporator 304 housed in an inner wall on the back of the refrigerator compartment as a cooling source. Meanwhile, the temperature changing compartment 301 and the freezer compartment 108 use a low temperature side evaporator 303 included in the cooling compartment 110 on the back of the freezer compartment 108 as a cooling source. The cooling fan 113 is installed above the low temperature side evaporator 303 to blow cool air generated by the low temperature side evaporator 303.

A temperature changing compartment cooling air path 311 is formed behind the temperature changing compartment 301, and a damper 302 is disposed in the air path, to adjust the temperature of the temperature changing compartment 301. The electrostatic atomization apparatus 131 as the mist spray apparatus for spraying a mist into the temperature changing compartment 301 is formed in the temperature changing compartment back partition wall 313.

In a cooling cycle according to the present disclosure, a refrigerant discharged from the compressor 109 is condensed by a condenser 307, and switched between a plurality of flow paths by a three way valve 308. One flow path constitutes a refrigerator compartment and freezer compartment simultaneous cooling cycle in which the refrigerant is reduced in pressure in a high temperature side capillary 310, undergoes heat exchange in the high temperature side evaporator 304, and then passes through the low temperature side evaporator 303 and an accumulator and returns to the compressor 109. The other flow path constitutes a freezer compartment individual cooling cycle in which the refrigerant is reduced in pressure in a low temperature side capillary 309, undergoes heat exchange in the low temperature side evaporator 303, and then passes through the accumulator and returns to the compressor 109.

This being so, through the use of the cool air of the low temperature side evaporator 303, the temperature of the temperature changing compartment 301 is optimally regulated by the operations of the cooling fan 113, the damper 302, the compressor 109, and the three way valve 308.

The partition wall on the back of the temperature changing compartment 301 has an envelope mainly made of a resin such as ABS, and contains styrene foam or the like inside to thermally insulate the temperature changing compartment 301 and the temperature changing compartment cooling air path 311. In addition, a depression is formed in a part of a temperature changing compartment side wall surface of the partition wall so as to be lower in temperature than other parts, and the electrostatic atomization apparatus 131 as the atomization apparatus is installed in the depression.

The cooling pin heater 158 for adjusting the temperature of the cooling pin 134 as the heat transfer connection member included in the electrostatic atomization apparatus 131 and preventing excessive dew condensation on a peripheral part including the atomization electrode 135 as the atomization tip is installed near the atomization unit 139, in the temperature changing compartment back partition wall 313 to which the electrostatic atomization apparatus 131 is fixed.

The cooling pin 134 as the heat transfer connection member is fixed to the external case 137, where the cooling pin 134 itself has the projection 134a that protrudes from the external case 137. The projection 134a of the cooling pin 134 is located opposite to the atomization electrode 135, and fits into the temperature changing compartment back partition wall 313.

Accordingly, the back of the cooling pin 134 as the heat transfer connection member is positioned close to the temperature changing compartment cooling air path 311 set to the freezing temperature zone.

Here, the cool air generated in the cooling compartment 110 and blown by the cooling fan 113 is used to cool the cooling pin 134 as the heat transfer connection member, and the cooling pin 134 is formed of a metal piece having excellent heat conductivity. Accordingly, the cooling unit can perform necessary cooling just by heat conduction from the cool air generated by the low temperature side evaporator 303.

The damper 302 is positioned downstream of the cooling compartment 110.

The atomization unit 139 of the electrostatic atomization apparatus 131 is situated in a gap between the lower storage container 119 and the upper storage container 120, with the tip of the atomization electrode being directed toward the gap.

The depression is formed in the temperature changing compartment back partition wall 313 in which the electrostatic atomization apparatus 131 is installed, and the electrostatic atomization apparatus 131 is disposed in the depression.

The cooling pin 134 of the electrostatic atomization apparatus 131 is fit into the through part 165 of the heat insulator 152, in a state where its circumference is covered with the cooling pin cover 166 formed of a resin such as PS or PP having heat insulation properties and also high waterproof properties.

Here, the cooling pin cover 166 is pressed against the surrounding heat insulator 152. In this way, even when water adheres to the cooling pin 134, it is possible to prevent a situation where the water adheres to the heat insulator 152 and penetrates into the heat insulator 152, causing freezing or breakage.

Regarding the end 134b of the cooling pin 134, however, the cooling pin cover 166 is shaped as a cylinder in order to ensure the cooling capacity from the back, so that only the end 134b of the cooling pin 134 is in an open state. The tape 194 such as aluminum tape is attached to the opening 167 of the through part 165 to block cool air.

The tape 194 is attached so as to be in close contact with the end 134b of the cooling pin 134, thereby ensuring heat conductivity.

Here, the cooling pin cover 166 may be, for example, insulating tape having heat insulation properties.

Note that, due to some dimension error or the like, the void 196 of a certain extent is present between the cooling pin 134 and the cooling pin cover 166. To fill the void 196, a heat conduction retention member such as butyl or a heat transferable compound is buried between the cooling pin 134 and the cooling pin cover 166, as the void filling member 197d which is a member for filling the void and has relatively excellent heat conductivity.

The temperature changing compartment 301 can be switched from the freezing temperature up to a wine storage temperature. This being so, for example, a temperature adjustment heater (not shown) may be disposed in its periphery.

An operation and working of the refrigerator having the above-mentioned structure are described below.

An operation of a refrigeration cycle is described first. The refrigeration cycle is activated by a signal from a control board (not shown) according to a set temperature inside the refrigerator, as a result of which a cooling operation is performed. A high temperature and high pressure refrigerant discharged by the operation of the compressor 109 is condensed into liquid to some extent by the condenser 307, is further condensed into liquid without causing dew condensation of the refrigerator main body (heat-insulating main body 101) while passing through a refrigerant pipe (not shown) and the like disposed on the side and back surfaces of the refrigerator main body (heat-insulating main body 101) and in a front opening of the refrigerator main body (heat-insulating main body 101), and reaches the three way valve 308. The flow path of the three way valve 308 is determined according to an operation signal from the control board of the refrigerator 100, and the refrigerant is flown to either the low temperature side capillary 309 or the high temperature side capillary 310, or to both the low temperature side capillary 309 and the high temperature side capillary 310. When the flow path of the three way valve 308 is open to the high temperature side capillary 310, the refrigerant becomes a low temperature and low pressure liquid refrigerant in the high temperature side capillary 310, and reaches the high temperature side evaporator 304.

The low temperature and low pressure liquid refrigerant in the high temperature side evaporator 304 reaches a temperature of about -10°C to -20°C, and directly or indirectly undergoes heat exchange with the air in the refrigerator compartment 104. As a result, a part of the refrigerant in the high temperature side evaporator 304 evaporates. After this, the refrigerant further flows through the refrigerant pipe, and reaches the low temperature side evaporator 303.

The refrigerant then passes through the accumulator (not shown) and returns to the compressor 109. Thus, the operation of the cooling cycle is performed.

On the other hand, when the flow path of the three way valve 308 is open to the low temperature side capillary 309, the refrigerant becomes a low temperature and low pressure liquid refrigerant in the low temperature side capillary 309, and reaches the low temperature side evaporator 303.

Here, the low temperature and low pressure liquid refrigerant reaches a temperature of about -20°C to -30°C, and undergoes heat exchange through convection of the air in the cooling compartment by the cooling fan 113. As a result, most of the refrigerant in the low temperature side evaporator 303 evaporates. The resulting cool air is blown by the cooling fan 113 into the freezer compartment 108 or the temperature changing compartment 301. The refrigerant which has undergone heat exchange then passes through the accumulator and returns to the compressor 109.

The low temperature side evaporator 303 in the cooling compartment 110 discharges the cool air by the cooling fan 113. The discharged cool air passes through a freezer compartment side cooling air path 312 in a freezer compartment back partition wall 314, and is discharged into the freezer compartment 108 from a discharge port. Having undergone heat exchange with a freezer compartment case, the discharged cool air is sucked from a lower part of the freezer compartment back partition wall 314, and returns to the cooling compartment 110 including the low temperature side evaporator 303.

Moreover, a part of the cool air discharged by the cooling fan 113 flows into the temperature changing compartment cooling air path 311 in the temperature changing compartment back partition wall 313. The cool air flowing in the temperature changing compartment cooling air path 311 passes through the damper 302, and is discharged into the temperature changing compartment 301 from a discharge port. Having undergone heat exchange with the inside of the temperature changing compartment 301, the cool air is sucked from a duct on the back surface, and returns to the cooling compartment 110. During this time, an opening/closing operation of the damper 302 is determined by a temperature detection unit installed in the temperature changing compartment 301. In so doing, the amount of cool air passing through the damper is controlled to thereby keep the temperature of the temperature changing compartment 301 constant.

Here, the temperature changing compartment 301 can be set to an arbitrary temperature, that is, the temperature changing compartment 301 can be switched from the freezing temperature zone of about -20°C to the vegetable compartment temperature of about 5°C and further to the wine compartment temperature of about 12°C. This being so, the temperature changing compartment 301 may be used as a vegetable compartment for storing vegetables and fruits.

In view of this, when the temperature of the temperature changing compartment 301 is set to about the vegetable storage temperature, for example, 2°C or more, the electrostatic atomization apparatus 131 is operated to improve freshness preservation of stored contents.

In a part of the temperature changing compartment back partition wall 313 of the temperature changing compartment 301 that is in a relatively high humidity environment, the heat insulator has a smaller wall thickness than other parts. In particular, there is the deepest depression 111b behind the cooling pin 134. Thus, the depression 111a is formed in the temperature changing compartment back partition wall 313, and the electrostatic atomization apparatus 131 having the protruding projection 134a of the cooling pin 134 is fit into the deepest depression 111b on a backmost side of the depression 111a.

Cool air of about -15°C to -25°C generated by the low temperature side evaporator 303 and blown by the cooling fan 113 according to the operation of the cooling system flows in the temperature changing compartment cooling air path 311 behind the cooling pin 134, as a result of which the cooling pin 134 as the heat transfer cooling member is cooled to, for example, about 0°C to -10°C by heat conduction from the air path surface. Since the cooling pin 134 is a good heat conductive member, the cooling pin 134 transmits cold heat extremely easily, so that the atomization electrode 135 as the atomization tip is indirectly cooled to about 0°C to -10°C via the cooling pin 134.

When the damper 302 is open, the cool air directly flows into the temperature changing compartment 301, so that the temperature changing compartment is in a low humidity state. When the damper 302 is closed, the dry air does not flow into the temperature changing compartment, so that the temperature changing compartment is relatively high in humidity, and also the temperature changing compartment cooling air path behind the cooling pin 134 is kept at a low temperature to some extent.

Here, in the case where the temperature setting of the temperature changing compartment 301 is the vegetable compartment setting, the temperature changing compartment 301 is 2°C to 7°C in temperature and also in a relatively high humidity state due to transpiration from vegetables and the like. Accordingly, when the atomization electrode 135 as the atomization tip of the electrostatic atomization apparatus 131 decreases to the dew point temperature or below, water is generated and water droplets adhere to the atomization electrode 135 including its tip.

The voltage application unit 133 applies a high voltage (for example, 4 kV to 10 kV) between the atomization electrode 135 as the atomization tip to which the water droplets adhere and the counter electrode 136, where the atomization electrode 135 is on a negative voltage side and the counter electrode 136 is on a positive voltage side. This causes corona discharge to occur between the electrodes. The water droplets at the tip of the atomization electrode 135 as the atomization tip are finely divided by electrostatic energy. Furthermore, since the liquid droplets are electrically charged, a nano-level fine mist carrying an invisible charge of a several nm level, accompanied by ozone, OH radicals, and so on, is generated by Rayleigh fission. The voltage applied between the electrodes is an extremely high voltage of 4 kV to 10 kV. However, a discharge current value at this time is at a several µA level, and therefore an input is extremely low, about 0.5 W to 1.5 W.

In detail, suppose the atomization electrode 135 is on a reference potential side (0 V) and the counter electrode 136 is on a high voltage side (+7 kV). An air insulation layer between the atomization electrode 135 and the counter electrode 136 is broken down, and discharge is induced by an electrostatic force. At this time, the dew condensation water adhering to the tip of the atomization electrode 135 is electrically charged and becomes fine particles. Since the counter electrode 136 is on the positive side, the charged fine mist is attracted to the counter electrode 136, and the liquid droplets are more finely divided. Thus, the nano-level fine mist carrying an invisible charge of a several nm level containing radicals is attracted to the counter electrode 136, and sprayed toward the storage compartment (temperature changing compartment 301) by its inertial force.

Here, the cooling pin 134 is cooled from the temperature changing compartment cooling air path 311 via the tape 194 and the void filling member 197d or via the heat insulator on the side of the cooling pin 134. When dual-structure indirect cooling is performed via the tape 194, there is a possibility that the void 196 occurs between the cooling pin cover 166 and the tape 194 due to processing accuracy. When the void 196 occurs, heat conductivity in that space deteriorates significantly, making it impossible to sufficiently cool the cooling pin 134. This causes temperature variations of the cooling pin 134 and the atomization electrode 135 and, in some cases, hampers dew condensation on the atomization electrode tip.

To prevent this, it is ensured during assembly that the tape 194 and the cooling pin 134 are in close contact with each other. In the case where there is still a possibility of an occurrence of a void, the void 196 is filled with a heat conduction retention member such as butyl or a heat transferable compound as the void filling member197d, thereby ensuring heat conduction from the tape 194 to the cooling pin 134. Thus, the cooling capacity for the atomization electrode 135 can be ensured.

Furthermore, there is no clearance between the cooling pin cover 166 and the through part 165 and also the opening 167 of the through part 165 is sealed by the tape 194 to block the entry of cool air from the adjacent cooling air path, so that the low temperature cool air does not leak into the storage compartment. Accordingly, the storage compartment (temperature changing compartment 301) and its peripheral components can be protected from dew condensation, low temperature anomalies, and so on.

Regarding heat conduction deterioration by a void that inevitably occurs between the cooling pin cover 166 and the cooling pin 134 due to processing accuracy and assembly accuracy, the void 196 is filled with a heat conductive member such as butyl to ensure heat conductivity, thereby ensuring the cooling capacity. The void 196 between the tape 194 and the cooling pin 134 can also be filled with a heat conductive member such as butyl to ensure heat conductivity.

Moreover, since there is no clearance between the cooling pin cover 166 and the through part 165, water is kept from entering the heat insulator made of styrene foam. By preventing a situation where water penetrates into the heat insulator and the penetrated portion is frozen and, due to a stress caused by water volume expansion, cracked and broken, it is possible to further ensure quality.

Besides, the opening 167 of the through part 165 is sealed by the tape 194 to block the entry of cool air from the adjacent cooling air path, so that the low temperature cool air does not leak into the storage compartment. Accordingly, the storage compartment (temperature changing compartment 301) and its peripheral components can be protected from dew condensation, low temperature anomalies, and so on.

As a result of the cooling, dew condensation is formed on the atomization electrode 135. The fine mist generated by causing high-voltage discharge between the counter electrode 136 and the atomization electrode 135 passes through the spray port 132 formed in the external case 137 of the electrostatic atomization apparatus 131, and is sprayed into the temperature changing compartment 301. The sprayed fine mist reaches throughout the temperature changing compartment 301 because the fine mist is made up of extremely small particles and so has high diffusivity. The sprayed fine mist is generated by high-voltage discharge, and so is negatively charged. Meanwhile, vegetables and fruits stored in the temperature changing compartment 301 are positively charged. Accordingly, the atomized mist tends to gather on vegetable surfaces. This contributes to enhanced freshness preservation.

Note that the temperature mentioned above is not a limit for the present disclosure, so long as it is possible to spray the mist. For example, even in the case where the temperature changing compartment is set to a partial temperature of about -2°C, an ice temperature of about 0°C, or a chilled temperature zone of about 1°C, when the electrostatic atomization apparatus 131 determines that it is possible to spray the mist, the mist can be sprayed. Since the fine mist adhering to perishable food surfaces enhances microbial elimination, long-term storage can be achieved.

When the temperature changing compartment 301 is set to the wine temperature, the damper 302 is mostly closed, and accordingly the storage compartment is in a relatively high humidity state. This raises a possibility of propagation of molds and the like. However, such propagation can be prevented by spraying the mist containing radicals with strong oxidative power.

When the temperature changing compartment 301 is set to a temperature zone, such as the freezing temperature zone, for which the mist spray can be determined to be impossible, or when the operation of the electrostatic atomization apparatus 131 can be arbitrarily stopped using a manual button or the like, the electrostatic atomization apparatus 131 may be stopped.

Moreover, by determining the operation of the electrostatic atomization apparatus 131 by the damper opening/closing operation, the electrostatic atomization apparatus 131 can be operated efficiently.

In addition, by disposing the temperature adjustment heater near the cooling pin 134 of the electrostatic atomization apparatus 131, the temperature control of the atomization electrode and the water quantity adjustment of the atomization tip can be carried out, with it being possible to achieve a more stable atomization state.

As described above, in the thirteenth example, the temperature changing compartment variable in temperature, the partition wall for separating the storage compartment, and the temperature changing compartment cooling air path for cooling the temperature changing compartment are provided in the refrigerator having a plurality of evaporators. By attaching the electrostatic atomization apparatus to the back partition wall separating the storage compartment and the air path, when the temperature setting of the temperature changing compartment is about the vegetable compartment temperature setting, the atomization electrode is cooled by heat conduction from the air path flowing into the temperature changing compartment to thereby form dew condensation. Thus, the mist can be sprayed stably. Additionally, the electrostatic atomization apparatus 131 is difficult to reach by hand because it is attached to the back surface, which contributes to enhanced safety.

In this example, even when the damper 302 is closed, the air path behind the temperature changing compartment can be kept at a relatively low temperature because it is situated upstream of the damper 302. This allows the atomization electrode to be cooled sufficiently, thereby forming dew condensation on the atomization electrode tip and generating the mist.

In this example, the atomization unit generates a mist according to the electrostatic atomization method, where water droplets are finely divided using electrical energy such as a high voltage to thereby form a fine mist. The generated mist is electrically charged. This being so, by causing the mist to carry an opposite charge to vegetables, fruits, and the like to which the mist is intended to adhere, for example, by spraying a negatively charged mist over positively charged vegetables, the adhesion of the mist to the vegetables and fruits increases, as a result of which the mist can adhere to the vegetable surfaces more uniformly. In this way, a mist adhesion ratio can be improved when compared with an uncharged mist. Moreover, the fine mist can be directly sprayed over the foods in the vegetable containers, and the potentials of the fine mist and the vegetables are exploited to cause the fine mist to adhere to the vegetable surfaces. This improves freshness preservation efficiently.

Note that, by using an electrically powered damper as the damper in this example, a setting temperature (operating temperature) constraint in the case of using a mechanical damper can be circumvented, so that the temperature changing compartment can be controlled at an arbitrary temperature. This enables temperatures suitable for various foods to be set. Furthermore, forced closing which cannot be performed with a mechanical damper becomes possible. When the temperature changing compartment is not in use, there is no need to circulate cool air to the temperature changing compartment. In such a case, by forcibly closing the electrically powered damper, needless cooling can be prevented, and power consumption can be reduced. Besides, by forcibly closing the electrically powered damper when defrosting the low temperature side evaporator in the cooling compartment, it is possible to prevent the entry of warm moisture into the temperature changing compartment. As a result, frosting prevention and also power consumption reduction by increased defrosting efficiency can be achieved. In addition, since the atomization electrode can be increased in temperature, it is possible to provide a means for drying the atomization electrode, which contributes to improved reliability.

Note that, by using a heat reserving compartment fan that can be varied in rotation frequency as the damper in this example, the amount of cool air into the temperature changing compartment can be adjusted, and also the setting temperature (operating temperature) constraint in the case of a mechanical damper can be circumvented. Therefore, the temperature changing compartment 301 can be controlled to an arbitrary temperature, with it being possible to set temperatures suitable for various foods. Moreover, a cooling speed of rapid cooling, slow cooling, and the like can be controlled. This further contributes to enhanced food freshness preservation.

Though the storage compartment in which the electrostatic atomization apparatus is installed is the temperature changing compartment in this example, the electrostatic atomization apparatus may be installed in the vegetable compartment that is more limited in temperature zone. This narrows the range of temperature variation, enabling control to be more simplified.

### (Fourteenth Example)

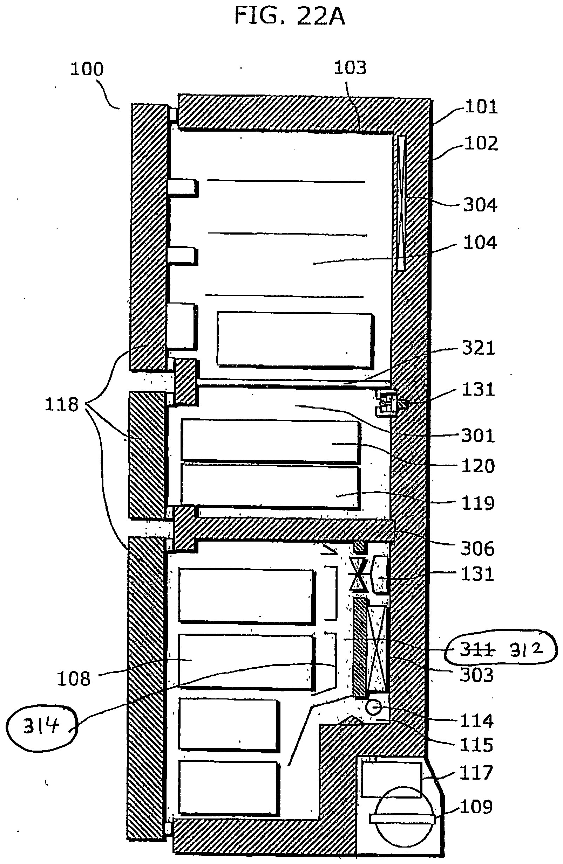

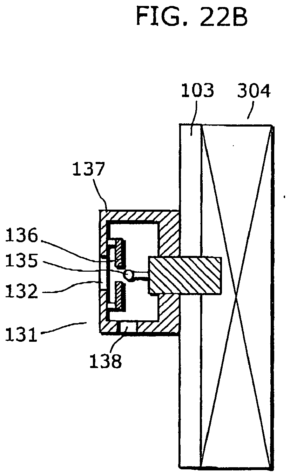

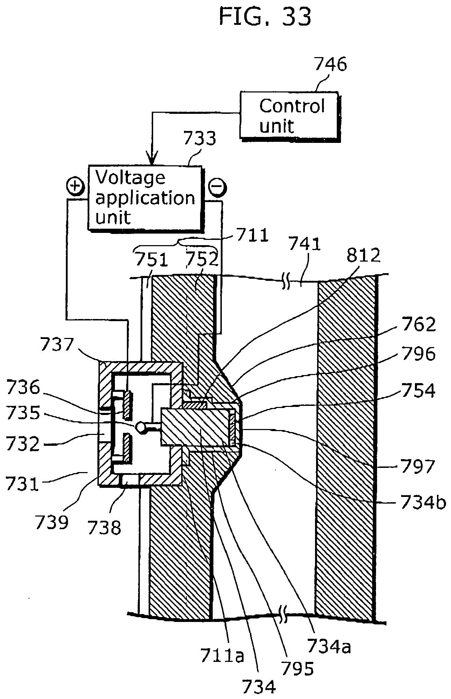

FIG. 22A is a sectional view of a refrigerator in a fourteenth example of the present disclosure. FIG. 22B is a sectional view of an electrostatic atomization apparatus and its vicinity in the fourteenth example of the present disclosure.

In this example, detailed description is given only for parts that differ from the structures described in the first to thirteenth examples, with description being omitted for parts that are the same as the structures described in the first to thirteenth examples or parts to which the same technical ideas are applicable.

As shown in the drawings, in the refrigerator 100 of the fourteenth example, the refrigerator compartment 104 as the first storage compartment is located at the top, the temperature changing compartment 301 that can be changed to the vegetable compartment temperature of about 5°C is located below the refrigerator compartment 104, and the freezer compartment 108 is located below the temperature changing compartment 301. The temperature changing compartment 301 is defined by a partition plate 321 for separating the temperature zones of the refrigerator compartment 104 and the temperature changing compartment 301, a second partition wall ensuring heat insulation for separating the temperature zone of the temperature changing compartment 301, the inner case 103 on the back of the temperature changing compartment 301, and the door 118.

The refrigerator compartment 104 and the temperature changing compartment 301 use the high temperature side evaporator 304 housed in an inner wall on the back of the refrigerator compartment and the temperature changing compartment as a cooling source. Meanwhile, the freezer compartment 108 uses the low temperature side evaporator 303 included in the cooling compartment 110 on the back of the freezer compartment 108 as a cooling source. The cooling fan 113 is installed above the low temperature side evaporator 303 to blow cool air generated by the low temperature side evaporator 303.

The electrostatic atomization apparatus 131 as the mist spray apparatus for spraying a mist into the temperature changing compartment 301 is formed in the back surface of the temperature changing compartment 301.

In a cooling cycle according to the present disclosure, a refrigerant discharged from the compressor 109 is condensed by the condenser 307, and switched between a plurality of flow paths by the three way valve 308. One flow path constitutes the refrigerator compartment 104 and freezer compartment 108 simultaneous cooling cycle in which the refrigerant is reduced in pressure in the high temperature side capillary 310, undergoes heat exchange in the high temperature side evaporator 304, and then passes through the low temperature side evaporator 303 and the accumulator and returns to the compressor 109. The other flow path constitutes the freezer compartment 108 individual cooling cycle in which the refrigerant is reduced in pressure in the low temperature side capillary 309, undergoes heat exchange in the low temperature side evaporator 303, and then passes through the accumulator and returns to the compressor 109.

This being so, through the use of the high temperature side evaporator 304, the temperature of the temperature changing compartment 301 is optimally regulated by a refrigerator compartment temperature detection unit (not shown) or a temperature changing compartment temperature detection unit (not shown), the compressor 109, and the three way valve 308.

The inner case 103 on the back of the temperature changing compartment 301 is mainly made of a resin such as ABS, and the electrostatic atomization apparatus 131 as the atomization apparatus is installed in a part of the inner case 103.

The cooling pin heater 158 for adjusting the temperature of the cooling pin 134 as the heat transfer connection member included in the electrostatic atomization apparatus 131 and preventing excessive dew condensation on a peripheral part including the atomization electrode 135 as the atomization tip is installed near the atomization unit 139, in the inner case 103 to which the electrostatic atomization apparatus 131 is fixed.

The cooling pin 134 as the heat transfer connection member is fixed to the external case 137, where the cooling pin 134 itself has the projection 134a that protrudes from the external case 137. The projection 134a of the cooling pin 134 is located opposite to the atomization electrode 135, and fits into a depression formed in a part of the inner case 103.

Accordingly, the back of the cooling pin 134 as the heat transfer connection member is positioned close to the high temperature side evaporator 304.

An operation and working of the refrigerator having the above-mentioned structure are described below.

An operation of a refrigeration cycle is described first. The refrigeration cycle is activated by a signal from a control board (not shown) according to a set temperature inside the refrigerator, as a result of which a cooling operation is performed. A high temperature and high pressure refrigerant discharged by the operation of the compressor 109 is condensed into liquid to some extent by the condenser 307, is further condensed into liquid without causing dew condensation of the refrigerator main body (heat-insulating main body 101) while passing through a refrigerant pipe (not shown) and the like disposed on the side and back surfaces of the refrigerator main body (heat-insulating main body 101) and in a front opening of the refrigerator main body (heat-insulating main body 101), and reaches the three way valve 308. The flow path of the three way valve 308 is determined according to an operation signal from the control board of the refrigerator 100, and the refrigerant is flown to either the low temperature side capillary 309 or the high temperature side capillary 310, or to both the low temperature side capillary 309 and the high temperature side capillary 310. When the flow path of the three way valve 308 is open to the high temperature side capillary 310, the refrigerant becomes a low temperature and low pressure liquid refrigerant in the high temperature side capillary 310, and reaches the high temperature side evaporator 304.

The low temperature and low pressure liquid refrigerant in the high temperature side evaporator 304 reaches a temperature of about -10°C to -20°C, and directly or indirectly undergoes heat exchange with the air in the refrigerator compartment 104 or the temperature changing compartment 301. As a result, a part of the refrigerant in the high temperature side evaporator 304 evaporates. After this, the refrigerant further flows through the refrigerant pipe, and reaches the low temperature side evaporator 303.

The refrigerant then passes through the accumulator (not shown) and returns to the compressor 109. Thus, the operation of the cooling cycle is performed.

On the other hand, when the flow path of the three way valve 308 is open to the low temperature side capillary 309, the refrigerant becomes a low temperature and low pressure liquid refrigerant in the low temperature side capillary 309, and reaches the low temperature side evaporator 303.

Here, the low temperature and low pressure liquid refrigerant reaches a temperature of about -20°C to -30°C, and undergoes heat exchange through convection of the air in the cooling compartment 110 by the cooling fan 113. As a result, most of the refrigerant in the low temperature side evaporator 303 evaporates. The resulting cool air is blown by the cooling fan 113 into the freezer compartment 108. The refrigerant which has undergone heat exchange then passes through the accumulator and returns to the compressor 109.

The low temperature side evaporator 303 in the cooling compartment 110 discharges the cool air by the cooling fan 113. The discharged cool air passes through the freezer compartment side cooling air path 312 in the freezer compartment back partition wall 314, and is discharged into the freezer compartment 108 from a discharge port. Having undergone heat exchange with a freezer compartment case, the discharged cool air is sucked from a lower part of the freezer compartment back partition wall 314, and returns to the cooling compartment 110 including the low temperature side evaporator 303.

The flow path of the three way valve to the high temperature side capillary 310 is opened to cool the freezer compartment 108 and the temperature changing compartment 301. The opening/closing of the three way valve is determined by a temperature detection unit placed in the refrigerator compartment 104 or the temperature changing compartment 301, thereby keeping the temperature of each of the refrigerator compartment 104 and the temperature changing compartment 301 constant.

Here, the temperature changing compartment 301 can be set to an arbitrary temperature, that is, the temperature changing compartment 301 can be switched from the partial temperature zone of about -2°C to the vegetable compartment temperature of about 5°C and further to the wine compartment temperature of about 12°C. This being so, the temperature changing compartment 301 may be used as a vegetable compartment for storing vegetables and fruits.

In view of this, when the temperature of the temperature changing compartment 301 is set to about the vegetable storage temperature, for example, 2°C or more, the electrostatic atomization apparatus 131 is operated to improve freshness preservation of stored contents.

The electrostatic atomization apparatus 131 is disposed in a part of the inner case 103 on the back of the temperature changing compartment 301 that is in a relatively high humidity environment, and especially the back of the cooling pin 134 is close to the high temperature side evaporator 304.

A heat conductive member such as a refrigerator pipe or a fin of the high temperature side evaporator 304 on the back of the cooling pin 134 becomes about -15°C to -25°C in temperature by the operation of the cooling system. Heat conduction from the heat conductive member causes the cooling pin 134 as the heat transfer cooling member to be cooled to, for example, about 0°C to -10°C. Since the cooling pin 134 is a good heat conductive member, the cooling pin 134 transmits cold heat extremely easily, so that the atomization electrode 135 as the atomization tip is indirectly cooled to about 0°C to -10°C via the cooling pin 134.

Thus, the cooling pin 134 is cooled by direct heat conduction from the evaporator.

By using, as the cooling unit for cooling the cooling pin 134, not the low temperature cool air from the air path but the direct heat conduction from the evaporator whose evaporation temperature is roughly kept constant, the cooling pin 134 can be cooled more stably, and also the heat capacity increases by the evaporator and the refrigerant and so a more stable temperature can be attained.

When the three way valve 308 is set so that the flow path to the high temperature side capillary is in an open state, the refrigerator compartment 104 and the temperature changing compartment 301 enter the cooling mode, so that the temperature changing compartment is in a low humidity state. When the three way valve 308 is set so that the flow path to the high temperature side capillary is in a closed state, the temperature changing compartment becomes relatively high in humidity, and the temperature of the high temperature side evaporator 304 behind the cooling pin 134 is kept at a low temperature to some extent.

Here, in the case where the temperature setting of the temperature changing compartment 301 is the vegetable compartment setting, the temperature changing compartment 301 is 2°C to 7°C in temperature and also in a relatively high humidity state due to transpiration from vegetables and the like. Accordingly, when the atomization electrode 135 as the atomization tip of the electrostatic atomization apparatus 131 decreases to the dew point temperature or below, water is generated and water droplets adhere to the atomization electrode 135 including its tip. Hence, a fine mist containing radicals can be generated by high voltage application.

The fine mist passes through the spray port 132 formed in the external case 137 of the electrostatic atomization apparatus 131, and is sprayed into the temperature changing compartment 301. The sprayed fine mist reaches throughout the temperature changing compartment 301 because the fine mist is made up of extremely small particles and so has high diffusivity. The sprayed fine mist is generated by high-voltage discharge, and so is negatively charged. Meanwhile, vegetables and fruits stored in the temperature changing compartment 301 are positively charged. Accordingly, the atomized mist tends to gather on vegetable surfaces. This contributes to enhanced freshness preservation.

Note that the temperature mentioned above is not a limit for the present disclosure, so long as it is possible to spray the mist. For example, even in the case where the temperature changing compartment is set to a partial temperature of about -2°C, an ice temperature of about 0°C, or a chilled temperature zone of about 1°C, when the electrostatic atomization apparatus 131 determines that it is possible to spray the mist, the mist can be sprayed. Since the fine mist adhering to perishable food surfaces enhances microbial elimination, long-term storage can be achieved.

Moreover, by linking the operation of the three way valve 308 and the operation of the electrostatic atomization apparatus 131, the mist can be sprayed more efficiently.

In addition, by disposing the temperature adjustment heater near the cooling pin 134 of the electrostatic atomization apparatus 131, the temperature control of the atomization electrode and the water quantity adjustment of the atomization tip can be carried out, with it being possible to achieve a more stable atomization state.

As described above, in the fourteenth example, the temperature changing compartment 301 variable in temperature and the evaporator for cooling the temperature changing compartment 301 are provided in the refrigerator having a plurality of evaporators. In the case where the evaporator for cooling the refrigerator compartment 104 is utilized to cool the temperature changing compartment 301, by attaching the electrostatic atomization apparatus 131 to a part of the inner case behind the temperature changing compartment 301, the atomization electrode is cooled by heat conduction from the high temperature side evaporator to thereby form dew condensation when the temperature setting of the temperature changing compartment 301 is about the vegetable compartment temperature setting. Thus, the mist can be sprayed stably. Additionally, the electrostatic atomization apparatus 131 is difficult to reach by hand because it is attached to the back surface, which contributes to enhanced safety. Furthermore, the number of components can be reduced, with it being possible to provide an inexpensive structure.

Though the cooling pin 134 is cooled by direct heat conduction from the evaporator in this example, an indirect arrangement via a resin or a heat insulator may instead be employed so long as the temperature of the atomization unit is appropriate. This allows for a reduction in man-hour and management for incorporating the electrostatic atomization apparatus 131 in the vicinity of the evaporator to ensure heat conductivity.

### (Fifteenth Example)

FIG. 23 is a sectional view of a refrigerator in a fifteenth example of the present disclosure.

In this example, detailed description is given only for parts that differ from the structures described in the first to fourteenth examples, with description being omitted for parts that are the same as the structures described in the first to fourteenth examples or parts to which the same technical ideas are applicable.

As shown in the drawings, in the refrigerator 100 of the fifteenth example, the refrigerator compartment 104 as the first storage compartment is located at the top, the temperature changing compartment 301 that can be changed to a vegetable compartment temperature of about 5°C is located below the refrigerator compartment 104, and the freezer compartment 108 is located below the temperature changing compartment 301.

The temperature changing compartment 301 is defined by the partition plate 321 for separating the temperature zones of the refrigerator compartment 104 and the temperature changing compartment 301, a second partition wall ensuring heat insulation for separating the temperature zone of the temperature changing compartment 301, the partition plate 321 on the back of the temperature changing compartment 301, and the door 118. A temperature changing compartment discharge port 325 is formed in a part of the partition plate 321.

A refrigerator compartment partition plate 323 is disposed on the back of the refrigerator compartment 104 and the temperature changing compartment 301. This partition extends to the back of the temperature changing compartment 301, and a refrigerator compartment air path 324 is separated by the partition. A temperature changing compartment suction port 326 is formed at one end of the refrigerator compartment air path 324. The high temperature side evaporator 304 is installed in the refrigerator compartment air path 324, and a refrigerator compartment fan 322 is located above the high temperature side evaporator 304 to send cool air into the refrigerator compartment 104.

The electrostatic atomization apparatus 131 as the mist spray apparatus for spraying a mist into the temperature changing compartment 301 is formed in a part of the partition plate 321 behind the temperature changing compartment 301.

The partition plate 321 behind the temperature changing compartment 301 is mainly formed of a resin such as ABS and a heat insulator such as styrene foam. The electrostatic atomization apparatus 131 as the atomization apparatus is installed in a part of the inner case of the partition plate 321.

The cooling pin heater 158 for adjusting the temperature of the cooling pin 134 as the heat transfer connection member included in the electrostatic atomization apparatus 131 and preventing excessive dew condensation on a peripheral part including the atomization electrode 135 as the atomization tip is installed near the atomization unit 139, in the partition plate 321 to which the electrostatic atomization apparatus 131 is fixed.

The cooling pin 134 as the heat transfer connection member is fixed to the external case 137, where the cooling pin 134 itself has the projection 134a that protrudes from the external case 137. The projection 134a of the cooling pin 134 is located opposite to the atomization electrode 135, and fits into a depression formed in a part of the partition plate 321.

Here, the back of the cooling pin 134 as the heat transfer connection member is positioned close to the high temperature side evaporator 304.

An operation and working of the refrigerator having the above-mentioned structure are described below.

When the flow path of the three way valve is open to the high temperature side capillary 310, the refrigerator compartment 104 and the temperature changing compartment 301 are cooled. At this time, the opening/closing of the three way valve and the operation of the refrigerator compartment fan 322 are determined by a temperature detection unit placed in the refrigerator compartment 104 or the temperature changing compartment 301, thereby keeping the temperature of each of the refrigerator compartment 104 and the temperature changing compartment 301 constant.

Here, the temperature changing compartment 301 can be set to an arbitrary temperature, that is, the temperature changing compartment 301 can be switched from the partial temperature zone of about -2°C to the vegetable compartment temperature of about 5°C and further to the wine compartment temperature of about 12°C. This being so, the temperature changing compartment 301 may be used as a vegetable compartment for storing vegetables and fruits.

In view of this, when the temperature of the temperature changing compartment 301 is set to about the vegetable storage temperature, for example, 2°C or more, the electrostatic atomization apparatus 131 is operated to improve freshness preservation of stored contents.

The electrostatic atomization apparatus 131 is disposed in a part of the partition plate 321 on the back of the temperature changing compartment 301 that is in a relatively high humidity environment, and especially the back of the cooling pin 134 is close to the high temperature side evaporator 304.

A heat conductive member such as a refrigerator pipe or a fin of the high temperature side evaporator 304 on the back of the cooling pin 134 becomes about -15°C to -25°C in temperature by the operation of the cooling system. Heat conduction from the heat conductive member causes the cooling pin 134 as the heat transfer cooling member to be cooled to, for example, about 0°C to -10°C. Since the cooling pin 134 is a good heat conductive member, the cooling pin 134 transmits cold heat extremely easily, so that the atomization electrode 135 as the atomization tip is indirectly cooled to about 0°C to -10°C via the cooling pin 134.

When the three way valve 308 is set so that the flow path to the high temperature side capillary is in an open state, the refrigerator compartment 104 and the temperature changing compartment 301 enter the cooling mode, so that the temperature changing compartment 301 is in a low humidity state. When the three way valve 308 is set so that the flow path to the high temperature side capillary is in a closed state, the temperature changing compartment 301 becomes relatively high in humidity, and frost adhering to the high temperature side evaporator can be melted for defrosting by operating the refrigerator compartment fan 322. During this time, the temperature changing compartment 301 becomes a relatively high humidity space. Therefore, atomization is possible even when the temperature of the high temperature side evaporator 304 behind the cooling pin 134 increases.

Here, in the case where the temperature setting of the temperature changing compartment 301 is the vegetable compartment setting, the temperature changing compartment 301 is 2°C to 7°C in temperature and also in a relatively high humidity state due to transpiration from vegetables and the like. Accordingly, when the atomization electrode 135 as the atomization tip of the electrostatic atomization apparatus 131 decreases to the dew point temperature or below, water is generated and water droplets adhere to the atomization electrode 135 including its tip. Hence, a fine mist containing radicals can be generated by high voltage application.

The fine mist passes through the spray port 132 formed in the external case 137 of the electrostatic atomization apparatus 131, and is sprayed into the temperature changing compartment 301. The sprayed fine mist reaches throughout the temperature changing compartment 301 because the fine mist is made up of extremely small particles and so has high diffusivity. The sprayed fine mist is generated by high-voltage discharge, and so is negatively charged. Meanwhile, vegetables and fruits stored in the temperature changing compartment 301 are positively charged. Accordingly, the atomized mist tends to gather on vegetable surfaces. This contributes to enhanced freshness preservation.

Note that the temperature mentioned above is not a limit for the present disclosure, so long as it is possible to spray the mist. For example, even in the case where the temperature changing compartment is set to a partial temperature of about -2°C, an ice temperature of about 0°C, or a chilled temperature zone of about 1°C, when the electrostatic atomization apparatus 131 determines that it is possible to spray the mist, the mist can be sprayed. Since the fine mist adhering to perishable food surfaces enhances microbial elimination, long-term storage can be achieved.

Moreover, by linking the operation of the refrigerator compartment fan 322 and the operation of the electrostatic atomization apparatus 131, the mist can be sprayed more efficiently.

In addition, by disposing the temperature adjustment heater near the cooling pin 134 of the electrostatic atomization apparatus 131, the temperature control of the atomization electrode and the water quantity adjustment of the atomization tip can be carried out, with it being possible to achieve a more stable atomization state.

As described above, in the fifteenth example, the temperature changing compartment 301 variable in temperature and the evaporator for cooling the temperature changing compartment 301 are provided in the refrigerator having a plurality of evaporators. In the case where the evaporator for cooling the refrigerator compartment 104 is utilized to cool the temperature changing compartment 301 and cool air generated in the evaporator is conveyed by the refrigerator compartment fan, by attaching the electrostatic atomization apparatus 131 to a part of the partition plate behind the temperature changing compartment 301, the atomization electrode is cooled by heat conduction from the high temperature side evaporator to thereby form dew condensation when the temperature setting of the temperature changing compartment 301 is about the vegetable compartment temperature setting. Thus, the mist can be sprayed stably. Additionally, the electrostatic atomization apparatus 131 is difficult to reach by hand because it is attached to the back surface, which contributes to enhanced safety. Furthermore, the number of components can be reduced, with it being possible to provide an inexpensive structure.

### (Sixteenth Example)

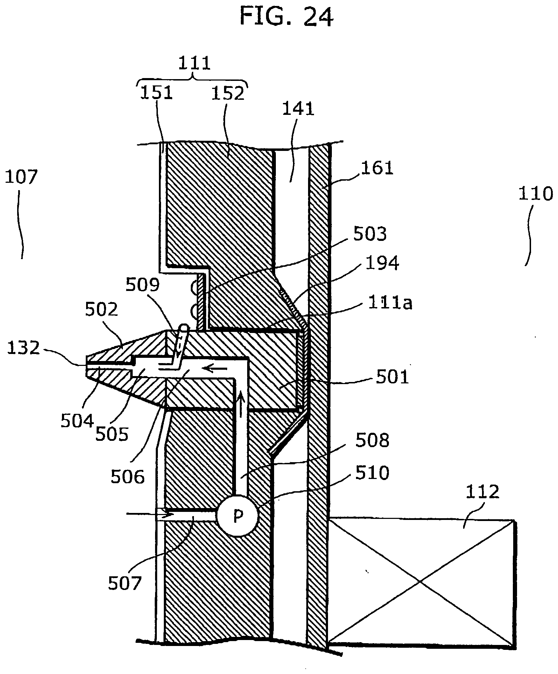

FIG. 24 is a sectional view of a vegetable compartment and its vicinity in a refrigerator in a sixteenth example of the present disclosure.

In this example, detailed description is mainly given for parts that differ from the structures described in the first to fifteenth examples, with detailed description being omitted for parts that are the same as the structures described in the first to fifteenth examples or parts to which the same technical ideas are applicable.

In the drawing, the back partition wall 111 includes the back partition wall surface 151 made of a resin such as ABS, and the heat insulator 152 made of styrene foam or the like for ensuring heat insulation between the vegetable compartment 107 and the freezer compartment discharge air path 141.

Here, the depression 111a is formed in a part of a vegetable compartment 107 side wall surface of the back partition wall 111 so as to be lower in temperature than other parts, and a cooling pin 501 which is a good heat conductive material is disposed in the depression 111a.

In this example, the atomization unit is an atomization apparatus which is an ejector-type mist spray apparatus. The cooling pin 501 is mainly cooled by heat conduction from the freezer compartment discharge air path 141 on the back, and an atomization tip 502 of the cooling pin 501 is made of a resin. Cavities 504, 505, 506, 507, and 508 are formed in the cooling pin 501 and the atomization tip 502. That is, the flow path 504 of a narrow diameter formed on the spray port 132 side and the flow path 505 of a larger diameter communicating with the flow path 504 are formed in the atomization tip 502. A small pump 510 is disposed in the heat insulator 152 below the cooling pin 501, and the flow path 507 having one end open to the vegetable compartment 107 and the other end connected to the pump 510 is formed. In addition, the flow path 508 extending upward from the pump 510 and connected to the heat insulator 152 and the cooling pin 501 is formed. Further, the flow path 506 linking one end of the flow path 508 in the cooping pin 501 and the flow path 505 in the atomization tip 502 together is formed. Thus, from the vegetable compartment 107, the flow path 507, the pump 510, the flow path 508, the flow path 506, the flow path 505, and the flow path 504 of the narrower diameter than the other flow paths are formed to communicate with each other.

A water collection portion 503 that mainly collects water in the vegetable compartment 107 is formed above the cooling pin 501 on the vegetable compartment 107 side. The water collection portion 503 is made up of a metal plate formed on a vertical surface in the depression 111a formed in the heat insulator 152 above the cooling pin 501 on the vegetable compartment 107 side. The metal plate of the water collection portion 503 is thermally connected with the cooling pin 501.

A water channel 509 communicating with the flow path 506 is formed in the cooling pin 501, from a vegetable compartment 107 side upper surface of the cooling pin 501 exposed by the depression 111a.

One end of the cooling pin 501 on the cooling compartment 110 side is joined to the partition plate 161 via the tape 194 as the cool air blocking member, in the same way as the ninth example shown in FIG. 13. The cooling pin 501 is surrounded by the heat insulator, and a void between the depression 111a and the cooling pin 501 is filled with a void filling member (not shown).

An operation and working of the refrigerator having the above-mentioned structure are described below. The cooling pin 501 as the heat transfer connection member is cooled via the heat insulator 152 as the cushioning material, so that high humidity air in the vegetable compartment 107 builds up dew condensation on the water collection portion 503 thermally connected to the cooling pin 501, thereby generating water 512. The water 512 is guided to the water channel 509 and flows into the flow path 505.

Meanwhile, as the pump 510 operates, air is sucked from the vegetable compartment 107 and relatively fast air flows to the flow path 505 and to the flow path 504 via the flow paths 507, 508, and 506. Since the water 512 is supplied in the flow path 505 from the water channel 509 as mentioned above, the water 512 is mixed with the fast air stream from the flow path 506, as a result of which a fluid in a mist form is sprayed from the spray port 132 of the atomization tip 502.

The generated mist is sprayed into the vegetable compartment 107, thereby moisturizing stored foods and enhancing freshness preservation.

As described above, in this example, by cooling the cooling pin 501 as the heat conductive member by the freezer compartment discharge air path 141, water is generated in the water collection portion 503. The generated water is flown into the flow path 505 formed inside the cooling pin 501, air is flown by the pump from the other flow paths 506, 507, and 508, and the water and the air are mixed to generate a mist. The vegetable compartment 107 can be humidified by the generated mist, with it being possible to enhance vegetable freshness preservation.

### (Seventeenth Example)

In the examples described above, the electrostatic atomization apparatus is applied to the refrigerator. However, the electrostatic atomization apparatus as the mist spray apparatus for spraying a mist as described in the above examples can be applied not only to the refrigerator but to an air conditioner and the like as a cooling apparatus including a cooling source. Moreover, the present disclosure is not limited to a cooling apparatus, as the same technical idea can be employed in the case where there is a large temperature difference between a space in which a mist is sprayed and a space in which a cooling pin is included. For example, the electrostatic atomization apparatus can be applied to various appliances such as a dish washer, a cloths washer, a rice cooker, a vacuum cleaner, and so on.

This example describes an example where the electrostatic atomization apparatus is used in an air conditioner. The air conditioner is typically composed of an outdoor unit and an indoor unit interconnected by a refrigerant pipe. In this example, the indoor unit of the air conditioner is taken as an example.

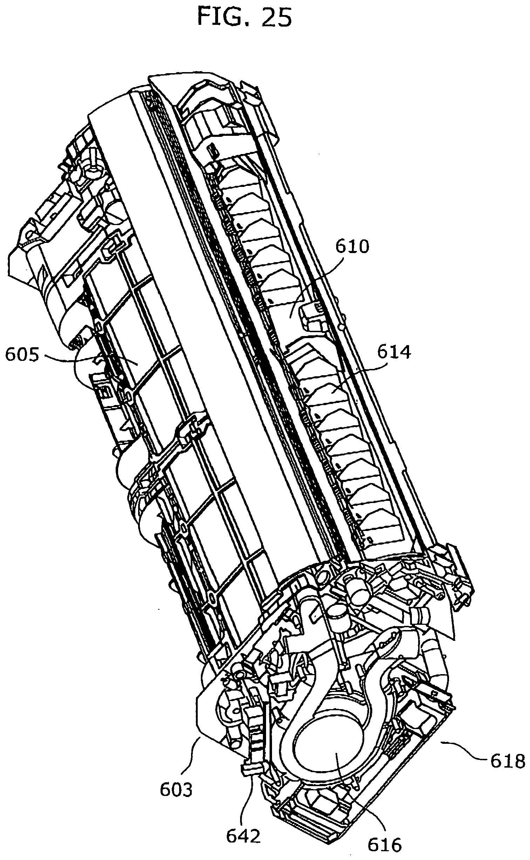

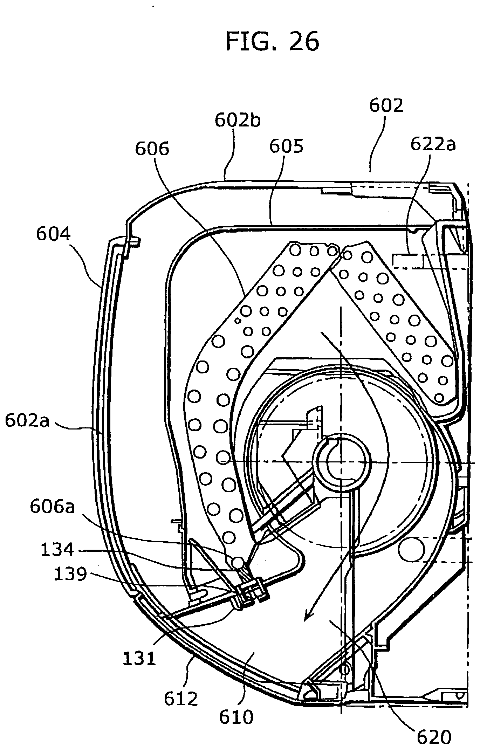

FIG. 25 is a partial cutaway perspective view showing an indoor unit of an air conditioner using an electrostatic atomization apparatus in the seventeenth example of the present disclosure. FIG. 26 is a sectional structural view of the air conditioner shown in FIG. 25.

In this example, detailed description is mainly given for parts that differ from the structures described in the first to sixteenth examples, with detailed description being omitted for parts that are the same as the structures described in the first to sixteenth examples or parts to which the same technical ideas are applicable.

The indoor unit has a front suction port 602a and an upper suction port 602b as suction ports for sucking indoor air into a main body 602. A movable front panel (hereafter simply referred to as a front panel) 604 that can be freely opened and closed is provided at the front suction port 602a. When the air conditioner is stopped, the front pane 604 is in close contact with the main body 602 to close the front suction port 602a. When the air conditioner is running, the front panel 604 moves away from the main body 602 to open the front suction port 602a.

The main body 602 includes a pre-filter 605 provided downstream of the front suction port 602a and the upper suction port 602b for removing dust contained in the air, a heat exchanger 606 provided downstream of the pre-filter 605 for heat exchange with the indoor air sucked from the front suction port 602a and the upper suction port 602b, an indoor fan 608 for conveying the air that has undergone heat exchange in the heat exchanger 606, a vertical vane 612 that opens and closes a blowout port 610 for blowing the air sent from the indoor fan 608 into the room and also vertically changes an air blowout direction, and a horizontal vane 614 that horizontal changes the air blowout direction. An upper part of the front panel 604 is connected to an upper part of the main body 602 via a plurality of arms (not shown) formed on both ends of the upper part of the front panel 604. When the air conditioner is running, by driving and controlling a drive motor (not shown) connected to one of the plurality of arms, the front panel 604 is moved forward from a position when the air conditioner is stopped (a position of closing the front suction port 602a). Likewise, the vertical vane 612 is connected to a lower part of the main body 602 via a plurality of arms (not shown) formed on both ends of the vertical vane 612.

The electrostatic atomization apparatus 131 having an air cleaning function for purifying indoor air by generating an electrostatic mist is disposed in a part of the heat exchanger 606.

As mentioned earlier, FIG. 25 shows a state where a main body cover (not shown) covering the front panel 604 and the main body 602 is removed, and FIG. 26 shows a connection position between the indoor unit main body 602 and the electrostatic atomization apparatus 131.

As shown in the drawing, the electrostatic atomization apparatus 131 is installed downstream of the heat exchange of the sucked air with the heat exchanger 606.

The electrostatic atomization apparatus 131 is mainly composed of the atomization unit 139 and the external case 137 formed of a resin such as ABS. The spray port 132 and a moisture supply port (not shown) are formed in the external case 137. The atomization unit 139 includes the atomization electrode as the atomization tip, the cooling pin 134 fixed to an approximate center of one end of the atomization electrode 135, and a voltage application unit (not shown) for applying a voltage to the atomization electrode 135. The cooling pin 134 is made up of a good heat conductive member such as aluminum, stainless steel, brass, or the like.

To efficiently conduct cold heat from one end to the other end of the cooling pin 134 by heat conduction, it is desirable that a heat insulator (not shown) covers a circumference of the cooling pin 134 as the heat transfer connection member.

Furthermore, the heat conduction of the atomization electrode 135 and the cooling pin 134 needs to be maintained for a long time. Accordingly, an epoxy material or the like is poured into the connection part to prevent moisture and the like from entering, thereby suppressing a heat resistance and fixing the atomization electrode 135 and the cooling pin 134 together. Here, the atomization electrode 135 may be fixed to the cooling pin 134 by pressing and the like, in order to reduce the heat resistance.

The cooling pin 134 as the heat transfer connection member is fixed to the external case 137, where the cooling pin 134 itself has a projection that protrudes from the external case 137. The projection of the cooling pin 134 is located opposite to the atomization electrode 135, and brought into contact with or fixed to a part of a pipe through which a refrigerant flows in the heat exchanger 606.

The cooling in the heat exchanger 606 is used as the cooling unit of the cooling pin 134, and the cooling pin 134 is formed of a metal piece having excellent heat conductivity. Accordingly, the cooling unit can perform cooling necessary for dew condensation of the atomization electrode 135, just by heat conduction from a pipe 606a through which a refrigerant flows in the heat exchanger 606. Hence, dew condensation can be formed on the tip of the atomization unit.

In this example, the electrostatic atomization apparatus 131 is disposed on an air path of discharged cool air indicated by an arrow in FIG. 26. This allows an electrostatic mist to be mixed in blown cool air of a high flow velocity among cool air discharged into the room, and sprayed into the room. As a result, the mist exhibits higher diffusivity in the room. By spraying the electrostatic mist, that is, the mist containing OH radicals, as in this example, sterilization and antimicrobial effects can be improved by enhanced humidity and diffusivity in the sprayed space such as the room.

It is more desirable that the electrostatic atomization apparatus 131 is located closer to the blowout port 610 as the cool air discharge port than the suction ports such as the front suction port 602a and the upper suction port 602a, on the air path in the indoor unit downstream of the discharged cool air. In so doing, the mist can be mixed with the high velocity cool air as noted earlier, thereby enhancing diffusivity in the room. Moreover, since there are fewer obstacles as air path resistances in the route up to the room, the mist can be sprayed as it is. In detail, in the case of this example, the electrostatic mist, that is, the mist containing OH radicals, can be sprayed as it is, without losing OH radicals. Hence, sterilization and antimicrobial effects can be improved by enhanced humidity and diffusivity in the sprayed space such as the room.

Since the cooling unit can be realized by such a simple structure, highly reliable atomization with a low incidence of troubles can be achieved. Moreover, the cooling pin 134 as the heat transfer connection member and the atomization electrode 135 as the atomization tip can be cooled by using the cooling source of the refrigeration cycle, which contributes to energy-efficient atomization.

Furthermore, the voltage application unit is formed near the atomization unit 139. A negative potential side of the voltage application unit generating a high voltage is electrically connected to the atomization electrode 135, and a positive potential side of the voltage application unit is electrically connected to the counter electrode 136.

Discharge constantly occurs in the vicinity of the atomization electrode 135 for mist spray, which raises a possibility that the tip of the atomization electrode 135 wears out. As with the refrigerator, the air conditioner is typically intended to operate over a long period of 10 years or more. Therefore, a strong surface treatment needs to be performed on the surface of the atomization electrode 135. For example, the use of nickel plating, gold plating, or platinum plating is desirable.

The counter electrode 136 is made of, for example, stainless steel. Long-term reliability needs to be ensured for the counter electrode 136. In particular, to prevent foreign substance adhesion and contamination, it is desirable to perform a surface treatment such as platinum plating on the counter electrode 136.

The voltage application unit communicates with and is controlled by a control unit of the air conditioner main body, and switches the high voltage on or off according to an input signal from the air conditioner main body or the electrostatic atomization apparatus 131.

An operation and working of the air conditioner in this example having the above-mentioned structure are described below. The electrostatic atomization apparatus 131 is fixed to the heat exchanger 606. The cooling pin 134 is cooled by heat transfer or heat conduction from the pipe 606a through which a refrigerant flows in the heat exchanger 606 as the cooling source of the cooling pin 134. As a result, the thermally connected atomization electrode 135 is cooled as well, and water droplets are generated at the tip of the atomization electrode 135. By applying a high voltage to the water droplets at the tip of the atomization electrode 135, a fine mist is generated. The mist generated by the electrostatic atomization apparatus 131 carries a charge. Accordingly, after the mist generation, the mist is released into the air conditioned room via a dedicated air path formed of a resin such as ABS serving also as a silencer, so as not to be attracted to the heat exchanger 606.

The released fine mist is convected and diffused in the air conditioned room. The diffused mist adheres to cloths, furniture, and the like in the air conditioned room. Radicals contained in the mist contribute to microbial elimination, deodorization, and the like, thereby making the room a comfortable space.

In the case of the air conditioner, during a cooling period, the low temperature air that has passed through the heat exchanger 606 in the indoor unit is relatively high in humidity, and dew condensation is formed on the atomization electrode 135 in the electrostatic atomization apparatus 131 so long as the atomization electrode 135 is a little lower in temperature than its surrounding environment. Hence, atomization requires an extremely small amount of power.

Moreover, by also using a heating unit in the vicinity of the electrostatic atomization apparatus 131, the temperature of the atomization electrode 135 can be adjusted. This achieves stable atomization.

In the case of the electrostatic atomization apparatus 131 of the type that cools the atomization electrode 135 as the atomization tip by the low temperature pipe of the heat exchanger 606 via the cooling pin 134 to induce dew condensation as in this example, dew condensation occurs only during a cooling period when the heat exchanger is at a low temperature, so that the mist spray is limited to the cooling period. Since dew condensation does not occur on the atomization tip and the mist spray is not performed during a heating period, for example, the electrostatic atomization apparatus 131 may be stopped during the heating period. Alternatively, though no dew condensation occurs during the heating period, negative ion generation can still be performed by operating the electrostatic atomization apparatus 131, so that the electrostatic atomization apparatus 131 may be used as a negative ion generator during the heating period.

By stopping cooling and operating only the fan for a fixed period instead of using the heating unit, the atomization electrode is dried by dry air in the air conditioned room and as a result excessive dew condensation is prevented, which contributes to improved reliability. Hence, stable atomization can be achieved.

As described above, in this example, by installing the electrostatic atomization apparatus 131 near the heat exchanger 606 of the air conditioner, the mist adheres to cloths, furniture, and so on in the air conditioned room. Radicals contained in the mist allow for microbial elimination, deodorization, and the like, thereby making the room a comfortable space.

By applying the electrostatic atomization apparatus to various appliances such as a dish washer, a cloths washer, a rice cooker, and a vacuum cleaner in the manner described above, effects of microbial elimination, sterilization, deodorization, and the like by mist spray can be attained energy-efficiently by a simple structure.

### (First Embodiment)

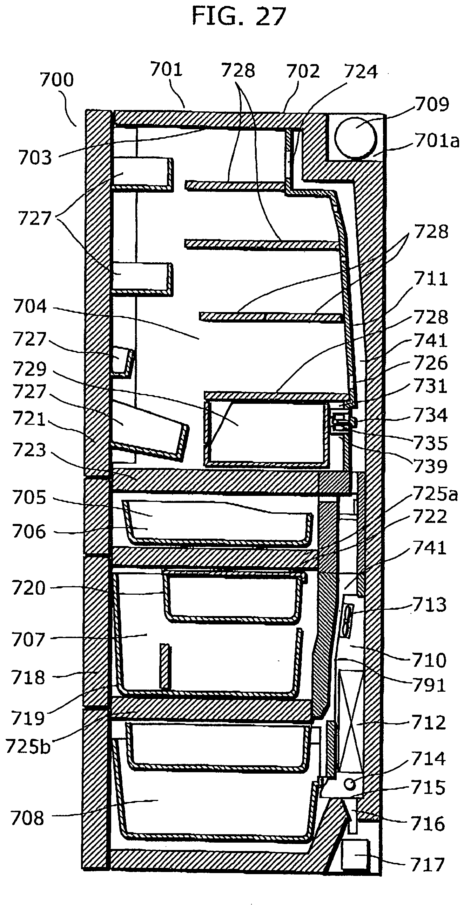

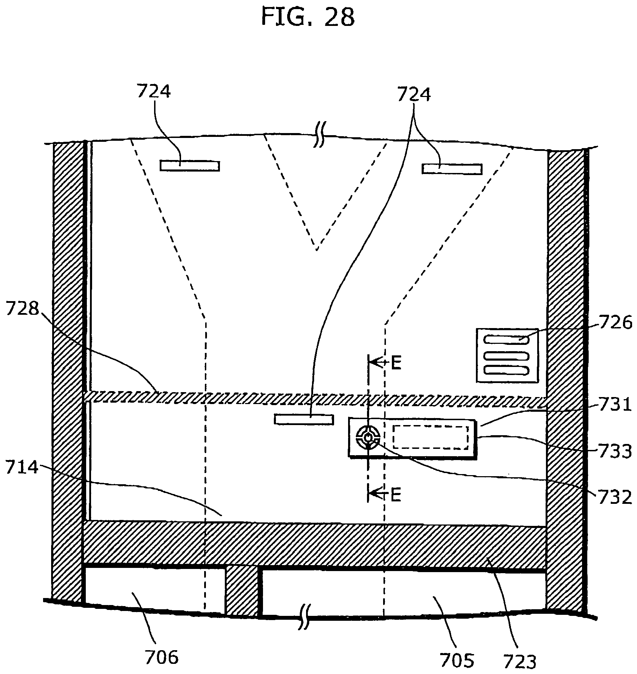

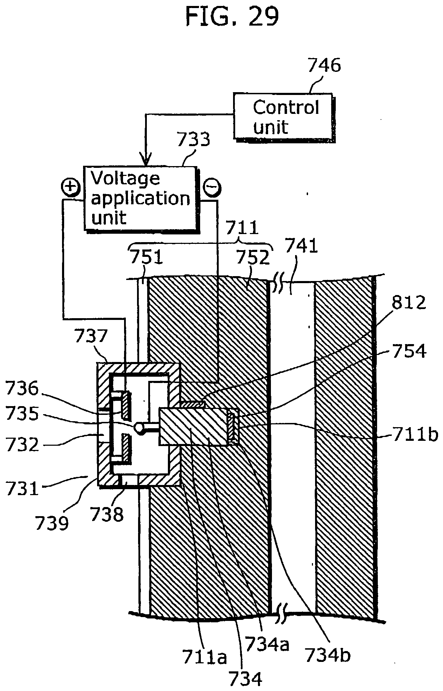

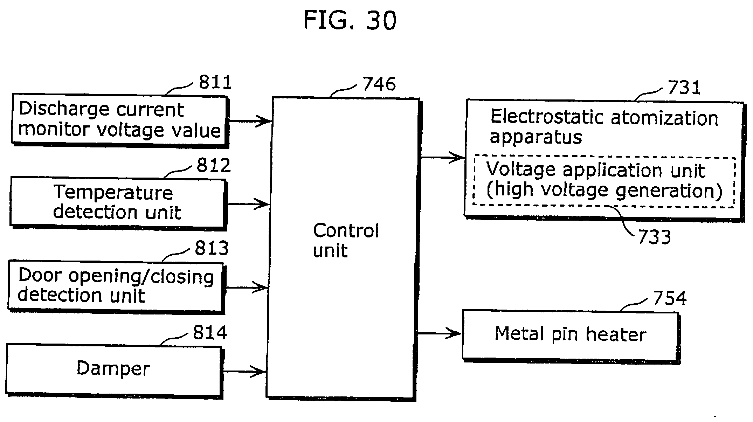

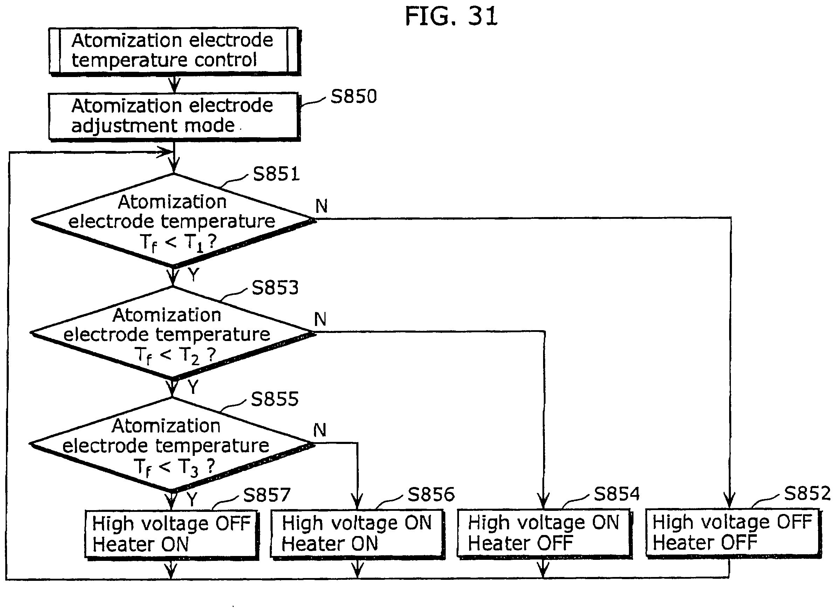

FIG. 27 is a longitudinal sectional view of a refrigerator in a first embodiment of the present invention. FIG. 28 is a front view of a refrigerator compartment and its vicinity in the refrigerator in the first embodiment of the present invention. FIG. 29 is a detailed sectional view of an electrostatic atomization apparatus and its vicinity taken along line E-E in FIG. 28. FIG. 30 is an example of a functional block diagram of the refrigerator in the first embodiment of the present invention. FIG. 31 is an example of a flowchart of a control flow in the first embodiment of the present invention.

In the drawings, a heat-insulating main body 701 of a refrigerator 700 is formed by an outer case 702 mainly composed of a steel plate and an inner case 703 molded with a resin such as ABS, with a vacuum heat insulation material or a foam heat insulation material such as rigid urethane foam being charged and buried between the outer case 702 and the inner case 703. This allows for heat insulation of a plurality of storage compartments obtained by partitioning the refrigerator 700. A refrigerator compartment 704 as a first storage compartment is located at the top in the refrigerator 700. A switch compartment 705 as a fourth storage compartment and an ice compartment 706 as a fifth storage compartment are located side by side below the refrigerator compartment 704. A vegetable compartment 707 as a second storage compartment is located below the switch compartment 705 and the ice compartment 706. A freezer compartment 708 as a third storage compartment is located at the bottom.

The refrigerator compartment 704 is typically set to 1°C to 5°C, with a lower limit being a temperature low enough for refrigerated storage but high enough not to freeze. The vegetable compartment 707 is set to a temperature of 2°C to 7°C that is equal to or slightly higher than the temperature of the refrigerator compartment 704. The freezer compartment 708 is set to a freezing temperature zone. The freezer compartment 708 is typically set to -22°C to -15°C for frozen storage, but may be set to a lower temperature such as -30°C and -25°C for an improvement in frozen storage state. The switch compartment 705 is capable of switching to not only the refrigeration temperature zone of 1°C to 5°C, the vegetable temperature zone of 2°C to 7°C, and the freezing temperature zone of typically -22°C to -15°C, but also a preset temperature zone between the refrigeration temperature zone and the freezing temperature zone. The switch compartment 705 is a storage compartment with an independent door arranged side by side with the ice compartment 706, and often has a drawer door. Note that, though the switch compartment 705 is a storage compartment including the refrigeration and freezing temperature zones in this embodiment, the switch compartment 705 may be a storage compartment specialized for switching to only the above-mentioned intermediate temperature zone between the refrigerated storage and the frozen storage, while leaving the refrigerated storage to the refrigerator compartment 704 and the vegetable compartment 707 and the frozen storage to the freezer compartment 708. Alternatively, the switch compartment 705 may be a storage compartment fixed to a specific temperature zone. The ice compartment 706 makes ice by an automatic ice machine (not shown) disposed in an upper part of the ice compartment 706 using water sent from a water storage tank (not shown) in the refrigerator compartment 704, and stores the ice in an ice storage container (not shown) disposed in a lower part of the ice compartment 706.

A top part of the heat-insulating main body 701 has a depression stepped toward the back of the refrigerator. A machinery compartment 701a is formed in this stepped depression, and high pressure components of a refrigeration cycle such as a compressor 709 and a dryer (not shown) for water removal are housed in the machinery compartment 701a. That is, the machinery compartment 701a including the compressor 709 is formed cutting into a rear area of an uppermost part of the refrigerator compartment 704.

By forming the machinery compartment 701a to dispose the compressor 709 in the rear area of the uppermost storage compartment in the heat-insulating main body 701 which is hard to reach and so used to be a dead space in a conventional refrigerator (a type of refrigerator in which the machinery compartment 701a is formed to dispose the compressor 709 in the rear area of the lowermost storage compartment in the heat-insulating main body 701), a space for the machinery compartment 701a at the bottom of the heat-insulating main body 701 can be effectively converted to a storage compartment capacity. This eases the use of the refrigerator, and significantly improves storability and usability.

Note that the matters relating to the relevant part of the present invention described below in this embodiment are also applicable to the conventional type of refrigerator in which the machinery compartment 701a is formed to dispose the compressor 709 in the rear area of the lowermost storage compartment in the heat-insulating main body 701.

Moreover, the matters relating to the relevant part of the present invention described below in this embodiment are also applicable to a type of refrigerator having such a storage compartment layout that positions the vegetable compartment 707 at the bottom of the heat-insulating main body 701 and positions the freezer compartment 708 above the vegetable compartment 707.

A cooling compartment 710 for generating cool air is provided behind the vegetable compartment 707 and the freezer compartment 708. An air path 741 for conveying cool air to each compartment having heat insulation properties and a back partition wall 711 formed by a heat insulator 752 for thermally insulating each storage compartment are formed between the cooling compartment 710 and each of the vegetable compartment 707 and the freezer compartment 708 and behind the refrigerator compartment 704. A cooler 712 is disposed in the cooling compartment 710 separated from the air path 741 by a cooling compartment partition plate 791, and a cooling fan 713 for blowing cool air generated by the cooler 712 into the refrigerator compartment 704, the switch compartment 705, the ice compartment 706, the vegetable compartment 707, and the freezer compartment 708 by a forced convection method is placed in a space above the cooler 712. A defrosting heater 714 made up of a glass tube for defrosting by removing frost or ice adhering to the cooler 72 and its periphery during cooling is provided in a space below the cooler 712. Furthermore, a drain pan 715 for receiving defrost water generated during defrosting and a drain tube 716 passing from a deepest part of the drain pan 715 through to outside the compartment are formed below the defrosting heater 714. An evaporation dish 717 is formed outside the compartment downstream of the drain tube 716.

A typical rotational door 721 is attached to the refrigerator compartment 704, and vertically-arranged multiple storage cases 727 are mounted to the inside of the rotational door 721. In addition, interchangeable storage trays 728 are installed in multiple tiers in the storage compartment. A case 729 which is an independent drawer section is disposed between the lowermost tray in the refrigerator compartment 704 and a partition wall 723, and a storage space in the case 729 is settable to an environment different from an environment of the refrigerator compartment 704. For example, the case 729 can be substantially sealed and set to a chilled temperature of about 1°C slightly lower than a temperature in the refrigerator compartment 704 and a higher humidity than the refrigerator compartment 704, or to a partial temperature of -2°C to -3°C. Thus, temperature zones suitable for stored foods can be provided.

Such a section that is set in a different environment from the environment of the storage compartment (refrigerator compartment 704) has a space (space in the case 729) in which not only the temperature zone is changed as mentioned above but also the humidity, air flow, enclosed cool air properties, and the like are different, thereby realizing a storage space of a different environment.

Moreover, setting a different environment from the environment of the storage compartment (refrigerator compartment 704) means to realize a storage space of a different environment where not only the temperature zone is changed as mentioned above but also the humidity, air flow, enclosed cool air properties, and the like are different.

An air path of cool air discharged from a refrigerator compartment discharge port 724 formed in the back partition wall 711 is provided approximately between the storage trays 728. A refrigerator compartment suction port 726 though which cool air, having cooled the inside of the refrigerator compartment 704 and undergone heat exchange, returns to the cooler 712 is disposed in a lower part of the back partition wall 711 above the lowermost tray 728.

Note that, regarding the refrigerator compartment discharge port, the suction port, and the air path structure, the matters relating to the relevant part of the present invention described below in this embodiment are optimized according to the storage container form and the cooling method.

The vegetable compartment 707 includes a lower storage container 719 that is mounted on a frame attached to a drawer door 718 of the vegetable compartment 707, and an upper storage container 720 mounted on the lower storage container 719.

A lid 722 for substantially sealing mainly the upper storage container 720 in a closed state of the drawer door 718 is held by the inner case 703 and a first partition wall 725a above the vegetable compartment 707. In the closed state of the drawer door 718, left, right, and back sides of an upper surface of the upper storage container 720 are in close contact with the lid 722, and a front side of the upper surface of the upper storage container 720 is substantially in close contact with the lid 722. In addition, a boundary between the lower storage container 719 and left, right, and lower sides of a back surface of the upper storage container 720 has a narrow gap so as to prevent moisture in the food storage unit from escaping, in a range of not interfering with the upper storage container 720 during operation.

An air path of cool air discharged from a vegetable compartment discharge port (not shown) formed in the back partition wall is provided between the lid 722 and the first partition wall 725a. Moreover, a space is provided between the lower storage container 719 and a second partition wall 725b, thereby forming a cool air path. A vegetable compartment suction port through which cool air, having cooled the inside of the vegetable compartment 707 and undergone heat exchange, returns to the cooler 712 is disposed in a lower part of the back partition wall on the back of the vegetable compartment 707.

Note that the matters relating to the relevant part of the present invention described below in this embodiment are also applicable to a conventional type of refrigerator that is opened and closed by a frame attached to a door and a rail formed on an inner case. Besides, the lid 722, the vegetable compartment discharge port, the suction port, and the air path structure are optimized according to the storage container form.

The freezer compartment 708 has an approximately same structure as the vegetable compartment 707.

The back partition wall 711 of the refrigerator compartment 704 includes a back partition wall surface 751 made of a resin such as ABS, and the heat insulator 752 made of styrene foam or the like for ensuring the heat insulation of isolating the air path 741 and the refrigerator compartment 704 from each other. Here, an electrostatic atomization apparatus 731 which is a mist spray apparatus, namely, an atomization apparatus, is installed on the back of the case 729 situated at the bottom of the refrigerator compartment 704. A depression 711a or a through hole is formed in a part of a storage compartment side wall surface of the back partition wall 711 so as to be lower in temperature than other parts, and the electrostatic atomization apparatus 731 as the atomization apparatus is installed in this part. By disposing the atomization apparatus in such an area where there is a temperature difference between a space in which the atomization apparatus is located and a thermally insulated adjacent space in which cool air of a lower temperature flows, it is possible to cause water from the space in which the atomization apparatus is located to build up dew condensation on the atomization apparatus using the cool temperature air in the adjacent space as a cooling unit, thereby supplying moisture. A moisture supply method by this dew condensation system will be described in more detail later, in the description about a metal pin 734.

The case 729 is typically used as a space independent of the other space of the refrigerator compartment 704 set to the chilled temperature zone.

The electrostatic atomization apparatus 731 as the atomization apparatus is mainly composed of an atomization unit 739, a voltage application unit 733, and an external case 737. A spray port 732 and a moisture supply port 738 are each formed in a part of the external case 737.

An atomization electrode as an atomization tip 735 is placed in the atomization unit 739. The atomization tip 735 is electrically connected by a wire from the high voltage generation circuit 733, and securely connected to an approximate center of one end of a cylindrical metal pin 734 which is a heat transfer connection member made of a good heat conductive material such as brass.

A periphery of the electrical connection part is molded with a resin such as an epoxy resin. This maintains long-term heat conduction, prevents moisture and the like from entering the electrical connection part, suppresses a heat resistance, and further fixes the atomization tip 735 and the metal pin 734 as the heat transfer connection member together. Here, the atomization tip 735 may be fixed to the metal pin 734 as the heat transfer connection member by pressing and the like, in order to reduce the heat resistance.

The metal pin 734 as the heat transfer connection member is, for example, formed as a cylinder of about 10 mm in diameter and about 15 mm in length, and is preferably a high heat conductive member of aluminum, copper, or the like having a large heat capacity equal to or more than 50 times and preferably equal to or more than 100 times that of the atomization tip 735 of about 1 mm in diameter and about 5 mm in length. To efficiently conduct cold heat from one end to the other end of the metal pin 734 as the heat transfer connection member by heat conduction, it is desirable that the heat insulator covers a circumference of the metal pin 734.

Furthermore, since the metal pin 734 needs to conduct cool temperature heat in the heat insulator for thermally insulating the storage compartment from the cooler 712 or the air path, it is desirable that the metal pin 734 has a length equal to or more than 5 mm and preferably equal to or more than 10 mm. Note, however, that a length equal to or more than 30 mm reduces effectiveness.

When the electrostatic atomization apparatus 731 placed in the storage compartment is in a high humidity environment, this humidity may affect the metal pin 734 as the heat transfer connection member. Accordingly, the metal pin 734 as the heat transfer connection member is preferably made of a metal material that is resistant to corrosion and rust, or a material that has been coated or surface-treated by, for example, alumite.

In this embodiment, the metal pin 734 is shaped as a cylinder. This being so, when fitting the metal pin 734 into the depression 711a of the heat insulator 752, the metal pin 734 can be press-fit while rotating the electrostatic atomization apparatus 731 even in the case where a fitting dimension is slightly tight. This enables the metal pin 734 to be attached with less clearance. Alternatively, the metal pin 734 may be shaped as a rectangular parallelepiped or a regular polyhedron. Such polygonal shapes allow for easier positioning than the cylinder, so that the atomization apparatus can be put in a proper position.

Furthermore, the atomization tip 735 is attached on a central axis of the metal pin 734. Accordingly, when attaching the metal pin 734, a distance between the atomization tip 735 and a counter electrode 736 can be kept constant even though the electrostatic atomization apparatus 731 is rotated. Hence, a stable discharge distance can be ensured.

The metal pin 734 as the heat transfer connection member is fixed to the external case 737, where the metal pin 734 as the heat transfer connection member itself protrudes from the external case 737. The counter electrode 736 shaped like a circular doughnut plate is installed in a position facing the atomization tip 735 on the storage compartment side, so as to have the constant distance from the tip 735 of the atomization electrode. The spray port 732 is formed on a further extension from the atomization tip 735.

Discharge by high voltage application occurs in the vicinity of the atomization tip 735 for mist spray, which raises a possibility that the tip 735 of the atomization electrode wears out. The refrigerator 700 is typically intended to operate over a long period of 10 years or more. Therefore, a strong surface treatment needs to be performed on the surface of the atomization tip 735 to ensure a wear resistance. For example, the use of nickel plating, gold plating, or platinum plating is desirable. In addition, the electrical connection part between the atomization tip 735 and the voltage application unit 733 is made by swaging, pressing, and the like, and the periphery of the electrical connection part is molded with a resin such as an epoxy resin. By doing so, leakage, unusual heat generation, and the like caused by poor attachment of the atomization tip 735 and the electrical connection part and the like can be prevented, with it being possible to ensure safety. Moreover, material deterioration and the like due to moisture entry can be suppressed, so that component reliability can be improved.

Furthermore, the voltage application unit 733 is formed near the atomization unit 739. A negative potential side of the voltage application unit 733 generating a high-voltage potential difference is electrically connected to the atomization tip 735, and a positive potential side of the voltage application unit 733 is electrically connected to the counter electrode 736.

The counter electrode 736 is made of, for example, stainless steel. Long-term reliability needs to be ensured for the counter electrode 736. In particular, to prevent foreign substance adhesion and contamination, it is desirable to perform a surface treatment such as platinum plating on the counter electrode 736.

The voltage application unit 733 communicates with and is controlled by a control unit 746 of the refrigerator main body, and switches the high voltage on or off according to an input signal from the refrigerator 700 or the electrostatic atomization apparatus 731.

The voltage application unit 733 is placed in the electrostatic atomization apparatus 731 and so is present in a low temperature and high humidity atmosphere in the storage compartment. Accordingly, a molding material or a coating material for moisture prevention is applied to a board surface of the voltage application unit 733.

However, in the case such as where the voltage application unit is placed in a high temperature part outside the storage compartment, where the high voltage application is substantially constantly in operation, or where the storage compartment is low in humidity, the coating material can be omitted.

A heater 754 which is a resistance heating element such as a chip resistor is integrally formed with the electrostatic atomization apparatus 731 at an end 734b on the projection 734a side of the metal pin 734 as the heat transfer connection member near the atomization unit 739, as a heating unit for adjusting the temperature of the metal pin 734 as the heat transfer connection member included in the electrostatic atomization apparatus 731 and preventing excessive dew condensation or freezing of a peripheral part including the atomization electrode as the atomization tip 735. The heater 754 is separated from the air path 741 by the heat insulator 752 as a heat relaxation member, so as not to be directly affected by heat from the air path 741.

Moreover, a temperature detection unit such as a thermistor 812 is provided on a part of the metal pin 734 as the heat transfer connection member that is closer to the atomization tip 735, in order to detect the temperature of the tip 735 of the atomization electrode.

The metal pin 734 as the heat transfer connection member is fixed to the external case 737, where the metal pin 734 itself has the projection 734a that protrudes from the external case 737. The projection 734a of the metal pin 734 is located opposite to the atomization tip 735, and fits into a deepest depression 711b that is deeper than the depression 711a of the back partition wall 711.

Thus, the deepest depression 711b deeper than the depression 711a is formed on the back of the metal pin 734 as the heat transfer connection member, so that this part of the heat insulator 752 on the air path 741 side is thinner than other parts in the partition wall 711 on the back of the refrigerator compartment 704. The thinner heat insulator 752 serves as the heat relaxation member, and the metal pin 734 is cooled by cool air or warm air from the back via the heat insulator 752 as the heat relaxation member.

Here, the cool air generated in the cooling compartment 710 is used to cool the metal pin 734 as the heat transfer connection member, and the metal pin 734 is formed of a metal piece having excellent heat conductivity. Accordingly, the cooling unit can perform necessary cooling just by heat conduction from the air path through which the cool air generated by the cooler 712 flows. Moreover, the heating unit heats the metal pin 734 as the heat transfer connection member using, as a heating source, the warm air generated during a defrosting operation of the refrigerator 700 and the heater 754 as the resistance heating element, and also controls the heater 754 as the resistance heating element by varying an input or a duty factor according to a detected temperature of the temperature detection unit such as the thermistor 812 provided for detecting the temperature of the tip 735 of the atomization electrode. In this way, the peripheral part including the atomization electrode as the atomization tip 735 can be prevented from excessive dew condensation or freezing, and also the amount of dew condensation supplied to the atomization electrode as the atomization tip 735 can be adjusted, so that stable atomization can be achieved.

Since the adjustment unit can be provided by such a simple structure, a highly reliable atomization unit with a low incidence of troubles can be realized. Moreover, the metal pin 734 as the heat transfer connection member and the atomization tip 735 can be cooled by using the cooling source of the refrigeration cycle, which contributes to energy-efficient atomization.

The metal pin 734 as the heat transfer connection member in this embodiment is shaped to have the projection 734a on the opposite side to the atomization tip 735. This being so, in the atomization unit 739, the end 734b on the projection 734a side is closest to the cooling unit. Therefore, the metal pin 734 is cooled by the adjustment unit, from the end 734b farthest from the atomization tip 735.

Moreover, the heater 754 as the resistance heating element such as a chip resistor is integrally formed with the electrostatic atomization apparatus 731 at the end 734b on the projection 734a side of the metal pin 734 as the heat transfer connection member near the atomization unit 739, as the heating unit for preventing excessive dew condensation or freezing of the peripheral part including the atomization electrode as the atomization tip 735. Furthermore, the temperature detection unit such as the thermistor 812 is provided on a part of the metal pin 734 as the heat transfer connection member closer to the atomization tip 735, in order to detect the temperature of the tip 735 of the atomization electrode. This suppresses a temperature fluctuation of the metal pin 734 as an atomization electrode cooling unit in a refrigeration cycle state (temperature control state) of the refrigerator 700, so that the peripheral part including the atomization electrode as the atomization tip 735 can be prevented from excessive dew condensation or freezing, and also the amount of dew condensation supplied to the atomization electrode as the atomization tip 735 can be adjusted. Hence, more stable atomization can be achieved.

Though the heat insulator 752 as the heat relaxation member covers at least the cooling unit side part of the metal pin 734 in this example, it is preferable that the heat insulator 752 covers the entire surface of the projection 734a of the metal pin 734. In such a case, the entry of heat in a transverse direction orthogonal to a longitudinal direction of the metal pin 734 can be reduced. Since heat transfer is performed in the longitudinal direction from the end 734b on the projection 734a side, the metal pin 734 is cooled by the adjustment unit from the end 734b farthest from the atomization tip 735.

The refrigerator in the first embodiment of the present invention also has a holding member that is included in the storage compartment and grounded to a reference potential part, and the voltage application unit 733 generates a potential difference between the atomization tip 735 and the holding member.

An operation and working of the refrigerator having the above-mentioned structure are described below.

An operation of the refrigeration cycle is described first. The refrigeration cycle is activated by a signal from a control unit according to a set temperature inside the refrigerator, as a result of which a cooling operation is performed. A high temperature and high pressure refrigerant discharged by an operation of the compressor 709 is condensed into liquid to some extent by a condenser (not shown), is further condensed into liquid without causing dew condensation of the main body of the refrigerator 700 while passing through a refrigerant pipe (not shown) and the like disposed on the side and back surfaces of the main body of the refrigerator 700 and in a front opening of the main body of the refrigerator 700, and reaches a capillary (not shown). Subsequently, the refrigerant is reduced in pressure in the capillary while undergoing heat exchange with a suction pipe (not shown) leading to the compressor 709 to thereby become a low temperature and low pressure liquid refrigerant, and reaches the cooler 712. Here, the low temperature and low pressure liquid refrigerant undergoes heat exchange with the air in each storage compartment by an operation of the cooling fan 713, as a result of which the refrigerant in the cooler 712 evaporates. Hence, the cool air for cooling each storage compartment is generated in the cooling compartment 710. The low temperature cool air from the cooling fan 713 is branched into the refrigerator compartment 704, the switch compartment 705, the ice compartment 706, the vegetable compartment 707, and the freezer compartment 708 using air paths and dampers, and cools each storage compartment to a desired temperature zone. A circulation air path for the refrigerator compartment 704 is such that cool air of about -15°C to -25°C generated in the cooling compartment 710 passes through the cooling fan 713 and a damper (not shown) and is discharged from the refrigerator compartment discharge port 724 formed between the storage trays 728 to thereby cool the refrigerator compartment 704 to the set temperature (1°C to 5°C), and then returns to the cooler 712 from the refrigerator compartment suction port 726 formed above the lowermost storage tray 728.

Here, the case 729 is provided independent of the cooling air path in the refrigerator compartment 704 in which the air is discharged from the refrigerator compartment discharge port 724 to cool the refrigerator compartment 704 and then returns to the cooler 712 from the refrigerator compartment suction port 726. Accordingly, an environment different from the environment in the refrigerator compartment 704 can be maintained in the case 729.

Meanwhile, a circulation air path for the vegetable compartment 707 is such that, after cooling the refrigerator compartment 704, the air returning from the refrigerator compartment 704 is partly or wholly discharged into the vegetable compartment 707 from a vegetable compartment discharge port formed in a refrigerator compartment return air path for circulating the air to the cooler 712, flows around the upper storage container 720 and the lower storage container 719 for indirect cooling, and then returns to the cooler 712 from a vegetable compartment suction port. Temperature control of the vegetable compartment 707 is conducted by cool air allocation and an on/off operation of a partition wall heater (not shown) formed in the partition wall, as a result of which the vegetable compartment 707 is adjusted to 2°C to 7°C. Note that the vegetable compartment 707 usually does not have an inside temperature detection unit.

The depression is formed in the back partition wall 711 on the back of the refrigerator compartment 704, and the electrostatic atomization apparatus 731 is installed in the depression. There is the deepest depression 711b behind the metal pin 734 as the heat transfer connection member formed in the atomization unit 739, where the heat insulator is, for example, about 2 mm to 10 mm in thickness and the temperature is lower than in other parts. In the refrigerator 700 of this embodiment, such a thickness is appropriate for the heat relaxation member located between the metal pin 734 and the adjustment unit. Thus, the depression 711a is formed in the back partition wall 711, and the electrostatic atomization apparatus 731 having the protruding projection 734a of the metal pin 734 is fit into the deepest depression 711b on a backmost side of the depression 711a.

Cool air of about -15°C to -25°C generated by the cooler 712 and blown by the cooling fan 713 according to the operation of the refrigeration cycle flows in the air path 741 behind the metal pin 734 as the heat transfer cooling member, as a result of which the metal pin 734 is cooled to, for example, about -5°C to -15°C by heat conduction using this cool air of the freezing temperature zone as a cooling source, via the surface of the air path 741. Since the metal pin 734 is a good heat conductive member, the metal pin 734 transmits cold heat extremely easily, so that the atomization tip 735 fixed to the metal pin 734 is also cooled to about -5°C to -15°C via the metal pin 734.

Here, even though the refrigerator compartment 704 is typically in a low humidity environment, the temperature in the refrigerator compartment 704 is 1°C to 5°C. Accordingly, the atomization electrode as the atomization tip 735 with the metal pin 734 drops to a dew point temperature or below, and as a result water is generated and water droplets adhere to the atomization electrode including its tip 735.

Though not shown, by installing an inside temperature detection unit, an inside humidity detection unit, and the like in the storage compartment, the dew point can be precisely calculated by a predetermined computation according to a change in storage compartment environment.

The voltage application unit 733 applies a high voltage (for example, 4 kV to 10 kV) between the atomization tip 735 to which the water droplets adhere and the counter electrode 736, where the atomization tip 735 is on a negative voltage side and the counter electrode 736 is on a positive voltage side. This causes corona discharge to occur between the electrodes. The water droplets at the tip 735 of the atomization electrode are finely divided by electrostatic energy. Furthermore, since the liquid droplets are electrically charged, a nano-level fine mist carrying an invisible charge of a several nm level, accompanied by ozone, OH radicals, and so on, is generated by Rayleigh fission. The voltage applied between the electrodes is an extremely high voltage of 4 kV to 10 kV. However, a discharge current value at this time is at a several µA level, and therefore an input is extremely low, about 0.5 W to 1.5 W. Hence, there is little influence on the inside temperature.

In detail, suppose the atomization tip 735 is on a reference potential side (0 V) and the counter electrode 736 is on a high voltage side (+7 kV). Dew condensation water adhering to the tip 735 of the atomization electrode is attracted to the tip 735 of the atomization electrode and forms an approximate conical shape called a Taylor cone, reducing the distance to the counter electrode 736. As a result, an air insulation layer is broken down, and discharge starts. At this time, the dew condensation water is electrically charged, and also an electrostatic force generated on the surfaces of the liquid droplets exceeds a surface tension, so that fine particles are generated. Since the counter electrode 736 is on the positive side, the charged fine mist is attracted to the counter electrode 736, and the fine particles are further ultra-finely divided by Rayleigh fission. Thus, the nano-level fine mist carrying an invisible charge of a several nm level containing radicals is attracted to the counter electrode 736, and sprayed toward the storage compartment by its inertial force.

Note that, when there is no water on the atomization tip 735, the discharge distance increases and the air insulation layer cannot be broken down, and therefore no discharge phenomenon takes place. Moreover, when there is too much water because of excessive dew condensation, electrostatic energy for finely dividing water droplets cannot exceed a surface tension, and therefore no discharge phenomenon takes place. Hence, no current flows between the atomization tip 735 and the counter electrode 736.

In the refrigerator 700, when the temperature of the cooler 712 begins to drop, that is, when the operation of the refrigeration cycle starts, the cooling of the refrigerator compartment 704 starts, too. At this time, cool air flows into the refrigerator compartment 704, creating a dry state. Accordingly, the atomization tip 735 tends to dry.

Next, when a refrigerator compartment damper (not shown) is closed, the refrigerator compartment discharge air temperature rises, and so the refrigerator compartment 704 and the vegetable compartment 707 increase in temperature and humidity. During this time, since the cool air in the cooling compartment 710 gradually decreases in temperature, the metal pin 734 is further cooled, and dew condensation is more likely to occur on the atomization tip 735 of the atomization unit 739 disposed in the refrigerator compartment 704 which has shifted to a high humidity environment. When liquid droplets grow at the tip 735 of the atomization electrode and the distance between the tip of the liquid droplets and the counter electrode 736 becomes a predetermined distance, the air insulation layer is broken down, the discharge phenomenon begins, and a fine mist is sprayed from the tip 735 of the atomization electrode. After this, the compressor 709 is stopped and also the cooling fan 713 is stopped. As a result, the metal pin 734 increases in temperature, but the atomization unit 739 remains in a high humidity atmosphere. Moreover, the metal pin 734 as the heat transfer connection member has a large heat capacity and so does not have a rapid temperature fluctuation, that is, the metal pin 734 functions as the so-called cool storage. Accordingly, the atomization continues.

When the operation of the compressor 709 starts again, the refrigerator compartment damper (not shown) is opened, and cool air begins to be conveyed to each storage compartment by the cooling fan 713. The storage compartment shifts to a low humidity state, and so the atomization unit 739 also enters a low humidity state. As a result, the atomization tip 735 becomes dry, and the liquid droplets at the atomization tip 735 decrease or disappear.

Moreover, the metal pin 734 as the heat transfer connection member is heated by using, as a heating source, the heater 754 as the resistance heating element provided at the end 734b on the projection 734a side of the metal pin 734 as the heat transfer connection member near the atomization unit 739. Further, the heater 754 as the resistance heating element is controlled by varying an input or a duty factor according to a detected temperature of the temperature detection unit such as the thermistor 812 provided in order to detect the temperature of the tip 735 of the atomization electrode. This suppresses a temperature fluctuation of the metal pin 734 as the atomization electrode cooling unit in a refrigeration cycle state (temperature control state) of the refrigerator 700, so that the peripheral part including the atomization electrode as the atomization tip 735 can be prevented from excessive dew condensation or freezing, and also the amount of dew condensation supplied to the atomization electrode as the atomization tip 735 can be adjusted. Hence, stable atomization can be achieved.

During normal cooling of the refrigerator 700, while periodically repeating such a cycle, the heater 754 as the resistance heating element is controlled by varying an input or a duty factor according to a detected temperature of the temperature detection unit such as the thermistor 812. By doing so, the liquid droplets at the atomization electrode tip 735 are adjusted within a fixed range, with it being possible to achieve more stable atomization.

In addition, by exercising phase control of the input of the heater 754 as the resistance heating element, fine control can be carried out, allowing for more optimum temperature control.

During defrosting for melting and removing frost or ice adhering to the cooler 712, the temperature of the cooler 712 exceeds 0°C. At this time, the air path 741 behind the electrostatic atomization apparatus 731 also increases in temperature. This temperature increase causes the temperature of the metal pin 734 to rise, and also the temperature of the atomization tip 735 to rise. As a result, dew condensation water adhering to the tip 735 evaporates, and the atomization electrode dries.

Since the defrosting heater has a property of being switched off as the temperature of the cooler rises to some extent, there is an advantage that the atomization tip 735 and the metal pin 734 as the heat transfer connection member can be reliably increased in temperature within an appropriate range without excessively increasing in temperature of the atomization tip 735 and the metal pin 734 as the heat transfer connection member. Besides, by controlling the heater 754 as the resistance heating element through a variation in input or duty factor according to a detected temperature of the temperature detection unit such as the thermistor 812, more stable temperature control can be achieved.

Here, it is also possible to reset (dry) the dew condensation state of the tip 735 of the atomization electrode by periodically increasing the input or the duty factor of the heater 754 as the resistance heating element, for preventing excessive dew condensation or freezing.

Though the heating unit includes not only the defrosting heater but also the metal pin heater 754 in this embodiment, the heating unit of the adjustment unit may be composed of only the defrosting heater, without including the metal pin heater 754. Even when excessive dew condensation occurs, by heating the atomization electrode as the atomization tip 735 via the metal pin 734 as the heat transfer connection member in accordance with the timing of defrosting the cooler 712 in the above manner, excessive water droplets can be easily removed, with there being no need for a particular structure. Thus, by using the defrosting heater provided in the refrigeration cycle without using a particular heater as the adjustment unit, the need for any particular apparatus and power can be obviated. This enables the mist spray to be performed while saving materials and energy. Moreover, it is possible to deal with the case of defrosting the cooler 712, which further contributes to improved reliability.

When an actual usage state of the refrigerator 700 is taken into consideration, since the state of humidity and the amount of humidification in the storage compartment vary depending on a use environment, a door opening/closing operation, and a food storage state, excessive dew condensation can be expected to occur on the atomization electrode as the atomization tip 735. In some cases, such liquid droplets that cover the entire atomization tip 735 may be formed, as a result of which an electrostatic force by discharge cannot exceed a surface tension and atomization becomes impossible. In view of this, during an opening operation of the refrigerator compartment damper, the atomization tip 735 is heated by energizing the metal pin heater 754 as the heating unit, in addition to dehumidification by cool air. This accelerates evaporation of the adhering water droplets to thereby prevent excessive dew condensation, so that atomization can be performed continuously and stably. Moreover, quality deterioration by water dripping on the back partition wall 711 and the like caused by growth of liquid droplets due to excessive dew condensation can be prevented.

Thus, the atomization tip 735 repeats dew condensation and drying and intermittently performs mist spray, through the use of the refrigeration cycle of the refrigerator 700. In doing so, the amount of water at the atomization electrode tip 735 is adjusted to prevent excessive dew condensation, thereby achieving continuous atomization.

Moreover, by cooling or heating the metal pin 734 as the heat transfer connection member instead of directly cooling or heating the atomization tip 735, the atomization tip 735 can be indirectly adjusted in temperature. Here, since the heat transfer connection member 734 has a larger heat capacity than the atomization tip 735, the atomization tip 735 can be adjusted in temperature while alleviating a direct significant influence of a temperature change of the adjustment unit on the atomization tip 735. Therefore, a load fluctuation of the atomization tip 735 can be suppressed, with it being possible to realize mist spray of a stable spray amount.

Besides, the counter electrode 736 is disposed at a position facing the atomization tip 735, and the voltage application unit 733 generates a high-voltage potential difference between the atomization tip 735 and the counter electrode 736 as a potential difference. This enables an electric field near the atomization tip 735 to be formed stably. As a result, an atomization phenomenon and a spray direction are determined, and so accuracy of a fine mist sprayed into the storage container can be more enhanced, which contributes to improved accuracy of the atomization unit 739. Hence, the electrostatic atomization apparatus 731 of high reliability can be provided.

In addition, the metal pin 734 as the heat transfer connection member is cooled or heated via the heat insulator 752 as the heat relaxation member. This achieves dual-structure indirect temperature change, that is, the atomization tip 735 is indirectly changed in temperature via the metal pin 734 and further via the heat insulator 752 as the heat relaxation member. In so doing, the atomization tip 735 can be kept from being cooled or heated excessively. When the temperature of the atomization tip 735 decreases by 1 K, a water generation speed of the tip 735 of the atomization electrode increases by about 10%. However, excessively cooling the atomization tip 735 causes a large amount of dew condensation, and an increase in load of the atomization unit 739 raises concern about an input increase in the electrostatic atomization apparatus 731 and an atomization failure of the atomization unit 739. According to the above-mentioned structure, on the other hand, such problems due to the load increase of the atomization unit 739 can be prevented. Since an appropriate dew condensation amount can be ensured, stable mist spray can be achieved with a low input.

Moreover, by attaching the atomization tip 735 on the central axis of the metal pin 734 as the heat transfer connection member, when attaching the metal pin 734 as the heat transfer connection member, the distance between the atomization tip 735 and the counter electrode 736 can be kept constant even though the electrostatic atomization apparatus 731 is rotated. Hence, a stable discharge distance can be ensured.

Furthermore, excessively heating the atomization tip 735 causes a sharp increase in storage compartment temperature around the voltage application unit 733 and the atomization unit 739, leading to problems such as an electrical component breakdown and a cooling failure due to a temperature increase of stored contents. However, such problems caused by the temperature increase of the atomization unit 739 can be prevented. Since an appropriate dew condensation amount can be ensured, stable mist spray can be achieved with a low input.

Moreover, by indirectly cooling the atomization tip 735 in the dual structure via the metal pin 734 as the heat transfer connection member and the heat relaxation member 752, a direct significant influence of a temperature change of the adjustment unit on the atomization tip 735 can be further alleviated. This suppresses a load fluctuation of the atomization tip 735, so that mist spray of a stable spray amount can be achieved.

Besides, the temperature adjustment of the metal pin 734 as the heat transfer connection member is performed by cool air generated in the cooling compartment 710 and by controlling, as a heating source, the heater 754 as the resistance heating element through a variation in input or duty factor according to a detected temperature of the temperature detection unit such as the thermistor 812. Here, the metal pin 734 as the heat transfer connection member is formed of a metal piece having excellent heat conductivity. Accordingly, the temperature adjustment unit can perform necessary cooling just by heat conduction from the air path through which the cool air generated by the cooler 112 flows, and also perform heating control accompanied by temperature detection.

Since the cooling unit can be made by such a simple structure, a highly reliable atomization unit with a low incidence of troubles can be realized. Moreover, the atomization electrode as the atomization tip 735 can be cooled via the metal pin 734 as the heat transfer connection member by using the cooling source of the refrigeration cycle, which contributes to energy-efficient atomization.

The atomization unit of this embodiment is shaped to have the projection 734a on the opposite side to the atomization tip 735, by the metal pin 734 as the heat transfer connection member. This being so, in the atomization unit 739, the end 734b on the projection 734a side is closest to the cooling unit. Therefore, the metal pin 734 is cooled by the cool air of the cooling unit, from the end 734b farthest from the atomization tip 735.

Likewise, the heater 754 as the resistance heating element which is the heating unit is situated at the end 734b on the projection 734a side in the atomization unit 739. This being so, the metal pin 734 as the heat transfer connection member is heated by the heater 754 as the resistance heating element which is the heating unit, from the end 734b farthest from the atomization tip 735.

Thus, the cooling unit and the heating unit which constitute the adjustment unit are both situated on the end 734b side farthest from the atomization tip 735 in the metal pin 734 as the heat transfer connection member. This further alleviates a direct significant influence of a temperature change of the adjustment unit on the atomization tip 735, with it being possible to realize stable mist spray with a smaller load fluctuation and adjust the temperature of the atomization electrode stably.

Moreover, the depression 711a is formed in a storage compartment side part of the back partition wall 711 to which the atomization unit 739 is attached, and the atomization unit 739 having the projection 734a is inserted into the deepest depression 711b deeper than the depression 711a. In this way, the heat insulator 752 constituting the partition wall of the storage compartment can be used as the heat relaxation member 752. Hence, the heat relaxation member 752 for properly cooling the atomization tip 735 can be provided by adjusting the thickness of the heat insulator, with there being no need to prepare a particular heat relaxation member. This contributes to a more simplified structure of the atomization unit 739.

In addition, by inserting the atomization unit 739 into the depression 711a and the metal pin 734 having the projection 734a into the deepest depression 711b, the atomization unit 739 can be securely attached to the partition wall 711 without looseness by the two-tier depression, and also a protuberance toward the refrigerator compartment 704 as the storage compartment can be prevented. Such an atomization unit 739 is difficult to reach by hand, so that safety can be improved.

Besides, the atomization unit 739 does not extend through and protrude out of the back partition wall 711 of the refrigerator compartment 704 as the storage compartment. Accordingly, an air path area is unaffected, and a decrease in cooling amount caused by an increased air path resistance can be prevented.

Moreover, the depression is formed in a part of the refrigerator compartment 704 and the atomization unit 739 is inserted into this depression, so that a storage capacity for storing vegetables, fruits, and other foods is unaffected. In addition, while reliably cooling the heat transfer connection member 734, a wall thickness enough for ensuring heat insulation properties is secured for other parts. This prevents dew condensation in the storage compartment, thereby enhancing reliability.

Additionally, the metal pin 734 as the heat transfer connection member has a certain level of heat capacity and is capable of lessening a response to heat conduction from the cooling air path, so that a temperature fluctuation of the atomization tip 735 can be suppressed. The metal pin 734 also functions as a cool storage member, thereby ensuring a dew condensation time for the atomization tip 735 and also preventing freezing. Furthermore, by combining the good heat conductive metal pin 734 and the heat insulator 752, the cold heat can be conducted favorably without loss. Besides, by suppressing a heat resistance at the connection part between the metal pin 734 and the atomization tip 735, temperature fluctuations of the atomization tip 735 and the metal pin 734 follow each other favorably. In addition, thermal bonding can be maintained for a long time because moisture cannot enter into the connection part.

In the case where the storage compartment is in a high humidity environment, this humidity may affect the metal pin 734. Accordingly, the metal pin 734 is made of a metal material that is resistant to corrosion and rust or a material that has been coated or surface-treated by, for example, alumite. This prevents rust and the like, suppresses an increase in surface heat resistance, and ensures stable heat conduction.

Further, nickel plating, gold plating, or platinum plating is used on the surface of the atomization tip 735, which enables the tip 735 of the atomization electrode to be kept from wearing due to discharge. Thus, the tip 735 of the atomization electrode can be maintained in shape, as a result of which spray can be performed over a long period of time and also a stable liquid droplet shape at the tip can be attained.

When the fine mist is sprayed from the atomization tip 735, an ion wind is generated. During this time, high humidity air newly flows into the atomization unit 739 from the moisture supply port 738. This allows the spray to be performed continuously.

The generated fine mist is made up of extremely small particles and so has high diffusivity. The fine mist is diffusively sprayed in the storage compartment according to natural convection in the storage compartment, so that the effect of the fine mist spreads throughout the storage compartment.

The sprayed fine mist is generated by high-voltage discharge, and so is negatively charged. Meanwhile, green leafy vegetables, fruits, and the like stored in the storage compartment tend to wilt more by transpiration or by transpiration during storage. Usually, some of vegetables and fruits stored in the vegetable compartment are in a rather wilted state as a result of transpiration on the way home from shopping or transpiration during storage, and these vegetables and fruits are positively charged. Accordingly, the atomized mist tends to gather on vegetable surfaces, thereby enhancing freshness preservation. Besides, many processed foods such as hams and sandwiches also tend to deteriorate as a result of drying. Since the storage compartment space becomes high in humidity by the atomized mist, such drying can be suppressed, enhancing freshness preservation.

The nano-level fine mist sufficiently contains radicals such as OH radicals, a small amount of ozone, and the like. Such a nano-level fine mist is effective in sterilization, antimicrobial activity, microbial elimination, and so on. The nano-level fine mist also has effects of stimulating increases in nutrient such as vitamin C through agricultural chemical removal and antioxidation by oxidative decomposition, and decomposing pollutants.

When there is no water on the atomization tip 735, the discharge distance increases and the air insulation layer cannot be broken down, and therefore no discharge phenomenon takes place. Moreover, when there is too much water because of excessive dew condensation, electrostatic energy for finely dividing water droplets cannot exceed a surface tension, and therefore no discharge phenomenon takes place. Hence, no current flows between the atomization tip 735 and the counter electrode 736. This phenomenon may be detected by the control unit 746 of the refrigerator 700 to control on/off of the high voltage of the voltage application unit 733.

In this embodiment, the voltage application unit 733 is installed at a position that has a possibility of becoming a relatively low temperature and high humidity position in the storage compartment. Accordingly, a dampproof and waterproof structure by a potting material or a coating material is employed for the voltage application unit 733 for circuit protection. However, in the case such as where the voltage application unit 733 is placed in a high temperature part outside the storage compartment, where the high voltage application is substantially constantly in operation, or where the storage compartment is low in humidity, the coating material can be omitted.

As the heating unit for preventing excessive dew condensation or freezing of the peripheral part including the atomization electrode as the atomization tip 735, the heater 754 as the resistance heating element such as a chip resistor is integrally formed with the electrostatic atomization apparatus 731 at the end 734b on the projection 734a side of the metal pin 734 as the heat transfer connection member near the atomization unit 739, and also separated from the air path 741 by the heat insulator 752. The heater 754 controls the temperature of the tip 735 of the atomization electrode, and adjusts the amount of dew condensation supplied to the atomization electrode as the atomization tip 735. By installing the electrostatic atomization apparatus 731 in the refrigerator 700, there is no need to provide a particular heat source, allowing the structure to be simplified.

Though the heater 754 as the resistance heating element is described as being installed at the end 734b on the projection 734a side of the metal pin 734 as the heat transfer connection member, the same advantages can be attained even when the heater 754 is installed in other manners such as by winding the heater 754 around the body of the metal pin 734.

Next, in FIG. 29, a discharge current monitor voltage value outputted from the electrostatic atomization apparatus 731 and an output signal from the atomization electrode temperature detection unit 812 are supplied to the control unit 746 of the main body of the refrigerator 700, to determine the operations of the voltage application unit 733 for applying the high voltage in the electrostatic atomization apparatus 731 and the heater 754 as the resistance heating element. For example, when the control unit 746 determines that the atomization electrode temperature detected by the atomization electrode temperature detection unit 812 is equal to or less than the dew point, the control unit 746 causes the voltage application unit 733 in the electrostatic atomization apparatus 731 to generate the high voltage. In the case where the atomization tip 735 is expected to be in an excessive dew condensation state because the atomization tip 735 is at such a temperature that can lead to freezing, the door opening/closing operation is frequently performed, and the refrigerator compartment 704 is extremely high in humidity, the heater 754 as the resistance heating element is energized to perform heating, thereby melting/evaporating dew condensation water adhering to the surface of the atomization tip 735 and thus adjusting the amount of water of the atomization tip 735.

By controlling the heater 754 as the resistance heating element through a variation in input or duty factor according to a detected temperature of the temperature detection unit such as the thermistor 812, more stable temperature control can be performed. It is also possible to reset (dry) the dew condensation state of the tip 735 of the atomization electrode by periodically increasing the input or the duty factor of the heater 754 as the resistance heating element, for preventing excessive dew condensation or freezing. Though the atomization electrode temperature detection unit 812 is used in this way, the temperature detection unit may be omitted in the case where a temperature behavior can be easily estimated from the refrigeration cycle of the refrigerator 700. Moreover, since the humidity in the storage compartment varies according to the behavior of the refrigerator compartment damper, the voltage application unit 733 may be switched on or off in conjunction with the refrigerator compartment damper.

The following describes a functional block diagram as an example of this embodiment shown in FIG. 30.

A discharge current monitor voltage value 811 outputted from the electrostatic atomization apparatus 731 and signals of the atomization electrode temperature detection unit 812 and the door opening/closing detection unit 813 are supplied to the control unit 746 of the main body of the refrigerator 700, to determine the operations of the voltage application unit 733 for applying the high voltage in the electrostatic atomization apparatus 731 and the metal pin heater 754. For example, when the control unit 746 determines that the atomization electrode temperature detected by the atomization electrode temperature detection unit 812 is equal to or less than the dew point, the control unit 746 causes the voltage application unit 733 in the electrostatic atomization apparatus 731 to generate the high voltage. In the case where the atomization tip 735 is expected to be in an excessive dew condensation state because the atomization tip 735 is at such a temperature that can lead to freezing, the door opening/closing operation is frequently performed, and the refrigerator compartment 704 is extremely high in humidity, the partition wall heater 754 or the metal pin heater 754 is energized to perform heating, thereby melting/evaporating dew condensation water adhering to the surface of the atomization tip 735 and thus adjusting the amount of water of the atomization tip 735.

Though the atomization electrode temperature detection unit 812 is used in this way, the temperature detection unit may be omitted in the case where it is easy to estimate a temperature behavior from the refrigeration cycle of the refrigerator 700. Moreover, since the humidity in the storage compartment varies according to the behavior of a refrigerator compartment damper 814, the voltage application unit 733 may be switched on or off in conjunction with the damper 814.

The following describes a control flow as an example of this embodiment shown in FIG. 31.

Atomization electrode temperature determination is performed to control the temperature of the atomization tip 735. An atomization electrode temperature adjustment mode begins in Step S850. When an atomization electrode temperature T_{f} is higher than a preprogrammed first value T₁ (for example, T₁ = 6°C) in step S851, it is determined that the atomization tip 735 is high in temperature and so does not have dew condensation or that the storage compartment is high in temperature. Control then moves to Step S852 where the high voltage generation of the electrostatic atomization apparatus 731 is stopped and the energization of the metal pin heater 754 or the like for heating the metal pin 734 is stopped. When the atomization electrode temperature T_{f} is lower than the preprogrammed first value T₁, control moves to Step S853. When the atomization electrode temperature T_{f} is higher than a preprogrammed second value T₂ (for example, T₂ = -6°C) in Step S853, it is determined that the atomization tip 735 is at a proper temperature. Control then moves to Step S854 where the high voltage generation of the electrostatic atomization apparatus 731 is activated but the unit for heating the metal pin 734 is not activated. When the atomization electrode temperature T_{f} is lower than the preprogrammed second value T₂, control moves to Step S855. When the atomization electrode temperature T_{f} is higher than a preprogrammed third value T₃ (for example, T₃ = -10°C) in Step S855, it is determined that the atomization tip 735 is in an excessively cooled state. Control then moves to Step S856 where, though the discharge of the atomization tip 735 is continued, the heating unit such as the metal pin heater 754 is activated for freezing prevention. When the atomization electrode temperature T_{f} is lower than the preprogrammed third value T₃ in Step S855, it is assumed that the atomization electrode is frozen. Accordingly, the discharge is stopped, and the heating unit such as the metal pin heater 754 is activated to heat the atomization tip 735 so as to increase in temperature, thereby melting frost or ice adhering to the atomization tip 735 with higher priority.

After Steps S852, S854, S856, and S857, control returns to the initial step after a predetermined time, and repeats the process to adjust the water amount of the atomization tip 735.

Here, the heater 754 as the resistance heating element may be operated to reduce a heating period and attain an energy saving effect.

Though on/off control is performed as the operation of controlling the heater 754 as the resistance heating element, fine control can be achieved by exercising phase control of the input of the heater 754 as the resistance heating element. This enables temperature control to be performed with a more optimum input.

As described above, in the first embodiment, the thermally insulated storage compartment and the electrostatic atomization apparatus that sprays a mist into the storage compartment are provided. The atomization unit includes the atomization electrode electrically connected to the voltage application unit for generating a high voltage, and the counter electrode disposed facing the atomization electrode. The resistance heating element as the temperature adjustment heat source for the atomization electrode tip and the temperature detection unit for detecting the temperature of the atomization electrode tip are integrally formed with the electrostatic atomization apparatus. By causing water in the air to build up dew condensation on the atomization electrode and to be sprayed as a mist into the storage compartment, the dew condensation is formed on the atomization electrode easily and reliably from a water vapor in the storage compartment. Moreover, by adjusting the water amount of the atomization electrode tip, corona discharge is induced between the atomization electrode and the counter electrode stably and continuously, as a result of which a nano-level fine mist is generated. The fine mist is sprayed to uniformly adhere to vegetables and fruits, processed foods such as hams and sandwiches, and so on, thereby suppressing transpiration from the vegetables and fruits and drying of the foods, and thus enhancing freshness preservation. The fine mist also penetrates into tissues via intercellular spaces, stomata, and the like on the surfaces of the vegetables and fruits, as a result of which water is supplied into wilted cells and the vegetables and fruits return to a fresh state.

Here, since the discharge is induced between the atomization electrode and the counter electrode, an electric field can be formed stably to determine a spray direction. This eases the spray of the fine mist into the storage container.

Moreover, ozone and OH radicals generated simultaneously with the mist contribute to enhanced effects of deodorization, removal of harmful substances from food surfaces, contamination prevention, and the like.

Besides, the mist can be directly sprayed over the stored foods to adhere to the food surfaces. This improves freshness preservation efficiency, and also further enhances the effects of deodorization, removal of harmful substances from food surfaces, contamination prevention, and the like.

Furthermore, the mist is sprayed by causing an excess water vapor in the storage compartment to build up dew condensation on the atomization electrode and water droplets to adhere to the atomization electrode. This makes it unnecessary to provide any of a defrost hose for supplying mist spray water, a purifying filter, a water supply path directly connected to tap water, a water storage tank, and so on. A water conveyance unit such as a pump or a capillary is not used, either. Hence, the fine mist can be supplied to the storage compartment by a simple structure, with there being no need for a complex mechanism.

Since the fine mist is supplied to the storage compartment stably by a simple structure, the possibility of troubles of the refrigerator can be significantly reduced. This enables the refrigerator to exhibit higher quality in addition to higher reliability.

Here, dew condensation water having no mineral compositions or impurities is used instead of tap water, so that deterioration in retentivity caused by water retainer deterioration or clogging in the case of using a water retainer can be prevented.

Further, the atomization performed here is not ultrasonic atomization by ultrasonic vibration, and so there is no concern that a piezoelectric element is broken due to a loss of water and its peripheral member is deformed. Since no water storage tank is needed and also the input is small, a temperature effect in the storage compartment is insignificant.

Besides, the atomization performed here is not ultrasonic atomization by ultrasonic vibration, with there being no need to take noise and vibration of resonance and the like associated with ultrasonic frequency oscillation into consideration.

In addition, the part accommodating the voltage application unit is also buried in the back partition wall and cooled, with it being possible to suppress a temperature increase of the board. This allows for a reduction in temperature effect in the storage compartment, and contributes to improved reliability of the board.

In this embodiment, the partition wall for thermally insulating the storage compartment is provided, and the electrostatic atomization apparatus is attached to the partition wall. By such installing the electrostatic atomization apparatus in the gap in the storage compartment, a reduction in storage capacity can be avoided. Additionally, the electrostatic atomization apparatus is difficult to reach by hand because it is attached to the back surface, which contributes to enhanced safety.

In this embodiment, the adjustment unit capable of adjusting the dew condensation amount of the atomization electrode tip by cooling and heating the atomization electrode in the electrostatic atomization apparatus is a metal pin made up of a metal piece having good heat conductivity, and the means for cooling and heating the metal piece is the heat conduction from the air path through which the cool air generated by the cooler flows and the heating unit such as the heater. By adjusting the wall thickness of the heat insulator and the input of the heater, it is possible to easily set the temperatures of the metal pin and the atomization electrode. In addition, frost formation and dew condensation of the external case and the like that lead to lower reliability can be prevented because leakage of cool air is suppressed by interposing the heat insulator and also because of the provision of the heating unit such as the heater.

In this embodiment, the depression is formed in a storage compartment side part of the back partition wall to which the electrostatic atomization apparatus is attached, and the metal piece as the water amount adjustment unit of the electrostatic atomization apparatus is inserted into this depression. Accordingly, the storage capacity for storing vegetables, fruits, and other foods is unaffected. In addition, a wall thickness enough for ensuring heat insulation properties is secured for parts other than the part in which the electrostatic atomization apparatus is attached. This prevents dew condensation in the case, thereby enhancing reliability.

In this embodiment, at least one air path for conveying cool air to the storage compartment or the cooler and the heat insulator thermally insulated so as to suppress a heat effect between the storage compartment and other air paths are provided in the partition wall for thermally insulating the cooler and the storage compartment. The unit for varying the temperature of the atomization electrode of the electrostatic atomization apparatus is the metal piece having good heat conductivity, and the unit for adjusting the temperature of the metal piece performs the adjustment using the cool air generated by the cooler and the heating unit such as the heater. In this way, the temperature of the atomization electrode can be adjusted reliably.

Furthermore, by providing the heating unit such as the heater as one of the water amount adjustment unit in order to prevent the atomization electrode tip from excessive dew condensation, the size and amount of the liquid droplets at the tip can be adjusted through the tip temperature control. This allows for stable spray, and also achieves an improvement in antimicrobial capacity.

Note that, though a small amount of ozone is generated together with the fine mist, an ozone concentration is not perceptible to human beings because the discharge current is extremely small and also the discharge is induced where the reference potential is 0 V and the counter electrode is on the positive side of +7 kV. Furthermore, the ozone concentration in the storage compartment can be adjusted by on/off operation control of the electrostatic atomization apparatus. By properly adjusting the ozone concentration, deterioration such as yellowing of vegetables due to excessive ozone can be prevented, and sterilization and antimicrobial activity on vegetable surfaces can be enhanced.

Though a high-voltage potential difference is generated between the atomization electrode on the reference potential side (0 V) and the counter electrode (+7 kV) in this embodiment, a high-voltage potential difference may be generated by setting the counter electrode on the reference potential side (0 V) and applying a potential (-7 kV) to the atomization electrode. In this case, the counter electrode closer to the storage compartment is on the reference potential side, and therefore an electric shock or the like can be avoided even when a person comes near the counter electrode. Moreover, in the case where the atomization electrode is at -7 kV, the counter electrode may be omitted by setting the storage compartment on the reference potential side.

Though the air path for cooling the metal pin is the freezer compartment discharge air path in this embodiment, the air path may instead be a low temperature air path such as a freezer compartment return air path or a discharge air path of the ice compartment. This expands an area in which the electrostatic atomization apparatus can be installed.

Though a resistance heating element such as a chip resistor is used as the heating source in this embodiment, it is also possible to use a typical sheathed heater, PTC heater, and the like. Moreover, the heating source may be attached to or wound around the body of the metal pin. Alternatively, the heating source may be disposed on the external case of the electrostatic atomization apparatus near the metal pin.

Though the cooling unit for cooling the metal pin as the heat transfer connection member is the air cooled using the cooling source generated in the refrigeration cycle of the refrigerator in this embodiment, it is also possible to utilize heat transmission from a cooling pipe that uses a cool temperature or cool air from the cooling source of the refrigerator. In such a case, by adjusting a temperature of the cooling pipe, the electrode cooling unit can be cooled at an arbitrary temperature. This eases temperature control when cooling the atomization electrode.

Though no water retainer is provided around the atomization electrode of the electrostatic atomization apparatus in this embodiment, a water retainer may be provided. In such a case, warm moisture entering when opening/closing the door or high humidity air generated during a defrosting operation can be effectively retained. This enables dew condensation water generated near the atomization electrode to be retained around the atomization electrode, with it being possible to timely supply the water to the atomization electrode. Even when the storage compartment is in a low humidity environment, the water can be supplied. The provision of the water retainer is not limited to around the atomization electrode, as the water retainer may be provided in the entire storage compartment or a part of the storage compartment and further in the entire case or a part of the case, thereby securing moisture.

Though the storage compartment in the refrigerator is the refrigerator compartment in this embodiment, the storage compartment may be any of the storage compartments of other temperature zones such as the vegetable compartment and the switch compartment. In such a case, various applications can be developed. Though the electrostatic atomization apparatus is disposed on the back of the case positioned at the lowermost part of the refrigerator compartment in this embodiment, the electrostatic atomization apparatus is not limited to this position. The electrostatic atomization apparatus may be disposed on the back of an upper part of the refrigerator compartment to thereby spray the mist throughout the refrigerator compartment.

Though the metal pin is used in this embodiment, this is not a limit for the present invention, as any good heat conductive member is applicable. For example, a high polymer material having high heat conductivity may be used. This benefits weight saving and processability, enabling an inexpensive structure to be provided.

### (Second Embodiment)

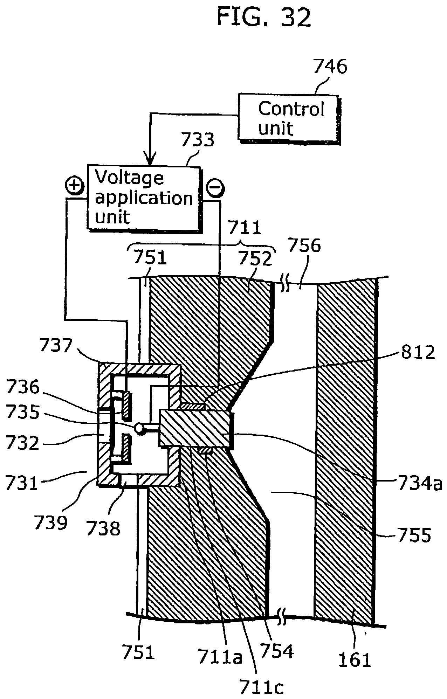

FIG. 32 is a detailed sectional view of an electrostatic atomization apparatus and its vicinity in a second embodiment of the present invention taken along line E-E in FIG. 28.

In this embodiment, detailed description is mainly given for parts that differ from the structure described in the first embodiment, with detailed description being omitted for parts that are the same as the structure described in the first embodiment or parts to which the same technical idea is applicable.

In the drawing, the back partition wall 711 includes the back partition wall surface 751 made of a resin such as ABS, and the heat insulator 752 made of styrene foam or the like. The depression 711a and a through part 711c are formed in a part of a storage compartment side wall surface of the back partition wall 711. By the metal pin 734 as the heat transfer connection member being inserted into the through part 711c, the electrostatic atomization apparatus 731 as the atomization apparatus which is the mist spray apparatus is installed.

Here, a part of the metal pin 734 as the heat transfer connection member passes through the heat insulator and is exposed to a part of an air path 756. A heat insulator depression 755 is formed in the air path 756 near the through part 711c on the back of the metal pin 734. Thus, the air path is partly widened.

The metal pin heater 754 which is a resistance heating element such as a chip resistor is formed near the atomization unit 739 of the electrostatic atomization apparatus 731, as the heating unit for adjusting the temperatures of the atomization electrode as the atomization tip 735 and the metal pin 734. The heater 754 is separated from the air path by the heat insulator 752 as the heat relaxation member, so as not to be directly affected by heat from the air path 756.

Moreover, the temperature detection unit such as the thermistor 812 is provided on a part of the metal pin 734 as the heat transfer connection member that is closer to the atomization tip 735, in order to detect the temperature of the tip 735 of the atomization electrode.

Note that the metal pin 734 is preferably made of a metal material that is resistant to corrosion and rust, or a material that has been coated or surface-treated by, for example, alumite.

An operation and working of the refrigerator having the above-mentioned structure are described below.

In a part of the back partition wall 711, the heat insulator 752 is smaller in wall thickness than other parts. In particular, the heat insulator 752 near the side wall of the metal pin 734 has a thickness of, for example, about 2 mm to 10 mm. Accordingly, the depression 711a is formed in the back partition wall 711, and the electrostatic atomization apparatus 731 is attached in this location.

The metal pin 734 is partly exposed to the air path 756 located behind. The metal pin 734 is adjusted to, for example, about -5°C to -15°C, by low temperature cool air generated by the cooler 712 and blown by the cooling fan 713 according to an operation of a refrigeration cycle, and the metal pin heater 754 or the like as the heating unit. Since the metal pin 734 is a good heat conductive member, the metal pin 734 transmits cold heat extremely easily, so that the atomization tip 735 is also adjusted to about -5°C to -15°C.

Here, the air path 756 is gradually widened toward the vicinity of the heat insulator depression 755, thereby decreasing an air path resistance. This allows an increased amount of air to be blown from the cooling fan 713. Hence, refrigeration cycle efficiency can be improved.

The voltage application unit 733 applies a high voltage (for example, 4 kV to 10 kV) between the atomization tip 735 to which water droplets adhere and the counter electrode 736, where the atomization tip 735 is on a negative voltage side and the counter electrode 736 is on a positive voltage side. This causes corona discharge to occur between the electrodes. The water droplets at the tip 735 of the atomization electrode are finely divided by electrostatic energy. Furthermore, since the liquid droplets are electrically charged, a nano-level fine mist carrying an invisible charge of a several nm level, accompanied by ozone, OH radicals, and so on, is generated by Rayleigh fission. The voltage applied between the electrodes is an extremely high voltage of 4 kV to 10 kV. However, a discharge current value at this time is at a several µA level, and therefore an input is extremely low, about 0.5 W to 1.5 W.

The generated fine mist is made up of extremely small particles and so has high diffusivity. The fine mist is diffusively sprayed in the storage compartment according to natural convection in the storage compartment, so that the effect of the fine mist spreads throughout the storage compartment.

The sprayed fine mist is generated by high-voltage discharge, and so is negatively charged. Meanwhile, green leafy vegetables, fruits, and the like stored in the storage compartment tend to wilt more by transpiration or by transpiration during storage. Usually, some of vegetables and fruits stored in the vegetable compartment are in a rather wilted state as a result of transpiration on the way home from shopping or transpiration during storage, and these vegetables and fruits are positively charged. Accordingly, the atomized mist tends to gather on vegetable surfaces, thereby enhancing freshness preservation. Besides, many processed foods such as hams and sandwiches also tend to deteriorate as a result of drying. Since the storage compartment space becomes high in humidity by the atomized mist, such drying can be suppressed, enhancing freshness preservation.

The nano-level fine mist sufficiently contains radicals such as OH radicals, a small amount of ozone, and the like. Such a nano-level fine mist is effective in sterilization, antimicrobial activity, microbial elimination, and so on. The nano-level fine mist also has effects of stimulating increases in nutrient such as vitamin C through agricultural chemical removal and antioxidation by oxidative decomposition, and decomposing pollutants.

As described above, in the second embodiment, the heat insulator is provided in the partition wall for thermally insulating the cooler and the storage compartment. The unit for adjusting the temperature of the atomization electrode (atomization tip) of the electrostatic atomization apparatus to the dew point or below is the metal pin 734 as the heat transfer connection member made up of a metal piece having good heat conductivity, and the adjustment unit for adjusting the temperature of the metal pin 734 includes the cooling unit of the cool air generated by the cooler and the heating unit disposed near the metal pin. In this way, the temperature of the atomization electrode can be adjusted reliably.

Though not shown, by installing an inside temperature detection unit, an inside humidity detection unit, and the like in the storage compartment, the dew point can be precisely calculated by a predetermined computation according to a change in storage compartment environment.

In the second embodiment, the depression is formed in a storage compartment side part of the partition wall to which the electrostatic atomization apparatus is attached, and the metal piece as the cooling unit of the electrostatic atomization apparatus is inserted in the depression. This allows the metal piece to be cooled reliably. In addition, because of a gradually widening air path area, the air path resistance can be lowered or made equal, so that a decrease in cooling amount can be prevented. Furthermore, the temperature of the atomization electrode can be adjusted easily, on the basis of an exposed surface area of the metal pin to the air path and a heater input.

Though the metal pin is disposed in the depression of the air path in this embodiment, the depression need not be formed in the air path when the metal pin can attain a proper temperature. In this case, the air path can be processed easily.

### (Third Embodiment)

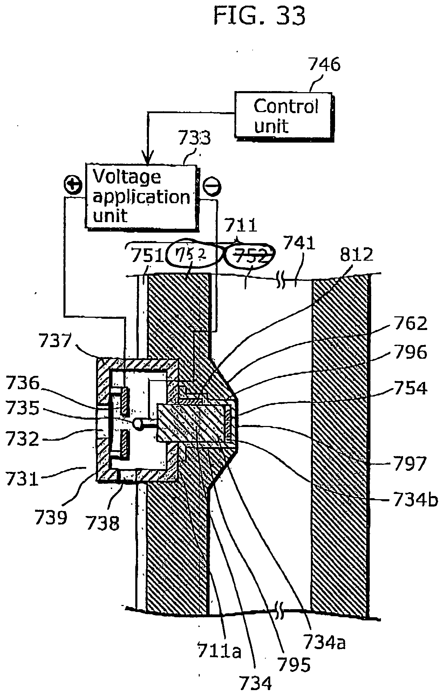

FIG. 33 is a detailed sectional view of an electrostatic atomization apparatus and its vicinity in a third embodiment of the present invention taken along line E-E in FIG. 28.

In this embodiment, detailed description is given only for parts that differ from the structures described in the first and second embodiments, with description being omitted for parts that are the same as the structures described in the first and second embodiments or parts to which the same technical ideas are applicable.

In the drawing, the back partition wall 711 includes the back partition wall surface 751 made of a resin such as ABS and the heat insulator 752 made of styrene foam or the like for ensuring heat insulation between the refrigerator compartment 704 and the air path 741. Here, the depression 711a is formed in a part of a storage compartment side wall surface of the back partition wall 711 so as to be lower in temperature than other parts, and the electrostatic atomization apparatus 731 as the mist spray apparatus is installed in the depression 711a.

The through part 795 is formed behind the depression 711a, and the projection 734a of the metal pin 734 as the heat transfer connection member is placed in the through part 795.

In the case where the through part 795 in which the metal pin 734 as the heat transfer connection member is provided is formed as in this embodiment, in molding of styrene foam or the like, the heat insulating wall decreases in rigidity, which raises a possibility of problems such as a crack and a hole caused by insufficient strength or defective molding. Thus, there is concern about quality deterioration.

In view of this, in this embodiment, the heat insulator near the through part 795 is provided with a protrusion 762, thereby enhancing rigidity around the through part 795 when compared with a flat part, and further enhancing rigidity by securing the wall thickness of the heat insulator. In addition, by forming the protrusion 762, the metal pin can be cooled both from its back and its side.

When the metal pin 734 is directly placed in the air path, there is a possibility of excessive cooling that may cause an excessive amount of dew condensation or freezing of the atomization tip 735. To suppress an increase in air path resistance, the protrusion 762 is shaped like a cone.

Moreover, the through part 795 as a through hole is formed in the heat insulator near the back of the metal pin 734. The metal pin 734 is inserted in the through part 795, and a metal pin cover 796 is provided around the metal pin 734, thereby ensuring heat insulation.

Though not shown, a cushioning material may be provided between the through part 795 and the metal pin cover 796 to ensure sealability.

Furthermore, though not shown, tape or the like may be attached to an opening 797 of the hole to block cool air.

The metal pin heater 754 which is a resistance heating element such as a chip resistor is formed near the atomization unit 739 of the electrostatic atomization apparatus 731, as the heating unit for adjusting the temperatures of the atomization electrode as the atomization tip 735 and the metal pin 734. The heater 754 is separated from the air path 741 by the heat insulator 752 as the heat relaxation member, so as not to be directly affected by heat from the air path 741. The heater 754 is situated between the metal pin 734 and the metal pin cover 796.

Moreover, the temperature detection unit such as the thermistor 812 is provided on a part of the metal pin 734 as the heat transfer connection member that is closer to the atomization tip 735 so as to be situated between the metal pin 734 and the metal pin cover 796, in order to detect the temperature of the tip 735 of the atomization electrode.

An operation and working of the refrigerator having the above-mentioned structure are described below.

The metal pin 734 as the heat transfer connection member is cooled via the metal pin cover 796. This achieves dual-structure indirect cooling, that is, the atomization tip 735 is indirectly cooled via the metal pin 734 and further via the metal pin cover 796 as the heat relaxation member. In so doing, the atomization tip 735 can be kept from being cooled excessively. Excessively cooling the atomization tip 735 causes a large amount of dew condensation, and an increase in load of the atomization unit 739 raises concern about an increase in input of the electrostatic atomization apparatus 731 and an atomization failure of the atomization unit 739 due to freezing and the like. According to the above-mentioned structure, however, such problems due to the load increase of the atomization unit 739 can be prevented. Since an appropriate dew condensation amount can be ensured, stable mist spray can be achieved with a low input.

Moreover, by indirectly cooling the atomization tip 735 in the dual structure via the heat transfer connection member and the heat relaxation member, a direct significant influence of a temperature change of the cooling unit on the atomization electrode can be further alleviated. This suppresses a load fluctuation of the atomization electrode, so that mist spray of a stable spray amount can be achieved.

Besides, the cool air generated in the cooling compartment 710 is used to cool the metal pin 734 as the heat transfer connection member, and the metal pin 734 is formed of a metal piece having excellent heat conductivity. Accordingly, the cooling unit can perform necessary cooling just by heat conduction from the air path through which the cool air generated by the cooler 712 flows.

The metal pin 734 as the heat transfer connection member in this embodiment is shaped to have the projection 734a on the opposite side to the atomization electrode. This being so, in the atomization unit, the end 734b on the projection 734a side is closest to the cooling unit. Therefore, the metal pin 734 is cooled by the cool air as the cooling unit, from the end 734b farthest from the atomization tip 735.

Thus, in this embodiment, the protrusion 762 is formed on the heat insulator near the through part 795, thereby enhancing rigidity around the through part 795. Even in such a case, the surface area for heat conduction can be increased because the metal pin 734 can be cooled both from its back and its side. Hence, the rigidity around the metal pin 734 can be enhanced without a decrease in cooling efficiency of the metal pin 734.

Moreover, by shaping the protrusion 762 to be sloped in a conical shape, the cool air flows along the outer periphery of the protrusion 762 that is curved with respect to the cool air flow direction, so that an increase in air path resistance can be suppressed. Besides, by uniformly cooling the metal pin 734 from the outer periphery of the side wall, the metal pin 734 can be cooled evenly, as a result of which the atomization tip 735 can be cooled efficiently via the metal pin 734.

In addition, the through part 795 as a hole is formed only in one part of the heat insulator 152 behind the metal pin 734, with there being no thin walled part. This eases molding of styrene foam, and prevents problems such as a breakage during assembly.

Furthermore, according to the structure of this embodiment, the back surface part of the metal pin cover 796 in contact with the cooling unit (low temperature cool air) serves as the heat relaxation member. Since a heat relaxation state of the heat relaxation member can be adjusted by changing in thickness of the part of the metal pin cover 796 in contact with the cool air, it is possible to easily change a cooling state of the metal pin. For example, this structure can be applied to refrigerators of various storage capacities, by changing the thickness of the metal pin cover 796 according to a corresponding cooling load.

Besides, there is no clearance between the metal pin cover 796 and the through part 795 and also the opening 797 of the through part 795 is sealed by tape or the like to block the cool air, so that there is no communicating part and the low temperature cool air does not leak into the storage compartment. Accordingly, the storage compartment and its peripheral components can be protected from dew condensation, low temperature anomalies, and so on.

The cooling by the cooling unit is performed from the end 734b which is a part of the metal pin 734 as the heat transfer connection member farthest from the atomization tip 735. In doing so, after the large heat capacity of the metal pin 734 is cooled, the atomization tip 735 is cooled by the metal pin 734. This further alleviates a direct significant influence of a temperature change of the cooling unit on the atomization tip 735, with it being possible to realize stable mist spray with a smaller load fluctuation.

The generated fine mist is made up of extremely small particles and so has high diffusivity. The fine mist is diffusively sprayed in the storage compartment according to natural convection in the storage compartment, so that the effect of the fine mist spreads throughout the storage compartment.

The sprayed fine mist is generated by high-voltage discharge, and so is negatively charged. Meanwhile, green leafy vegetables, fruits, and the like stored in the storage compartment tend to wilt more by transpiration or by transpiration during storage. Usually, some of vegetables and fruits stored in the vegetable compartment are in a rather wilted state as a result of transpiration on the way home from shopping or transpiration during storage, and these vegetables and fruits are positively charged. Accordingly, the atomized mist tends to gather on vegetable surfaces, thereby enhancing freshness preservation. Besides, many processed foods such as hams and sandwiches also tend to deteriorate as a result of drying. Since the storage compartment space becomes high in humidity by the atomized mist, such drying can be suppressed, enhancing freshness preservation.

The nano-level fine mist sufficiently contains radicals such as OH radicals, a small amount of ozone, and the like. Such a nano-level fine mist is effective in sterilization, antimicrobial activity, microbial elimination, and so on. The nano-level fine mist also has effects of stimulating increases in nutrient such as vitamin C through agricultural chemical removal and antioxidation by oxidative decomposition, and decomposing pollutants.

As described above, in the third embodiment, regarding the structure of the metal pin as the projection of the atomization unit, the through part 795 as the through hole is formed in the heat insulator, the metal pin is inserted into the through part, and the metal pin cover is provided around the metal pin. This eases the molding of the heat insulator, while ensuring the cooling capacity for the metal pin.

Moreover, by covering the side and back of the metal pin with the integrally formed metal pin cover 796, it is possible to effectively prevent the cool air from the air path 741 situated at the back from entering around the metal pin.

Though no cushioning material is provided around the metal pin in the third embodiment, a cushioning material may be provided. This allows for close contact between the hole and the metal pin cover, with it being possible to prevent cool air leakage.

Though a shield such as tape is not disposed at the opening of the hole in the third embodiment, a shield may be disposed. This makes it possible to further prevent cool air leakage.

Though the air path for cooling the metal pin is the freezer compartment discharge air path in the third embodiment, the air path may instead be a low temperature air path such as a freezer compartment return air path or an ice compartment discharge air path. This expands an area in which the electrostatic atomization apparatus can be installed.

Though the cooling unit for cooling the metal pin as the heat transfer connection member is the air cooled using the cooling source generated in the refrigeration cycle of the refrigerator in the third embodiment, it is also possible to utilize heat transmission from a cooling pipe that uses a cool temperature or cool air from the cooling source of the refrigerator. In such a case, by adjusting a temperature of the cooling pipe, the metal pin can be cooled at an arbitrary temperature. This eases temperature control when cooling the atomization electrode.

In this embodiment, the cooling unit for cooling the metal pin as the heat transfer connection member may use a Peltier element that utilizes a Peltier effect as an auxiliary component. In such a case, the temperature of the tip of the atomization electrode can be controlled very finely by a voltage supplied to the Peltier element.

Though no cushioning material is used between the external case of the electrostatic atomization apparatus and the depression of the heat insulator in this embodiment, a cushioning material such as urethane foam may be disposed on the external case of the electrostatic atomization apparatus or the depression of the heat insulator, in order to prevent the entry of moisture into the metal pin and suppress rattling. In so doing, moisture can be kept from entering into the metal pin, and dew condensation on the heat insulator can be prevented.

### (Fourth Embodiment)

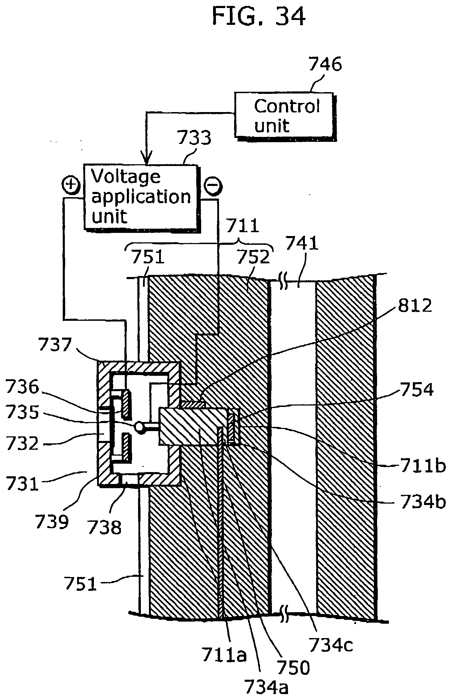

FIG. 34 is a detailed sectional view of an electrostatic atomization apparatus and its vicinity in a fourth embodiment of the present invention taken along line E-E in FIG. 28.

In this embodiment, detailed description is given only for parts that differ from the structures described in the first to third embodiments, with description being omitted for parts that are the same as the structures described in the first to third embodiments or parts to which the same technical ideas are applicable.

The back partition wall 711 of the refrigerator compartment 704 includes the back partition wall surface 751 made of a resin such as ABS and the heat insulator 752 made of styrene foam or the like for ensuring the heat insulation of isolating the air path 741 and the refrigerator compartment 704 from each other. The depression 711a is formed in a part of a storage compartment side wall surface of the back partition wall 711 so as to be lower in temperature than other parts, and the electrostatic atomization apparatus 731 as the atomization apparatus which is the mist spray apparatus is installed in the depression 711a.

The electrostatic atomization apparatus 731 as the atomization apparatus is mainly composed of the atomization unit 739, the voltage application unit 733, and the external case 737. The spray port 732 and the moisture supply port 738 are each formed in a part of the external case 737.

The heater 754 which is a resistance heating element such as a chip resistor is integrally formed with the electrostatic atomization apparatus 731 on the end 734b of the projection 734a side of the metal pin 734 as the heat transfer connection member near the atomization unit 739, as a heating unit for adjusting the temperature of the metal pin 734 as the heat transfer connection member included in the electrostatic atomization apparatus 731 and preventing excessive dew condensation or freezing of a peripheral part including the atomization electrode as the atomization tip 735. The heater 754 is separated from the air path 741 by the heat insulator 752 as the heat relaxation member, so as not to be directly affected by heat from the air path 741.

Moreover, the temperature detection unit such as the thermistor 812 is provided on a part of the metal pin 734 as the heat transfer connection member that is closer to the atomization tip 735, in order to detect the temperature of the tip 735 of the atomization electrode.

The metal pin 734 as the heat transfer connection member is fixed to the external case 737, where the metal pin 734 itself has the projection 734a that protrudes from the external case 737. The projection 734a of the metal pin 734 is located opposite to the atomization tip 735, and fits into the deepest depression 711b that is deeper than the depression 711a of the back partition wall 711.

Thus, the deepest depression 711b deeper than the depression 711a is formed on the back of the metal pin 734 as the heat transfer connection member, so that this part of the heat insulator 752 on the air path 741 side is thinner than other parts in the partition wall 711 on the back of the refrigerator compartment 704. The thinner heat insulator 752 serves as the heat relaxation member, and the metal pin 734 is cooled by cool air or warm air from the back via the heat insulator 752 as the heat relaxation member.

Furthermore, a fitting hole 734c is formed in the metal pin 734, and a heat pipe 750 as a cold heat conveyance unit is installed in the fitting hole 734c. In the installation, the heat pipe 750 and the fitting hole 734c are joined so as to reduce a contact heat resistance therebetween. In detail, the heat pipe 750 is fit into the fitting hole 734c via epoxy or a heat diffusion compound without leaving a gap. Pressing, soldering, or the like is employed to fix the heat pipe 750.

The heat pipe 750 is a metal pipe having a capillary structure on its inner wall. The inside of the heat pipe 750 is under vacuum, where a small amount of water, hydrochlorofluorocarbon, or the like is enclosed. When one end of the heat pipe 750 is brought into contact with a heat source and heated or cooled, a liquid inside the heat pipe 750 evaporates. At this time, heat is taken in as latent heat (vaporization heat). The heat moves at high speed (approximately at a sonic speed), and then is cooled and returns to a liquid, emitting heat (heat dissipation by condensed latent heat). The liquid returns to the original position by passing through the capillary structure (or by gravitation). Thus, the heat can be continuously moved with high efficiency.

The heat pipe 750 is covered with the heat insulator 752 as the heat relaxation member, so as not to be directly affected by cool air from the air path 741. Here, a through hole is formed in the heat insulator 752, and the heat pipe 750 is inserted in the through hole. Note that, to facilitate assembly, the heat insulator 752 may be divided and arranged so as to sandwich the heat pipe 750.

The end of the heat pipe 750 opposite to the metal pin 734 is thermally attached to the cooler 712 directly or indirectly.

In this way, heat can be conveyed from a lowest cold heat source in the refrigeration cycle from the cooler 712, with it being possible to attain an improved cooling speed of the metal pin 734 and the atomization tip 735.

In the cooling of the metal pin 734 as the heat transfer connection member, the cool air generated in the cooling compartment 710 is used, too. Hence, as the cooling unit, it is possible to not only use the heat conduction from the air path through which the cool air generated by the cooler 712 flows, but also directly use the heat at or in the vicinity of the cooler 712.

Note that, since there is a possibility of electric corrosion due to dew condensation at a connection part between the heat pipe 750 and the metal pin 734 or the cooler 712, it is desirable to use the same metal.

Moreover, the heating unit heats the metal pin 734 as the heat transfer connection member using, as a heating source, the warm air generated during a defrosting operation of the refrigerator 700 and the heater 754 as the resistance heating element, and also controls the heater 754 as the resistance heating element by varying an input or a duty factor according to a detected temperature of the temperature detection unit such as the thermistor 812 provided for detecting the temperature of the tip 735 of the atomization electrode. In this way, the peripheral part including the atomization electrode as the atomization tip 735 can be prevented from excessive dew condensation or freezing, and also the amount of dew condensation supplied to the atomization electrode as the atomization tip 735 can be adjusted, so that stable atomization can be achieved.

Since the adjustment unit can be provided by such a simple structure, a highly reliable atomization unit with a low incidence of troubles can be realized. Moreover, the metal pin 734 as the heat transfer connection member and the atomization tip 735 can be cooled by two cooling methods using the cooling source of the refrigeration cycle, enabling energy-efficient atomization to be performed efficiently.

Though the fitting hole is formed in the metal pin in the fourth embodiment, a through hole may be formed to install the heat pipe in consideration of processability of the metal pin.

Though the end of the heat pipe opposite to the metal pin 734 is thermally attached to the cooler 712 directly or indirectly in the fourth embodiment, the end may be exposed to cool air immediately after heat exchange in the cooler 712, that is, the end may be exposed in the cooling compartment 710. Moreover, the end may be exposed in a cooling air path of a storage compartment that is directly below the refrigerator compartment and has a lower temperature zone than the refrigerator compartment temperature zone, such as a cooling air path of the ice compartment or the switch compartment set to a temperature other than the refrigeration temperature. This allows the heat pipe to be shortened, resulting in miniaturization, cost reduction, and improved assembly.

Though the metal pin heater provided for the temperature adjustment of the atomization electrode is positioned on the metal pin heater side in the fourth embodiment, the metal pin heater may be attached to the end of the heat pipe opposite to the metal pin 734. This enables the temperature adjustment to be performed on a heat conveyance upstream side, so that the temperature adjustment can be performed efficiently while reducing the input to the heater.

Though a resistance heating element such as a chip resistor is used as the metal pin heater in the fourth embodiment, it is also possible to use a typical sheathed heater, PTC heater, and the like. Moreover, the metal pin heater may be attached to or wound around the body of the metal pin or the heat pipe.

### (Fifth Embodiment)

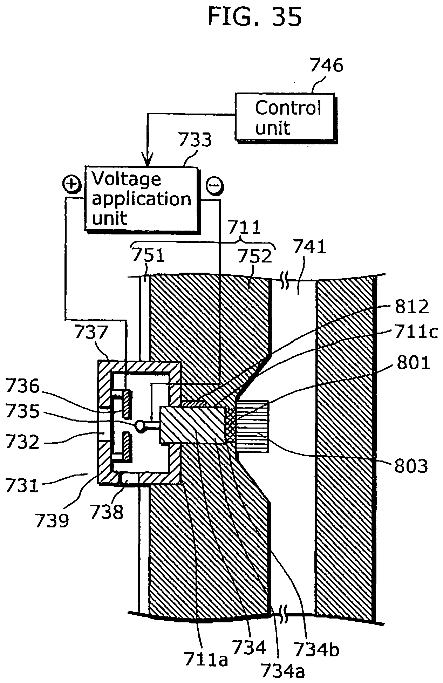

FIG. 35 is a detailed sectional view of an electrostatic atomization apparatus and its vicinity in a fifth embodiment of the present invention taken along line E-E in FIG. 28.

In this embodiment, detailed description is mainly given for parts that differ from the structures described in the first to fourth embodiments, with detailed description being omitted for parts that are the same as the structures described in the first to fourth embodiments or parts to which the same technical idea is applicable.

In the drawing, the back partition wall 711 includes the back partition wall surface 751 made of a resin such as ABS and the heat insulator 752 made of styrene foam or the like for ensuring heat insulation. The depression 711a is formed in a part of a storage compartment side wall surface of the back partition wall 711 so as to be lower in temperature than other parts, and the electrostatic atomization apparatus 731 as the atomization apparatus which is the mist spray apparatus is installed in the depression 711a.

The electrostatic atomization apparatus 731 is mainly composed of the atomization unit 739, the voltage application unit 733, and the external case 737. The spray port 732 and the moisture supply port 738 are each formed in a part of the external case 737. The atomization electrode as the atomization tip 735 is disposed in the atomization unit 739, and fixed by the metal pin 734 made of a good heat conductive material.

The through part 711c is formed in the heat insulator 752, and the metal pin 734 and a Peltier module 801 including a Peltier element for adjusting the temperature of the atomization tip 735 are inserted in the through part 711c. The end 734b of the metal pin 734 and one side of the Peltier module 801 are thermally connected. The other side of the Peltier module 801 is thermally connected to an air path side heat conductive member 803 made of a good heat conductive material.

An operation and working of the refrigerator having the above-mentioned structure are described below.

Cool air generated by the cooler 712 according to an operation of a refrigeration cycle is conveyed in the air path 741 behind the atomization tip 735. During this time, when a voltage is applied to the Peltier module 801 including the Peltier element, the atomization tip 735 can be adjusted to the dew point or below by a voltage application direction and an applied voltage value. For example, when the atomization tip 735 needs to be cooled, a voltage is applied where a heat absorption surface of the Peltier module 801 is on the atomization electrode side and a heat dissipation surface of the Peltier module 801 is on the air path side. When the atomization tip 735 needs to be heated, on the other hand, a voltage is applied where the heat absorption surface of the Peltier module 801 is on the air path side and the heat dissipation surface of the Peltier module 801 is on the atomization tip 735 side. In so doing, water can be timely secured at the tip 735 of the atomization electrode, as a result of which stable atomization can be performed.

As described above, in the fifth embodiment, by using the Peltier module 801 as the temperature adjustment unit of the atomization tip 735 of the electrostatic atomization apparatus 731, the temperature of the atomization tip 735 can be adjusted just by the voltage applied to the Peltier module 801. Moreover, both cooling and heating can be carried out simply by voltage inversion or the like, with there being no need to add a heater and the like.

In the fifth embodiment, extremely fine temperature control is possible through fine adjustment of the voltage applied to the Peltier module 801. This allows the amount of water at the tip 735 of the atomization electrode to be finely controlled.

In the fifth embodiment, the Peltier module serves as both the heating unit and the cooling unit. This makes it unnecessary to provide a particular heating unit, contributing to simplified components.

Note that, by providing the temperature detection unit 812 situated near the atomization unit 739 and further by providing a humidity sensor not shown in the fifth embodiment, more precise control becomes possible, and stable spray can be achieved.

Thus, the temperature of the atomization electrode can be adjusted just by the voltage applied to the Peltier element, so that the atomization electrode can be individually adjusted to an arbitrary temperature.

Moreover, both cooling and heating can be carried out simply by voltage inversion or the like, with there being no need to add a particular apparatus such as a heater as a cooling unit or a heating unit. Since both cooling and heating are performed by a simple structure and also temperature responsiveness is accelerated, the temperature can be arbitrarily adjusted with enhanced responsiveness of the water amount adjustment unit. This contributes to improved accuracy of the atomization unit.

### (Sixth Embodiment)

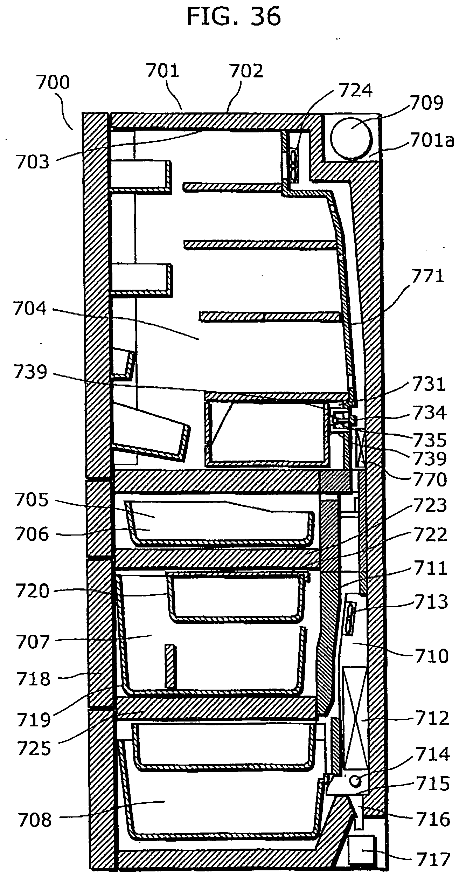

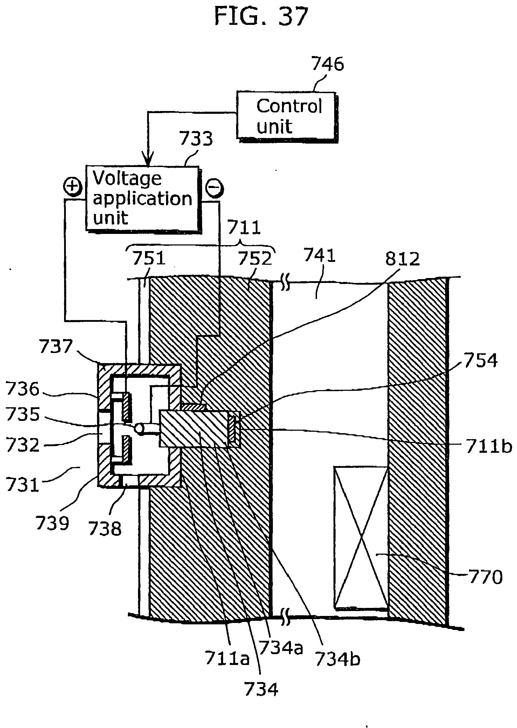

FIG. 36 is a longitudinal sectional view of a refrigerator in a sixth embodiment of the present invention. FIG. 37 is a detailed sectional view of an electrostatic atomization apparatus and its vicinity in the refrigerator in the sixth embodiment of the present invention taken along line E-E in FIG. 28.

In this embodiment, detailed description is mainly given for parts that differ from the structures described in the first to fifth embodiments, with detailed description being omitted for parts that are the same as the structures described in the first to fifth embodiments or parts to which the same technical idea is applicable.

In the drawing, the refrigerator 700 includes two coolers for cooling each storage compartment. One is the cooler 712 for freezing temperature zone storage compartments, and the other is a cooler 770 for refrigeration temperature zone storage compartments. These coolers are connected by a refrigerant pipe, but have independent cooling air paths.

An operation and working of the refrigerator having the above-mentioned structure are described below.

A high temperature and high pressure refrigerant discharged by an operation of the compressor 709 is condensed into liquid to some extent by a condenser (not shown), is further condensed into liquid without causing dew condensation of the main body of the refrigerator 700 while passing through a refrigerant pipe (not shown) and the like disposed on the side and back surfaces of the main body of the refrigerator 700 and in a front opening of the main body of the refrigerator 700, and reaches a capillary (not shown). Subsequently, the refrigerant is reduced in pressure in the capillary while undergoing heat exchange with a suction pipe (not shown) leading to the compressor 709 to thereby become a low temperature and low pressure liquid refrigerant, and reaches the cooler 712. Here, the low temperature and low pressure liquid refrigerant undergoes heat exchange with the air in each storage compartment by an operation of the cooling fan 713, as a result of which the refrigerant in the cooler 712 evaporates. Hence, cool air (-15°C to -25°C) for cooling each storage compartment is generated in the cooling compartment 710. The low temperature cool air from the cooling fan 713 is branched into the switch compartment 705, the ice compartment 706, and the freezer compartment 708 using air paths and dampers, and cools each storage compartment to a desired temperature zone. Meanwhile, the refrigerant flow path is switched or branched to the second cooler 770 by a flow path regulation valve (not shown) or the like. After this, an evaporation temperature of the cooler 770 is adjusted using an expansion valve (not shown) or the like capable of adjusting a pressure reduction amount, and the low temperature and low pressure liquid refrigerant undergoes heat exchange with the air in the refrigerator compartment 704 or the vegetable compartment 707 by an operation of a cooling fan 772, as a result of which the refrigerant in the cooler 770 evaporates. Hence, cool air (-15°C to -25°C) for cooling each storage compartment is generated.

The depression is formed in the back partition wall 711 on the back of the refrigerator compartment 704, and the electrostatic atomization apparatus 731 as the mist spray apparatus is installed in the depression. There is the deepest depression 711b behind the metal pin 734 as the heat transfer connection member formed in the atomization unit 739, where the heat insulator is, for example, about 2 mm to 10 mm in thickness and the temperature is lower than in other parts. In the refrigerator 700 of this embodiment, such a thickness is appropriate for the heat relaxation member located between the metal pin and the adjustment unit. Thus, the depression 711a is formed in the back partition wall 711, and the electrostatic atomization apparatus 731 having the protruding projection 734a of the metal pin 734 is fit into the deepest depression 711b on a backmost side of the depression 711a.

Cool air of about -15°C to -25°C generated by the cooler 712 and blown by the cooling fan 713 according to the operation of the refrigeration cycle flows in the air path 741 behind the metal pin 734 as the heat transfer cooling member, as a result of which the metal pin 734 is cooled to, for example, about -5°C to -15°C by heat conduction from the air path surface. Since the metal pin 734 is a good heat conductive member, the metal pin 734 transmits cold heat extremely easily, so that the atomization tip 735 fixed to the metal pin 734 is also cooled to about -5°C to -15°C via the metal pin 734.

Here, even though the refrigerator compartment 704 is typically in a low humidity environment, the atomization electrode as the atomization tip 735 decreases to the dew point or below, and as a result water is generated and water droplets adhere to the atomization electrode including its tip 735.

Though not shown, by installing an inside temperature detection unit, an inside humidity detection unit, and the like in the storage compartment, the dew point can be precisely calculated by a predetermined computation according to a change in storage compartment environment.

In the sixth embodiment, since the independent cooler is used for cooling the refrigerator compartment 704, a high humidity environment can be more easily obtained than in the first to fifth embodiments. This eases water collection, and allows for efficient mist spray.

Though a high humidity environment can be easily created, such an environment is also susceptible to bacteria propagation. However, extremely high reactive radicals contained in the fine mist in the present invention deliver antimicrobial activity, so that cleanness of the storage compartment space and the food itself can be improved.

### (Seventh Embodiment)

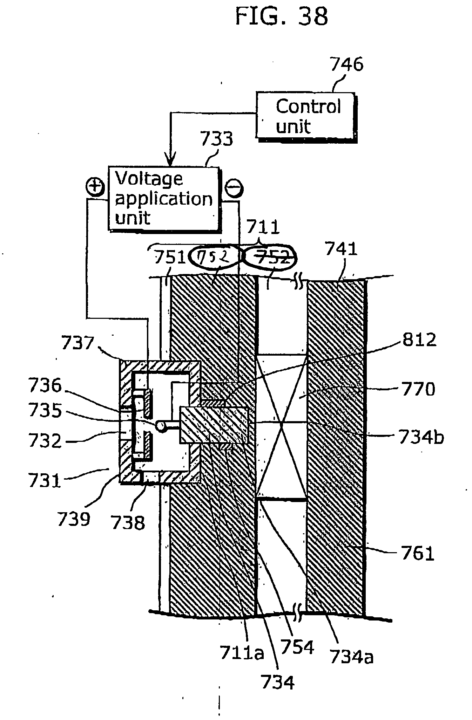

FIG. 38 is a detailed sectional view of an electrostatic atomization apparatus and its vicinity in a seventh embodiment of the present invention taken along line E-E in FIG. 28.

In this embodiment, detailed description is mainly given for parts that differ from the structures described in the first to sixth embodiments, with detailed description being omitted for parts that are the same as the structures described in the first to sixth embodiments or parts to which the same technical idea is applicable.

In the drawing, the electrostatic atomization apparatus 731 as the atomization apparatus which is the mist spray apparatus is mainly composed of the atomization unit 739, the voltage application unit 733, and the external case 737. The spray port 732 and the moisture supply port 738 are each formed in a part of the external case 737. The atomization electrode as the atomization tip 735 in the atomization unit 739 is fixed to the external case 737. The metal pin 734 as the heat transfer connection member is attached to the atomization tip 735, and the metal pin heater 754 as the heating unit for adjusting the temperature of the atomization tip 735 is formed in the vicinity of the metal pin 734. The counter electrode 736 shaped like a circular doughnut plate is installed in a position facing the atomization tip 735 on the storage compartment side, so as to have a constant distance from the tip 735 of the atomization electrode. The spray port 732 is formed on a further extension from the atomization tip 735.

The cooler 770 for cooling the storage compartment is set adjacent to the back of the electrostatic atomization apparatus 731, and the electrostatic atomization apparatus 731 is fixed in the depression 711a of the back partition wall 711.

An operation and working of the refrigerator having the above-mentioned structure are described below.

The cooler 770 is in a relatively low temperature state, and the atomization tip 735 decreases to the dew point or below by heat conduction from the cooler 770 and as a result dew condensation occurs at the tip 735 of the atomization electrode. This being the case, by applying a high voltage generated by the voltage application unit between the atomization tip 735 and the counter electrode 736, a fine mist is generated and sprayed into the refrigerator compartment 704.

As described above, in the seventh embodiment, the cooler 770 for cooling the storage compartment as the cooling unit is used as the temperature adjustment unit for causing dew condensation on the atomization tip (atomization electrode) 735 of the electrostatic atomization apparatus 731 as the atomization apparatus. In this way, the atomization tip (atomization electrode) 735 can be directly cooled by the cooler 770 which is the cooling source of the refrigerator 700, thereby enhancing temperature responsiveness.

Thus, the temperatures of the heat transfer connection member and the atomization tip 735 can be adjusted by the temperature adjustment unit through the use of the refrigeration cycle. Hence, the temperature adjustment of the atomization electrode can be performed more energy-efficiently.

### (Eighth Embodiment)

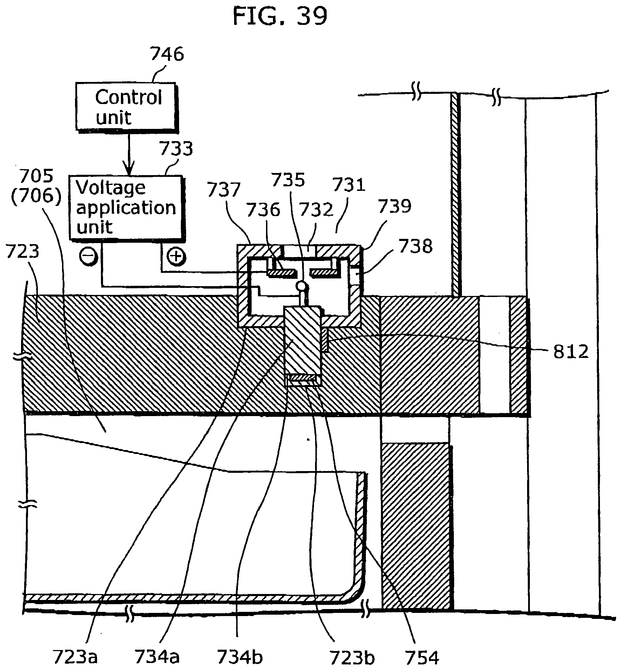

FIG. 39 is a detailed sectional view of an electrostatic atomization apparatus and its vicinity in an eighth embodiment of the present invention taken along line E-E in FIG. 28.

In this embodiment, detailed description is mainly given for parts that differ from the structures described in the first to seventh embodiments, with detailed description being omitted for parts that are the same as the structures described in the first to seventh embodiments or parts to which the same technical idea is applicable.

As shown in the drawing, the electrostatic atomization apparatus 731 as the atomization apparatus which is the mist spray apparatus is incorporated in the partition wall 723 that secures heat insulation in order to separate the temperature zone of the refrigerator compartment 704 from the temperature zones of the switch compartment 705 and the ice compartment 706. In particular, the heat insulator has a depression in a part corresponding to the metal pin 734 as the heat transfer connection member of the atomization unit 739. The metal pin heater 754 is formed in the vicinity of the metal pin 734.

An operation and working of the refrigerator having the above-mentioned structure are described below.

The partition wall 723 in which the electrostatic atomization apparatus 731 is installed needs to have such a thickness that allows the metal pin 734 to which the atomization electrode as the atomization tip 735 is fixed, to be cooled. Accordingly, the partition wall 723 has a smaller wall thickness in a depression 723a where the electrostatic atomization apparatus 731 is disposed, than in other parts. Further, the partition wall 723 has a smaller wall thickness in a deepest depression 723b where the metal pin 734 is held, than in the depression 723a. As a result, the metal pin 734 can be cooled by heat conduction from the ice compartment 706 which is relatively low in temperature, with it being possible to cool the atomization tip 735. When the temperature of the tip 735 of the atomization electrode drops to the dew point or below, a water vapor near the atomization tip 735 builds up dew condensation on the atomization tip 735, thereby reliably generating water droplets.

An outside air temperature variation or fast ice making may cause the temperature control of the ice compartment 106 to vary and lead to excessive cooling of the atomization tip 735. In view of this, the amount of water on the tip 735 of the atomization electrode is optimized by adjusting the temperature of the atomization tip 735 by the metal pin heater 754 disposed near the atomization tip 735.

Though not shown, by installing an inside temperature detection unit, an inside humidity detection unit, and the like in the storage compartment, the dew point can be precisely calculated by a predetermined computation according to a change in storage compartment environment.

The sprayed fine mist is generated by high-voltage discharge, and so is negatively charged. Meanwhile, green leafy vegetables, fruits, and the like stored in the storage compartment tend to wilt more by transpiration or by transpiration during storage. Usually, some of vegetables and fruits stored in the vegetable compartment are in a rather wilted state as a result of transpiration on the way home from shopping or transpiration during storage, and these vegetables and fruits are positively charged. Accordingly, the atomized mist tends to gather on vegetable surfaces, thereby enhancing freshness preservation. Besides, many processed foods such as hams and sandwiches also tend to deteriorate as a result of drying. Since the storage compartment space becomes high in humidity by the atomized mist, such drying can be suppressed, enhancing freshness preservation.

The nano-level fine mist sufficiently contains radicals such as OH radicals, a small amount of ozone, and the like. Such a nano-level fine mist is effective in sterilization, antimicrobial activity, microbial elimination, and so on. The nano-level fine mist also has effects of stimulating increases in nutrient such as vitamin C through agricultural chemical removal and antioxidation by oxidative decomposition, and decomposing pollutants.

As described above, in the eighth embodiment, the refrigerator main body has a plurality of storage compartments. The lower temperature storage compartment maintained at a lower temperature than the storage compartment including the atomization unit is provided on the bottom side of the storage compartment including the atomization unit, and the atomization unit is attached to the partition wall on the bottom side of the storage compartment including the atomization unit.

In this way, a member such as a refrigerant pipe or a pipe that utilizes cool air of the cooling compartment having a lowest temperature among air cooled using a cooling source generated in the refrigeration cycle of the refrigerator or utilizes heat conduction from the cool air can be set as the cooling unit. Since the cooling unit can be provided by such a simple structure, a highly reliable atomization unit with a low incidence of troubles can be realized. Moreover, the heat transfer connection member and the atomization electrode can be cooled by using the cooling source of the refrigeration cycle, which contributes to energy-efficient atomization.

Moreover, by attaching the atomization unit to the partition wall, the atomization unit can be positioned using the gap effectively without greatly bulging into the storage compartment. Hence, a reduction in storage capacity can be avoided. In addition, the atomization unit is difficult to reach by hand because it is attached to the back surface, which contributes to enhanced safety.

In this embodiment, not tap water supplied from outside but dew condensation water is used as makeup water. Since dew condensation water is free from mineral compositions and impurities, deterioration in water retentivity caused by deterioration or clogging of the tip of the atomization electrode can be prevented.

In this embodiment, the mist contains radicals, so that agricultural chemicals, wax, and the like adhering to the vegetable surfaces can be decomposed and removed with an extremely small amount of water. This benefits water conservation, and also achieves a low input.

A refrigerator useful for understanding the present invention includes: a heat-insulating main body; a storage compartment defined in the heat-insulating main body; and a mist spray apparatus that sprays a fine mist into the storage compartment, wherein the fine mist generated by the mist spray apparatus has a nano-size particle diameter and reduces microorganisms adhering to inside of the storage compartment and to vegetable surfaces, the microorganisms including molds, bacteria, yeasts, and viruses. According to this structure, the sprayed mist enters into fine depressions on the surfaces of vegetables and fruits, and removes microorganisms such as bacteria, molds, viruses, and the like adhering to the depressions by a synergetic effect of physical and chemical actions of the mist. Thus, microorganisms can be easily removed by a small amount of water. In addition, the mist is a nano-size fine mist, and so can be sprayed into the storage compartment uniformly.

Moreover, in the refrigerator useful for understanding the present invention, the mist spray apparatus generates the mist containing radicals. According to this structure, the radicals have an extremely high organic matter decomposition capacity, and so are capable of decomposing and eliminating almost all microorganisms living in a daily life environment.

Moreover, in the refrigerator useful for understanding the present invention, the mist spray apparatus includes a spray unit that sprays the mist according to an electrostatic atomization method. According to this structure, the mist is sprayed in a state where the radicals are covered with fine water, so that contact and reaction between unstable radicals and water or oxygen in the air are prevented, with it being possible to hold the radicals for a longer period and enhance a frequency of contact with microorganisms. Besides, the charged mist is sprayed and uniformly adheres to vegetables and fruits. This improves the mist adhesion ratio and benefits water conservation.

Moreover, the refrigerator useful for understanding the present invention includes: an electrostatic atomization apparatus including: an application electrode for applying a voltage; a counter electrode positioned facing the application electrode; and a voltage application unit that applies a high voltage between the application electrode and the counter electrode; a water collection plate on which water in air in the refrigerator forms dew condensation; and a cooling unit that cools the water collection plate, wherein the water collection plate is provided with a temperature adjustment unit. According to this structure, a water vapor in the storage compartment, a water vapor entering by door opening/closing, a water vapor evaporated from foods, and the like reliably build up dew condensation on the water collection plate to send water to the electrostatic atomization apparatus. An extremely small nano-size mist is then generated by the electrostatic atomization apparatus and directly sprayed over foods in the container. Hence, the inside of the container can be efficiently put in a high humidity state. This improves vegetable freshness preservation. Besides, by adding the effects of antimicrobial activity, microbial elimination, and sterilization by ozone, radicals, and negative ions generated when the mist is generated by the electrostatic atomization apparatus, the function of the vegetable compartment can be improved.

Moreover, in the refrigerator useful for understanding the present invention, a negative voltage is applied to the application electrode and a positive voltage is applied to the counter electrode. According to this structure, a negatively charged mist is sprayed and uniformly adheres to positively charged vegetables, fruits, and fungi floating in the air. This improves the mist adhesion ratio and benefits water conservation.

Moreover, the refrigerator useful for understanding the present invention includes a light source installed in the storage compartment, the light source including light of a blue light wavelength region. According to this structure, when microorganisms tend to decrease due to ozone and radicals generated from the electrostatic atomization apparatus, the microorganisms are killed by blue light. Hence, microorganism regrowth can be suppressed.

Furthermore, a refrigerator useful for understanding the present invention includes: a heat-insulated storage compartment; an atomization unit that sprays a mist into the storage compartment; and an atomization tip included in the atomization unit, the mist being sprayed from the atomization tip, wherein the atomization unit generates the mist that adheres to vegetables and fruits stored in the storage compartment to suppress low temperature damage.

According to this structure, mist particles are sprayed into the storage compartment and adhere to vegetable surfaces, thereby suppressing drying of the vegetable surfaces for moisture retention and also suppressing low temperature damage. Thus, freshness preservation can be improved. This enables a highly usable refrigerator with improved freshness preservation to be provided. In addition, the mist particles can be uniformly sprayed into the storage compartment by the atomization tip.

Moreover, in the refrigerator useful for understanding the present invention, the heat-insulated storage compartment is substantially sealed and has a mechanism of keeping a high humidity to prevent drying of the vegetables and fruits, and drying after the mist adheres to the vegetables and fruits is also prevented to suppress drying of the mist containing radicals, thereby suppressing the low temperature damage.

According to this structure, by spraying the mist particles containing radicals into the storage compartment, moisture retention of vegetables can be achieved and also an enzyme reaction can be suppressed. As a result, low temperature damage can be suppressed, with it being possible to improve freshness preservation. This enables a highly usable refrigerator with improved freshness preservation to be provided.

Moreover, in the refrigerator useful for understanding the present invention, the mist containing radicals adheres to skins of the vegetables and fruits, and the radicals penetrate from the skins and inhibit an enzyme reaction, thereby suppressing the low temperature damage.

According to this structure, by inhibiting an enzyme reaction of vegetables and fruits which is a direct cause of low temperature damage, low temperature damage of vegetables and fruits can be suppressed more reliably.

Moreover, in the refrigerator useful for understanding the present invention, the mist containing radicals adheres to skins of the vegetables and fruits and the radicals penetrate from the skins, thereby suppressing leakage of potassium ions.

According to this structure, leakage of potassium ions generated by low temperature damage can be suppressed, so that vegetables and fruits can be stored in a more fresh state. This enables a highly usable refrigerator with improved freshness preservation to be provided.

Moreover, in the refrigerator useful for understanding the present invention, the mist containing radicals sprayed into the storage compartment decomposes ethylene gas.

According to this structure, by decomposing ethylene gas that accelerates aging of vegetables and fruits, the vegetables and fruits can be stored in a more fresh state, and also discoloration by aging can be suppressed. Furthermore, since sprayed radicals suppress bacteria and viruses adhering to food surfaces, food cells are prevented from necrosis, and so ethylene gas generation can be suppressed. Therefore, yellowing due to aging can be prevented. This enables a highly usable refrigerator with improved freshness preservation in visual appearance as well to be provided.

Moreover, the refrigerator useful for understanding the present invention includes: the storage compartment that is heat-insulated; a section in the storage compartment, the section being set in a different environment from an environment of the storage compartment; an atomization unit that sprays the mist into the section; an atomization tip included in the atomization unit, the mist being sprayed from the atomization tip; a temperature adjustment unit that adjusts a temperature of the atomization tip; and a temperature detection unit that detects the temperature of the atomization tip, wherein the temperature adjustment unit adjusts the temperature of the atomization tip to a dew point or below, to cause water in air to form dew condensation at the atomization tip and the mist to be sprayed into the storage compartment.

By including the adjustment unit for preventing excessive dew condensation at the atomization tip, the size or amount of liquid droplets building up dew condensation on the atomization electrode can be adjusted. This produces a stable dew condensation state, with it being possible to perform mist spray stably. In addition, the atomization tip is kept from excessive dew condensation, which contributes to improved reliability of the atomization unit.

Moreover, by including the temperature detection unit for detecting the temperature of the atomization unit, the temperature of the atomization tip can be controlled individually via the electrode cooling member according to the detected temperature, regardless of an operation state (temperature control of each compartment) of the refrigerator. Thus, the temperature of the atomization tip can be controlled more efficiently while saving energy.

Accordingly, the amount of water to be atomized can be adjusted by a simple structure, without requiring a complex structure such as a defrost water hose and a purifying filter for supplying mist spray water, a dedicated tank and a water conveyance unit including its path, and a water supply path directly connected to tap water.

Besides, dew condensation can be reliably formed on the atomization electrode easily from an excessive water vapor in the storage compartment, while adjusting the amount of water. The fine mist generated as a result is sprayed and uniformly adheres to the surfaces of foods or vegetables and fruits, thereby suppressing drying of the foods and transpiration of the vegetables and fruits. This improves freshness preservation. In addition, since the storage compartment space can be maintained at a high humidity, unwrapped food storage is possible. Furthermore, the fine mist penetrates into tissues via intercellular spaces, stomata, and the like on the surfaces of the vegetables and fruits, as a result of which water is supplied into wilted cells and the vegetables and fruits return to a fresh state.

Moreover, though microorganisms tend to grow in a high humidity environment, the antimicrobial activity is simultaneously effected by radicals of extremely high reactivity contained in the fine mist. Therefore, cleanness of the storage compartment space and the foods themselves can be improved.

Moreover, in the refrigerator useful for understanding the present invention, the atomization unit includes a heat transfer connection member thermally connected to an atomization electrode which is the atomization tip, and the temperature adjustment unit indirectly adjusts the temperature of the atomization tip by cooling or heating the heat transfer connection member.

According to this structure, by combining the cooling unit and the heating unit, the temperature of the atomization tip can be adjusted easily. Hence, by adjusting the amount of water adhering to the atomization tip in an appropriate range, stable discharge occurs, as a result of which the mist spray can be performed stably. Further, excessive dew condensation on the atomization tip can be prevented, which contributes to improved reliability of the atomization unit. This enables a highly usable refrigerator with improved freshness preservation to be provided.

Even when low temperature liquid droplets remain on the atomization electrode tip, by increasing the temperature of the liquid by the heating unit, a surface tension of the liquid droplets can be decreased. This allows a fine mist to be generated by a lower voltage in high voltage application, so that energy efficiency can be enhanced.

Moreover, by cooling the heat transfer connection member instead of directly cooling the atomization tip, the atomization electrode can be cooled indirectly. Here, since the heat transfer connection member has a larger heat capacity than the atomization tip, the atomization tip can be adjusted in temperature while alleviating a direct significant influence of a temperature change of the adjustment unit on the atomization electrode. Therefore, a load fluctuation of the atomization tip can be suppressed, with it being possible to realize mist spray of a stable spray amount.

Furthermore, the temperature control of the atomization tip can be easily performed for preventing excessive dew condensation on the atomization tip, and the size or amount of liquid droplets building up dew condensation on the atomization tip can be adjusted. This allows for stable spray, thereby further contributing to improved reliability. In addition, since the temperature of the atomization tip can be individually adjusted, the atomization tip and the heat transfer connection member can be reliably cooled or heated in an appropriate range, without increasing the temperatures of the atomization tip and the heat transfer connection member more than necessary.

Moreover, in the refrigerator useful for understanding the present invention, the temperature adjustment unit that adjusts the temperature of the atomization tip includes a cooling unit and a heating unit.

According to this structure, by combining the cooling unit and the heating unit, the temperature of the atomization tip can be adjusted easily. Hence, by adjusting the amount of water adhering to the atomization tip in an appropriate range, stable discharge occurs, as a result of which the mist spray can be performed stably. Further, excessive dew condensation on the atomization tip can be prevented, which contributes to improved reliability of the atomization unit. This enables a highly usable refrigerator with improved freshness preservation to be provided.

Moreover, in the refrigerator useful for understanding the present invention, the cooling unit is a cooling source generated in a refrigeration cycle of the refrigerator, and the heating unit is a heater.

According to this structure, by effectively using the cooling source generated in the refrigeration cycle of the refrigerator, the fine mist can be supplied to the storage compartment by a simple structure, which contributes to improved reliability of the atomization unit. Besides, no apparatus and power for the cooling unit are necessary, so that the mist spray can be performed while saving materials and energy.

Furthermore, the atomization tip can be heated individually via the heat transfer connection member, regardless of an operation state (temperature control of each compartment) of the refrigerator. Hence, the temperature of the atomization tip can be adjusted more efficiently while saving energy.

In addition, the heating unit of the adjustment unit for preventing excessive dew condensation on the atomization tip is a heater, so that the temperature of the atomization tip can be controlled easily. Since the size or amount of liquid droplets building up dew condensation on the atomization tip can be adjusted, stable spray can be performed, which further contributes to improved reliability.

Moreover, in the refrigerator useful for understanding the present invention, a main body of the refrigerator includes a plurality of storage compartments and a cooling compartment that houses a cooler for cooling the plurality of storage compartments, and the atomization unit is attached to a partition wall of the storage compartment on a cooling compartment side.

According to this structure, a member such as a refrigerant pipe or a pipe that utilizes cool air of the cooling compartment having a lowest temperature among air cooled using a cooling source generated in the refrigeration cycle of the refrigerator or utilizes heat conduction from the cool air can be set as the cooling unit. Since the cooling unit can be provided by such a simple structure, a highly reliable atomization unit with a low incidence of troubles can be realized. Moreover, the heat transfer connection member and the atomization electrode can be cooled by using the cooling source of the refrigeration cycle, which contributes to energy-efficient atomization.

Besides, by attaching the atomization unit to the partition wall, the atomization unit can be positioned using the gap effectively without greatly bulging into the storage compartment. Hence, a reduction in storage capacity can be avoided. In addition, the atomization unit is difficult to reach by hand because it is attached to the back surface, which contributes to enhanced safety.

Moreover, in the refrigerator useful for understanding the present invention, a main body of the refrigerator includes a plurality of storage compartments, a lower temperature storage compartment kept at a lower temperature than the storage compartment provided with the atomization unit is situated on a bottom side of the storage compartment provided with the atomization unit, and the atomization unit is attached to a partition wall of the storage compartment provided with the atomization unit, on the bottom side.

According to this structure, in the case where a freezing temperature zone storage compartment such as the freezer compartment or the ice compartment is located below the storage compartment, by installing the atomization unit in the partition wall separating these storage compartments, the atomization electrode can be cooled via the heat transfer connection member of the atomization unit by the cooling source of the freezing temperature zone storage compartment, thereby forming dew condensation. Since the atomization unit can be provided by a simple structure with there being no need for a particular cooling apparatus, a highly reliable atomization unit with a low incidence of troubles can be realized.

In addition, since the spray can be performed from the back side at the bottom, spot atomization is possible to maximize the effect only for one area. Besides, since the mist is a fine mist, the mist is easily diffused in the storage compartment space even when atomized from the bottom.

Furthermore, the atomization unit is difficult to reach by hand. This contributes to improved safety.

Moreover, in the refrigerator useful for understanding the present invention, a main body of the refrigerator includes at least one air path for conveying cool air to a storage compartment or a cooling compartment, and a cooling unit uses cool air generated in the cooling compartment.

According to this structure, by cooling the heat transfer connection member and the atomization tip by indirect heat conduction using cool air, the atomization tip can be kept from excessive cooling. Excessively cooling the atomization tip causes a large amount of dew condensation, as a result of which an inputted liquid droplet surface area to the atomization unit increases due to a load increase of the atomization unit. This leads to an increase in surface tension, raising concern about an atomization failure of the atomization unit since fine particle division by an electrostatic force cannot be performed. According to the above-mentioned structure, however, such problems due to the load increase of the atomization unit can be avoided. Since an appropriate dew condensation amount can be ensured, stable mist spray can be achieved with a low input.

In addition, since the cooling unit can be provided by such a simple structure, a highly reliable atomization unit with a low incidence of troubles can be realized. Moreover, the heat transfer connection member and the atomization electrode can be cooled by using the cooling source of the refrigeration cycle, with it being possible to cause water droplets to build up dew condensation on the electrode to thereby perform atomization more energy-efficiently.

Moreover, in the refrigerator useful for understanding the present invention, the heating unit is a heater integrally formed with the atomization unit.

According to this structure, the heating unit of the adjustment unit for preventing excessive dew condensation on the atomization tip is a heater, so that the temperature of the atomization tip can be controlled easily. Since the size or amount of liquid droplets building up dew condensation on the atomization tip can be adjusted, stable spray can be performed, which further contributes to improved reliability.

Moreover, in the refrigerator useful for understanding the present invention, the temperature adjustment unit uses a heat pipe capable of conveying lower temperature heat in or near a cooler.

According to this structure, cool air generated in the cooling compartment having a lowest temperature among air cooled using a cooling source generated in the refrigeration cycle of the refrigerator or a heat source from the cooler itself or a member such as a refrigerant pipe can be heat-transferred by a heat pipe. Since the cooling unit can be provided by such a simple structure, a highly reliable atomization unit with a low incidence of troubles can be realized. In addition, the atomization electrode can be cooled via the electrode cooling member by using the cooling source of the refrigeration cycle, which contributes to energy-efficient atomization. The mist spray can be performed while saving materials and energy, with there being no need for any particular apparatus and power.

Moreover, in the refrigerator useful for understanding the present invention, the temperature adjustment unit uses a Peltier element.

According to this structure, the temperature of the atomization electrode can be adjusted just by the voltage applied to the Peltier element, so that the atomization electrode can be individually adjusted to an arbitrary temperature easily.

Besides, both cooling and heating can be carried out simply by input voltage inversion or the like, with there being no need to add a particular apparatus such as a heater as a cooling unit or a heating unit. Both cooling and heating are performed by a simple structure and also temperature responsiveness is accelerated, so that improved accuracy of the atomization unit can be attained.

Moreover, in the refrigerator useful for understanding the present invention, an atomization unit includes an atomization electrode, a counter electrode positioned facing the atomization electrode, and a voltage application unit that generates a high-voltage potential difference between the atomization electrode and the counter electrode.

According to this structure, an electric field near the atomization electrode can be formed stably. As a result, an atomization phenomenon and a spray direction are determined, and accuracy of a fine mist sprayed into the storage containers is enhanced, so that improved accuracy of the atomization unit can be attained.

Moreover, the refrigerator useful for understanding the present invention includes: the storage compartment; and a holding member installed in the storage compartment and grounded to a reference potential part, wherein the voltage application unit generates the potential difference between the atomization electrode and the holding member.

According to this structure, there is no need to particularly provide the counter electrode, because the potential difference from the atomization electrode can be created to spray the mist by providing the grounded holding member in a part of the storage compartment. In so doing, a stable electric field can be generated by a simpler structure, thereby enabling the mist to be sprayed stably from the atomization unit.

Besides, when the holding member is attached to the storage container side, the entire storage container is at the reference potential, and therefore the sprayed mist can be diffused throughout the storage container. Furthermore, electrostatic charges to surrounding objects can be prevented.

Moreover, the refrigerator useful for understanding the present invention includes: a spray unit that generates a mist of a first particle diameter and a mist of a second particle diameter different from the first particle diameter in the storage compartment; and a water supply unit that supplies a liquid to the spray unit. For example, by generating the mist of the first particle diameter and the mist of the second particle diameter different from the first particle diameter in the storage compartment, the mist of the first particle diameter can effect food freshness preservation, and the mist of the second particle diameter can effect food nutrient improvement and microbial elimination/agricultural chemical removal of the foods and the storage compartment. Additionally, generating the mist of the first particle diameter and the mist of the second particle diameter allows for uniform spray in the storage compartment.

Moreover, in the refrigerator useful for understanding the present invention, the first particle diameter is micro-size, and the second particle diameter is nano-size. The mist of the micro-size particle diameter makes it possible to ensure a spray amount necessary for food freshness preservation, whilst the mist of the nano-size particle diameter allows for uniform spray in the storage compartment and enters into even small depressions and projections in the foods and the storage compartment.

Moreover, in the refrigerator useful for understanding the present invention, the mist of the second particle diameter is an ionized mist. The micro-size mist can effect food freshness preservation, and the nano-size mist containing radicals can effect food nutrient improvement and microbial elimination/agricultural chemical removal of the foods and the storage compartment.

Moreover, in the refrigerator useful for understanding the present invention, the spray unit includes an electrostatic atomization apparatus that includes an application electrode for applying a voltage to a liquid, a counter electrode positioned facing the application electrode, and a voltage application unit that applies a high voltage between the application electrode and the counter electrode, and the electrostatic atomization apparatus generates the mist of the second particle diameter. The nano-size mist containing radicals and low-concentration ozone is generated by the electrostatic atomization method, thereby effecting food nutrient improvement and microbial elimination/agricultural chemical removal of the foods and the storage compartment.

Moreover, in the refrigerator useful for understanding the present invention, the spray unit is a device that simultaneously generates the mist of the first particle diameter and the mist of the second particle diameter. This makes it possible to simultaneously obtain both effects of the mist of the first particle diameter and the mist of the second particle diameter. Hence, the structure can be simplified and also reduced in size.

Moreover, in the refrigerator useful for understanding the present invention, the spray unit includes a first spray unit that generates the mist of the first particle diameter and a second spray unit that generates the mist of the second particle diameter. The first spray unit can effect food freshness preservation, and the second spray unit can effect food nutrient improvement and microbial elimination/agricultural chemical removal of the foods and the storage compartment.

### Industrial Applicability

As described above, the refrigerator according to the present invention can supply a fine mist to a storage compartment stably by a simple structure. Therefore, the present invention is applicable not only to a household or industrial refrigerator and a vegetable case, but also to a food cold chain, storehouse, and so on for vegetables and like. Moreover, the same technical idea can be used to a cooler such as an air conditioner. Furthermore, the technical idea is not limited to the cooler, but can be used so long as a space to which a mist is sprayed and a space in which a cooling pin is included have a significant temperature difference. For example, the present invention is applicable to various appliances such as a dish washer, a cloths washer, a rice cooker, a vacuum cleaner, and so on.

## Claims

1. A refrigerator (700) comprising:
a heat-insulated storage compartment (710),
a back partition wall (711) and a partition wall (723);
an atomization unit (739) included in a mist spray apparatus (731) that sprays a mist into said storage compartment (710) and that has an external case (737) being arranged in a depression (711a, 723a) of the back partition wall (711) or the partition wall (723) of the refrigerator (700);
an atomization tip (735) included in said atomization unit (739), the mist being sprayed from said atomization tip (735);
a temperature detection unit (812) configured to detect the temperature of said atomization tip (735), and
a temperature adjustment unit (712; 754) configured to adjust a temperature of said atomization tip (735);
**characterized by** a heat transfer connection member (734) fixed to the external case (737) of the atomization unit (739) and thermally connected with the atomization tip (735),
wherein said heat transfer connection member (734) has a projection (734a) which protrudes from the external case (737), wherein the projection (734a) is located opposite to the atomization tip (735) and is located into a deepest depression (711b) or a through part (711c) of the back partition wall (711) or into a deepest depression (723b) of the partition wall (723), and
wherein said temperature adjustment unit (712; 754) is configured to indirectly adjust the temperature of said atomization tip (735) by cooling or heating said atomization tip (735) to a dew point or below via said projection (734a), to cause water in air to form dew condensation at said atomization tip (735), and said atomization unit (739) is configured to generate the mist containing radicals, the generated mist adhering to vegetables and fruit stored in said storage compartment (710) to suppress low temperature damage.

2. The refrigerator (700) according to claim 1,
wherein said heat-insulated storage compartment (710) is substantially sealed and has a mechanism of keeping a high humidity to prevent drying of the vegetables and fruit, and drying after the mist adheres to the vegetables and fruit is also prevented to suppress drying of the mist containing the radicals, thereby suppressing the low temperature damage.

3. The refrigerator (700) according to claim 1 or 2,
wherein the mist containing the radicals adheres to skins of the vegetables and fruit, and the radicals penetrate from the skins and inhibit an enzyme reaction, thereby suppressing the low temperature damage.

4. The refrigerator (700) according to any of claims 1 to 3,
wherein the mist containing the radicals adheres to skins of the vegetables and fruit and the radicals penetrate from the skins, thereby suppressing leakage of potassium ions.

5. The refrigerator (700) according to any of claims 1 to 4,
wherein the mist containing the radicals sprayed into said storage compartment (710) decomposes ethylene gas.

6. The refrigerator (700) according to any of claims 1 to 5,
wherein the mist generated by said mist spray apparatus (731) has a nano-size particle diameter and reduces microorganisms adhering to inside of said storage compartment (710) and to vegetable surfaces, the microorganisms including molds, bacteria, yeasts, and viruses.

7. The refrigerator (700) according to any of claims 1 to 6, comprising:
a section in said storage compartment (710), said section being set in a different environment from an environment of said storage compartment (710).

8. The refrigerator (700) according to any of claims 1 to 7,
wherein said temperature adjustment unit (712; 754) configured to adjust the temperature of said atomization tip (735) includes a cooling unit (712) and a heating unit (754).

9. The refrigerator (700) according to claim 8,
wherein said cooling unit (712) is a cooling source generated in a refrigeration cycle of said refrigerator (700), and
said heating unit (754) is a heater.

10. The refrigerator (700) according to any of claims 1 to 9,
wherein a main body of said refrigerator (700) includes a plurality of storage compartments (710) and a cooling compartment that houses a cooler for cooling said plurality of storage compartments (710), and
said atomization unit (739) is attached on a cooling compartment side of said storage compartment (710).

11. The refrigerator (700) according to any of claims 1 to 9,
wherein a main body of said refrigerator (700) includes a plurality of storage compartments (710),
a lower temperature storage compartment (710) kept at a lower temperature than said storage compartment (710) provided with said atomization unit (739) is situated on a bottom side of said storage compartment (710), and
said atomization unit (739) is attached on the bottom side of said storage compartment (710).

12. The refrigerator (700) according to any of claim 1 to 11,
wherein a main body of said refrigerator (700) includes at least one air path (741) for conveying cool air to a storage compartment (710) or a cooling compartment, and
a cooling unit (712) uses cool air generated in said cooling compartment.

13. The refrigerator (700) according to any of claims 1 to 12,
wherein said atomization unit (739) included in said mist spray apparatus (731) includes a counter electrode (736) positioned facing said atomization tip (735), and a voltage application unit (733) configured to generate a high-voltage potential difference between said atomization tip (735) and said counter electrode (736).

14. The refrigerator (700) according to claim 13, comprising:
said storage compartment (710); and
a holding member installed in said storage compartment (710) and grounded to a reference potential part,
wherein said voltage application unit (733) is configured to generate the potential difference between said atomization tip (735) and said holding member.

15. A method of storage in a refrigerator (700),
wherein the refrigerator (700) includes a heat-insulated storage compartment (710), a back partition wall (711), a partition wall (723), an atomization unit (739) that is included in a mist spray apparatus (731) that sprays a mist into said compartment (710) and that has an external case (737) being arranged in a depression (711a, 723a) of the back partition wall (711) or the partition wall (723) of the refrigerator (700),
an atomization tip (735) which is included in the atomization unit (739) and from which the mist is sprayed, a temperature detection unit (812) configured to detect the temperature of said atomization tip (735), and a temperature adjustment unit (712; 754) configured to adjust a temperature of the atomization tip (735),
**characterized by** providing a heat transfer connection member (734) fixed to the external case (737) of the atomization unit (739) and thermally connected with the atomization tip (735), wherein said heat transfer connection member (734) has a projection (734a) which protrudes from the external case (737), wherein the projection (734a) is located opposite to the atomization tip (735) and is located into a deepest depression (711b) or a through part (711c) of the back partition wall (711) or into a deepest depression (723b) of the partition wall (723),
said storage method comprising:
indirectly adjusting the temperature of the atomization tip (735) by cooling or heating said heat transfer connection member (734) to a dew point or below via the projection (734a), to cause water in air to form dew condensation at the atomization tip (735); and
generating the mist containing radicals by the atomization unit (739) and causing the mist to adhere to vegetables and fruit stored in the storage compartment (710) so as to suppress low temperature damage.

16. The storage method according to claim 15, further comprising
keeping a high humidity to prevent drying of the vegetables and fruit and prevent drying after the mist containing radicals adheres to the vegetables and fruit to suppress drying of the mist, thereby suppressing the low temperature damage, said keeping being performed by a mechanism included in the heat-insulated storage compartment (710) which is substantially sealed.

17. The storage method according to claim 15 or 16, further comprising
inhibiting enzyme reaction by causing the mist containing radicals to adhere to skins of the vegetables and fruit and the radicals to penetrate from the skins, thereby suppressing the low temperature damage.

18. The storage method according to any one of claims 15 to 17, further comprising
suppressing leakage of potassium ions by causing the mist containing radicals to adhere to skins of the vegetables and fruit and the radicals to penetrate from the skins.

19. The storage method according to any one of claims 15 to 18, further comprising
decomposing ethylene gas using the mist containing radicals sprayed into the storage compartment (710).

## Patentansprüche

1. Kühlschrank (700) enthaltend:
ein wärmeisoliertes Aufbewahrungsfach (710),
eine hintere Trennwand (711) und eine Trennwand (723);
eine Zerstäubungseinheit (739), die in einer Nebelsprühvorrichtung (731) enthalten ist, die einen Nebel in das Aufbewahrungsfach (710) sprüht und ein Außengehäuse (737) aufweist, das in einer Vertiefung (711a, 723a) der hinteren Trennwand (711) oder der Trennwand (723) des Kühlschranks (700) angeordnet ist;
eine Zerstäubungsspitze (735), die in der Zerstäubungseinheit (739) enthalten ist, wobei der Nebel von der Zerstäubungsspitze (735) gesprüht wird;
eine Temperaturerfassungseinheit (812), die konfiguriert ist, die Temperatur der Zerstäubungsspitze (735) zu erfassen, und
eine Temperatureinstelleinheit (712; 754), die konfiguriert ist, eine Temperatur der Zerstäubungsspitze (735) einzustellen;
**gekennzeichnet durch** ein Wärmeübertragungsverbindungselement (734), das an dem Außengehäuse (737) der Zerstäubungseinheit (739) befestigt und thermisch mit der Zerstäubungsspitze (735) verbunden ist,
wobei das Wärmeübertragungsverbindungselement (734) einen Vorsprung (734a) aufweist, der aus dem Außengehäuse (737) herausragt, wobei der Vorsprung (734a) gegenüber der Zerstäubungsspitze (735) angeordnet ist und sich in einer tiefsten Vertiefung (711b) oder einem Durchgangsteil (711c) der hinteren Trennwand (711) oder in einer tiefsten Vertiefung (723b) der Trennwand (723) befindet, und
wobei die Temperatureinstelleinheit (712; 754) konfiguriert ist, die Temperatur der Zerstäubungsspitze (735) indirekt durch Kühlen oder Erwärmen der Zerstäubungsspitze (735) über den Vorsprung (734a) auf einen Taupunkt oder darunter einzustellen, um Wasser in der Luft zu veranlassen, Taukondensation an der Zerstäubungsspitze (735) zu bilden, und wobei die Zerstäubungseinheit (739) konfiguriert ist, den Nebel zu erzeugen, der Radikale enthält, wobei der erzeugte Nebel an Gemüse oder Obst haftet, die in dem Aufbewahrungsfach (710) aufbewahrt sind, um Schäden bei niedrigen Temperaturen zu unterdrücken.

2. Kühlschrank (700) nach Anspruch 1,
wobei das wärmeisolierte Aufbewahrungsfach (710) im Wesentlichen abgedichtet ist und eine Einrichtung zum Halten einer hohen Luftfeuchtigkeit aufweist, um das Austrocknen des Gemüses und Obstes zu verhindern, wobei das Austrocknen, nachdem der Nebel an dem Gemüse oder Obst haftet, auch verhindert wird, um das Trocknen des die Radikale enthaltenden Nebels zu unterdrücken, wodurch die Schäden bei niedrigen Temperaturen unterdrückt werden.

3. Kühlschrank (700) nach Anspruch 1 oder 2,
wobei der Nebel, der die Radikale enthält, an den Schalen des Gemüses und Obstes haftet, und die Radikale über die Schalen eindringen und eine Enzymreaktion hemmen, wodurch die Schäden bei niedrigen Temperaturen unterdrückt werden.

4. Kühlschrank (700) nach einem der Ansprüche 1 bis 3,
wobei der Nebel, der die Radikale enthält, an den Schalen des Gemüses und Obstes haftet und die Radikale über die Schalen eindringen, wodurch das Austreten von Kaliumionen unterdrückt wird.

5. Kühlschrank (700) nach einem der Ansprüche 1 bis 4,
wobei der in das Aufbewahrungsfach (710) gesprühte Nebel, der die Radikale enthält, Ethylengas zersetzt.

6. Kühlschrank (700) nach einem der Ansprüche 1 bis 5,
wobei der von der Nebelsprühvorrichtung (731) erzeugte Nebel einen Partikeldurchmesser in Nanogröße aufweist und Mikroorganismen reduziert, die an der Innenseite des Aufbewahrungsfachs (710) und an pflanzlichen Oberflächen haften, wobei die Mikroorganismen Schimmelpilze, Bakterien, Hefen und Viren einschließen.

7. Kühlschrank (700) nach einem der Ansprüche 1 bis 6, enthaltend:
einen Abschnitt in dem Aufbewahrungsfach (710), wobei der Abschnitt in eine Umgebung versetzt wird, die sich von einer Umgebung des Aufbewahrungsfachs (710) unterscheidet.

8. Kühlschrank (700) nach einem der Ansprüche 1 bis 7,
wobei die Temperatureinstelleinheit (712; 754), die konfiguriert ist, die Temperatur der Zerstäubungsspitze (735) einzustellen, eine Kühleinheit (712) und eine Heizeinheit (754) beinhaltet.

9. Kühlschrank (700) nach Anspruch 8,
wobei die Kühleinheit (712) eine Kühlquelle ist, die in einem Kältekreislauf des Kühlschranks (700) erzeugt wird, und
die Heizeinheit (754) eine Heizung ist.

10. Kühlschrank (700) nach einem der Ansprüche 1 bis 9,
wobei ein Hauptkörper des Kühlschranks (700) eine Mehrzahl von Aufbewahrungsfächern (710) und ein Kühlfach beinhaltet, in dem ein Kühler zum Kühlen der Mehrzahl von Aufbewahrungsfächern (710) untergebracht ist, und
die Zerstäubungseinheit (739) auf einer Kühlfachseite des Aufbewahrungsfachs (710) angebracht ist.

11. Kühlschrank (700) nach einem der Ansprüche 1 bis 9,
wobei ein Hauptkörper des Kühlschranks (700) eine Mehrzahl von Aufbewahrungsfächern (710) beinhaltet,
ein Niedrigtemperaturaufbewahrungsfach (710), das auf einer niedrigeren Temperatur als das mit der Zerstäubungseinheit (739) versehene Aufbewahrungsfach (710) gehalten wird, auf einer Unterseite des Aufbewahrungsfachs (710) angeordnet ist, und
die Zerstäubungseinheit (739) auf einer Unterseite des Aufbewahrungsfachs (710) angebracht ist.

12. Kühlschrank (700) nach einem der Ansprüche 1 bis 11,
wobei ein Hauptkörper des Kühlschranks (700) mindestens einen Luftkanal (741) zum Fördern von kühler Luft zu einem Aufbewahrungsfach (710) oder einem Kühlfach beinhaltet, und
eine Kühleinheit (712) die in dem Kühlfach erzeugte kühle Luft nutzt.

13. Kühlschrank (700) nach einem der Ansprüche 1 bis 12,
wobei die Zerstäubungseinheit (739), die in der Nebelsprühvorrichtung (731) enthalten ist, eine Gegenelektrode (736), die gegenüber der Zerstäubungsspitze (735) positioniert ist, und eine Spannungsapplikationseinheit (733) umfasst, die konfiguriert ist, eine Hochspannungspotentialdifferenz zwischen der Zerstäubungsspitze (735) und der Gegenelektrode (736) zu erzeugen.

14. Kühlschrank (700) nach Anspruch 13 enthaltend:
das Aufbewahrungsfach (710); und
ein Halteelement, das in dem Aufbewahrungsfach (710) eingebaut ist und mit einem Referenzpotentialteil geerdet ist,
wobei die Spannungsapplikationseinheit (733) konfiguriert ist, um die Potentialdifferenz zwischen der Zerstäubungsspitze (735) und dem Halteelement zu erzeugen.

15. Verfahren zur Aufbewahrung in einem Kühlschrank (700),
wobei der Kühlschrank (700) ein wärmeisoliertes Aufbewahrungsfach (710), eine hintere Trennwand (711), eine Trennwand (723), eine Zerstäubungseinheit (739), die in einer Nebelsprühvorrichtung (731) enthalten ist, die einen Nebel in das Aufbewahrungsfach (710) sprüht und ein Außengehäuse (737) aufweist, das in einer Vertiefung (711a, 723a) der hinteren Trennwand (711) oder der Trennwand (723) des Kühlschranks (700) angeordnet ist, eine Zerstäubungsspitze (735), die in der Zerstäubungseinheit (739) enthalten ist und von der der Nebel gesprüht wird, eine Temperaturerfassungseinheit (812), die konfiguriert ist, die Temperatur der Zerstäubungsspitze (735) zu erfassen, und eine Temperatureinstelleinheit (712; 754), die konfiguriert ist, eine Temperatur der Zerstäubungsspitze (735) einzustellen, enthält,
**gekennzeichnet durch** Bereitstellen eines Wärmeübertragungsverbindungselements (734), das an dem Außengehäuse (737) der Zerstäubungseinheit (739) befestigt und thermisch mit der Zerstäubungsspitze (735) verbunden ist,
wobei das Wärmeübertragungsverbindungselement (734) einen Vorsprung (734a) aufweist, der aus dem Außengehäuse (737) herausragt, wobei der Vorsprung (734a) gegenüber der Zerstäubungsspitze (735) angeordnet ist und sich in einer tiefsten Vertiefung (711b) oder einem Durchgangsteil (711c) der hinteren Trennwand (711) oder in einer tiefsten Vertiefung (723b) der Trennwand (723) befindet,
wobei das Aufbewahrungsverfahren enhält:
indirektes Einstellen der Temperatur der Zerstäubungsspitze (735) durch Kühlen oder Erwärmen des Wärmeübertragungsverbindungselements (734) über den Vorsprung (734a) auf einen Taupunkt oder darunter, um Wasser in der Luft zu veranlassen, Taukondensation an der Zerstäubungsspitze (735) zu bilden; und
Erzeugen des Nebels, der Radikale enthält, durch die Zerstäubungseinheit (739) und veranlassen des Nebels, an Gemüse und Obst zu haften, die in dem Aufbewahrungsfach (710) aufbewahrt sind, um Schäden bei niedrigen Temperaturen zu unterdrücken.

16. Aufbewahrungsverfahren nach Anspruch 15, weiterhin enthaltend
Aufrechterhalten einer hohen Luftfeuchtigkeit, um ein Austrocknen des Gemüses und des Obstes zu verhindern und ein Austrocknen zu verhindern, nachdem der Radikale enthaltende Nebel an dem Gemüse und dem Obst haftet, um das Trocknen des Nebels zu unterdrücken und dadurch die Schäden bei niedrigen Temperaturen zu unterdrücken, wobei das Aufrechterhalten durch eine Einrichtung erfolgt, die in dem wärmeisolierten Aufbewahrungsfach (710) enthalten ist, das im Wesentlichen abgedichtet ist.

17. Aufbewahrungsverfahren nach Anspruch 15 oder 16, weiterhin enthaltend
Hemmen der Enzymreaktion, indem der Radikale enthaltende Nebel an den Schalen des Gemüses und des Obstes haftet und die Radikale über die Schalen eindringen und so die Schäden bei niedrigen Temperaturen unterdrücken.

18. Aufbewahrungsverfahren nach einem der Ansprüche 15 bis 17, weiterhin enthaltend
Unterdrücken des Austretens von Kaliumionen, indem der Nebel, der Radikale enthält, an den Schalen des Gemüses und Obstes haftet und die Radikale über die Schalen eindringen.

19. Aufbewahrungsverfahren nach einem der Ansprüche 15 bis 18, weiterhin enthaltend
Zersetzen von Ethylengas unter Verwendung des in das Aufbewahrungsfach (710) gesprühten Nebels, der Radikale enthält.

## Revendications

1. Réfrigérateur (700) comprenant :
un compartiment de stockage isolé thermiquement (710),
une paroi de séparation arrière (711) et une paroi de séparation (723) ;
une unité d'atomisation (739) incluse dans un appareil de pulvérisation de brouillard (731) qui pulvérise un brouillard dans ledit compartiment de stockage (710) et qui a un boîtier externe (737) qui est disposé dans un creux (711a, 723a) de la paroi de séparation arrière (711) ou de la paroi de séparation (723) du réfrigérateur (700) ;
une pointe d'atomisation (735) incluse dans ladite unité d'atomisation (739), le brouillard étant pulvérisé à partir de ladite pointe d'atomisation (735) ;
une unité de détection de température (812) configurée pour détecter la température de ladite pointe d'atomisation (735), et
une unité de réglage de température (712 ; 754) configurée pour régler une température de ladite pointe d'atomisation (735) ;
**caractérisé par** un élément de connexion de transfert de chaleur (734) fixé au boîtier externe (737) de l'unité d'atomisation (739) et relié thermiquement à la pointe d'atomisation (735),
dans lequel ledit élément de connexion de transfert de chaleur (734) a une saillie (734a) qui fait saillie à partir du boîtier externe (737), la saillie (734a) est située à l'opposé de la pointe d'atomisation (735) et est située dans le creux le plus profond (711b) ou une partie traversante (711c) de la paroi de séparation arrière (711) ou dans le creux le plus profond (723b) de la paroi de séparation (723), et
dans lequel ladite unité de réglage de température (712 ; 754) est configurée pour régler indirectement la température de ladite pointe d'atomisation (735) par refroidissement ou chauffage de ladite pointe d'atomisation (735) jusqu'à un point de rosée ou en dessous par l'intermédiaire de ladite saillie (734a), pour amener l'eau dans l'air à former une condensation de rosée au niveau de ladite pointe d'atomisation (735), et ladite unité d'atomisation (739) est configurée pour générer le brouillard contenant des radicaux, le brouillard généré adhérant aux légumes et aux fruits stockés dans ledit compartiment de stockage (710) afin de supprimer les dommages à basse température.

2. Réfrigérateur (700) selon la revendication 1,
dans lequel ledit compartiment de stockage isolé thermiquement (710) est sensiblement étanche et a un mécanisme de maintien d'une humidité élevée pour empêcher le séchage des légumes et des fruits, et le séchage après que le brouillard adhère aux légumes et aux fruits est également empêché pour supprimer le séchage du brouillard contenant les radicaux, ce qui permet de supprimer les dommages à basse température.

3. Réfrigérateur (700) selon la revendication 1 ou 2,
dans lequel le brouillard contenant les radicaux adhère aux peaux des légumes et des fruits, et les radicaux pénètrent à partir des peaux et inhibent une réaction enzymatique, ce qui permet de supprimer les dommages à basse température.

4. Réfrigérateur (700) selon l'une quelconque des revendications 1 à 3,
dans lequel le brouillard contenant des radicaux adhère aux peaux des légumes et des fruits et les radicaux pénètrent à partir des peaux, ce qui permet de supprimer les fuites d'ions potassium.

5. Réfrigérateur (700) selon l'une quelconque des revendications 1 à 4,
dans lequel le brouillard contenant des radicaux pulvérisé dans ledit compartiment de stockage (710) décompose l'éthylène gazeux.

6. Réfrigérateur (700) selon l'une quelconque des revendications 1 à 5,
dans lequel le brouillard généré par ledit appareil de pulvérisation de brouillard (731) a un diamètre de particule nanométrique et réduit les micro-organismes qui adhérent à l'intérieur dudit compartiment de stockage (710) et sur les surfaces végétales, les micro-organismes comportant les moisissures, les bactéries, les levures et les virus.

7. Réfrigérateur (700) selon l'une quelconque des revendications 1 à 6 comprenant:
une section dans ledit compartiment de stockage (710), ladite section étant définie dans un environnement différent d'un environnement dudit compartiment de stockage (710).

8. Réfrigérateur (700) selon l'une quelconque des revendications 1 à 7,
dans lequel ladite unité de réglage de température (712 ; 754) configurée pour régler la température de ladite pointe d'atomisation (735) comporte une unité de refroidissement (712) et une unité de chauffage (754).

9. Réfrigérateur (700) selon la revendication 8,
dans lequel ladite unité de refroidissement (712) est une source de refroidissement générée dans un cycle de réfrigération dudit réfrigérateur (700), et
ladite unité de chauffage (754) est un dispositif de chauffage.

10. Réfrigérateur (700) selon l'une quelconque des revendications 1 à 9,
dans lequel un corps principal dudit réfrigérateur (700) comporte une pluralité de compartiments de stockage (710) et un compartiment de refroidissement qui loge un dispositif de refroidissement pour refroidir ladite pluralité de compartiments de stockage (710), et
ladite unité d'atomisation (739) est fixée sur un côté de compartiment de refroidissement dudit compartiment de stockage (710).

11. Réfrigérateur (700) selon l'une quelconque des revendications 1 à 9,
dans lequel un corps principal dudit réfrigérateur (700) comporte une pluralité de compartiments de stockage (710),
un compartiment de stockage de température inférieure (710) maintenu à une température inférieure à celle dudit compartiment de stockage (710) pourvu de ladite unité d'atomisation (739) est situé sur un côté inférieur dudit compartiment de stockage (710), et
ladite unité d'atomisation (739) est fixée sur le côté inférieur dudit compartiment de stockage (710).

12. Réfrigérateur (700) selon l'une quelconque des revendications 1 à 11,
dans lequel un corps principal dudit réfrigérateur (700) comporte au moins un trajet d'air (741) pour transporter de l'air froid vers un compartiment de stockage (710) ou un compartiment de refroidissement, et
une unité de refroidissement (712) utilise l'air froid généré dans ledit compartiment de refroidissement.

13. Réfrigérateur (700) selon l'une quelconque des revendications 1 à 12,
dans lequel ladite unité d'atomisation (739) incluse dans ledit appareil de pulvérisation de brouillard (731) comporte une contre-électrode (736) positionnée en regard de ladite pointe d'atomisation (735), et une unité d'application de tension (733) configurée pour générer une différence de potentiel haute tension entre ladite pointe d'atomisation (735) et ladite contre-électrode (736).

14. Réfrigérateur (700) selon la revendication 13, comprenant :
ledit compartiment de stockage (710) ; et
un élément de maintien installé dans ledit compartiment de stockage (710) et mis à la terre par rapport à une partie de potentiel de référence,
dans lequel ladite unité d'application de tension (733) est configurée pour générer la différence de potentiel entre ladite pointe d'atomisation (735) et ledit élément de maintien.

15. Procédé de stockage dans un réfrigérateur (700),
dans lequel le réfrigérateur (700) comporte un compartiment de stockage isolé thermiquement (710), une paroi de séparation arrière (711), une paroi de séparation (723), une unité d'atomisation (739) qui est incluse dans un appareil de pulvérisation de brouillard (731) qui pulvérise un brouillard dans ledit compartiment (710) et qui a un boîtier externe (737) qui est disposé dans un creux (711a, 723a) de la paroi de séparation arrière (711) ou de la paroi de séparation (723) du réfrigérateur (700),
une pointe d'atomisation (735) qui est incluse dans l'unité d'atomisation (739) et à partir de laquelle le brouillard est pulvérisé, une unité de détection de température (812) configurée pour détecter la température de ladite pointe d'atomisation (735), et une unité de réglage de température (712 ; 754) configurée pour régler une température de la pointe d'atomisation (735),
**caractérisé en ce qu'**il prévoit un élément de connexion de transfert de chaleur (734) fixé au boîtier externe (737) de l'unité d'atomisation (739) et relié thermiquement à la pointe d'atomisation (735), ledit élément de connexion de transfert de chaleur (734) ayant une saillie (734a) qui fait saillie à partir du boîtier externe (737), la saillie (734a) étant située à l'opposé de la pointe d'atomisation (735) et étant située dans le creux le plus profond (711b) ou une partie traversante (711c) de la paroi de séparation arrière (711) ou dans le creux le plus profond (723b) de la paroi de séparation (723),
ledit procédé de stockage comprenant :
le réglage indirect de la température de la pointe d'atomisation (735) par refroidissement ou chauffage dudit élément de connexion de transfert de chaleur (734) à un point de rosée ou en dessous par l'intermédiaire de la saillie (734a), pour amener l'eau dans l'air à former une condensation de rosée au niveau de la pointe d'atomisation (735) ; et
la génération du brouillard contenant des radicaux par l'unité d'atomisation (739) et le fait d'amener le brouillard à adhérer aux légumes et aux fruits stockés dans le compartiment de stockage (710) de façon à supprimer les dommages à basse température.

16. Procédé de stockage selon la revendication 15, comprenant en outre
le maintien d'une humidité élevée pour empêcher le séchage des légumes et des fruits et empêcher le séchage après que le brouillard contenant des radicaux adhère aux légumes et aux fruits afin de supprimer le séchage du brouillard, ce qui permet de supprimer les dommages à basse température, ledit maintien étant réalisé par un mécanisme inclus dans le compartiment de stockage isolé thermiquement (710) qui est sensiblement étanche.

17. Procédé de stockage selon la revendication 15 ou 16, comprenant en outre
l'inhibition de la réaction enzymatique en amenant le brouillard contenant des radicaux à adhérer aux peaux des légumes et fruits et les radicaux à pénétrer à partir des peaux, ce qui permet de supprimer les dommages à basse température.

18. Procédé de stockage selon l'une quelconque des revendications 15 à 17, comprenant en outre
la suppression de fuite d'ions potassium en amenant le brouillard contenant des radicaux à adhérer aux peaux des légumes et des fruits et les radicaux à pénétrer à partir des peaux.

19. Procédé de stockage selon l'une quelconque des revendications 15 à 18, comprenant en outre
la décomposition de l'éthylène gazeux à l'aide du brouillard contenant des radicaux pulvérisés dans le compartiment de stockage (710).
